(19) Europäisches Patentamt
European Patent Office
Office européen des brevets

(11) EP 3 808 892 A1

(12) **EUROPEAN PATENT APPLICATION**

(43) Date of publication:
**21.04.2021 Bulletin 2021/16**

(21) Application number: **20197153.8**

(22) Date of filing: **29.02.2016**

(51) Int Cl.:
***D06M 11/13*** *(2006.01)* ***D06M 11/65*** *(2006.01)*
***D06M 13/148*** *(2006.01)* ***D06M 13/188*** *(2006.01)*
***D06M 13/352*** *(2006.01)* ***D06M 13/368*** *(2006.01)*
***D06M 13/463*** *(2006.01)* ***D06M 13/513*** *(2006.01)*
***D06M 15/00*** *(2006.01)* ***D06M 15/03*** *(2006.01)*
***D06M 15/61*** *(2006.01)* ***A41D 13/11*** *(2006.01)*
***D06M 13/256*** *(2006.01)* ***D06M 16/00*** *(2006.01)*

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **27.02.2015 EP 15000574**
**30.12.2015 EP 15203186**

(62) Document number(s) of the earlier application(s) in accordance with Art. 76 EPC:
**16706880.8 / 3 262 228**

(71) Applicant: **Livinguard AG**
**6300 Zug (CH)**

(72) Inventors:
- **SWAMY, Rohini**
  **400026 Mumbai (IN)**
- **SWAMY, Sanjeev**
  **6442 Gersau (CH)**

(74) Representative: **Bardehle Pagenberg Partnerschaft mbB**
**Patentanwälte Rechtsanwälte**
**Prinzregentenplatz 7**
**81675 München (DE)**

Remarks:
This application was filed on 21.09.2020 application to the application mentioned under INID code 62.

(54) **TEXTILES HAVING ANTIMICROBIAL PROPERTIES**

(57) The invention relates to a method of manufacturing a textile material with antimicrobial compounds in such a manner to chemically bind or attach said compounds to the textile material, and to the treated textile material which performs as a disinfectant or sterilizer on its own. The treated textile material exhibits wash-durability and non-leaching properties. The process comprises an exhaust process cycle comprising the steps of treating the textile material using an exhaust process, wherein the liquor comprises one or more antimicrobial agents, and subjecting the treated textile material to a heat treatment. The invention further relates to a device for purifying water, which can operate based on gravity and without electricity.

EP 3 808 892 A1

## Description

FIELD OF THE INVENTION

The present invention relates to a method of manufacturing or treating a textile material, such as textile, yarn and/or fiber, with antimicrobial compounds in such a manner to chemically bind or attach said compounds to the textile material, and to the treated textile material which performs as a disinfectant or sterilizer on its own. The treated textile material exhibits wash-durability and non-leaching properties. The present invention further relates to a device and a system for purifying water by filtering particles and/or microbes. The device and/or system preferably operate based on gravity and without electricity, so that they can be used in regions without stable power supply, such as in less-developed countries.

BACKGROUND OF THE INVENTION

Disinfection/sterilization is a very important process in everyday life. It is rated at various levels. There are various recordings of the requirements of the levels of performance which can be noted, for example, as per the United States National Pesticide Information Center, and under the link http://npic.orst.edu/factsheets/antimicrobials.html. A table therefrom, as can be taken hereinafter, shows that there are three main types of public health antimicrobial pesticides.

| | Sanitizer | Disinfectant | Sterilizer |
|---|---|---|---|
| Effective against | 99.9%<br>• Bacteria | 100%<br>• Bacteria<br>• Fungi<br>• Certain viruses | 100%<br>• Bacteria<br>• Fungi<br>• Viruses<br>• Spores |
| Time required for effectiveness | 30 seconds to 5 minutes | Generally 10 minutes | Variable |
| Locations / Uses | Household surfaces Food contact surfaces | Household surfaces Medical settings | Medical instruments Research supplies |
| Effect | Limited microbicide | Microbicide Irreversible microbistat | Microbicide |

The difference between the three groups is significant in terms of capability of antimicrobial activity.

Current disinfectants available on the market work for the moment when applied or used, but are not continuous or long lasting in nature. Hence, when chlorhexidine is sprayed on a contaminated surface, it is sanitized for that instant, but as soon as the chemical is evaporated or wiped off, the surface is once again contaminable. When water is decontaminated using chlorine for example, additional amounts of water would need additional amounts of chlorine, hence requiring reusable resources.

Textile materials like fabrics, yarns and/or fibers are used for a variety of purposes and in a variety of environments. As such, there is a realistic danger of microbiological contamination on the textile surfaces. These substrates are used to filter air or water, but work only by blocking, and do not eliminate the contamination. In recent times, studies have shown that textiles carry nosocomial infections from patient to patient in hospitals. Soldiers often wear clothes for extended periods of time, without washing, which often results in fungal and bacterial infection to the wearer.

Danger of staining of apparel due to ketchup, honey, sputum, blood, human excreta and moisture are also problems faced by users in various circumstances. Not only do such stains look unpleasant, but they also are fertile breeding grounds for various harmful bacteria, fungi and viruses on the textile substrates.

When used as wearing apparel, the inner surface of the textile, dead tissue, sweat, humidity and moisture aids the growth and spread of various pathogens. Garments such as jackets and overcoats, which directly do not come in contact with the skin, are also susceptible to infection transfer through contact with the inner garments, which are possibly infected. As such, it is evident that textile contamination by microbiological pathogens is a major cause for concern.

Security and military personnel, flight attendants and other airline personnel are especially prone to disease and skin problems as they may have to wear the same clothing for more than one day. Military personnel may have to wear their apparel for as much as 28 days at a stretch. Not only can the soiled apparel cause health problems to the wearer, but also it can be breeding grounds for the spread of bacteria, fungi and virus based diseases.

In hospitals, the presence of microbes is far more threatening. Due to the nature of the environment in which textiles are used, the needs of these textiles are much more specialized. Apart from the regular textiles worn by doctors, nurses, patients and other personnel in hospitals, doctor's clinics and other such locations, textiles used in the form of scrubs, gowns, lab coats, bed sheets and pillow cases carry microbes in various proportions. Patients sleep on sheets and pillow cases that have extremely high risk of contamination due to bacterial and microbial growth resulting from excretions of the body. The mattresses and pillows are also likely to become infected due to the fact that these are not washed. They, in turn, can transmit infection to the patient. Sheets, pillow covers, gowns, and curtains are subjected to contamination from open wounds and other medical conditions, such as coughing, wheezing, etc. Patients' gowns are contaminated by sweat and/or human excretion such as urine, stool and vomit. This leads to the growth of microorganisms like bacteria, viruses and fungi. Healthcare workers are very often subjected to the contamination either from soiled textiles used by patients or due to excretions of the body. Medical personnel are major causes of transmitting bacterial infection from one patient to another. Current medical textiles offer no barrier protection. Provided herein below are current situations and problems thereof in hospitals:

Hospital or healthcare transmitted diseases to a great extent are textile based transmissions.
Doctors and patients tend to infect each other through textile contact. Current methods of washing lead to damage of the textile.
Pillows, mattresses and curtains are rarely washed or disinfected.
Post wash bacteria growth is instantaneous.
Body residues like sweat and dead skin are breeding grounds for bacteria.

Laundry washing of regular textiles leads to excess consumption of water. Moreover, huge quantities of detergents are used to launder the clothes, and this process is excessively time consuming due to long laundry wash times.

80% of the world's population is currently drinking water that has not been municipally treated and is essentially dirty and microbially contaminated. The cost of providing potable drinking water is often beyond the reach of the government due to financial constraints, in particular since the necessary infrastructure like sewage water disposal systems, water pipelines and water treatment plants are expensive. Thus, municipally treated purified water is not available in wide parts of less-developed countries.

Microbiologically potable water is a pressing need today. While there is availability of fresh water resources, the water therein is often found contaminated with E. coli and a wide range of other disease causing microbes. Indeed, many freshwater sources are used by the local population for a variety of activities ranging from bathing, to washing of clothes, to bathing their cattle, etc. As such, the levels of contamination in most of these water resources are considerable. If used for drinking, such contaminated water could lead to outbreaks of diarrhea, cholera and a host of other diseases, as indeed evidenced by studies across the world.

Known water purification techniques such as boiling, UV-purification and ozone water disinfection that are suitable to destroy and/or remove microbes or at least prevent microbes from reproducing are based on devices and systems that are electrically powered. Since a stable electrical power supply is often not available in wide parts of the globe, and particularly in less-developed countries, also these known water purifying techniques are not available.

Chemical disinfection, such as iodine- or chlorine -based water disinfection is suitable to provide decontaminated, essentially microbe free water. However, currently known disinfectants provide a temporary disinfection when applied or used, but are not continuous or long lasting in nature. When water is decontaminated using disinfectants, such as chlorine or iodine, additional amounts of water would need additional amounts of said disinfectant. Although chemical disinfection is not dependent on electricity, it is not suitable in wide parts of less-developed countries since the disinfectant provides only a temporary disinfection and thus, running costs occur. These running costs are problematic for the mostly poor population that has no access to decontaminated potable water. Further, the use of such chemical disinfectants over extended periods is harmful for the human body.

While many people have indigenously used textiles and/or particle filters to sieve water and make it more potable, those textiles cannot kill microbiological pathogens. As such, there is a need to address the issue, wherein microbiologically safe drinking water can be provided in a simple manner using the traditional technique of cloth filtration and combining it with a technology that enables to kill disease causing microbes.

Other devices for providing purified water use disinfecting fabrics in cartridge filters to provide purified water. For example, systems are known that provide a pre-filtration of the water to be purified with a coarse filter upstream an odor filter, comprising activated carbon and a 1 micrometer filter. Said 1 micrometer filter comprises typically non-woven fabrics, which are staple and/or spun bound non-woven fabrics. Both staple and spun bound non-woven fabrics initially provide no mechanical resistance in and of themselves. To provide at least a certain mechanical resistance, the fibers of the staple and/or spun bound non-woven fabrics are interconnected in an additional bonding step. However, one problem is that the achieved mechanical resistance of the bonded non-wovens is not sufficient to withstand washing or other mechanical treatments, like scrubbing that occur during the use in a device for purifying water. Further, the known

odor filter is a cartridge filter and provided vertically in an input container. However, said odor cartridge filter suffers severe clogging, and high pressure loss, resulting in reduced flowrates and shortened filter life span.

US patent 2,791,518 describes a method of treating articles such as textiles to render them microbicidal by wetting the article first with an aqueous solution containing a water- soluble basic nitrogen compound (e.g. ammonia) and a monovalent silver salt soluble in a said solution, followed by a second wetting with another solution.

US patent 4,721,511 refers to antimicrobial fabrics comprising a non-woven substrate and a specific quaternary ammonium organosilane compound.

US patent 5,190,788 discloses a method of treating fibers to render them electrically conductive as well as antibacterial, comprising immersing the fibers in a bath containing an aqueous solution of a source of divalent copper ions, reducing agent, sodium thiosulfate and a source of iodide ions, where by copper iodide is adsorbed into the fibers.

US patent 6,962,608 teaches a process for preparing an antimicrobial fiber, said process comprising a) immersing a textile in an aqueous treating solution comprising an organic acid, wherein said organic acid has a at least two carboxyl groups, b) treating said fiber with an oxidizing agent to produce a peroxycarboxylic acid function, thereby preparing an antimicrobial textile containing an average of 6 weight percent of the organic acid, which not laundered at all demonstrated over 99% reduction of E.coli.

US patent 8,906,115 is directed to a method for antimicrobial finishing synthetic fibers, in which an aqueous solution of an organic primer component, an organic quaternary ammonium compound and a metal salt component is applied to the fibers.

## SUMMARY OF THE INVENTION

It is an object of the invention to provide textile materials that overcome problems of any or all of above-mentioned prior art documents. It is a further object of the invention to provide textile materials exhibiting antibacterial properties even after numerous washes. Furthermore, it is an object of the invention that the textile materials can prohibit growth of bacteria, smells, odors etc. as completely as possible. It is a further object that the textile materials exhibit properties as a filter to disinfect/sanitize a medium such as air or water when passing through it. It is a further object to fix antimicrobial agents to a textile in a non-leaching or substantially non-leaching manner. It is a further object to provide a textile with antimicrobial properties which is biodegradable. It is a further object of the invention that the antimicrobial agents and any other chemicals used for manufacturing the textile with antimicrobial properties are non-toxic for humans, animals and/or the environment. Finally, it is an object of the invention to provide a cost-efficient manufacturing method for textiles with antimicrobial properties.

One or more of these objects are achieved by the subject matter of the independent claims. Preferred embodiments are subject of the dependent claims.

The present invention provides a textile material to which one or more antimicrobial agents are so strongly bonded or adhered that the textile material on its own acts as microbicide, biocide, disinfectant, fungicide, and/or bactericide. The invention further provides a process for manufacturing such a textile material, and the use of the textile material, such as in water filtration or as medical garments with self-disinfecting properties.

Without being bound to any theory, it is believed that reaction mechanisms or possible reaction products described hereinafter show which reactions take place. However, the invention is in no way restricted to any reaction mechanism or possible reaction products described. Those are provided for purposes of explanation only.

All percentages hereinafter refer to weight unless otherwise indicated. "% owf" or "% o.w.f." stands for "of weight fabric" and is the weight percentage of the uptake of the antimicrobial agent in relation to the fabric.

The term "antimicrobial" as used in the context of the present invention relates to the ability to kill at least some types of microorganisms, or to inhibit the growth or reproduction of at least some types of microorganisms. Said term relates to any compound, agent, product or process that is harmful to one or more "microorganism" as used in the context of the present invention. Preferably, the one or more "microorganism" gets killed by the "antimicrobial" product or process.

The terms "microorganism" and "microbe", which are used interchangeably in the context of the present invention, are defined to comprise any organism too small to be seen by the unaided eye, such as, especially, single-celled organisms. In particular, the terms "microorganism" and "microbe" cover prokaryotes including bacteria and archaea, eukaryotes including protists, animals like dust mites or spider mites, fungi, and plants like green algae, as well as viruses.

Any values of particle size described herein can be determined e.g. by scanning electron microscopy (SEM), by transmission electron microscopy (TEM), or by laser diffraction

Manufacturing process of textile material:

A 1st embodiment of the invention is a process of making a textile material antimicrobial, comprising a first process cycle comprising the steps of:

- treating the textile material using a liquor application process such as a padding or preferably an exhaust process, and the liquor comprises one or more antimicrobial agents,
- subjecting the treated textile material to a heat treatment,
- preferably washing the heat treated textile material, and
- preferably drying the washed textile material.

According to a 2$^{nd}$ embodiment, in the 1$^{st}$ embodiment, the temperature of the liquor during the exhaust process is sufficiently high and the exhaust time is sufficiently long such that the one or more antimicrobial agents are substantially uniformly dispersed across the cross section of the textile.

According to a 3$^{rd}$ embodiment, in the process of any one of 1st or 2$^{nd}$ embodiment, the temperature of the liquor during the exhaust process is sufficiently low and/or the exhaust time is sufficiently short such that the textile material does not discolour and/or turn yellow and/or its breaking (tensile) strength is not reduced by more than 15%, preferably not more than 10%, more preferably not more than 7%, most preferably not more than 5%, preferably when measured in accordance with ASTM standard D 5035-11 in case the textile material is a fabric or in accordance with ASTM standard D 2256/D 2256M-10e1 in case the textile material is a yarn, as a result of the exhaust process.

According to a 4$^{th}$ embodiment, in the process of any one of 1$^{st}$ to 3$^{rd}$ embodiments, during the exhaust process, the liquor has a temperature of at least 45 °C, in particular at least 50 °C, preferably at least 60 °C, more preferably at least 70 °C, more preferably at least 75 °C, most preferably at least about 80 °C.

According to a 5$^{th}$ embodiment, in the process of any one of the 1$^{st}$ to 4$^{th}$ embodiments, during the exhaust process, the liquor has a temperature below boiling temperature, preferably at most 95 °C, more preferably at most 90 °C, particularly at most 85 °C, and most preferably at most about 80 °C.

According to a 6$^{th}$ embodiment, in the process of any one of any one 1$^{st}$ to 5$^{th}$ embodiments, the exhaust time is at least 30 minutes, preferably at least 45 minutes, more preferably at least 50 minutes, particularly at least 55 minutes, and most preferably at least about 60 minutes.

According to a 7$^{th}$ embodiment, in the process of any one of 1$^{st}$ to 6$^{th}$ embodiments, the exhaust time is at most 120 minutes, in particular 90 minutes, preferably at most 80 minutes, more preferably at most 75 minutes, even more preferably at most 70 minutes, even more preferably at most 65 minutes, most preferably at most about 60 minutes.

According to an 8$^{th}$ embodiment, in the process of any one of 1$^{st}$ to 7$^{th}$ embodiments, during the exhaust process, the liquor is stirred, preferably at intervals of less than 30 seconds, more preferably continuously.

According to a 9$^{th}$ embodiment, in the process of the 8$^{th}$ embodiment, stirring is performed by a stirrer, preferably at a speed of at least 200 rpm, more preferably at a speed of at least 250 rpm, most preferably at a speed of at least 300 rpm.

According to a 10$^{th}$ embodiment, in the process of the 9$^{th}$ embodiment, the stirrer is a mixer with blades, preferably with a minimum of 3 blades, preferably with a blade length of at least 10 cm and preferably with a blade width of at least 2 cm.

According to an 11$^{th}$ embodiment, in the process of any one of 8$^{th}$ to 10$^{th}$ embodiments, stirring is performed by means of a circulation pump.

According to a 12$^{th}$ embodiment, in the process of any one of the 1$^{st}$ to 11$^{th}$ embodiments, the exhaust process is performed in a yarn dyeing machine, a jet dyeing machine, a continuous dyeing range machine, or preferably a jigger.

According to a 13$^{th}$ embodiment, in the process of any one of 1$^{st}$ to 12$^{th}$ embodiments, the exhaustion rate of the exhaust process is at least 85%, preferably at least 90%, more preferably at least 95%, most preferably at least about 98%.

According to a 14$^{th}$ embodiment, in the process of any one of 1$^{st}$ to 13$^{th}$ embodiments, the material to liquor ratio of the exhaust process is at least 1:10, preferably at least 1:5, more preferably at least 1:3, and most preferably at least about 1:2.

According to a 15$^{th}$ embodiment, in the process of any one of 1$^{st}$ to 14$^{th}$ embodiments, the material to liquor ratio of the exhaust process is at most 1:1, preferably at most 1:1.5, more preferably at most 1:1.7, and most preferably at most about 1:2.

Second cycle:

A 16$^{th}$ embodiment is the process of any one of 1$^{st}$ to 15$^{th}$ embodiments, comprising a second process cycle being performed after the first process cycle and comprising the steps of

- treating the textile material using a liquor application process such as an exhaust or preferably a padding process, wherein the liquor comprises one or more antimicrobial agents,
- subjecting the treated textile material to a heat treatment,
- preferably washing the heat treated textile material, and
- preferably drying the washed textile material.

According to a 17$^{th}$ embodiment, in the 16$^{th}$ embodiment, the second process cycle increases the antimicrobial effect of the textile material.

According to a 18$^{th}$ embodiment, in any one of the 16$^{th}$ or 17$^{th}$ embodiments, the padding process comprises application of one or more rolls, preferably to obtain optimum wet pick up of the liquor on the textile material.

According to a 19$^{th}$ embodiment, in any one of the 16$^{th}$ to 18$^{th}$ embodiments, the padding process is performed in a padding mangle at a pressure of 0.5 to 4 bars, preferably 1.0 to 3.0 bars, more preferably 1.5 to 2.5 bars, and most preferably about 2 bars.

According to a 20$^{th}$ embodiment, in the process of any one of 16$^{th}$ to 19$^{th}$ embodiments, the pick-up rate of the padding process is at least 25 %, preferably at least 40%, more preferably at least 50%, particularly at least 60%, and most preferably at least about 65%.

According to a 21$^{st}$ embodiment, in any one of the 16$^{th}$ to 20$^{th}$ embodiment, the pick-up rate of the padding process is at most 90%, preferably at most 80%, more preferably at most 75%, particularly at most 70%, most preferably at most about 65%.

Liquor:

According to a 22$^{nd}$ embodiment, in any one of the 1$^{st}$ to 21$^{st}$ embodiments, the liquor of the first and/or second process cycle contains a solvent.

According to a 23$^{rd}$ embodiment, in the 22$^{nd}$ embodiment, the solvent is water.

According to a 24$^{th}$ embodiment, in the 23$^{rd}$ embodiment, of the solvent contained in the liquor of the first and/or second process cycle, at least 90%, preferably at least 95%, more preferably at least 98%, and most preferably 100% is water.

According to a 25$^{th}$ embodiment, in any one of the 1$^{st}$ to 24$^{th}$ embodiments, in the liquor of the first and/or second process cycle, the one or more antimicrobial agents and/or any other agents used for cross linking the antimicrobial agents are dissolved in the liquor.

According to a 26$^{th}$ embodiment, in any one of the 1$^{st}$ to 25$^{th}$ embodiments, in the liquor of the first and/or second process cycle, the one or more antimicrobial agents, and/or any other agents used for cross linking the antimicrobial agents and the solvent form a homogenous mixture.

According to a 27$^{th}$ embodiment, in any one of the 1$^{st}$ to 26$^{th}$ embodiments, in the liquor of the first and/or second process cycle, the one or more antimicrobial agents, and/or any other agents used for cross linking the antimicrobial agents and the solvent do not form a slurry.

According to a 28$^{th}$ embodiment, in any one of the 1$^{st}$ to 27$^{th}$ embodiments, the liquor of the first and/or second process cycle contains an emulsifying agent, in particular one selected from the group consisting of polyoxyethylene monostearate, polyoxyethylene sorbitan monolaurate, polyethylene glycol 400 monolaurate, ethylene oxide condensates, fatty alcohol ethoxylates, and sodium lauryl sulfates.

According to a 29$^{th}$ embodiment, in any one of the 1$^{st}$ to 28$^{th}$ embodiments, the liquor of the first and/or second process cycle contains an emulsifying agent in an amount of 0.05 to 5% by weight, preferably 0.1 to 2.5% by weight, based on weight of the textile material, or in an amount of 1 to 50 grams per liter of liquor.

According to a 30$^{th}$ embodiment, in any one of the 1st to 29$^{th}$ embodiments, the liquor of the first and/or second process cycle has a pH-value of at most 6.9, preferably at most 6.5, more preferably at most 6.3, in particular at most 6.0, and most preferably at most about 5.5.

According to a 31$^{st}$ embodiment, in any one of the 1$^{st}$ to 30$^{th}$ embodiments, the liquor of the first and/or second process cycle has a pH-value of at least 3.0, preferably at least 3.5, more preferably at least 4.0, even more preferably at least 4.5, in particular at least 5.0, and most preferably at least about 5.5.

According to a 32nd embodiment, in any one of the 1$^{st}$ to 31$^{st}$ embodiments, the pH-value of the liquor of the first and/or second process cycle is set using an organic acid, in particular citric acid, acetic acid, or a combination thereof, preferably citric acid, preferably in a concentration of 1 to 5, more preferably 2 to 4, in particular 2.5 to 3.5, and most preferably about 3 grams per liter of liquor.

According to a 33$^{rd}$ embodiment, in the process of any one of the 1$^{st}$ to 32$^{nd}$ embodiments, the value of dynamic viscosity of the liquor of the first and/or second process cycle at 20 °C and/or 80 °C, in centipoise (cP), is at most 20% higher than the dynamic viscosity of water at 20 °C and/or 80 °C, respectively, preferably at most 10%, more preferably at most 5%, particularly at most 2%, and most preferably at most about 0%.

Drying:

According to a 34$^{th}$ embodiment, in the process of any one of the 1$^{st}$ to 33$^{rd}$ embodiments, the heat treatment of the first and/or second cycle comprises drying of the textile material.

According to a 35$^{th}$ embodiment, in the process of any one of the 1$^{st}$ to 34$^{th}$ embodiments, one or any of the

steps of drying of the textile material is conducted at least partially at an ambient temperature of at least 100 °C, preferably at least 110 °C, more preferably at least 115 °C, and most preferably at least about 120 °C.

According to a 36th embodiment, in the process of any one of the 1st to 35th embodiments, one or any of the steps of drying of the textile material is conducted at an ambient temperature of at most 190 °C, preferably at most 180 °C, more preferably at most 170 °C.

According to a 37th embodiment, in the process of any one of the 1st to 36th embodiments, one or any of the steps of drying of the textile is conducted at an ambient temperature of at most 160 °C, preferably at most 150 °C, more preferably at most 140 °C, particularly at most 130 °C, and most preferably at most about 120 °C.

According to a 38th embodiment, in the process of any one of the 1st to 37th embodiments, one or any of the steps of drying is conducted by passing the treated textile material through a stenter or similar drying machine.

Curing:

According to a 39th embodiment, in the process of any one of the 34th to 38th embodiments, the heat treatment of the first and/or second cycle comprises curing the dried textile material.

According to a 40th embodiment, in the 39th embodiment, the temperature of the liquor during the exhaust process is sufficiently high and the exhaust time is sufficiently long and the curing temperature is sufficiently high and the curing time is sufficiently long such that the one or more antimicrobial agents are sufficiently strongly fixed to the textile material such that after washing of the textile material, the textile material exhibits the leaching values of the antimicrobial agents as defined in 154th embodiment and/or such that the textile material exhibits the antimicrobial performance as defined in any one of 147th to 153rd embodiment.

According to a 41st embodiment, in the 40th embodiment, said washing comprises washing of the textile material with water, preferably having a temperature in the range of 20 °C and 60 °C, preferably performed for at least 30 and at most 90 minutes, more preferably as defined in any one of 67th to 69th embodiment.

According to a 42nd embodiment, in the 40th or 41st embodiments, the temperature of the liquor during the exhaust process is sufficiently low and the exhaust time is sufficiently short such that the textile material does not discolour and/or turn yellow and/or its breaking strength is not reduced by more than 15%, preferably not more than 10%, more preferably not more than 7%, most preferably not more than 5%, preferably when measured in accordance with ASTM standard D 5035-11 in case the textile material is a fabric or in accordance with ASTM standard D 2256/D 2256M-10e1 in case the textile material is a yarn, as a result of the exhaust process.

According to a 43rd embodiment, in the process of any one of the 40th to 42nd embodiments, the curing temperature is sufficiently low and the curing time is sufficiently short such that the textile material does not melt and/or burn and/or discolour and/or turn yellow, as a result of the curing, and/or the textile strength of the textile material is not reduced by more than 15%, preferably not more than 10%, more preferably not more than 7%, most preferably not more than 5%, preferably when measured in accordance with ASTM standard D 5035-11 in case the textile material is a fabric or in accordance with ASTM standard D 2256/D 2256M-10e1 in case the textile material is a yarn, as a result of the curing process.

According to a 44th embodiment, in the process of any one of the 39th to 43rd embodiments, curing is conducted at least partially at a curing temperature of at least 150 °C, preferably at least 160 °C, more preferably at least 170 °C, particularly at least 175 °C, and most preferably at least about 180 °C.

According to a 45th embodiment, in the process of any one of the 39th to 44th embodiments, curing is conducted at an ambient temperature of at most 205 °C, preferably at most 195 °C, more preferably at most 190 °C, particularly at most 185 °C, and most preferably at most about 180 °C.

According to a 46th embodiment, in the process of any one of the 44th or 45th embodiments, the textile material is a fabric having a weight of less than 350 grams per $m^2$ and curing takes place at the curing temperature as defined in 36th embodiment, over a period of at least 30 seconds, preferably at least 40 seconds, more preferably at least 50 seconds, most preferably at least about 60 seconds.

According to a 47th embodiment, in the process of any one of the 44th or 45th embodiments, the textile material is a fabric having a weight of 350 to 500 grams per $m^2$ and curing takes place at the curing temperature as defined in 36th embodiment, over a period of at least 45 seconds, preferably at least 60 seconds, more preferably at least 75 seconds, most preferably at least about 90 seconds.

According to a 48th embodiment, in the process of any one of the 44th or 45th embodiments, the textile material is a fabric having a weight of more than grams per $m^2$ and curing takes place at the curing temperature as defined in 4 the 4th embodiment over a period of at least 60 seconds, preferably at least 80 seconds, more preferably at least 100 seconds, most preferably at least about 120 seconds.

According to a 49th embodiment, in the process of any one of the 44th to 45th embodiments, the textile material is a fabric having a weight of less than 350 grams per $m^2$ and curing takes place at the curing temperature as defined in 36th embodiment over a period of at most 120 seconds, preferably at most 90 seconds, more preferably at most 80

seconds, particularly at most 70 seconds, most preferably at most about 60 seconds.

According to a 50$^{th}$ embodiment, in the process of any one of the 44$^{th}$, 45$^{th}$, or 48$^{th}$ embodiments, the textile material is a fabric having a weight of 350 to 500 grams per $m^2$ and curing takes place at the curing temperature as defined in 44$^{th}$ embodiment over a period of at most 180 seconds, preferably at most 150 seconds, more preferably at most 120 seconds, most preferably at most about 90 seconds.

According to a 51$^{st}$ embodiment, in the process of any one of the 44$^{th}$, 45$^{th}$, or 48$^{th}$ embodiments, the textile material is a fabric having a weight of more than 500 grams per $m^2$ and curing takes place at the curing temperature as defined in 44th embodiment over a period of at most 240 seconds, preferably at most 200 seconds, more preferably at most 160 seconds, most preferably at most about 120 seconds.

According to a 52$^{nd}$ embodiment, in the process of any one of the 39$^{th}$ to 51$^{st}$ embodiments, curing immediately follows drying of the textile material without the textile material substantially cooling down between drying of the textile material and curing.

According to a 53$^{rd}$ embodiment, in the 52$^{nd}$ embodiment, the textile material is a fabric and drying of the textile material and curing are performed over a period of together at least 45 seconds, preferably at least 50 seconds, more preferably at least 55 seconds, most preferably at least about 60 seconds, per 100 grams of fabric weight per square meter.

According to a 54$^{th}$ embodiment, in the process of any one of the 52$^{nd}$ or 53$^{rd}$ embodiments, the textile material is a fabric and drying of the textile material and curing are performed over a period of together at most 75 seconds, preferably at most 70 seconds, more preferably at most 65 seconds, most preferably at most about 60 seconds, per 100 grams of fabric weight per square meter.

According to a 55$^{th}$ embodiment, in the process of any one of the 44$^{th}$ to 54$^{th}$ embodiments, the textile is subjected to gradually increasing temperatures, preferably at least in two intermediate steps, preferably at least in 3 intermediate steps, more preferably continuously, before reaching the curing temperature as defined in 44$^{th}$ embodiment.

According to a 56$^{th}$ embodiment, in the 55$^{th}$ embodiment, the gradually increasing temperatures start at a temperature of at least 100 °C, preferably at least 110 °C, more preferably at least 115 °C, most preferably at least about 120 °C.

According to a 57$^{th}$ embodiment, in the process of any one of the 55$^{th}$ or 56$^{th}$ embodiments, the gradually increasing temperatures start at a temperature of at most 140 °C, preferably at most 130 °C, more preferably at most 125 °C, most preferably at most about 120°C.

According to a 58$^{th}$ embodiment, in the process of any one of the 55$^{th}$ to 57$^{th}$ embodiments, the textile material is a fabric and the temperature gradually increases over a period of at least 15 seconds, preferably at least 18 seconds, more preferably at least 20 seconds, most preferably at least about 22 seconds, per 100 grams of fabric weight per square meter.

According to a 59$^{th}$ embodiment, in the process of any one of the 55th to 58th embodiment, the textile material is a fabric and the temperature gradually increases over a period of at most 30 seconds, preferably at most 27 seconds, more preferably at most 25 seconds, most preferably at most about 23 seconds, per 100 grams of fabric weight per square meter.

According to a 60$^{th}$ embodiment, in the process of any one of the 53rd to 59th embodiments, drying of the textile takes place at least partially, preferably fully, during the period of gradual temperature increase.

According to a 61$^{st}$ embodiment, in the process of any one of the 39th to 60th embodiments, curing is conducted by passing the textile material through a stenter.

According to a 62$^{nd}$ embodiment, in the 61st embodiment, when depending from the 55th embodiment, the gradual increase in temperature prior to reaching the curing temperature as defined in 43rd embodiment takes place in at least 2, preferably 3, more preferably 4 chambers of the stenter.

According to a 63$^{rd}$ embodiment, in the 62nd embodiment, the gradual increase in temperature prior to reaching the curing temperature as defined in 43rd embodiment takes place in 3 chambers of the stenter, the first chamber subjecting the textile material to a temperature of at least 100 °C, preferably at least 110 °C, more preferably at least 115 °C, most preferably at least about 120 °C, the second chamber subjecting the textile material to a temperature of at least 115 °C, preferably at least 125 °C, more preferably at least 130 °C, most preferably at least about 135 °C, the third chamber subjecting the textile material to a temperature of at least 130 °C, preferably at least 140 °C, more preferably at least 145 °C, most preferably at least about 150 °C.

According to a 64$^{th}$ embodiment, in the process of any one of the 62nd or 63rd embodiments, the gradual increase in temperature prior to reaching the curing temperature as defined in 43rd embodiment takes place in 3 chambers of the stenter, the first chamber subjecting the textile material to a temperature of at most 140 °C, preferably at most 130 °C, more preferably at most 125 °C, most preferably at most about 120 °C, the second chamber subjecting the textile material to a temperature of at most 155 °C, preferably at most 145 °C, more preferably at most 140 °C, most preferably at most about 135 °C, the third chamber subjecting the textile material to a temperature of at most 170 °C, preferably at most 160 °C, more preferably at most 155 °C, most preferably at most about 150 °C.

According to a 65$^{th}$ embodiment, in the 61st embodiment, drying of the textile and curing are conducted in one

pass by passing the textile material through the stenter, wherein preferably the textile material is a fabric and the dwell time in the stenter is the periods for drying of the textile and curing together as defined in any one 53rd or 54th embodiments.

According to a 66th embodiment, in the process of any one of the 39th to 49th or 61st to 65th embodiments, drying of the textile and curing are conducted in two different passes by first passing the textile material through a stenter for drying and then passing the textile material again through a stenter for curing.

Washing:

According to a 67th embodiment, in the process of any one of the 1st to 66th embodiments, in the first and/or second process cycle, in the step of washing, the textile material is washed in water, preferably without detergent or any other similar textile chemical.

According to a 68th embodiment, in the 67th embodiment, the textile material is washed in a bath having a temperature between 30 °C and 50 °C, preferably between 35 °C and 45 °C.

According to a 69th embodiment, in the process of any one of the 67th or 68th embodiments, the textile material is washed in a bath for at least 20 minutes, preferably at least 30 minutes, particularly at least 35 minutes, preferably at least about 40 minutes.

Before the process starts:

According to a 70th embodiment, in any one of the preceding embodiments, the textile material is submitted to a dyeing process before performing the first process cycle.

According to a 71st embodiment, in any one of the preceding embodiments, at the beginning of the first process cycle, the textile material is free of chemicals and/or silicones or made free by processes such as scouring, bleaching or washing.

According to an embodiment 71a, in any one of the preceding embodiments, at the beginning of the first process cycle, the textile material is in a naturally absorbing state and/or not treated with any chemicals which reduce the absorbency of the textile material.

Starting textile material:

According to a 72nd embodiment, in the process of any one of the 1st to 70th embodiments, the starting textile material comprises hydroxyl, peptide and/or carbonyl groups, in particular hydroxyl and/or peptide groups.

According to a 73rd embodiment, in the process of any one of the 1st to 72nd embodiments, the starting textile material is a cellulosic textile material, a preferably non-inert synthetic textile material, or a blend comprising preferably at least 25% of a cellulosic and/or a preferably non-inert synthetic textile material.

According to a 74th embodiment, in the 73rd embodiment, the cellulosic textile material comprises one or more selected from the group consisting of cotton, viscose, rayon, linen, hemp, ramie, jute, and combinations (blends) thereof.

According to a 75th embodiment, in the 73rd embodiment, the synthetic textile material comprises one or more selected from the group consisting of polyester, polyamide (nylon), acrylic polyester, spandex (elastane, Lycra), aramids, modal, sulfar, polylactide (PLA), lyocell, polybutyl tetrachloride (PBT), and combinations (blends) thereof.

According to a 76th embodiment, in the process of any one of the 1st to 75th embodiments, the starting textile material comprises cotton, polyester, or a blend of cotton and polyester.

According to a 77th embodiment, in the process of any one of the 1st to 76th embodiments, the starting textile material comprises between 20% and 60% of cotton, preferably between 25% and 50% of cotton, more preferably between 30% and 40% of cotton.

According to a 78th embodiment, in the process of any one of the 1st to 77th embodiments, the starting textile material comprises between 40% and 80% of polyester, preferably between 50% and 75% of polyester, more preferably between 60% and 70% of polyester.

According to a 79th embodiment, in the process of any one of the 1st to 78th embodiments, the textile material is a fiber, a yarn, or a fabric, in particular a preferably multifilament yarn or a preferably multifilament fabric, in particular a preferably multifilament fabric.

According to a 80th embodiment, in the process of any one of the 1st to 79th embodiments, the textile material is selected from the group consisting of woven, knitted, crocheted, bonded, warp knitted, and non-woven fabrics.

According to an 81st embodiment, in the process of any one of the 1st to 80th embodiments, the textile material is spun, electrospun, drawn or extruded.

Antimicrobials, crosslinkers and other active agents:

According to a 82nd embodiment, in the process of any one of the 1st to 81st embodiments, the one or more antimicrobial agents in the liquor of the first and/or second process cycle are selected from the group consisting of a quaternary ammonium organosilane compound, silver cations, polyglucosamine, an azole-based compound, and polyhexamethylene biguanide.

According to a 83rd embodiment, in the process of any one of the 1st to 82nd embodiments, the liquor of the first and/or second process cycle or the liquors of the first and second process cycle together comprise at least two, preferably at least three, more preferably at least four, most preferably all five antimicrobial agents selected from the group consisting of a quaternary ammonium organosilane compound, silver cations, polyglucosamine, an azole-based compound, and polyhexamethylene biguanide.

According to a 84th embodiment, in the process of any one of the 1st to 83rd embodiments, the liquor of the first and/or second process cycle or the liquors of the first and second process cycle together comprise at least two, preferably at least three, more preferably all four antimicrobial agents selected from the group consisting of a quaternary ammonium organosilane compound, polyglucosamine, an azole-based compound, and polyhexamethylene biguanide.

According to a 85th embodiment, in the process of any one of the 1st to 84th embodiments, the liquor of the first and/or second process cycle or the liquors of the first and second process cycle together comprise a quaternary ammonium organosilane compound and at least one, preferably at least two, more preferably at least three, most preferably all four antimicrobial agents selected from the group consisting of silver cations, polyglucosamine, an azole-based compound, and polyhexamethylene biguanide.

According to a 86th embodiment, in the process of any one of the 1st to 85th embodiments, the liquor of the first and/or second process cycle or the liquors of the first and second process cycle together comprise a quaternary ammonium organosilane compound and at least one, preferably at least two, more preferably all three antimicrobial agents selected from the group consisting of polyglucosamine, an azole-based compound, and polyhexamethylene biguanide.

According to a 87th embodiment, in the process of any one of the 1st to 86th embodiments, the liquor of the first and/or second process cycle or the liquors of the first and second process cycle together comprise at least two, preferably at least three, more preferably all four antimicrobial agents selected from the group consisting of a silver cations, polyglucosamine, an azole-based compound, and polyhexamethylene biguanide.

According to an 88th embodiment, in the process of any one of the 1st to 87th embodiments, the one or more antimicrobial agents in the liquor of the first and/or second process cycle, in particular of the first and second process cycle, comprise a quaternary ammonium organosilane compound.

According to an 89th embodiment, in the process of any one of the 82nd to 88th embodiments, the quaternary ammonium organosilane compound has the formula

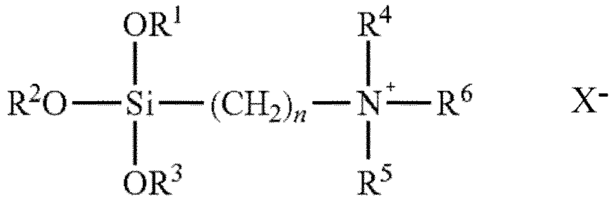

wherein the radicals have, independently of each other, the following meanings,

$R^1$, $R^2$, and $R^3$ are a $C_1$-$C_{12}$-alkyl group, in particular a $C_1$-$C_6$-alkyl group, preferably a methyl group;
$R^4$, and $R^5$ are a $C_1$-$C_{18}$-alkyl group, a $C_1$-$C_{18}$-hydroxyalkyl group, a $C_3$-$C_7$-cycloalkyl group, a phenyl group, or $C_7$-$C_{10}$-aralkyl group, in particular a $C_1$-$C_{18}$-alkyl group, preferably a methyl group;
$R^6$ is a $C_1$-$C_{18}$-alkyl group, in particular a $C_8$-$C_{18}$-alkyl group;
$X^-$ is an anion, in particular chloride, bromide, fluoride, iodide, acetate, or a sulfonate group, preferably chloride or bromide; and
n is an integer in the range of 1 to 6, in particular an integer in the range of 1 to 4, preferably 3.

According to a 90th embodiment, in the process of any one of the 82nd to 89th embodiments, the quaternary ammonium organosilane compound comprises dimethyloctadecyl[3-(trimethoxysilyl)propyl]ammonium chloride or dimethyltetradecyl[3-(trimethoxysilyl)propyl]ammonium chloride, in particular dimethyloctadecyl[3-(trimethoxysilyl)-propyl] ammonium chloride.

According to a 91st embodiment, in the process of any one of the 1st to 90th embodiments, the one or more

antimicrobial agents in the liquor of the first and/or second process cycle, in particular of the first process cycle, preferably only of the first process cycle, comprise silver cations, in particular silver cations trapped in an inorganic or organic matrix, preferably silver cations trapped in an aluminosilicate or a polymeric matrix.

According to a 92$^{nd}$ embodiment, in the 91st embodiment, the aluminosilicate is a sodium-poly(sialate-disiloxo) compound.

According to a 93$^{rd}$ embodiment, in the 91st embodiment, the polymeric matrix is an acrylic polymer.

According to a 94$^{th}$ embodiment, in the process of any one of the 1st to 93rd embodiments, the one or more antimicrobial agents in the liquor of the first and/or second process cycle, in particular of the first process cycle, preferably only of the first process cycle, comprise polyglucosamine.

According to a 95$^{th}$ embodiment, in the process of any one of the 1st to 94th embodiments, the one or more antimicrobial agents in the liquor of the first and/or second process cycle, in particular of the first process cycle, preferably only of the first process cycle, comprise polyhexamethylene biguanide.

According to a 96$^{th}$ embodiment, in the process of any one of the 1st to 95th embodiments, the one or more antimicrobial agents in the liquor of the first and/or second process cycle, in particular of the first and second process cycle or only of the second process cycle comprise an azole-based compound.

According to a 97$^{th}$ embodiment, in the any one of 1st to 95th embodiments, the liquor of the first and/or second process cycle contains a crosslinking agent.

According to a 98$^{th}$ embodiment, in the process of any one of the 1st to 97th embodiments, the formulation of one or more of the one or more antimicrobial agents, in particular of an azole-based compound, contains a cross linking agent, or the crosslinking agent is part of one or more of the one or more antimicrobial agents.

According to a 99$^{th}$ embodiment, in the process of any one of the 97th or 98th embodiments, the cross linking agent does not form films at 80 °C.

According to a 100$^{th}$ embodiment, in the process of any one of the 97th to 99th embodiments, the cross linking agent is a preferably blocked isocyanate cross linking agent.

According to a 101$^{st}$ embodiment, in the process of any one of the 97th to 100th embodiments, the liquor of the first and/or in particular the second process cycle, in particular of the first and second process cycle or only of the second process cycle, contains an azole-based compound.

According to a 102$^{nd}$ embodiment, in the process of any one of the 1st to 101$^{st}$ embodiments, the one or more antimicrobial agents in the liquor of the first and/or second process cycle or in the liquors of the first and second process cycle together comprise a quaternary ammonium organosilane compound and silver cations.

According to a 103$^{rd}$ embodiment, in the process of any one of the 1st to 102nd embodiments, the one or more antimicrobial agents in the liquor of the first and/or second process cycle or in the liquors of the first and second process cycle together comprise a quaternary ammonium organosilane compound and polyhexamethylene biguanide.

According to a 104$^{th}$ embodiment, in the process of any one of the 1st to 103rd embodiments, the one or more antimicrobial agents in the liquor of the first and/or second process cycle or in the liquors of the first and second process cycle together comprise a quaternary ammonium organosilane compound, silver cations, and polyhexamethylene biguanide.

According to a 105$^{th}$ embodiment, in the process of any one of the 1st to 104th embodiments, the one or more antimicrobial agents in the liquor of the first and/or second process cycle or in the liquors of the first and second process cycle together comprise a quaternary ammonium organosilane compound, silver cations, and an azole-based compound.

According to a 106$^{th}$ embodiment, in the process of any one of the 1st to 105th embodiments, the one or more antimicrobial agents in the liquor of the first and/or second process cycle or in the liquors of the first and second process cycle together comprise a quaternary ammonium organosilane compound, silver cations, polyhexamethylene biguanide, and polyglucosamine.

According to a 107$^{th}$ embodiment, in the process of any one of the 1st to 106th embodiments, the one or more antimicrobial agents in the liquor of the first and/or second process cycle or in the liquors of the first and second process cycle together comprise at least two, preferably at least three, more preferably all four antimicrobial agents selected from the group consisting of a quaternary ammonium organosilane compound, silver cations, polyhexamethylene biguanide, and an azole-based compound.

According to a 108$^{th}$ embodiment, in the process of any one of the 1st to 107th embodiments, the one or more antimicrobial agents in the liquor of the first and/or second process cycle or in the liquors of the first and second process cycle together comprise a quaternary ammonium organosilane compound, silver cations, polyglucosamine, an azole-based compound, and polyhexamethylene biguanide.

According to a 109$^{th}$ embodiment, in the process of any one of the 1st to 83rd and 91st to 101st embodiments, the one or more antimicrobial agents in the liquor of the first and/or second process cycle or in the liquors of the first and second process cycle together comprise silver cations, polyglucosamine, an azole-based compound, and polyhexamethylene biguanide.

According to a 110$^{th}$ embodiment, in the process of any one of the 1st to 109th embodiments, the liquor of the

first and/or second process cycle, in particular of the first process cycle, contains the one or more antimicrobial agents in an amount of 0.1 to 20% by weight, in particular 0.1 to 15% by weight, preferably 0.1 to 10% by weight, more preferably 0.1 to 8% by weight, most preferably 0.1 to 5% by weight, based on weight of the textile material.

According to a 111$^{th}$ embodiment, in the process of any one of the 1st to 110th embodiments, the antimicrobial agents in the liquors of all process cycles together are applied to the textile material in an amount of together at least 0.1% by weight, preferably at least 0.3% by weight, more preferably at least 0.5% by weight, particularly at least 0.6% by weight, and most preferably at least 0.7% by weight, based on weight of the textile material.

According to a 112$^{th}$ embodiment, in the process of any one of the 1st to 111st embodiments, the antimicrobial agents in the liquors of all process cycles together are applied to the textile material in an amount of together at most 2.5% by weight, preferably at most 2.0% by weight, more preferably at most 1.7% by weight, particularly at most 1.5% by weight, and most preferably at most 1.3% by weight, based on weight of the textile material.

According to a 113$^{th}$ embodiment, in the process of any one of the 1st to 112nd embodiments, the starting textile material is treated with a further antimicrobial agent, in particular one selected from the group consisting of benzalkonium chloride; benzethonium chloride; benzoxonium chloride; dequalinium; vinylbenzyltrimethylammonium chloride; cetrimonium bromide, optionally in combination with reactive amino silicone having hydroxyl groups or alkoxy groups such as methoxy or ethoxy groups; 2-phynolphenol, Acibenzolar, Paclobutrazol, Azoxystrobin, Epoxiconazole, Binapacryl, Iprodion, Triadimefon, Fuberidazole, Flusilazole, 2,4,6-tribromophenol, Vinclozolin, Pyrazophos, Tebuconazole, Metalaxy, Dichlofluanid, Strobilurins, Myclobutanil, Fenpropimorph with blocked isocyanate, vinylbenzyltrimethylammonium chloride, didecyldimethylammonium chloride, Fenticlor, 9-aminoacridine, Dibromopropamidine, Chlorothalonil, Povodine-Iodine, Fenamidone, Pencycuron, cetylpyridinium chloride, Cetrimonium, cetyl Trimethylammonium, Bupirimate, Fluopicolide, Hexachlorophene, Triclocarban, Nitrofura, Clioquinol, Methylparaben, Propamocarb, cinnamaldehyde, hexamidine, and Falcarindio.

According to a 114th embodiment, in the process of any one of the 1st to 113rd embodiments, the liquor of the first and/or second process cycle further comprises at least one functional agent selected from the group consisting of water and oil repellents, fluorocarbon chemicals, abrasion resistant agents, antistatic agents, anti-pilling agents, easy care resins, wetting agents, wicking chemicals, softeners, mosquito or insect repellants, UV protectors, soil releasing agents, viscosity modifiers, flame retardants, hydrophilic polymer, polyurethane, fragrances, and pH modifiers.

According to a 115th embodiment, in the process of any one of the 14th to 114th embodiments, the liquor of the first process cycle is different from the liquor in the second process cycle.

According to a 116th embodiment, in the 115th embodiment, in the first process cycle, a quaternary ammonium organosilane compound, silver cations, polyglucosamine, an azole-based compound, and polyhexamethylene biguanide are used as antimicrobial agents, and in the second process cycle, a quaternary ammonium organosilane compound is used as an antimicrobial agent.

According to a 117th embodiment, in the process of any one of the 82nd to 116th embodiments, the quaternary ammonium organosilane compound in the liquors of all process cycles together is applied to the textile material in an amount of at least 0.1% by weight, preferably at least 0.2% by weight, more preferably at least 0.25% by weight, and most preferably at least 0.3% by weight, based on the weight of the textile material.

According to a 118th embodiment, in the process of any one of the 82nd to 117th embodiments, the quaternary ammonium organosilane compound in the liquors of all process cycles together is applied to the textile material in an amount of at most 5% by weight, preferably at most 1.5% by weight, more preferably at most 1.2% by weight, in particular at most 1.0% by weight, and most preferably at most 0.8% by weight, based on the weight of the textile material.

According to a 119th embodiment, in the process of any one of the 82nd to 118th embodiments, the silver cations trapped in an inorganic or organic matrix in the liquors of all process cycles together is applied to the textile material in an amount of at most 0.1% by weight, preferably at most 0.05% by weight, more preferably at most 0.02% by weight, and most preferably at most about 0.01% by weight, based on the weight of the textile material.

According to a 120$^{th}$ embodiment, in the process of any one of the 82nd to 119$^{th}$ embodiments, the silver cations trapped in an inorganic or organic matrix in the liquors of all process cycles together are applied to the textile material in an amount of at least 0.001% by weight, preferably at least 0.002% by weight, more preferably at least 0.003% by weight, and most preferably at least about 0.005% by weight, based on the weight of the textile material.

According to a 121th embodiment, in the process of any one of the 82nd to 120th embodiments, the polyglucosamine in the liquors of all process cycles together is applied to the textile material in an amount of at most 0.5% by weight, preferably at most 0.4% by weight, more preferably at most 0.3% by weight, and most preferably at most 0.2% by weight, based on the weight of the textile material.

According to a 122$^{nd}$ embodiment, in the process of any one of the 82nd to 121st embodiments, the polyglucosamine in the liquors of all process cycles together is applied to the textile material in an amount of at least 0.05% by weight, preferably at least 0.08% by weight, more preferably at least 0.12% by weight, and most preferably at least 0.15% by weight, based on the weight of the textile material.

According to a 123$^{rd}$ embodiment, in the process of any one of the 82nd to 122nd embodiments, the polyhexamethylene biguanide in the liquors of all process cycles together is applied to the textile material in an amount of at most 0.5% by weight, preferably at most 0.4% by weight, more preferably at most 0.3% by weight, and most preferably at most 0.2% by weight, based on the weight of the textile material.

According to a 124th embodiment, in the process of any one of the 82nd to 123rd embodiments, the polyhexamethylene biguanide in the liquors of all process cycles together is applied to the textile material in an amount of at least 0.03% by weight, preferably at least 0.05% by weight, or at least 0.10% by weight, preferably at least 0.15% by weight, based on the weight of the textile material.

According to a 125th embodiment, in the process of any one of the 82nd to 124th embodiments, the azole-based compound in the liquors of all process cycles together is applied to the textile material in an amount of at most 0.6% by weight, preferably at most 0.5% by weight, more preferably at most 0.4% by weight, and most preferably at most 0.3% by weight, based on the weight of the textile material.

According to a 126th embodiment, in the process of any one of the 82nd to 125th embodiments, the azole-based compound in the liquors of all process cycles together is applied to the textile material in an amount of at least 0.05% by weight, preferably at least 0.10% by weight, more preferably at least 0.15% by weight, and most preferably at least 0.20% by weight, based on the weight of the textile material.

According to a 127th embodiment, in the process of any one of the 82nd to 116th embodiments, in all process cycles together,

- the quaternary ammonium organosilane compound is applied to the textile material in an amount of at least 0.1% by weight, preferably at least 0.2% by weight, more preferably at least 0.3% by weight, and in an amount of at most 0.7% by weight, preferably at most 0.6% by weight, more preferably at most 0.5% by weight; and/or the silver cations trapped in an inorganic or organic matrix are applied to the textile material in an amount of at least 0.004% by weight, preferably at least 0.006% by weight, more preferably at least 0.008% by weight, and in an amount of at most 0.03% by weight, preferably at most 0.02% by weight, more preferably at most 0.15% by weight; and/or
- the polyglucosamine is applied to the textile material in an amount of at least 0.5% by weight, preferably at least 0.08% by weight, more preferably at least 0.10% by weight, and in an amount of at most 0.3% by weight, preferably at most 0.25% by weight, more preferably at most 0.2% by weight;
- and/or the azole-based compound is applied to the textile material in an amount of at least 0.1% by weight, preferably at least 0.15% by weight, more preferably at least 0.2% by weight, and in an amount of at most 0.5% by weight, preferably at most 0.4% by weight, more preferably at most 0.3% by weight;
- and/or the polyhexamethylene biguanide is applied to the textile material in an amount of at least 0.2% by weight, preferably at least 0.03% by weight, more preferably at least 0.4% by weight, and in an amount of at most 0.2% by weight, preferably at most 0.15% by weight, more preferably at most 0.1% by weight, based on the weight of the textile material.

According to a 128th embodiment, in the process of any one of the 82nd to 116th embodiments, in all process cycles together,

- the quaternary ammonium organosilane compound is applied to the textile material in an amount of at least 0.3% by weight, preferably at least 0.5% by weight, more preferably at least 0.6% by weight, and in an amount of at most 0.9% by weight, preferably at most 0.8% by weight, more preferably at most 0.7% by weight;
- and/or the silver cations trapped in an inorganic or organic matrix are applied to the textile material in an amount of at least 0.004% by weight, preferably at least 0.006% by weight, and more preferably at least 0.008% by weight, and in an amount of at most 0.03% by weight, preferably at most 0.02% by weight, more preferably at most 0.15% by weight;
- and/or the azole-based compound is applied to the textile material in an amount of at least 0.1% by weight, preferably at least 0.15% by weight, more preferably at least 0.2% by weight, and in an amount of at most 0.5% by weight, preferably at most 0.4% by weight, more preferably at most 0.3% by weight;
- and/or the polyhexamethylene biguanide is applied to the textile material in an amount of at least 0.5% by weight, preferably at least 0.08% by weight, more preferably at least 0.10% by weight, and in an amount of at most 0.3% by weight, preferably at most 0.25% by weight, more preferably at most 0.2% by weight, based on the weight of the textile material.

According to a 129th embodiment, in the process of any one of the 113th to 128th embodiments, the further antimicrobial agent is used in the liquor of the first and/or second process cycle, or of the liquor of the first and second process cycles together, in an amount of 0.1 to 10% by weight, preferably in an amount of 0.1 to 5% by weight, based on the weight of the textile material.

According to a 130th embodiment, in the process of any one of the 114th to 129th embodiments, the functional

agent is used in the liquor of the first and/or second process cycle, or of the liquor of the first and second process cycles together, in an amount of 0.1 to 10% by weight, preferably in an amount of 0.1 to 5% by weight, based on the weight of the textile material.

According to a 131st embodiment, in the process of any one of the 1st to 130th embodiments, the one or more antimicrobial agents in the liquor of the first and/or second process cycle are no nanoparticles and/or are not in the form of nanoparticles.

According to a 132$^{nd}$ embodiment, in the process of any one of the 1st to 131st embodiments, the one or more antimicrobial agents in the liquor of the first and/or second process cycle have a particle size, in all dimensions (length, width, height), of at least 250 nanometers, preferably at least 500 nanometers, more preferably at least 750 nanometers, and most preferably at least 1,000 nanometers.

According to a 133$^{rd}$ embodiment, in the process of any one of the 1st to 132nd embodiments, the one or more antimicrobial agents in the liquor of the first and/or second process cycle are non-ionic or cationic.

According to a 134$^{th}$ embodiment, in the process of any one of the 82nd to 133rd embodiments, the azole-based compound is carbendazime, thiabendazole or a triazole-based compound.

According to a 135$^{th}$ embodiment, in the 134th embodiment, the triazole-based compound is propiconazole.

According to a 136$^{th}$ embodiment, in the process of any one of the 1$^{st}$ to 135$^{th}$ embodiments, the one or more antimicrobial agents are bound to the textile material either directly, in particular if the agent is a quaternary ammonium organosilane compound, polyglucosamine, or polyhexamethylene biguanide, by means of an inorganic or organic matrix directly bound to the textile material, in particular if the agent is silver cations, or via cross linking, in particular if the agent is an azole-based compound.

According to a 137$^{th}$ embodiment, in the process of any one of the 1st to 136$^{th}$ embodiments, one or more of the one or more antimicrobial agents are bound to the textile material without the cyclodextrin and/or an inclusion complex, in particular without an inclusion complex of fiber-reactive cyclodextrin derivatives and antimicrobial agents, and/or the liquor of the first and/or second process cycle does not contain cyclodextrin, and/or no inclusion complexes, e.g. no inclusion complexes of fiber-reactive cyclodextrin derivatives and antimicrobial agents.

Claims to the textile material:

Product-by-process:

A 138$^{th}$ embodiment is a textile material obtainable by a process according to any one of the 1st to 137$^{th}$ embodiment.

Textile material to which antimicrobial agent is adhered:

A 139$^{th}$ embodiment of the invention is a textile material to which one or more antimicrobial agents are adhered or bound or covalently bonded.

According to a 140$^{th}$ embodiment, in the 139th embodiment, the textile material is a material according to 138th embodiment

According to a 141$^{st}$ embodiment, in the textile material of any one of the 139th or 140th embodiments, the one or more antimicrobial agents are selected and/or applied as defined in any one of 82nd to 137$^{th}$ embodiment

According to a 142nd embodiment, in the textile material of any one of the 139th or 140th embodiments, the antimicrobial agents adhered or bound or covalently bonded to the textile material have a total weight as defined in 111st and/or 112 embodiment, and/or an individual weight as defined for the respective antimicrobial agents in any one of 116th to 128$^{th}$ embodiment.

According to a 143rd embodiment, in the textile material of any one of the 139th to 142nd embodiments, the (untreated) textile material is a material as defined in any one of 72nd to 81$^{st}$ embodiment.

According to a 144th embodiment, in the textile material of any one of the 139th to 143rd embodiments, the one or more antimicrobial agents are substantially uniformly dispersed across the cross section of the textile.

According to a 145th embodiment, in the textile material of any one of the 139th to 144th embodiments, the one or more antimicrobial agents are adhered or bound or covalently bonded to the textile material in a non-leaching manner.

According to a 146th embodiment, in the textile material of any one of the 145th embodiments, non-leaching means that for any amount of 0.1% by weight of an antimicrobial agent adhered or bound or covalently bonded to the textile material, based on the weight of the textile material, leaching of the antimicrobial agent is as defined in 154$^{th}$ embodiment.

Antimicrobial effects of the textile material:

According to a 147th embodiment, the textile material of any one of the 139th to 146$^{th}$ embodiments exhibits a reduction value of Escherichia coli ATCC 25922 and/or Staphylococcus aureus ATCC 6538 and/or ATCC 43300 and/or Klebsiella pneumonia ATCC 4352 and/or ATCC 13883 and/or Vibrio cholera ATCC 14035 and/or Clostridium difficile ATCC 43598 spores, measured in accordance with ASTM standard E 2149-10 and/or AATCC test method 100-1999 and/or AATCC test method 100-2012, of at least at least 99.9%, preferably at least 99.99%, more preferably at least 99.999%, most preferably at least 99.9999%, within 24 hours of contact time, preferably within 6 hours of contact time, more preferably within 1 hour of contact time, even more preferably within 15 minutes of contact time, particularly within 15 minutes of contact time, most preferably within 5 minutes of contact time.

According to a 148$^{th}$ embodiment, in the textile material of the 147th embodiment, the reduction value is achieved even after at least 25 laundry washes in a laundry washing machine at 85±15 °C for 40-50 minutes, preferably using brand name non-antimicrobial, non-ionic and non-chlorine containing laundry detergent, preferably followed by a standard rinse cycle and preferably dried at 62-96 °C for 20-30 minutes.

According to a 149$^{th}$ embodiment, the textile material of any one of the 139th to 148$^{th}$ embodiments exhibits after 25 laundry washes a reduction value of Staphylococcus aureus ATCC 6538 and/or ATCC 43300 and/or Escherichia coli ATCC 11229 and/or Pseudomonas aeruginosa ATCC 15442 and/or Salmonella enterica ATCC 10708 and/or Staphylococcus aureus (MRSA) ATCC 33592 and/or ATCC 43300 and/or Klebsiella pneumonia ATCC 13883 and/or Vibrio cholera ATCC 14035 and/or Clostridium difficile ATCC 43598 spores of at least 99%, preferably at least 99.9%, more preferably at least 99.99%, even more preferably at least 99.999%, most preferably at least 99.9999%, within 10 minutes on continuous reinoculations followed by dry and wet alternate abrasion cycles when tested in accordance with EPA protocol 90072PA4.

According to a 150$^{th}$ embodiment, the textile material of any one of the 139th to 149$^{th}$ embodiments exhibits a reduction value of Phi-X174 bacteriophage of at least 99.9%, preferably at least 99.99%, more preferably at least 99.999%, more preferably at least 99.9999%, most preferably at least 99.99999%, after filtering 60 ml of a 1.23 x $10^8$ PFU/ml Phi-X174 bacteriophage suspension through the textile material at a pressure of 138 mbar for 1 minute in accordance with standard test ASTM F1671/1671M-13.

According to a 151st embodiment, in the 150th embodiment, the reduction value is achieved even after at least 25 laundry washes in a laundry washing machine at 85±15 °C for 40-50 minutes, preferably using brand name non-antimicrobial, non-ionic and non-chlorine containing laundry detergent, preferably followed by a standard rinse cycle and preferably dried at 62-96 °C for 20-30 minutes.

According to a 152nd embodiment, the textile material of any one of the 139th to 151$^{st}$ embodiments exhibits zero growth of microbes when tested in accordance with AATCC Test Method 30-2013 Part III (Agar Plate, Aspergillus Niger).

According to a 153$^{rd}$ embodiment, in the 152nd embodiment, the zero growth value is achieved even after at least 25 laundry washes in a laundry washing machine at 85±15 °C for 40-50 minutes, preferably using brand name non-antimicrobial, non-ionic and non-chlorine containing laundry detergent, preferably followed by a standard rinse cycle and preferably dried at 62-96 °C for 20-30 minutes.

Non-leaching properties of the textile material:

According to a 154$^{th}$ embodiment, in the textile material of any one of the 139th to 153rd embodiments, leaching of one, any, or all of the one or more antimicrobial agents in exposure to water within a test period of 24 hours, preferably within a test period of 48 hours, more preferably within a test period of 72 hours, and most preferably within a test period of 7 days, is at most 5.0 ppm, preferably at most 2.0 ppm, more preferably at most 1.0 ppm, more preferably at most 0.5 ppm, most preferably at most 0.1 ppm, preferably when tested according to the following method:

- soaking the textile material in preferably distilled exposure water in a ratio of 1000 ml water per 10 grams of textile material,
- keeping the textile material entirely soaked in the exposure water during the test period, preferably at a temperature between 21 °C and 25 °C; and
- after the test period, extracting exposure water and testing it for the presence of each of the antimicrobial agents, preferably using a GC-MS method.

Use of textile material:

A 155$^{th}$ embodiment of the invention is a use of the textile material according to any one of the 139th to 154$^{th}$ embodiments, in particular a textile material obtainable according to the method of 132$^{nd}$ embodiment, for water purification.

A 156th embodiment of the invention is a use of the textile material according to any one of the 139th to 154$^{th}$ embodiments, in particular a textile material obtainable according to the method of 133$^{rd}$ embodiment, in the medical area or in hospitals.

Products comprising the textile material:

A 157$^{th}$ embodiment of the invention is a garment, in particular medical garment, more particular an operation theater gown, consisting of or comprising the textile material according to any one of the 139th to 154$^{th}$ embodiment, in particular a textile material obtainable according to the method of 133$^{rd}$ embodiment.

A 158$^{th}$ embodiment of the invention is an air filter comprising the textile material of any one of the 139th to 154$^{th}$ embodiment as a filter medium.

A 159$^{th}$ embodiment of the invention is a kitchen or bakery textile, in particular towel, apron or oven mitt, an undergarment, socks, a medical garment, in particular scrubs or medical masks, a military garment, an airline personnel garment, a T-shirt, bedding, in particular bedsheets, a pillow cover, or a quilt cover, curtains, children's clothing, a school uniform, a bathing towel, a foot rug, an upholstery, a tabletop, a car interior, an architectural fabric, in particular a tent or an awning, a fitness gear, in particular a fitness mat or a boxing glove, a canine bed, bandages, or diapers for incontinence, consisting of or comprising a textile material of any one of 139th to 154$^{th}$ embodiments.

Filter:

A 160$^{th}$ embodiment of the invention is a device for purifying water comprising: a particle filter; and an antimicrobial filter comprising a fabric having an antimicrobial effect, wherein the fabric preferably is a fabric according to any one of 139th to 154$^{th}$ embodiment, in particular a fabric material obtainable according to the method of 132$^{nd}$ embodiment; wherein the particle filter and the antimicrobial filter are arranged such that during use of the device, the water to be purified first passes through the particle filter and then through the antimicrobial filter.

Guiding the water first through the particle filter and thereafter through the antimicrobial filter prevents the antimicrobial filter from becoming clogged with dirt particles. To decontaminate the water with the antimicrobial filter, the contaminated water must come in contact with the fabric having an antimicrobial effect. Thereby, the microbes are destroyed and/or rendered harmless so that the water is decontaminated when leaving the antimicrobial filter. If the antimicrobial filter is clogged with particles, such as suspended dirt particles the microbe contaminated water is hindered to come in contact with the fabric and thus, the antimicrobial filter properties might be decreased. Therefore, providing a reliable particle filter for filtering dirt particles upstream of the antimicrobial filter increases the life span and the performance of the antimicrobial filter.

Further, preventing clogging of the antimicrobial filter leads to higher water flow rates, and thus to a higher output of purified water. Therefore, more people can be supplied with purified water by using a minimum amount of devices. Still further, increasing the output of purified water reduces the costs per liter of purified water and thus the device becomes affordable also for poor groups of the population.

Since the device is based on a filter principle, the water purification process based on said device is similar to the indigenously used textile filter process and therefore well known to the people. Thus, costly and complex training of the users can be omitted.

According to a 161$^{st}$ embodiment, in the device of the 160th embodiment, the particle filter comprises or is a fabric, preferably a non-woven fabric.

Furthermore, non-woven fabrics, which are more robust to mechanical treatment, such as washing, compared to woven fabrics wherein the chemical is imbedded, can be used. For example, if the particle filter is clogged with dirt particles, it can be restored by washing the dirt particles out of the filter. Preferably, the filter is therefore flushed with clean water, in opposite direction of the direction in which the particle contaminated water passes through the particle filter. However, often a pure flushing is not sufficient to completely clean, i.e. restore, the particle filter and thus a mechanical treatment, like scrubbing the filter is necessary. Providing a particle filter with increased mechanical durability extends the life span of the particle filter, and thus the costs per liter purified water can be minimized.

According to a 162nd embodiment, in the device of the 161st embodiment, the non-woven fabric comprises or is a melt-blown type fabric.

Melt blown non-woven fabrics are produced by extruding melted fibers, such as polymer fibers to form long thin fibers which are stretched and typically cooled by passing hot air over the fibers as they are extruded. Thus, the still melted fibers are tangled and adhered to each other simultaneously during the extrusion and subsequent fiber collection. Therefore, stable and mechanically highly resistant nonwovens, respectively filters can be provided. Preferably, the resultant web is collected into rolls and subsequently converted to finished products. Filters comprising of or consisting of melt-blown type fabrics provide fine filtration, low pressure drop and increased durability.

Practice tests made by the inventors showed in particular that the fibers of such filters do not tend to be displaced during the filtration and restoring. Thus, the pore size and/or the initial filter properties of the non-woven fabric filter remain stable, even if the non-woven fabric filter is used over a long life span and/or reused and/or restored and/or washed. Further, it was shown that the melt blown non-woven fabrics can withstand mechanical treatment such as scrubbing, and therefore, the melt blown non-woven fabrics are highly suitable for the use in particle filters for purifying water. Still further, the lower pressure drop caused by the melt-blow fabric filter, compared to known filters enables the device to provide higher flow rates. Thus, filters with a significantly increased life span and devices with a higher output of purified water can be provided.

According to a 163rd embodiment, in the device of one of 160th to 162nd embodiment, the particle filter is removable from the device and washable.

A removable and washable particle filter allows washing the particle filter separated from the device. Thus, contaminants such as dirt particles can be effectively removed from the device. The particles flushed out of the filter are not flushed back into the device and/or adjacent filters and therefore, the contaminants can be permanently removed.

According to a 164th embodiment, in the device of one of 160 to 163rd embodiment, the particle filter has an average pore size in the range of 9 to 16 micrometers preferably of the type as defined in 2nd embodiment. Said pore size range allows filtering very coarse particles, such as sand, sediments and/or the like.

According to a 165th embodiment, in the device of 160th to 163rd embodiment, the particle filter has an average pore size in the range of 7 to 13 micrometers, preferably 8 to 12 micrometers, more preferably about 10 micrometers, preferably of the type as defined in 2nd embodiment. Said pore size range allows filtering coarse particles, such as fine sands and/or the like, and acts as an initial turbidity removal filter.

According to a 166th embodiment, in the device of 160th to 163rd embodiment, the particle filter has an average pore size in the range of 3 to 7 micrometers, preferably 4 to 6 micrometers, more preferably about 5 micrometers, preferably of the type as defined in 2nd embodiment. A filter having a pore size in the range of the 123rd embodiment allows a pre-filtration of turbidity and finer dirt particles.

According to a 167th embodiment, in the device of 160th to 163rd embodiment, the particle filter has an average pore size in the range of 0.5 to 2 micrometers, preferably 0.5 to 1.5 micrometers, more preferably about 1 micrometer, preferably of the type as defined in 3rd embodiment.

A filter having a pore size according to the above embodiment is able to filter cysts or other single-celled organisms as well as very fine dirt particles. In the case that a particle filter according to the above embodiment is used upstream the antimicrobial filter, the clogging of the antimicrobial filter can be effectively prevented. For said fine pore size according to the above embodiment, a melt blown non-woven is preferred, since inter alia, the pore size and/or the initial particle filter properties of the non-woven fabric remain essentially stable over the life span of the particle filter. Practice tests made by the inventors showed in particular that the melt-blown non-woven fabric filters provide significantly increased mechanical resistance compared to bonded staple and/or spunlaid non-woven fabric filters. The fibers of staple and/or spunlaid non-woven fabric filters used in the prior art tended to be debonded after washing. Therefore, the fibers of the filters used in the prior art were displaced and the pore size of the filters was enlarged. This leads to a loss of filter characteristics, and further to directing the particles deeper into the filter, during washing. In contrast, with melt-blown non-woven fabric filters, no or at least reduced debonding of the fibers occurred. It was shown that the melt-blown non-woven fabric filters can withstand rough washing procedures such as scrubbing, without risking displacement of the fibers. Therefore, the melt-blown non-woven fabric filters showed essentially stable pore size and filter properties even after several washing steps.

According to a 168th embodiment, in the device of 160th to 167th embodiment, comprising two or more particle filters as defined in any one of 2nd to 8th embodiment, the particle filters having different pore sizes, wherein a particle filter with a larger pore size is arranged upstream of a particle filter with a smaller pore size. A filter arrangement according to the above embodiment prevents the at least two particle filters of the device, as well as the antimicrobial filter from being clogged. Therefore the operating time of the device can be prolonged and the at least two particle filters have to be washed less often, as compared to a device providing only one particle filter. Thus, the overall life span of the device can be prolonged. Further, by preventing clogging of the filters, the flow rate remains essentially stable over a long period and guarantees a stable supply of purified water.

According to a 169th embodiment, in the device of 160th to 168th embodiment, in addition comprising an activated carbon filter which is arranged such that during use of the device, the water to be purified passes through the activated carbon filter. An activated carbon filter provides small, low-volume pores that increase the surface area available for adsorption or chemical reactions. Thus, taste and odor of the water to be purified can be effectively removed. Preferably, organic compounds which contribute to taste and odor are filtered. Thus, among others, chlorine and iodine residuals, detergents, radon, and some man-made, organic chemicals such as many pesticides, and volatile organic chemicals, such as paint thinners can be effectively removed.

According to a 170th embodiment, in the device of 169th embodiment, the activated carbon is formed as a solid block, wherein preferably the solid block is made of or comprises pressed granulate. A solid block of activated

carbon is suitable, as described above, for removing odors, tastes and organic materials besides certain chemical impurities. Providing solid block instead of loosely arranged activated carbon granulate improves the particle filter properties of the activated carbon, so that in addition to the removal of odors and the like, turbidity and other fine particles can be effectively removed by the solid block of activated carbon. Further, a solid block of activated carbon is easier to handle, in particular during washing and restoring, since it provides a higher mechanical stability than loosely arranged activated carbon.

According to a 171$^{st}$ embodiment, in the device of 170th embodiment, the activated carbon is a particle filter, preferably as defined in any one of 164th to 167$^{th}$ embodiment. Still further, by providing solid block comprising pressed granulate, the pressure drop of the activated carbon filter can be reduced, while still maintaining suitable odor filter characteristics. Thus, the activated carbon filter is operable with reduced input pressure and/or provides an increased flowrate. It is further another embodiment that in cavities available, resin and other known materials to remove chemical contamination in water, such as arsenic, hardness or fluorides or the like, can be placed in form of small pellets, in form a sponge, in form of a tube like structure or the like, or combinations thereof, with these resins embedded.

According to a 172nd embodiment, in the device of 169th to 171th embodiment, comprising a first non-woven fabric filter, preferably for initial turbidity removal, preferably as defined in 165$^{th}$ embodiment; a second non-woven fabric filter, preferably for removal of finer dirt particles, preferably as defined in 166$^{th}$ embodiment; an activated carbon filter; and a melt-blown type fabric filter as defined in 167$^{th}$ embodiment, where these filters are preferably arranged such that during use of the device, the water to be purified passes through the filters in the order listed above.

Providing several filters, and in particular particle filters with well-chosen pore sizes und durability, an activated carbon filter and an antimicrobial filter allows efficient removal of particles, odors and the like, as well as microbes. Thus raw water from nearly any freshwater source can be purified by filtering. Further, several filters having different filter properties, allow the specific removal of individual types of contaminants from the raw water. Practice tests made by the inventors showed in particular that providing a first non-woven fabric filter as defined in the context of the earlier embodiment, i.e. having a pore size in the range of 7 to 13 micrometers, upstream a second non-woven fabric filter as defined in the context of the another embodiment, i.e. having a pore size in the range of 3 to 7 micrometers, facilitates a significantly prolonged operating time, compared to, e.g., a pre-filtration device having solely a 10 micrometer filter upstream an odor filter of activated carbon, as known in the art.

For example if the odor filter of activated carbon acts as a particle filter, the odor filter clogs and the pressure loss of the odor filter increases significantly, leading to reduced flow rates. Further, since particles are difficult to remove from the odor filter, the life span of the filter is significantly reduced. Thus, by providing an additional second non-woven fabric filter as defined in the context of the 123$^{rd}$ embodiment, the clogging of the activated carbon filter can be prevented effectively. Still further, the second non-woven fabric filter can be cleaned significantly easier than the odor filter.

The preferred arrangement of the filters according to the above embodiment is in the following order: first non-woven fabric filter with an average pore size of about 10 micrometers/second non-woven fabric filter with an average pore size of about 5 micrometers/activated carbon filter/melt-blown type fabric filter with a pore size of about 1 micrometer/antimicrobial filter in direction of the water flow path. This setup prevents the filters, and in particular the antimicrobial filter from clogging. Thus the overall life span or operating time of the device can be prolonged.

Filter structure ("candle"):

According to a 173rd embodiment, in the device of 160 to 172nd embodiment, one or more filters are arranged around a cavity to form a filter structure such that during use of the device, the water to be purified passes through each of the one or more filters to enter or to leave the cavity. Preferably, the cavity is formed by a suitable water permeable support structure, or even more preferably by the one or more filters. For example, the filter fabric can be wrapped around a cavity to form the filter, or can be provided in a sleeve-like form, so that the filter fabric can be pulled over the cavity. If the filter fabric is provided in a sleeve-like form, the filter fabric can optionally be manufactured seamlessly. Guiding the water to be purified through each of the one or more filters ensures the proper purification of the water.

According to a 174th embodiment, in the device of 173rd embodiment, the one or more filters are arranged such that during use of the device, the water to be purified passes through the one or more filters to enter the cavity if the filter structure is used as a turbidity filter, and passes through the one or more filters to leave the filter structure if the filter structure comprises an antimicrobial filter. Guiding the water to be purified so that the water passes through the one or more filters to enter the cavity, if the filter structure is used as a turbidity filter, prevents the sedimentation of particles in the inside of the cavity. Thus the operating time of the filter structure can be prolonged, since the filter structure is protected from clogging. Further, cleaning of the filter structure is facilitated, since the particles/turbidity adhere at the outer surface of the filter structure. For example, flushing the cavity of the filter structure and guiding purified water so that it leaves the cavity while passing through the one or more filters will effectively flush out the particles that are adhered in the filter or clog the filter, to the outside of the filter. Thus the cavity of the turbidity filter remains uncontaminated. Guiding the water to be purified so that the water to be purified passes through the one or more filters to leave the cavity,

if the filter structure comprises an antimicrobial filter, enables the antimicrobial filter to be arranged in the outermost layer of the filter structure. Thus, the effective surface of the antimicrobial filter can be enlarged and the removal of microbes can be improved. Further, if the antimicrobial filter is the outermost layer of the filter structure, the antimicrobial fabric of the antimicrobial filter can remain in contact with the purified water, if the purified water is collected in the surrounding of filter structure comprising the antimicrobial filter. Thus, at least a portion of the antimicrobial fabric that remains in contact with the already purified water can further decontaminate the water, and prevents the building or reproduction of microbes in the already purified water.

According to a 175th embodiment, in the device of 173rd or 174th embodiment, the filter structure substantially has the shape of a prism or a cylinder, and the one or more filters are arranged on the side faces of the prism or on the curved side of the cylinder, respectively. Filter fabrics can easily be arranged around the side faces of cylindrical or prismatic shaped filter structures, for example by wrapping. Likewise, the filter fabrics can be easily pulled over the cylindrical or prismatic shaped filter structures, if manufactured in a sleeve like form. However, other methods of arranging the filter fabrics are possible. Arranging the filters on the side faces of the prism or curved face of the cylinder provides a large filter surface and thus high flow rates. Still further, if the axial axis of the prism and/or cylinder is oriented vertically, and the water to be purified enters or leaves the cavity of the filter structure, particles will sediment in proximity to the lower region of the filter, so that the upper region of the filter has a lower risk of being clogged.

According to a 176$^{th}$ embodiment, in the device of 173rd to 175th embodiment, the filter structure is a cartridge filter. A cartridge filter provides a large surface area, enabling it to operate for long periods and with high flow rates. This type of filters is also easiest to clean by flushing with purified water. Typically, a cartridge filter provides at least endcaps, a support structure to form a cavity, and the filter fabric. Due to the simple construction, cartridge filters are inexpensive. Further, they need minimal maintenance. Typically it is sufficient to simply flush out the cartridge filter to keep it working properly.

According to the 177th embodiment, in the device of 173rd to 176th embodiment, the filter structure has an opening and is arranged such that during use of the device, the water to be purified leaves the filter structure through the opening if it passes through the one or more filters to enter the cavity, and enters the filter structure through the opening if it passes through the one or more filters to leave the filter structure. The opening guides the water out of the cavity or into the cavity. Further, the opening facilitates the washing of the filter, since water can be flushed through the opening, if during use, the water to be purified passes through the one or more filters to enter the cavity, i.e. the particles adhere substantially at the outside of the filter structure. In the case that during use, the water to be purified passes through the one or more filters to leave the filter structure, filtered particles can be removed through said opening.

According to a 178th embodiment, in the device of 177th embodiment, when depending from 175th embodiment, the opening is arranged at a base of the prism or cylinder. Arranging the opening at a base of the prism or cylinder, allows arranging the filter fabric of the one or more filters completely around the side face of the prism or the curved face of the cylinder. Thus a maximal filter surface can be provided. Further, the base has typically a flat surface, so that the opening can be easily manufactured, for example by drilling or the like. Still further, an opening provided in a flat surface can be sealed more easily than an opening provided in a curved surface, such as a curved face of the cylinder.

According to a 179th embodiment, in the device of 173rd to 178th embodiment, the one or more filters of the filter structure comprise a first non-woven fabric filter, preferably for initial turbidity removal, preferably as defined in 165$^{th}$ embodiment; preferably a second non-woven fabric filter, preferably for removal of finer dirt particles, preferably as defined in 166$^{th}$ embodiment; an activated carbon filter; a fabric filter as defined in 167$^{th}$ embodiment; and the antimicrobial filter; wherein these filters are preferably arranged such that during use of the device, the water to be purified passes through the filters in the order listed above.

Providing several filters, and in particular particle filters, an activated carbon filter and an antimicrobial filter allows the removal of particles, odors and the like, as well as microbes, combined with the advantages of a filter structure according to any one of the above embodiments. In particular, those filter structures are easy and inexpensive to manufacture and easy to clean/wash. The preferred arrangement of the filters according to the above embodiment is in the following order: first non-woven fabric filter with an average pore size of about 10 micrometers/second non-woven fabric filter with an average pore size of about 5 micrometers/activated carbon filter/melt-blown type fabric filter with an average pore size of about 1 micrometer/antimicrobial filter, in direction of the water flow path. Such a setup has shown to prevent the filters, and in particular the antimicrobial filter effectively from clogging. Thus the overall life span of the device and the operating time of the filters can be prolonged, compared to known filter arrangements providing different pore sizes.

Input container with candle inside:

According to a 180th embodiment, the device of 173rd to 179$^{th}$ embodiments, further comprises an input container, and the filter structure is arranged on the bottom of the input container protruding inward of the input container such that during use of the device, the water to be purified enters the cavity of the filter structure from the input container

and leaves the container through the filter structure. An input container provided with an inwardly protruding filter structure facilitates the filtering of the water to be purified. For example, the water to be purified can simply be filled into the input container and does not have to be re-poured on the filter. Still further, particles, such as sand, can sediment on the bottom of the input container before being filtered. Thus the risk of clogging the filter is reduced and the filter remains operable for a long period.

Input container with candle outside:

According to a 181st embodiment, the device of the 173rd to 179th embodiments, further comprises an input container, and the filter structure is arranged on the bottom of the input container protruding outward of the input container such that during use of the device, the water to be purified enters the cavity of the filter structure and leaves the filter structure through the one or more filters of the filter structure.

An input container provided with an outwardly protruding filter structure accelerates the filtering of the water to be purified. With the filter structure being arranged on the bottom of the input container protruding outward, a maximal input pressure can be achieved for operating the filter structure, allowing high flow rates. This 138th embodiment is in particular suitable for filter structures comprising an antimicrobial filter, preferably at the outermost filter. Thus, particularly the advantages discussed with regard to the 131st embodiment can be achieved.

Input container with candle inside and outside:

According to a 182nd embodiment, the device of 173rd to 178, further comprises an input container, and an inside filter structure as defined in 177th embodiment is arranged on the bottom of the container protruding inward of the container such that during use of the device, the water to be purified passes from the input container through the one or more filters of the inside filter structure to the cavity of the inside filter structure and leaves the inside filter structure through the opening of the inside filter structure; and wherein an outside filter structure as defined in 177th embodiment is arranged on the bottom of the container protruding outwards of the container such that during use of the device, the water to be purified enters the cavity of the outside filter structure through the opening of the outside filter structure and leaves the outside filter structure through the one or more filters of the outside filter structure; and the opening of the inside filter structure is directly or indirectly connected to the opening of the outside filter structure.

The arrangement according to the present embodiment combines the advantages of the earlier embodiments and such provides facilitated filtering, high operating periods of the filters and improved flow rates.

According to a 183rd embodiment, in the device of 182nd embodiment, the one or more filters of the inside filter structure comprise one or more non-woven fabric filters as defined in any one of 164th to 166th embodiment and an activated carbon filter as defined in any one of 169th to 171st embodiment.

An inside filter structure comprising one or more filters with a pore sizes range from 3 to 16 micrometers, as defined in the context of any one of the previous embodiments, and an activated carbon filter allow the removal of particles and odor and the like, as previously described, subsequent the water to be purified enters the outside filter structure. Thus coarse particles, turbidities and dirt particles can be retained inter alia in the input container, respectively the inside filter structure, and the outside filter structure is supplied with pre-filtered water, preventing the outside filter structure from clogging. This will result in a longer life span of the filter structure and improved flow rates. Still further, it has been shown that providing one or more non-woven fabric filters upstream the activated carbon filter prevents the activated carbon filter from clogging, while still allowing high flow rates. This embodiment is preferred, since washing the activated carbon filter is much more difficult than washing the one or more non-woven fabric filters. By choosing suitable pore sizes, the clogging of the activated carbon filter can be effectively prevented.

According to a 184th embodiment, in the device of 183rd embodiment, the one or more non-woven fabric filters comprise, a first filter as defined in any one of 164th or 165th embodiment, and a second filter, preferably arranged downstream of the first filter and being a filter as defined in 166th embodiment. A filter arrangement according to the present embodiment prevents the at least two particle filters of the device, as well as the antimicrobial filter from being clogged. In particular, it has been shown that the filter as defined in the context of a previous embodiment that allows a pre-filtration of turbidity and finer dirt particles, e.g. having an average pore size of 5 micrometers, is effectively protected from being clogged with coarse particles, such as fine sands and/or the like, by providing a first filter upstream of the second filter, as defined in the context of the previous embodiments, having an average pore size of, e.g., 10 micrometers. Therefore, the operating time of the one or more non-woven fabric filters can be prolonged and the one or more non-woven fabric filters have to be washed less often, as compared to providing only one non-woven fabric filter. Thus, the overall life span of the one or more non-woven fabric filters can be prolonged and the flow rates can be improved. Further, by preventing clogging of the filters, the flow rate remains essentially stable over a long period and guarantees a stable supply of purified water.

According to a 185th embodiment, in the device of 183rd or 184th embodiment, at least the outermost non-woven fabric filter is removable and preferably forms or is arranged on a sleeve. A removable non-woven fabric filter facilitates washing the non-woven fabric filter, since it can be separated from the filter structure. Thus, contaminants such as dirt particles can be effectively removed from the removable non-woven fabric filter. Further, if the removable non-woven fabric filter has perished, it can be replaced easily, without having to replace the whole filter structure/device. A sleeve-shaped non-woven fabric filter facilitates the re-arrangement of the filter around the cavity. Thus the sleeve-shaped non-woven fabric filter can easily be pulled over the cavity, or the filter structure. Still further, a sleeve-shaped non-woven fabric filter provides a tight fit on the cavity, or the filter structure, preventing water to be purified to flow around the non-woven fabric filter, and thus guarantees a proper purification.

According to a 186th embodiment, in the device of 182nd to 185th embodiment, the one or more filters of the outside filter structure comprise a melt-blown type fabric filter as defined in 124th embodiment and the antimicrobial filter, arranged downstream of the melt-blown type fabric filter.

Firstly, the outside filter structure is protected from clogging with particles by the inside filter structure. Further, a melt-blown type fabric filter having the advantages discussed with regard to the 119$^{th}$ and 124$^{th}$ embodiments, provided in the outside filter structure, will protect the antimicrobial filter from clogging with, e.g., very fine particles. Thus, due to the very effective pre-filtration, the antimicrobial filter will not be damaged by particles contained in the water to be purified. Still further, the melt-blown type fabric filter, compared to filters known in the art, redirects the water that passes through the melt-blown type filter fabric, in particular when the water leaves the melt-blown type fabric, and therefore, the water passes the antimicrobial filter in a significantly more non-laminate way (i.e. in a more tubular flow), such that the water preferably travels a distance through the antimicrobial filter which is greater than the radial thickness of the antimicrobial filter. Therefore, the water will contact the antimicrobial filter repeatedly and the decontaminating effect of the antimicrobial filter is improved.

Secondly, the melt-blown non-woven fabric filters provided in the outside filter structure showed significantly increased mechanical resistance compared to bonded staple and/or spunlaid non-woven fabric filters, as used in the prior art.

According to a 187th embodiment, in the device of 180th or 182nd to 186th embodiment, the filter structure reaches from the bottom surface to the top of the input container.

According to a 188th embodiment, in the device of 180th to 187th embodiment, a coarse filter is arranged on the top of the input container such that during use of the device, the water to be purified passes through the coarse filter to enter the input container. The coarse filter prevents coarse particles from entering the input container. Thus, sedimentation of the particles in the container can be prevented and the risk of clogging of possible further filter(s) can be reduced.

According to a 189th embodiment, in the device of 188th embodiment, the coarse filter is a plane filter held by a cup-shaped structure, preferably with a circular cross section, having a preferably substantially plane bottom surface for removably receiving the plane filter. By being held by a cup-shaped structure, a tight fit of the coarse filter in the cup-shaped structure preferably having a substantially plane bottom surface can be provided, preventing water to be purified from flowing around the coarse filter into the input container. Further, by providing a tight fit, the coarse filter is not likely to be displaced, for example by water poured into the cup-shaped structure. The cup-shaped structure is preferably shaped to receive a certain amount of water to be purified, so that the water to be purified does not permanently have not to be re-poured. Further, the cup-shaped structure preferably provides a collar, on the front end opposite to the plane bottom surface, preventing water to be purified from flowing around the cup-shaped structure into the input container. Said collar further prevents the cup-shaped structure from accidently falling into the input container. Still further, a cup-shaped-structure having a circular cross section can be sealed more easily against the plane filter as well as against the opening of the input container that receives the cup-shaped structure. Tests have shown that compared to otherwise shaped coarse filters, such as bag-shaped filters used in the prior art, the plane filter can be removed and installed more easily. Furthermore, providing a plane filter having a plane surface facilitates the washing of the filter compared to bag-shaped filters.

According to a 190th embodiment, in the device of 180 to 189, further comprising a storage container, wherein the input container is placed above the storage container. Providing a storage container allows to safely store the purified water and prevents a new contamination of said water. Further, placing the input container above the storage container supports the preferred gravity-based flow path of the water, so that preferably no additional energy is necessary to guide the purified water into the storage container. Still further, by placing the input container above the storage container, the flow path length is minimized and the risk of a new contamination can be reduced.

According to a 191st embodiment, in the device of 190th embodiment, the storage container includes a tap. A tap enables the purified water to be poured out of the storage container without opening the storage container. Thus the risk of a new contamination during the removal of purified water can be eliminated.

According to a 192nd embodiment, in the device of 190th or 191st embodiment, the input container and the storage container are detachably connected. A detachable connection between the input container and the storage container facilitates the cleaning of the containers and the removing of the filter structure(s), respectively the filter fabrics.

According to a 193rd embodiment, in the device of 190th to 192nd embodiment, the dimensions of the containers are such that the input container can be placed into the storage container through an opening of the storage container when the containers are disassembled. Thus a small packing dimension can be achieved; transport or shipping can be facilitated and transportation costs can be reduced.

According to a 194th embodiment, in the device of 190th to 193rd embodiment, further comprising a supporting and/or sealing ring between the input container and storage container, preferably shaped to guide water flowing down on the outside surface of the input container away from an upper edge of an opening of the storage container. By using a supporting and/or sealing ring to connect the input container and the storage container a tight fit between said components can be achieved, preventing contaminants such as dirt particles and/or microbes to enter the storage container. Further, by using a supporting and/or sealing ring, the sealing between the input container and the storage container can be significantly improved, since for example deviations of the sealing surfaces of the input container and the storage container, such as angular, diameter-, height-, or evenness-deviations can be compensated by the supporting and/or sealing ring. Further, by shaping the supporting and/or sealing ring to guide water flowing down on the outside surface of the input container away from the upper edge of the opening of the storage container, re-contaminating the purified water with non-purified water can be prevented. Water flowing down on the outside surface of the input container might for example occur when the water to be purified is spilled and not correctly filled into the input container and/or cup-shaped structure.

According to a 195th embodiment, in the device of 190 to 194th embodiment, the fabric having an antimicrobial effect during use of the device is in contact with the water collected in the storage container. Providing a contact of the fabric having an antimicrobial effect with the water collected in the storage container will enable the fabric having an antimicrobial effect to further decontaminate the collected water, and prevent the building or reproduction of microbes in the collected water. Even if the collected water is (at least slightly) re-contaminated, for example by non-purified water entering the storage container accidentally, the fabric having an antimicrobial effect can re-decontaminate the collected water.

According to a 196th embodiment, in the device of 180 to 195th embodiment, the capacity of a container as defined in any one of 180th to 182nd or 190th embodiment is in the range of 1 to 25 liters.

According to a 197th embodiment, in the device of 180 to 196th embodiment, the water flow rate is in the range of 1 to 10 liters per hour, preferably 2 to 6 liters per hour. The WHO suggests a need of drinking water about 2 liters per day for a 60 kg adult, and 1 liter for a child with 10 kg body weight. Thus providing a device with containers having a volume of 1 to 25 liters and a flow rate as defined in the embodiment, it can supply up to a large family with purified water.

According to a 198th embodiment, in the device of 180 to 197th embodiment, a container as defined in any one of 180th to 182nd or 190th embodiment is made of or comprises food-grade Polyethylenterephthalat (PET).

PET provides excellent water and moisture barrier properties, and is therefore highly suitable for water containers. Further, PET is transparent, so that visible contamination of the containers can be easily discovered. Since PET provides semirigid to rigid properties, PET-containers are durable and fracture-proof, compared to glass containers. Further, since PET is lightweight, the device is easily transportable.

According to a 199th embodiment, in the device of 160 to 198th embodiment, the device operates based on gravity and without electricity. Thus, the device can be used anywhere and is not dependent on existing infrastructure. Use in less-developed countries and in particular in small units of organization, such as a household is possible.

Community systems:

A 200th embodiment of the invention is a system for purifying water comprising, preferably a module for removing turbidity; preferably a module for removing fluorides; a module for removing odour; preferably a module for removing arsenic; preferably a module for softening water; preferably a module for removing finer dirt particles; preferably a module for removing cysts and/or fine dirt particles; a module for removing microbes; wherein the modules are arranged such that during operation of the system, the water to be purified passes through the modules, preferably in the order listed above.

Providing several modules, and in particular a module for removing turbidity, and a module for removing odor as well as a module for removing microbes allows the removal of particles, odors and the like, as well as microbes. Thus raw water from nearly any freshwater source can be purified by filtering. Further, several different modules, having different removal properties, allow the specific removal of different types of contaminants from the raw water. Thus the system is adaptable for specific environmental circumstances, given in the respective site of operation.

According to a 201st embodiment, in the system of 200th embodiment, one, several or all of the modules are accommodated in separate housings. Providing separate housings for the modules supports the modular structure of the system. Preferably, the single modules are connected via pipelines or tubes. Thus, optional modules that are needed for example if the water to be purified is contaminated with arsenic or fluorides can be easily added to the base system, preferably comprising at least a module for removing turbidity, a module for removing odor and a module for removing

microbes.

According to a 202nd embodiment, in the system of 201st embodiment, the module for removing turbidity is a pressure sand filter, preferably comprising multigrade sand. A pressure sand filter typically comprises silica quartz sand preferably supported by layers comprising pebbles and gravels, and further preferably a top distributor to distribute the incoming water uniformly throughout the cross section of the pressure sand filter. The incoming raw water flows preferably downwards through the filter and is afterwards guided to a drain. Smaller sand grains provide an increased surface area and therefore improved filter properties, so that fine particles with a particle diameter of preferably less than 10 micrometers, more preferably with a particle diameter less than 5 micrometers can be removed. Multigrade sand comprises different sizes and grades of sand particles, thus filter properties can be adjusted. Preferably, different sizes and grades of sand particles are arranged in separate layers, so that the dirt particles to be filtered are removed in different layers of the filter. This prevents the filter from being clogged and prolongs the operating time. Further, said sand filters provide high flow rates and low pressure loss.

According to a 203rd embodiment, in the system of 200th to 202nd embodiment, the module for removing fluorides comprises resins. Said resin based modules preferably comprise resins such as activated alumina, treated zeolite and/or the like. Zeolite is microporous, and provides good absorbing properties. Activated alumina too are a highly porous material, that can e.g. provide a surface area significantly over 200 square meters/g. Activated alumina provide good filter properties with regards to fluoride, arsenic and selenium in purifying water systems. The removal of chemicals such as fluorides is based on ion-exchange, and therefore is not dependent on electrical power.

According to a 204th embodiment, in the system of 200th to 203rd embodiment, the module for removing odour comprises an activated carbon filter, preferably comprising granulated activated carbon. An activated carbon filter provides small, low-volume pores that increase the surface area available for adsorption or chemical reactions. Thus, taste and odor of the water to be filtered can be effectively removed. Preferably, organic compounds which contribute to taste and odor are filtered. Thus, among others, chlorine and iodine residuals, detergents, radon, and some man-made organic chemicals such as many pesticides, and volatile organic chemicals, such as paint thinners can be removed.

Granular activated carbon has a relatively larger particle size compared to powdered activated carbon and consequently, presents a smaller external surface. Thus, granular activated carbon has a good balance of particle size to surface area, and provides suitable filter properties combined with good pressure loss characteristics.

According to a 205th embodiment, in the system of 200th to 204th embodiment, the module for removing turbidity and/or the module for removing fluorides and/or the module for removing odour and/or the module for removing arsenic and/or the module for softening water are comprised by separate canisters, preferably made of fibreglass reinforced plastics, and preferably having backwashing systems.

Separate canisters support the modularity of the system, since the single canisters can be combined and arranged as needed. Canisters made of fiberglass reinforced plastics provide good mechanical stability while being lightweight. Thus, the system is easy to transport and can be installed even in areas difficult to reach, such as areas without road access. Providing backwashing systems allows to flush out the modules, respectively the filters and to prolong the life span of the system. Backwash water is flushed in the direction opposite of the flow path during water purification. The backwashing can be performed for the whole system or separately for every single module. Thus particles and filtered contaminants can be effectively removed from the modules and out of the system.

According to a 206th embodiment, in the system of 200th to 205th embodiment, the module for removing finer dirt particles comprises a particle filter as defined in any one of 164th to 166$^{th}$ embodiment. A particle filter having a pore size between 3 and 16 micrometers, as defined in the context of previous embodiments, allows filtering coarse particles, such as sand, fine sand, fine dirt particles, sediments and/or the like and preferably acts as an initial turbidity removal filter.

According to a 207th embodiment, in the system of 200th to 206th embodiment, the module for removing cysts and/or fine dirt particles comprises a particle filter as defined in 167$^{th}$ embodiment. A filter having a pore size according to the 124$^{th}$ embodiment, i.e. preferably in the range from 0.5 to 2 micrometers, most preferably having an average pore size of about 1 micrometer, is able to filter cysts or other single-celled organisms as well as very fine dirt particles. In the case that a particle filter according to the 124$^{th}$ embodiment is used upstream the antimicrobial filter, the clogging of the antimicrobial filter can be effectively prevented. For said fine pore size according to the 124$^{th}$ embodiment, a melt blown non-woven fabric is preferred, since inter alia, the pore size and/or the initial particle filter properties of the non-woven fabric remain essentially stable over the life span of the particle filter.

According to a 208th embodiment, in the system of 200th to 207th embodiment, the module for removing microbes comprises a fabric having an antimicrobial effect, preferably according to any one of 139th to 154$^{th}$ embodiment.

According to a 209$^{th}$ embodiment, in the system of 208th embodiment, the module for removing microbes further comprises a particle filter as defined in 167$^{th}$ embodiment, being arranged upstream of the fabric having an antimicrobial effect. To provide the antimicrobial effect, the microbe contaminated water must come in contact with the fabric having an antimicrobial effect. Thereby, the microbes are destroyed and/or rendered harmless so that the water is decontaminated, when leaving the module for removing microbes.

According to a 210th embodiment, in the system of 208th or 209th embodiment, the module for removing

microbes comprises a filter structure as defined in any one of 173rd to 178th embodiment, the fabric having an antimicrobial effect is one of the one or more filters of the filter structure; and a containing pipe; and during operation of the system, the water to be purified enters the filter structure, passes through the fabric having an antimicrobial effect, is collected by the containing pipe and leaves the containing pipe through an outlet of the containing pipe. Such a setup combines the advantages of the earlier embodiments with the advantages of a containing pipe.

According to a 211th embodiment, in the system of 210$^{th}$ embodiment, when depending from 209th embodiment, the particle filter as defined in 167th embodiment is one of the one or more filters of the filter structure. This provides a synergetic advantages discussed with reference to the above referenced embodiments.

According to a 212$^{th}$ embodiment, in the system of 200th to 211st embodiment, the water flow rate is in the range of 20 to 100 liters per hour.

According to a 213 embodiment, in the system of 200th to 211st embodiment, the water flow rate is in the range of 100 to 2500 liters per hour.

Providing water flow rates in such a range facilitates supplying larger organization units such as schools and/or factories, streets, small settlements or quarters with purified water.

According to a 214th embodiment, in the system of 200 to 213rd embodiment, the system operates based on gravity and without electricity. With operating based on gravity and without electricity, the system can be used anywhere and is not dependent on existing infrastructure. Thus, the use in less-developed countries is possible.

According to a 215th embodiment, in the system of 200 to 214th embodiment, the input pressure required such that during operation of the system, the water can flow through the elements of the system, is less than 2.5 bars, preferably less than 2.0 bars, more preferably less than 1.5 bars. Said required input pressure allows to operate the system without additional pumps, and thus without electricity. An input pressure of 2.5 bars corresponds to a water column of approximately 2.5 meters. Thus, a raw water reservoir placed 2.5 meters above the inlet of the first module will provide sufficient input pressure to run the system. Therefore, the system can be run independently from existing infrastructure such as electricity.

Water filter comprising the textile material:

A 216$^{th}$ embodiment of the invention is a water filter comprising the textile material of any one of the 139th to 154$^{th}$ embodiment, in particular a textile material obtainable according to the method of 127$^{th}$ embodiment, as a filter medium.

According to a 217$^{th}$ embodiment, the water filter of the 216$^{th}$ embodiment, comprises an additional filter to remove contaminants.

According to a 218$^{th}$ embodiment, the water filter of the 216$^{th}$ or 217, is operable solely by means of gravity or input water pressure, without requiring electricity.

According to a 219th embodiment, in the water filter of the 216th to 218th embodiments, the water filter is a device for purifying water as in any one of 160$^{th}$ to 199$^{th}$ embodiment, or a system for purifying water as in any one of 200th to 215$^{th}$ embodiment.

According to a 220th embodiment, the water filter of the 216th to 219$^{th}$ embodiments is capable of reducing

- the number of Escherichia coli ATCC 25922 and/or Vibrio Cholerae ATCC14035 bacteria contained in water which passes through the filter in normal operation by at least 99.9%, preferably at least 99.99%, more preferably at least 99.999%, and most preferably at least 99.9999%;
- the number of Clostridium Difficile ATCC 43598 spores contained in the water which passes through the filter in normal operation by at least 90%, preferably at least 99%, more preferably at least 99.9%, and most preferably at least 99.99%; and/or
- the number of cysts contained in the water which passes through the filter in normal operation by at least 90%, preferably at least 99%, more preferably at least 99.9%.

## DETAILED DESCRIPTION OF PREFERRED EMBODIMENTS

In the following, preferred embodiments of the invention are described with reference to the figures, in which:

Fig. 1 is a flowchart illustrating a process of manufacturing a textile material according to one embodiment of the invention;

Fig. 2 shows a schematic setup of a stenter according to one embodiment of the invention;

Figs 3-5 show measured performance data of one exemplary embodiment of the invention, wherein

Fig. 3 illustrates breaking strength of a textile material as a function of exhaust time and of the temperature of the liquor during an exhaust process;

Fig. 4 illustrates reduction of bacteria as a function of exhaust time and of the temperature of the liquor during an exhaust process; and

Fig. 5 illustrates leaching of antimicrobial agents as a function of exhaust time and of the temperature of the liquor during an exhaust process;

Figs. 6-8 show measured performance data of another exemplary embodiment of the invention, wherein

Fig. 6 illustrates breaking strength of a textile material as a function of exhaust time and of the temperature of the liquor during an exhaust process;

Fig. 7 illustrates reduction of bacteria as a function of exhaust time and of the temperature of the liquor during an exhaust process; and

Fig. 8 illustrates leaching of antimicrobial agents as a function of exhaust time and of the temperature of the liquor during an exhaust process;

Figs. 9-12 show measured reduction of bacteria achieved by different exemplary embodiments of the invention;

Fig. 13 shows measured leaching performance of one exemplary embodiment of the invention, and

Fig. 14 shows measured leaching performance of another exemplary embodiment of the invention.

Fig. 15A to 15C and 15D to 15F illustrates the performance and leaching results respectively of individual antimicrobial agents.

Fig. 16A and 16B illustrates the performance and leaching results respectively of individual antimicrobial agents at an exhaust process temperature of 80°C.

Fig. 17A and 17B illustrates the performance and leaching results respectively of individual antimicrobial agents at an exhaust process temperature of 60°C.

Fig. 18A and 18B illustrates the performance and leaching results respectively of individual antimicrobial agents with higher solution dosage.

Fig. 19A and 19B illustrates the performance results of individual antimicrobial agents in Cotton and polyester fabrics respectively.

Fig. 20A and 20B illustrates the performance and tensile strength of the fabric with respect to different curing temperature.

Fig. 21A and 21B illustrates the performance and leaching results respectively with respect to different curing time at 180°C.

Fig. 22A and 22B illustrates the performance and leaching results respectively with respect to curing temperature of 170°C.

Fig. 23A and 23B illustrates the performance and leaching results respectively with respect to curing temperature of 190°C.

Fig. 24A and 24B illustrates the performance results of cotton and polyester respectively when the curing temperature is 180°C.

Fig. 25A and 25B illustrates the performance results of 100GSM cotton and 300GSM cotton respectively when the curing temperature is 180°C.

Fig. 26A and 26B illustrates the performance results of 100GSM polyester and 300GSM polyester respectively when the curing temperature is 180°C.

Fig. 27A and 27B illustrates the performance and leaching results of textile obtained by padding process.

Fig. 28A and 28B illustrates the performance and leaching results of the mixture of antimicrobial agents.

Fig. 29A and 29B illustrates the performance and leaching results of the mixture of antimicrobial agents with higher dosage.

Fig. 30A and 30B illustrates the performance and leaching results of the mixture of antimicrobial agents in padding process.

Fig. 31A and 31B illustrates the performance and leaching results of the mixture of antimicrobial agents in padding process post wash.

Fig. 32A and 32B illustrates the performance and leaching results of the mixture of antimicrobial agents in two cycle process of exhaust and padding.

Fig. 33A and 33B illustrates the performance and leaching results of the mixture of antimicrobial agents in two cycle process of exhaust followed by wash and then padding.

Fig. 34A and 34B illustrates the performance and leaching results of the mixture of antimicrobial agents in two cycle process of exhaust followed by padding and then wash.

Fig. 35A and 35B illustrates the performance and leaching results of the mixture of antimicrobial agents in two cycle process of exhaust followed by wash and then padding again followed by wash.

Fig. 36 is a table specifying the recipes for manufacturing eight examples according to the invention.

Fig. 37 is a table indicating the results of leaching tests and tests for antimicrobial performance for seven of the eight examples of the table in Fig. 36.

Fig. 38 is a graph visualizing the results of the performance tests indicated in the table of Fig. 37.

Fig. 39 is a table specifying the recipes for manufacturing ten examples according to the invention, and certain leaching and performance test results.

Fig. 40 is an exploded view of a device for purifying water.

Fig. 41 is a schematic side cut view of a device for purifying water.

Fig. 42A is a schematic side cut view of a coarse filter structure.

Fig. 42B is a top view of the coarse filter structure shown in Fig. 42A.

Fig. 43 is a schematic side cut view of a first filter structure.

Fig. 44 is a schematic side cut view of a second filter structure.

Fig. 45 is a schematic cut view of a supporting and/or sealing ring.

Fig. 46 is a schematic system diagram of a system for purifying water.

Fig. 47 is a schematic cut view of a module for removing microbes.

Process of making a textile material antimicrobial

Fig. 1 shows the steps of a process 10 of making a textile material antimicrobial according to one embodiment of the present invention. The term "making a textile material antimicrobial" as used herein means conveying antimicrobial properties to a textile, or improving the antimicrobial properties of a textile. In general, any textile material can be

processed with said process 10, wherein the textile material is a fiber, preferably a yarn or a fabric, and most preferably a fabric. In case the textile material is a fabric, it can generally have any specific weight, or fabric weight, such as e.g. 100, 200 or 300 g/m$^2$.

The process 10 of Fig. 1 can be divided into two process cycles, a first process cycle 10a and an optional second process cycle 10b. Both process cycles comprise treating the textile material using a liquor application process. A liquor is a liquid containing chemicals to be applied to a textile. In the present invention, the liquor comprises one or more antimicrobial agents. A liquor application process is any process by which the textile is brought in contact with the liquor to treat the textile with the chemicals. The liquor application process in each of the process cycles of the present invention is followed by subjecting the textile material to a heat treatment. Preferably, the textile material is washed after the heat treatment, and then preferably dried.

While the liquor application process 11 of the first process cycle 10a maybe a padding process or any other liquor application process, preferably an exhaust process is used. As is known in the art, during an exhaust process, a textile material is brought in contact with a liquor which comprises ingredients which are transferred to the article during the exhaust process. This can be achieved by guiding the textile material through a container filled with the liquor. Yarn and fabrics are typically treated with exhaust processes. During a common exhaust process, chemicals to be applied to a textile material are dissolved or dispersed in a solvent, e.g. water, according to the required material to liquor ratio, which describes the ratio between the weight of the textile to be treated and the weight of the liquor. For example, if the desired material to liquor ratio is 1:2, there would be 600 kg of liquor for 300 kg of textile material to be exhausted. Following, the textile material is brought in contact with the liquor, for example by immersing it into the liquor, whereby the chemicals preferably contact the fibers and more preferably enter the fibers. For obtaining proper diffusion and penetration of the chemicals in the fiber, a respective liquor temperature and respective exhaustion time are set, such that kinetic and thermodynamic reactions take place as desired. As the textile material and its fibers absorb the chemicals, the concentration thereof in the liquor decreases. As is known in the art, the degree of liquor exhaustion as a function of elapsed time is termed extent of the exhaust process. The percentage of the chemicals initially present in the liquor which is exhausted onto the textile at the end of the process is called exhaustion rate or exhaust rate. According to the present invention, the liquor of the exhaust process comprises one or more antimicrobial agents. A detailed description of the liquor will be given below. Preferably, the exhaust process 11 is performed in an ambience with an ambient temperature higher than room temperature.

The use of an exhaust process in the first process cycle is particularly advantageous in cases where the first process cycle is followed by a further process cycle, be it a second antimicrobial process cycle as described herein below, or a process cycle which imparts other properties like hydrophilicity or hydrophobicity to the textile. This is because in an exhaust process, the textile opens up and the fibers are individually exposed to penetration by the antimicrobial agents. This is particularly true for multifilament yarns or fabrics made out of them, which are preferred for most applications because they are stronger, have a higher surface area, and can be blended. Thus, by use of an exhaust process, the agents can diffuse into the fibers and do not occupy the surface space of the fibers to the same extent as it is the case in more superficial liquor application processes like padding or spraying. Therefore, the use of an exhaustion process in the first process cycle allows to improve the antimicrobial performance by a second antimicrobial process cycle, in particular by a second process cycle in which a padding process is used, or to apply other functional agents to the textile in a further process cycle. In contrast, repeated superficial liquor applications like repeated padding applications will not improve performance, or at least not improve performance to the same extent. Furthermore, the inventors found that leaching is at lowest values only when exhaustion is used in the first process cycle. On the other hand, in the case of non-woven fabrics, exhaustion may not be preferred because non-woven fabrics can oftentimes not withstand the forces applied by exhaustion machines like jiggers.

The exhaust process 11 may be performed by any suitable technique, and on any suitable machine, like a yarn dying machine, a beam machine, a winch machine, a jet-dyeing machine, a continuous dyeing range (CDR), continuous bleaching range (CBR), or a jigger machine. In a jigger machine, an open-width fabric revolves on two main rollers. The fabric passes from one roller through the liquor bath at the bottom of the machine and then onto a driven take-up roller on the other side. When all the fabric has passed through the bath, the direction is reversed. Each passage is called an end. The process typically involves an even number of ends. The liquor bath has one or more guide rollers around which the cloth travels. During the immersion, the desired contact with the process liquor is achieved. When passing through the liquor bath, the fabric picks up an adequate quantity of liquor, excess of which is drained out, but still a good quantity is held in the fabric. During rotation of the rollers, the chemicals contained in the liquor penetrate and diffuse into the fabric. The largest part of the diffusion process takes place not in the liquor bath but when the fabric is on the rollers, since only a very small length of fabric is in the liquor bath at a given time, and the major part is on the rollers. Jigger machines are preferred because they are very economical and because they can be used with a high material to liquor ratio.

The exhaust process 11 allows for evenly spreading the liquor across the entire cross section of the textile material, such that preferably no spot of the textile material is left untouched by the liquor. As a result, interactions and/or

bonds may be created between the textile material and one or more antimicrobial agents at this time.

Preferably most of the antimicrobial agents of the liquor are exhausted evenly onto the entire cross section of the textile material. Preferably, an exhaustion rate of the exhaust process is at least 75%, more preferably at least 85%, more preferably at least 90%, and most preferably at least 95%, such that the textile material picks up most preferably about 95% of the antimicrobial agents contained in the exhaust liquor. This exhaustion rate allows for reducing costs, as most of the ingredients of the liquor are exhausted by the textile material. It is also more ecological than processes with lower pickup rates.

In general, more heat on the fabric is better for bonding. Therefore, preferably, the temperature of the liquor during the exhaust process is sufficiently high and the exhaust time is sufficiently long such that the one or more antimicrobial agents in the liquor are substantially uniformly dispersed across the cross section of the textile material as a result of the exhaust process. Thus, the temperature of the liquor should be sufficiently high and the exhaust time should be sufficiently long such that preferably the textile material is well impregnated and the antimicrobial agents are dispersed throughout the entire textile material. Preferably, the exhaust time is sufficiently long and the temperature of the liquor during the exhaust process is sufficiently high such that the textile material can achieve the desired antimicrobial performance after a respective curing process, as will be outlined below.

However, too much heat causes yellowness and weakens the fabric. Therefore, preferably, the temperature of the liquor during the exhaust process is sufficiently low and/or the exhaust time is sufficiently short such that the textile material does not discolor and/or turn yellow and/or its breaking (tensile) strength is not reduced by more than 15%, preferably not more than 10%, more preferably not more than 7%, and most preferably not more than 5%, as a result of the exhaust process. As is known in the art, excessive heat leads to yellowing of the textile material, which may be undesirable. Accordingly, the temperature of the liquor should not be too high. At too high temperatures, too much steam forms, reducing the efficiency of the process. Furthermore, if the temperature of the liquor is too high, turbulences can occur within the liquor bath and the textile material may get harmed. Further, with increasing exhaust time, the textile material may become weaker, i.e. its breaking strength may decrease.

The term exhaust time when used in the context of the present invention is preferably defined as the period starting when at least part of the entire batch of textile material first comes into contact with the liquor and lasting until the last part of the batch is taken out of the liquor. For a given application, the ideal exhaust time can vary significantly. In case the textile is a fabric, it will depend on the type of machine, the size of the liquor bath, and the length and weight of the fabric. For example, if the ideal exhaust time for a fabric of a length of 1,500 meters is 60 minutes, the ideal exhaust time for a fabric of a length of 3,000 meters may be 100 minutes under otherwise identical conditions. Whenever an exhaust time is specified herein, it refers to the time which is equivalent to the exhaust time of a fabric of 1,500 meters in length and 200 g/m$^2$ in weight on a standard jigger machine (e.g. model number Y1100 manufactured by Yamuda) being operated at a standard fabric speed (e.g. 50 meters/minute). For any given textile material and exhaustion machine, the skilled person, using common general knowledge, will be able to determine the exhaust time which is equivalent to an exhaust time specified for the above-mentioned parameters.

The breaking strength may be measured with any suitable technique, and is preferably measured in accordance with ASTM standard D 5035-11 (in case the textile material is a fabric), or in accordance with ASTM standard D 2256/D 2256M-10e1 (in case the textile material is a yarn).

In a preferred embodiment, the liquor of the exhaust process has a temperature of at least 45 °C, in particular at least 50 °C, preferably at least 60 °C, more preferably at least 70 °C, even more preferably at least 75 °C, and most preferably at least about 80 °C. Thus, it will be appreciated that the temperature of the liquor during the exhaust process 11 is sufficiently high. Preferably, during the exhaust process, the liquor has a temperature below boiling temperature, preferably at most 95 °C, more preferably at most 90 °C, particularly at most 85 °C, and most preferably at most about 80 °C. Thus, it will be appreciated that the temperature of the liquor during the exhaust process is sufficiently low. The preferred temperature of the liquor during the exhaust process is about 80 °C, which provides particularly advantageous effects, as will be outlined further below. Whenever a minimum temperature of the exhaust liquor is defined herein, this does not mean that the minimum temperature has to be held during the entire exhaust process. Whenever a maximum temperature of the exhaust liquor is defined herein, this maximum temperature should preferably not be exceeded, or only be exceeded for at most 50% of the duration of the exhaust process, preferably at most 25%, more preferably at most 10%.

Preferably, the exhaust time is at least 45 minutes, preferably at least 50 minutes, more preferably at least 55 minutes and most preferably at least about 60 minutes. Thus, it will be appreciated that the exhaust time is sufficiently long. Preferably, the exhaust time is at most 120 minutes, in particular at most 90 minutes, preferably at most 80 minutes, more preferably at most 75 minutes, even more preferably at most 70 minutes, even more preferably at most 65 minutes, and most preferably at most about 60 minutes. Thus, it will be appreciated that the exhaust time is sufficiently short. The preferred exhaust time is about 60 minutes, which provides particularly advantageous effects, as will be outlined further below.

The inventors found that the preferred temperature of the liquor during the exhaust process and the exhaust

time is substantially independent of the weight and the type of the textile material, and of the antimicrobial agents in the liquor. This is because the ideal exhaust process parameters are determined by the way textiles, in particular multifilament yarns and fabrics, behave in general. When a textile is treated at a temperature of 80 °C for 60 minutes, it expands and opens up, exposing individual fibers so that the agents can reach even the most remote spot, and there is even dispersion of the agents. Accordingly, different textile materials can easily be treated by means of the exhaust process 11 without having to change parameters of the exhaust process, while still obtaining the best possible results.

Preferably, during the exhaust process 11, the liquor is stirred. The stirring should be performed at intervals of less than 30 seconds, in other words, the stirring is performed regularly during the exhaust process with interruptions of not more than 30 seconds. It will be appreciated that other suitable intervals may preferably be set, depending on the specific application. Ideally, the stirring is performed continuously during the exhaust process. This intermixing of the chemicals in the exhaust bath increases reliability of the exhaust process, as one or more antimicrobial agents are more evenly distributed in the bath and as a result, a product with even quality throughout the entire textile material can be obtained. Preferably, the stirring is performed by means of a circulation pump, which circulates the liquor inside the exhaustion bath and which is typically comprised by a conventional exhaustion machine. In another embodiment, the stirring is performed by means of a stirrer which is inserted into the exhaustion bath. The stirrer may work at a speed of at least 200 rpm, more preferably at a speed of at least 250 rpm, and most preferably at a speed of at least 300 rpm. The stirrer used by the inventors is a simple mixer, which is similar to but larger than a standard household mixer. Preferably, the mixer has a minimum of three blades, which blades are preferably at least 10 cm long and preferably at least 2 cm wide. The stirrer was added by the inventors to the exhaustion machine they used as it is not provided by conventional exhaustion machines. Most preferably, the liquor is stirred by means of both a circulation pump and a stirrer. Due to this extensive mixing of the liquor, the exhaust process is supported and one or more antimicrobial agents are well dispersed across the cross section of the textile material during the exhaust process. As is known in the art, an exhaust process is typically applied for dyeing cloth, for example. In such applications, typically only a circulation pump is applied for ensuring proper fluid characteristics of the bath, such that a homogeneous dispersion of the dyeing molecules is present in the bath. However, since the antimicrobial agents used in the context of the present invention can be less soluble in water compared to dyeing agents, the utilization of both a stirrer and a circulation pump assures that the antimicrobial agents are not undissolved and do not settle at the bottom of the bath. Instead, due to the combination of both stirring means, the antimicrobial agents are uniformly and homogeneous dispersed throughout the bath.

Accordingly, with exhaust process 11 one or more antimicrobial agents are substantially uniformly dispersed across the cross section of the textile material, whereby the textile material itself, advantageously, does not yellow and essentially, does not lose its breaking strength.

The exhaust process 11 is followed by a heat treatment. In the case that there is only one process cycle, the heat treatment will comprise drying and curing. Curing, which takes place at high temperatures, preferably 180 °C, is necessary to fully bind the antimicrobial agents to the textile material in a non-leaching or substantially non-leaching manner. Prior to curing, the textile must be dried because the temperature of the textile cannot exceed 100 °C until the water in the textile is evaporated. In the case that the first process cycle is followed by further process cycles, be it a second antimicrobial process cycle as described herein below, or a process cycle which imparts other properties like hydrophilicity or hydrophobicity to the textile, there is preferably no curing at this stage, i.e. in the first process cycle. This is for economic reasons, but also because curing may close up or seal the textile so that treatments in further process cycles become less effective. However, even in the case of further process cycles, the textile should be dried by a heat treatment, in particular if the textile is washed before the liquor application in the next process cycle. The heat treatment will achieve basic bonding of the agents to the textile so that they are not washed out in a subsequent washing step.

The heat treatment therefore comprises drying process 12. The drying can be performed by using normal heat setting processes, depending on the actually used textile material. Preferably, the drying of the textile material is conducted at least partially at a temperature of at least 100 °C, more preferably at least 110 °C, even more preferably at least 115 °C, and most preferably at least about 120 °C. Lower temperatures would require longer dwell time, which is disadvantageous because a longer dwell time has a negative impact on the textile in terms of yellowing and also strength of the fabric.

Preferably, the drying of the textile material is conducted at a temperature of at most 190 °C, more preferably at most 180 °C, particularly at most 170 °C. Even more preferably, the drying of the textile material is conducted at a temperature of at most 150°C, more preferably at most 140 °C, particularly at most 130 °C, and most preferably at most about 120 °C.

Preferably, the drying time at the temperatures given above is of at least 30 seconds, preferably at least 40 seconds, more preferably at least 50 seconds, and most preferably at least about 60 seconds, per 100 g of fabric weight per $m^2$ (in case the textile material is a fabric). Further preferably, the drying is performed over a period of at most 120 seconds, preferably at most 90 seconds, more preferably at most 75 seconds, most preferably at most about 60 seconds, per 100 g of fabric weight per $m^2$ (in case the textile material is a fabric). It will be appreciated that the drying times

increase with increasing fabric weight (per $m^2$). The skilled person understands that similar drying times apply if the textile material is a yarn, and understands to choose respective drying times which then depend on the yarn diameter.

Drying process 12 is typically conducted by passing the textile material through a stenter or stenter frame (sometimes also referred to as a "tenter") or similar drying machine. An exemplary setup of a stenter will be described later with reference to Fig. 2. By drying the textile material, preferably excess moisture is removed.

Still referring to Fig. 1, drying process 12 is followed by curing process 13 if there are no further process cycles. In this case, the curing process is can be as described below with regards to curing process 17. However, while in the second process cycle curing process 17 is preferably carried out together with drying process 16 in one single pass through the stenter, there are preferably two separate passes through the stenter for drying and curing in case there is only one process cycle. This is because if there is only one process cycle, the textile is typically wetter, and therefore the drying process can be better controlled if it is performed in a separate pass through the stenter.

On the other hand, if there is a further antimicrobial or liquor application process cycle, drying process 12 is preferably followed by a washing process 14. During washing process 14, the textile material is preferably washed in water, further preferably without using detergents. Preferably, the textile material is washed in a bath, such as e.g. a water bath, having a temperature between 30 °C and 50 °C, further preferably between 35 °C and 45 °C. The washing time is preferably at least 35 minutes and more preferably at least 40 minutes. Washing process 14 preferably removes any surface contamination resulting from liquor application process 11. In case there is a further process cycle, it cleans the space for the next liquor application process. Washing particularly improves the non-leaching properties of the textile, both in case of only one process cycle or in the case the textile is treated by a subsequent second process cycle 10b as described below. In the latter case, if there is no washing, surface contamination particles on the textile material are bound to the textile in the second process cycle 10b in such a manner that leaching of the particles can occur throughout the life time of the textile, despite washing of the textile at the end of the second process cycle 10b. Washing process 13 is preferably followed by a step of drying the textile material (not shown), which drying can preferably be performed by means of a stenter in the same manner as described above, i.e. at a preferred maximum temperature of 120 °C, which is applied for about 60 seconds per 100 g of fabric weight per $m^2$.

After the first process cycle 10a, the resulting textile material already features antimicrobial properties. However, they can be further improved by conducting an optional second process cycle 10b. The second process 2 in Fig. 1 comprises a padding process 15 for treating the textile material. Other liquor application processes can be used in the alternative, such as e.g. an exhaust process, coating process or spraying process. However, a padding process has proven to be particularly advantageous because it is less time consuming and therefore less expensive than exhaustion, it provides for a more even distribution of the liquor than spraying (and unlike spraying can be applied on both sides of a fabric at the same time), and it yields better results in terms of non-leaching properties than coating because a coating paste typically contains ingredients which tend to leak.

Any suitable technique can be utilized for performing padding process 15, in which preferably a respective liquor (which may or may not be the same liquor as the one of exhaust process 11 and will be detailed further below) is prepared and fed through a pump to a respective padding mangle. Accordingly, padding process 15 preferably comprises applications of one or more rolls to obtain optimum wet pickup of the liquor on the textile material. The appropriate padding mangle pressure is typically predetermined, depending on the quality of the textile material, and it is in general set such that the wet pickup of the antimicrobial agents is optimized. The liquor may be at room temperature or it may be heated during the padding process.

Preferably, the padding process is performed in a padding mangle at a pressure of 0.5 to 4 bars, more preferably 1.0 to 3.0 bars, even more preferably 1.5 to 2.5 bars, most preferably about 2 bars. The pick-up rate (or "wet pick-up") specifies the amount of liquor applied and is defined as a percentage on the weight of the dry untreated textile as follows: % pick-up rate = weight of liquor applied x 100 / weight of dry textile. For example, a pick-up rate of 65% means that 650 grams of liquor are applied to 1 kg of textile. The pick-up rate of the padding process according to the invention is preferably at least 40%, more preferably at least 50%, even more preferably at least 55, particularly at least 60%, and most preferably at least about 65%. It is preferably at most 90%, more preferably at most 80%, even more preferably at most 75%, particularly at most 70%, and most preferably at most about 65%. However, since after the first process cycle the textile is already to a certain extent saturated with chemical agents, it is believed that the effective pick-up rate for the antimicrobial agents is only about 40%, in the sense that the rest of the antimicrobial agents padded onto the fabric does not become permanently fixed to the fabric and is washed off during subsequent washing step 18.

After padding process 15, a heat treatment comprising drying 16 and curing 17 is performed. The heat treatment starts with drying 16. The drying process 16 is identical or similar to the drying process 12 of the first process cycle 10a. After drying process 16, the textile material should be 99% devoid of moisture. However, when the textile cools down to room temperature, it will have moisture regain of, e.g., about 7-8% for cotton of about 4-5% for polyester.

The heat treatment of the second process cycle 10b continues with curing process 17, as shown in Fig. 1. Curing may be defined as heat treatment, at temperatures as mentioned in the present application, of the textile material in the dry state, wherein dry means that the textile is 99% devoid of moisture. Any suitable machine can be utilized for

performing the curing process 17, allowing for providing sufficient heat and sufficient dwell times. Typically, a stenter will be used for the curing process 17. An exemplary configuration of such a stenter will be given later with reference to Fig. 2.

Preferably, the curing temperature is sufficiently high and the curing time is sufficiently long such that one or more antimicrobial agents of the liquor exhausted and padded onto the textile material are sufficiently strongly fixed or bonded to the textile material. They should preferably be set such that the antimicrobial agents are bound to the textile material and optionally polymerized, become an inherent part of the textile material and provide the desired antimicrobial and non-leaching properties of the textile material. Depending on the agents and chemicals used, also crosslinking of the antimicrobial agents takes place during the curing step. As a result thereof, the resultant textile material can favorably withstand several washes without losing its antimicrobial properties. In case the textile material is a fabric, the curing time depends on the weight of the fabric (per $m^2$). However, the inventors found that the preferred curing temperature, which will be detailed below, is substantially independent of the type of the textile material.

Preferably, the temperature of the liquor during the exhaust process is sufficiently high and the exhaust process is sufficiently long and the curing temperature is sufficiently high and the curing time is sufficiently long such that after washing the textile material, the favorable non-leaching properties can be achieved, and/or such that the favorable antimicrobial performance is achieved, as they will be detailed later. A washing of the resulting textile material may be done with water, preferably in a bath using warm to hot water in order to remove any residual chemicals for about an hour. Preferably, the water has a temperature in the range of 20 °C and 60 °C, and the washing is preferably performed between 30 minutes and 90 minutes, and further preferably is in accordance with the washing procedure outlined below for washing step 18.

Preferably, the curing temperature is sufficiently low and the curing time is sufficiently short such that the textile material does not discolor and/or turn yellow, and/or its breaking strength is not significantly reduced, i.e. is not reduced by more than 15%, preferably not more than 10%, more preferably not more than 7%, and most preferably not more than 5%. Further preferred, the curing temperature is sufficiently low and the curing time is sufficiently short such that the textile material does not melt and/or burn and/or yellow, and/or that the colors of the textile material do not substantially change (discolor) as a result of the curing. Preferably, the temperature of the liquor during the exhaust process and the exhaust time and the curing temperature are such that the above favorable characteristics are achieved. In the most preferred embodiment, the temperature of the liquor during the exhaust process is 80 °C, the exhaust time is 60 minutes, and the maximum curing temperature is 180 °C, which values are preferably independent from the textile material treated with process 10.

Thus, curing process 17 is preferably conducted at least partially at a curing temperature of at least 150 °C, preferably at least 160 °C, more preferably at least 170 °C, even more preferably at least 175 °C, and most preferably at least about 180 °C. Preferably, curing process 17 is conducted at a temperature of at most 205 °C, preferably at most 195 °C, more preferably at most 190 °C, even more preferably at most 185 °C, and most preferably at most about 180 °C. Thus, the preferred curing temperature is about 180 °C.

Preferably, curing process 17 is performed at the temperature discussed above over a period of at least 20 seconds, preferably at least 24 seconds, more preferably at least 28 seconds, and most preferably at least about 30 seconds per 100 g of the fabric weight per $m^2$ (in case the textile material is a fabric). Preferably, the time period during which this temperature is applied is at most 50 seconds, preferably at most 45 seconds, more preferably at most 40 seconds, even more preferably at most 35 seconds, and most preferably at most about 30 seconds per 100 g of fabric weight per $m^2$ (in case the textile material is a fabric). Thus, in the most preferred embodiment, a curing temperature of about 180 °C is applied for about 30 seconds per 100 g of fabric weight per $m^2$. However, in case of heavy fabrics, the preferred curing time is longer, namely 45 seconds at the temperature discussed above for fabrics of 350 to 500 g/$m^2$, and 60 seconds for fabrics of more than 500 g/$m^2$. This is because with increasing thickness of the fabric, heat waves will take more time to get to the core of the fabric. It will be appreciated that modified temperatures are applied in case that the textile material is a yarn, and the dwell times and curing temperatures then depend on the yarn diameter. Since the curing temperature is substantially independent from the textile material, only the curing time (and drying time) have to be adjusted when using different textile materials. The inventors found that the curing time, or dwell time, increases about linearly with increasing weight of the textile material.

Preferably, curing process 17 immediately follows drying process 16 of the second process cycle 10b illustrated in Fig. 1. Thus, the textile material preferably does not substantially cool down between the drying process 16 and the curing process 17. Accordingly, when performing the drying process 16 and curing process 17 directly one after the other, both processes are preferably performed over a total period of at least 45 seconds, preferably at least 50 seconds, more preferably at least 55 seconds, and most preferably at least about 60 seconds per 100 g of fabric weight per $m^2$ (in case the textile material is a fabric). Further preferred, the drying process 16 and curing process 17 are performed over a total period of at most 75 seconds, preferably at most 70 seconds, more preferably at most 65 seconds, and most preferably at most about 60 seconds per 100 g of fabric weight per $m^2$ (in case the textile material is a fabric). Typically, in the second process cycle, since the textile material is typically less wet than after the liquor application process in the

first process cycle (due to saturation with agents in the first cycle, which decreases the textiles water holding capacity, in particular if hydrophobic agents are used, like organosilane), drying process 16 and curing process 17 are performed in one pass by passing the textile material through a stenter if curing process 17 immediately follows drying process 16, which is more economical than two separate passes through the stenter.

Finally, a washing process 18 is preferably performed, which is typically the same as washing process 14 of the first process cycle 10a described above. Washing should remove any surface contamination resulting from padding process 15. Washing process 18 is preferably followed by a drying process (not shown), which is typically the same as the drying process of the first process cycle 10a described above.

By performing said second process cycle 10b comprising process steps 15 to 18, the antimicrobial properties of the resulting textile material are improved, as now the textile material is covered more thoroughly by one or more antimicrobial agents. When only performing one process cycle, comprising steps 11-14, the textile material may undesirably feature spots which do not feature antimicrobial properties at all, or of less performance compared to other spots. The spots may in particular be due to the fact that when the fabric is wrapped (e.g. on the jigger), there is abrasion. By performing the second process cycle, these spots or holes are closed so that a product with even quality throughout the entire textile material can be obtained. This is particularly important for the application of the antimicrobial textile for water purification as described below, where the above-mentioned spots or holes can be a serious threat to the health of the user of the water purifier. Another advantage of performing a second process cycle is that it allows to apply different agents to the surface than to the core of the fibers.

It will be appreciated that one or more additional processes may be introduced between the individual processes of process 10 of Fig. 1. In particular, if there are more than 2 process cycles, curing will typically be only take place after the last liquor application process. Furthermore, one or more additional processes may be performed prior or after performing process 10 of Fig. 1. For example, before starting process 10 with the liquor application process 11, the textile material should preferably be tested, washed and/or cleaned. Preferably, the fabric is first tested and if necessary washed or cleaned, so that the fabric is naturally hydrophilic in nature and free from all chemical contaminants that would hinder the application of the chemistry on the textile. Thereby, the fabric is advantageously freed from chemical contaminants that would hinder the application of later processes. In a particular preferred embodiment, one or more of the following steps may be performed prior to conducting process 10 of Fig. 1: Testing the textile material at laboratory scale to verify and confirm that it meets respective selection criteria, batching and stitching together of individual textile pieces on a frame, inspecting the textile material thoroughly for defects, ensuring that the fabric is hydrophilic in nature and free from any chemical contaminants.

The textile material may be dyed prior to performing the process 10 of manufacturing a textile material. In another preferred embodiment, the textile material is manufactured to be multifunctional. After having performed process 10, i.e. after the antimicrobial treatment, a respective multifunctional treatment is performed. With such a multifunctional treatment, the textile material may be provided with UV-blocking, water-repellent, water-absorbent, mosquito-repellent and/or similar properties. It is also possible to conduct a multifunctional treatment in a padding process as described e.g. for padding process 15, wherein the padding liquor contains the respective functional agents, in addition to antimicrobial agents.

It will be appreciated that different machines may be utilized in case the textile material is a yarn. For example, the exhaustion process may be performed with a pressurized yarn dyeing machine, and the yarn may then be treated with a hydro extractor for removing excess moisture. The drying and curing of the yarn may take place in a Radio Frequency RF Dryer and curing machine. The dwell times thereby depend on the yarn diameter, wherein the temperatures mentioned above still apply.

Fig. 2 shows an exemplary structure of a stenter 20, which can be utilized for drying and/or curing the textile material. Thus, with reference to the process steps of Fig. 1, stenter 20 can be used for drying process 12, curing process 13, drying process 16, and/or curing process 17. Furthermore, it can be used for drying the textile material in the course of washing process 14 and/or washing process 18 of process 10 of Fig. 1.

The exemplary stenter 20 comprises eight chambers 21-28, which can preferably be controlled separately. This means that different temperatures can be set in the different chambers. When using stenter 20 for drying process 12 or drying process 16 of process 10 of Fig. 1, or for the drying after washing, the chambers 21-28 have preferably a drying temperature in accordance with the above outlined specification. In an exemplary embodiment, the temperatures in the chambers are as follows: Chamber 1 is preferably at 120 °C, and the remaining chambers 2-8 are preferably at 130-135 °C. In another exemplary embodiment, the temperatures in all eight chambers are set to 120 °C.

The textile material is normally transported through stenter 20 with a conveyer belt at a constant speed, which will be set according to the weight of the textile material. For example, for a stenter of 24 meters length, a speed of 24 m/s can be set for a 100 g/$m^2$ fabric, or a speed of 12 m/s can be set for a 200 g/$m^2$ fabric, or a speed of 9 m/s can be set for a fabric weight of 280 g/$m^2$. Thus, the dwell time is increased with increasing fabric weight.

If all chambers of the stenter shown in Fig. 2 are used for the drying process, preferably a speed of 60 m/s is set for 100 g per $m^2$ fabric weight, a speed of 30 m/s is set for 200 g per $m^2$ fabric weight, and a speed of 22 m/s is set

for 280 g per $m^2$ fabric weight. Since each chamber is about 3 meters long, for 100 g per $m^2$ fabric weight, the dwell time in each chamber is about 3 s, such that the total dwell time is about 24 s. In case of 200 g per $m^2$ fabric weight, the total dwell time is 48 s, and 72 s in the case of 280 g per $m^2$ fabric weight. It will be appreciated that the dwell time increases substantially linearly with the fabric weight.

If all chambers of stenter 20 are used for curing process 13 or curing process 17 of process 10 of Fig. 1, the temperature of at least one chamber and preferably of six chambers, and more preferably of eight chambers of stenter 20 are set in accordance with the curing temperatures outlined below. In an exemplary embodiment, chambers 1 and 8 may have a temperature of 140°C, while the temperature of chambers 2-7 is 180 °C, or while chambers 2 and 7 are at 160 °C and chambers 3-6 are at 180 °C. Preferably, the following transport speeds are set: 42 m/s in the case of 100 g per $m^2$ fabric weight, 21 m/s in the case of 200 g per $m^2$ fabric weight, and 16 m/s in the case of 280 g per $m^2$ fabric weight. Thus, for a fabric weight of 100 g per $m^2$, the total curing time is about 34 seconds, and the dwell time per chamber is thus of about 4 seconds. In the case of 200 g per $m^2$ fabric weight, the total curing time is about 68 seconds, and the dwell time in each chamber is about 8 seconds. In the case of 280 g per $m^2$ the total curing time is about 103 seconds, and the dwell time in each chamber is about 13 seconds. It will be appreciated that the dwell time increases substantially linearly with fabric weight.

In the above example setup, the drying of the textile material and curing are conducted in two different passes, by first passing the textile material through the stenter 20 for drying and then passing the textile material through the stenter 20 again for curing, at different speed and temperatures.

It will be appreciated that the stenter does not necessarily have to have eight chambers, but can feature an arbitrary number of chambers. However, if drying of the textile material and curing are conducted in one pass by passing the textile material through the stenter 20, for reasons which will become apparent below, it is advantageous to have at least six chambers, preferably at least eight chambers.

In this case, the total period of drying and curing is in accordance with the parameters mentioned above. The process should be such that the textile is subjected to gradually increasing temperatures, preferably at least in two intermediate steps, preferably at least in three intermediate steps, before reaching the preferred curing temperatures. Thus, the textile material is not immediately subjected to the preferred curing temperature, but to a number of gradually increasing temperatures. This is because the wet textile material should not immediately be subjected to curing temperatures as high as 180 °C to avoid being substantially damaged, as a consequence of the temperature difference between the surface of the textile material, which heats up instantaneously, and the interior of the textile material (e.g., of the yarns), which heats up only with a certain delay. Thus, temperature gradients would be formed within the textile material, leading to internal stress and possible deterioration of the textile material.

The program of gradually increasing temperatures ("ramp-up") may start at a temperature of at least 100 °C, preferably at least 110 °C, more preferably at least 115 °C, and most preferably at least about 120 °C. The ramp-up preferably starts at a temperature of at most 140 °C, preferably at most 130 °C, more preferably at most 125 °C, and most preferably at most about 120 °C. The ramp-up may last for a period of preferably at least 15 s, preferably at least 18 s, more preferably at least 20 s, and most preferably at least about 22s, per 100 g of fabric weight per $m^2$ (in case the textile material is a fabric). Furthermore, the ramp-up lasts over a period of preferably at most 30 s, preferably at most 27 s, more preferably at most 25 s, and most preferably at most about 23 s, per 100 g fabric weight per $m^2$ (in case the textile material is a fabric). Again, the skilled person understands to choose suitable parameters in case the textile material is different from a fabric, such as, e.g., a yarn.

Preferably the drying of the textile takes place at least partially and more preferably fully during said period of gradually increasing temperatures. With reference to stenter 20 illustrated in Fig. 2, the temperatures of the individual chambers may be as follows: Chamber 1 is at 120 °C, chamber 2 is at 135 °C, chamber 3 is at 150 °C, chambers 4-7 are at 180 °C, and chamber 8 is at 140 °C. The drying process essentially takes place in chambers 1-3, while the remaining chambers perform the curing process. However, it will be appreciated that curing may already partly set in in any one of chambers 1-3. Preferably, for 100 g per $m^2$ fabric weight, the dwell time in each chamber is 7.5 s, such that the drying time is 22.5 s and the curing time at the maximum temperature is 30 s. It will thus be appreciated that chamber 8 provides a ramp-down stage, for avoiding that the textile material is subjected to drastic temperature changes. In case of 200 g per $m^2$ fabric weight, the dwell time in each chamber is 15 s, such that the drying time is 45 s, and the curing time at maximum temperature is 60 s. In case of 280 g per $m^2$ fabric weight, the dwell time in each chamber 22.5 s, such that the drying time is 67.5 s, and the curing time at maximum temperature is 90 s. Accordingly, in the example given, the ramp-up takes place in chambers 1-3, i.e. in three chambers of stenter 20. However, it will be appreciated that more or less than three chambers can be utilized for conducting the program of gradually increasing temperatures.

In the following, the performance characteristics of test materials obtained with the inventive process of manufacturing will be detailed with reference to certain test results. For the two example types of used fabric, as discussed below, the following compositions for the liquor (used in the exhaust process cycle and where applicable in the second process cycle) were chosen:

For the 100% cotton fabric (i.e. Example A):

1% polyhexamethylene biguanide, 0.15% silver, 0.8% organosilane (dimethyloctadecyl[3-(trimethoxysilyl)propyl]ammonium chloride), 0.15% propiconazole and 1% polyglucosamine.

For the 65% Polyester/35% cotton fabric (i.e. Example B): 0.35% polyhexamethylene biguanide, 0.15% silver, 0.8% organosilane (dimethyloctadecyl[3-(trimethoxysilyl)propyl]ammonium chloride), 0.15% propiconazole on weight of fabric.

Said compositions were added to water. For specific details on the liquor and the respective compositions, reference is made to the description below.

Two example fabrics were used, which feature different compositions:

Example A:

A fabric consisting of 100% cotton was chosen, with a fabric weight of 265 g/m$^2$, and a width of 150 cm. The resulting textile material may be utilized for application in water filtration as described below, for example, and is thus termed "water filter fabric" herein.

Example B:

A blended fabric comprising 35% cotton and 65% polyester with a fabric weight of 200 g/m$^2$, and a width of 150 cm was chosen. The resulting textile material may be used for the production of apparel, for example, and is thus termed "apparel fabric" herein.

The fabrics according to Example A and Example B were subjected to an exhaust process. For exposing the effect of the present invention, the exhaust process was performed at three different exhaust temperatures and at seven different exhaust times, in particular for highlighting the effect of exhaust temperature (the temperature of the exhaust liquor in the bath) and exhaust time on the antimicrobial performance and the non-leaching properties of the treated textile material. The temperatures of the liquor during the exhaust process were 40°C, 60°C, and 80°C, and the exhaust times were 15 minutes, 30 minutes, 45 minutes, 60 minutes, 75 minutes, 90 minutes and 120 minutes. The resulting textile material was dried at 120° C and cured at 180° C at appropriate dwell times.

For studying the effect of both the temperature of the liquor during the exhaust process and the exhaust time, three different measurements were performed. A measurement on breaking strength was performed in accordance with ASTM standard D 5035. A measurement on antimicrobial performance was conducted, in accordance with the ASTM standard 2149, whereby Staphylococcus aureus (ATCC 43300) was utilized as the test microorganism. Further, leaching of the antimicrobial agents from the treated textile was measured. A more detailed discussion of the measurement procedures is provided below.

Next, the measurement results obtained for the textile materials based on "water filter fabrics" according to Example A will be described with reference to Figs. 3-5, before the measurement results obtained for the textile materials based on "apparel fabric" according to Example B will be described with reference to Figs. 6-8.

Fig. 3 shows the breaking strength of the textile materials (based on Example A) processed with different exhaust times and different temperatures of the liquor during the exhaust process. The sample which was not treated with the exhaust process (i.e. 0 minutes exhaust time) features breaking strengths of slightly more than 1600 N. When considering exhaust times between 15 and 120 minutes, the breaking strengths of the samples are slightly below 1600 N, in the case where the temperature of the liquor during the exhaust process is 40 °C or 60 °C. However, if the temperature of the liquor is 80 °C, a drastic reduction in breaking strength can be observed when the exhaust time is 75 minutes or longer. Thus, Fig. 3 shows that a low temperature of the liquor and a short exhaust time is desirable for obtaining a large breaking strength.

Fig. 4 shows the antimicrobial performance, i.e. the logarithmic ("Log") reduction of bacteria on the treated textiles. An untreated sample (i.e. 0 minutes exhaust time) does not feature any antimicrobial performance. The samples for which a temperature of the liquor of 40 °C or 60 °C was applied during the exhaust process feature a Log reduction of bacteria in the range of 2-3. However, in the samples to which a temperature of the liquor of 80 °C was applied, a strong increase in antimicrobial performance can be observed for exhaust times of at least 60 minutes. Accordingly, as can be derived from the data presented in Fig. 4, a high temperature of the liquor and a long exhaust time is desired for obtaining good antimicrobial performance.

Fig. 5 shows the leaching of antimicrobial agents measured for the test samples. The antimicrobial agents comprise polyhexamethylene biguanide, silver, organosilane, and propiconazole, i.e. the ingredients of the liquor. The sample which was not treated by the exhaust process (i.e. 0 minutes exhaust time) does not leach any antimicrobial agents, since said sample was not subjected to the liquor at all. For the sample treated at a temperature of the liquor of 40 °C during the exhaust process, improving non-leaching performance can be observed with increasing exhaust time. Similar holds true for the sample treated at a temperature of the liquor of 60 °C during the exhaust process, wherein the absolute values of leached antimicrobial agents are lower and thus more favorable. The best (non-)leaching properties

can be observed for the sample treated at a temperature of the liquor of 80 °C during the exhaust process, with an exhaust time of 60 minutes. For this exhaust temperature, the leaching properties deteriorate (leaching becomes greater) once the exhaust time exceeds 60 minutes. It is believed that this is due to the decreasing breaking strength of the textile as it can be observed in Fig. 3. Thus, as can be seen from Fig. 5, optimal leaching properties can be observed if the temperature of the liquor during the exhaust process is 80 °C and the exhaust time is 60 minutes.

From the measurement results illustrated in Figs. 3-5, the following conclusions can be drawn: The best leaching properties are obtained at a temperature of the liquor of 80 °C and an exhaust time of 60 minutes. These parameters also result in a textile material with optimum antimicrobial performance and only a minor reduction in its breaking strength, which is of less than 10%.

Turning now to the measurement results obtained for the textile materials based on "apparel fabric", i.e. of Example B, Fig. 6 shows the respective breaking strengths. For all three temperatures of the liquor applied during the exhaust process, rather high breaking strengths of more than 1200 N can be observed for exhaust times of up to 60 minutes. Compared to the untreated sample, the relative reduction in breaking strength is less than 5%. However, for exhaust times of 75 minutes and more, a significant reduction in breaking strength can be observed, wherein the breaking strength decreases with increasing exhaust time. This effect is more pronounced for the samples treated with higher temperatures of the liquor during the exhaust process. Thus, similar to the conclusions drawn from the measurement results shown in Fig. 3, a low temperature of the liquor and a short exhaust time is desired in view of breaking strength, wherein for all applied temperatures a maximum exhaust time of 60 minutes results in a reasonably small loss of breaking strength.

Fig. 7 shows the antimicrobial performance for Example B, which is similar to that of Fig. 4. Again, reduction of bacteria can be observed for samples treated with the exhaust process. An optimal reduction of bacteria can be observed if the temperature of the liquor is 80 °C and the exhaust time is 60 minutes, wherein the antimicrobial performance is again strong when higher exhaust times are applied.

Fig. 8 shows the leaching properties as described above in the context of Example A. Contrary to the test results shown in Fig. 5, the sample treated with a liquor having a temperature of 40 °C or 60 °C during the exhaust process feature a leaching performance which is about constant for exhaust times of 60 minutes and less. If the exhaust time exceeds 60 minutes, the leaching properties get worse with increasing exhaust times. Similar applies to the behavior of the sample treated with a liquor having a temperature of 80 °C. For this sample, optimal leaching properties are observed at exhaust times of 45 and 60 minutes.

Thus, for the samples based on "apparel fabric" according to Example B, the following conclusion can be drawn from the measurement values shown in Figs. 6-8: an optimum pick up during the exhaust process is achieved if the temperature of the liquor during the exhaust process is 80 °C, and the exhaust time is 60 minutes. With such a setup, antimicrobial performance and non-leaching properties reach a maximum, and the breaking strength of the textile material is reduced only minimally.

In the following, the effect of the curing process on antimicrobial performance and leaching properties will be discussed. For this purpose, again fabrics according to Example A and Example B were prepared and processed. In particular, the fabrics were treated with an exhaust process, wherein the liquor of the exhaust process contains the specific composition mentioned above. During the exhaust process, the liquor was maintained at a temperature of 80°C, and the exhaust time was 60 minutes. As described above, these parameters were found to be most preferable.

After the exhaust process, the sample was dried and cured. For highlighting the effect of the curing temperature, the curing process was performed at varying curing temperatures (i.e. 120 °C, 150 °C, 180 °C), and furthermore unwashed samples were compared with samples which had been washed 25 times after processing. In other words, antimicrobial performance and properties with respect to curing temperature was tested. The curing time was set to two minutes for all samples.

First, the antimicrobial performance will be discussed. Respective measurements were performed, whereby Staphylococcus aureus (ATCC 43300) and Pseudomonas aeruginosa (ATCC 15442) were used as testing organisms. A more detailed description of the measurement procedures is provided below. Measurements were performed at 15 minutes, 30 minutes, one hour and six hours after the respective inoculation. Accordingly, the contact time of the respective organism with the sample was varied.

Fig. 9 shows the resulting measurement values for the "water filter fabric" samples, while Fig. 10 shows the corresponding values for the "apparel fabric" samples. In both Fig. 9 and Fig. 10, the samples were inoculated with the ATCC 43300.

As can be seen, the bacteria reduction increases with increasing contact time, i.e. contact time of the respective organism with the sample. Furthermore, when only considering the unwashed samples, the samples cured at 180 °C feature the best antimicrobial performance, with a Log reduction of up to 5-6 at one hour after inoculation, i.e. after a contact time of one hour. Also the samples cured at 120 °C and 150 °C have a good antimicrobial performance, but only in the unwashed state. After washing the samples 25 times, the antimicrobial performance of the samples cured at 120 °C and 150 °C decrease drastically. However, this is not the case for the samples cured at 180 °C. For these samples,

only a minor variance in antimicrobial performance can be observed when comparing the unwashed and washed sample. Accordingly, it can be concluded that not only the antimicrobial performance, but also the washing durability and thus the non-leaching property is good.

Fig. 11 and Fig. 12 show the antimicrobial performance for the "water filter fabric" samples and "apparel fabric" samples, respectively. In contrast to the measurements shown in Figs. 9 and 10, the samples were inoculated with ATCC 15442.

In general, the same dependencies can be observed as before. The bacteria reduction again increases with increasing contact time, and the samples cured at 180 °C in general feature better antimicrobial performance compared to the samples cured at 120 °C and 150 °C. Again, about one hour after inoculation, a reduction of Log 5-6 can be observed for the samples cured at 180 °C. Furthermore, the washing durability of these examples is much better compared to the samples cured at lower temperatures.

Thus, when curing the textile materials at 180 °C, after they had been subjected to an exhaust process, a surprisingly high washing-durable antimicrobial performance is obtained.

Next, leaching properties will be discussed. Leaching of antimicrobial agents such as polyhexamethylene biguanide (PHMB), organosilane, silver and propiconazole was tested with respect to soaking time. A more detailed description of leaching measurements is given below. Measurements were performed after soaking times of one day, five days and nine days.

Fig. 13 shows the leaching performance for the "water filter fabric" samples, while Fig. 14 shows the leaching performance for the "apparel fabric" samples. As can be seen, in both cases leaching was high for all antimicrobial agents if the samples were cured at 120 °C. Since the washing durability of the samples cured at low temperatures was found to be poor (see the detailed discussion above with respect to Figs. 9 to 12), it is understandable that the leaching of the respective antimicrobial agents also decreases for the washed samples as they are most likely already washed out of the sample.

A further trend which can be observed from the graphs presented in Figs. 13 and 14 is a decreasing leaching with increasing curing time, i.e. non-leaching properties increase. In other words, the antimicrobial agents are assumed to be well bonded to the textile material, or to be well incorporated therein. Still further, the samples cured at 180 °C feature very little leaching, and the corresponding values are barely visible in the presented graphs.

Thus, it is apparent from Figs. 9-14 that, irrespective of soaking time and washing of the textile material, the samples cured at 180 °C feature extraordinarily advantageous antimicrobial and leaching characteristics.

The measurement results discussed above with reference to Figs. 1-14 were obtained in an early stage of refinement of the present invention. It will thus be appreciated that even better antimicrobial and leaching characteristics can be obtained today with the manufacturing process according to the present invention, but the conclusions with respect to optimum exhaustion and curing parameters drawn above still apply.

## EXPERIMENTAL EXAMPLES

The present inventors performed comprehensive further experiments to determine the effect of different process parameters both for each individual antimicrobial agents and for mixtures thereof. Unless otherwise specified, cotton-polyester blend fabric (count 20s warp and 20s weft, construction 108 x 84, polyester cotton blended dyed fabric (65% polyester and 35% cotton), shade Ceil blue, width 150 cm, fabric weight 210 g/$m^2$) was used in the experimental examples. Concentration of the chemicals are presented either in percent on weight fabric (% o.w.f.) or gpl (gram/liter), unless otherwise specified. Some of the fabrics were produced using the process described in the following, and others were produced under laboratory conditions which closely simulated this process.

The antibacterial activity of the textile was tested in accordance with AATCC Test Method 100-2012. Prior to the test, the fabric was cut into coupons of 2 x 4 inches and washed separately 25 times, and exposed to 12 abrasion cycles, as per US EPA protocol 90072PA4 (described further below). The tests were made against E. Coli (ATCC 25922). Contact time was 60 minutes, after inoculating with $10^8$ CFU per coupon.

The test procedure for leaching was as follows: 100 g (grams) of fabric as well as control fabrics were soaked in 10 liters of stagnant distilled water in a closed wide mouth jar. After 3 days (72 hours), the water samples were tested for leached substances as per standard analytical methods.

### Experimental Example I. Exhaustion parameters for *individual* antimicrobial agents

#### 1.1. Temperature of liquor and concentration of antimicrobial agents

#### I.1.(1) Treatment of the textile material

1,500 meters (483.75 kg) of textile material were loaded in a jigger machine (Yamuna, model number Y1100),

and about 905 liters of water was added to obtain a material to liquor ratio of about 1:2. For achieving a solution (not: actives) concentration of 0.10% o.w.f., 0.483 kg either of a solution containing 20% of Polyhexamethylene biguanide (Swissol, Texguard-20), or of a solution containing 1.0% of silver cations trapped in a matrix (SilvaDur AQ, Rohm and Haas), or of a solution containing 72% of dimethyloctadecyl[3-(trimethoxysilyl)propyl]ammonium chloride (organosilane, AEM 5772 Antimicrobial, AEGIS Environments), or of a solution containing 25% of propiconazole (Biogard PPZ 250, Beyond Surface Technologies AG), or of a solution containing 20% of polyglucosamine (chitosan, Goyenchem-102, Go Yen Chemical) were added to the water. For the liquor achieving a solution concentration of 0.20, 0.50, 0.80, or 1.00% o.w.f., corresponding higher amounts of the solutions were added. The pH of the liquor was adjusted with 0.03 gpl of citric acid and maintained between pH 5 and pH 6, preferably at pH 5.5. The temperature of the liquor was set to 40 °C, 60 °C, 65 °C, 70 °C, 75 °C, 80 °C, 85 °C, 90 °C, and 95 °C, respectively.

The jigger machine was started and run at a speed of 50 m/s, and the run was continued for the next 60 minutes (2 ends, with a break of less than 30 seconds between the ends). The liquor was constantly stirred with a stirrer at a speed of 300 rpm throughout the exhaustion process. The exhaustion rate was about 98%. Following this, the process bath was drained and the textile material immediately was transported to a stenter machine for drying and curing. I.e., the exhaust time was 60 minutes.

The textile was dried by passing it through the stenter, which had 8 chambers and a length of 24 meters, at a speed of 12 meters per second. The maximum temperature of 120 °C was applied in all 8 chambers, i.e. during 120 seconds. The textile was cured by passing it once again through the stenter at the same speed (i.e. 12 meters per second), wherein a maximum temperature of 180 °C was applied in chambers 3 to 6, i.e. during 60 seconds. The temperatures in chambers 1, 2, 7 and 8 were 120 °C, 150 °C, and 150 °C, 120 °C respectively.

I.1. (2) Tests on performance and leaching of the treated textile materials

The following results, also illustrated by the graphs in Fig. 15A to 15F were achieved when a performance test and leaching test was performed on the textile material which was achieved by the exhaustion and curing process. The exhaustion process was performed by varying both, the temperature of the liquor and the concentration of active ingredients in the liquor. As mentioned above, a solution containing active ingredients was added with a solution dosage of between 0.1 and 1.0% o.w.f, and the temperature was varied between 40 °C and 90 °C. The following performance was observed, also shown in Fig. 15A to 15C.

| Performance Test of individual agents | | | | | | | | | |
|---|---|---|---|---|---|---|---|---|---|
| Parameters of the exhaustion process | | | | | | | | | |
| Temperature | Varied between 40 °C to 90 °C | | | | | | | | |
| Solution dosage | Varied between 0,1% to 1,0% o.w.f | | | | | | | | |
| Process time | 60 min | | | | | | | | |
| | Log reduction of antimicrobial performance w.r.t exhaust temperature (in °C) | | | | | | | | |
| PHMB Dosage % o.w.f | 40 °C | 60 °C | 65°C | 70 °C | 75°C | 80 °C | 85°C | 90 °C | 95°C |
| 0.10 | 0 | 0 | 0 | 0 | 0.53 | 0.69 | 0.72 | 0.73 | 0.73 |
| 0.20 | 0 | 0 | 0 | 0 | 0.89 | 1.41 | 1.48 | 1.50 | 1.50 |
| 0.50 | 0 | 0.21 | 0.22 | 0.25 | 0.95 | 1.69 | 1.72 | 1.73 | 1.73 |
| 0.80 | 0 | 0.28 | 0.29 | 0.35 | 1.11 | 1.99 | 2.12 | 2.13 | 2.13 |
| 1.00 | 0 | 0.29 | 0.30 | 0.50 | 1.21 | 2.45 | 2.54 | 2.56 | 2.56 |
| | Log reduction of antimicrobial performance w.r.t exhaust temperature (in °C) | | | | | | | | |
| Silver Dosage % o.w.f | 40 °C | 60 °C | 65°C | 70 °C | 75°C | 80 °C | 85°C | 90 °C | 95°C |
| 0.10 | 0 | 0 | 0 | 0 | 0.21 | 0.53 | 0.67 | 0.68 | 0.68 |
| 0.20 | 0 | 0.11 | 0.12 | 0.17 | 0.87 | 1.32 | 1.45 | 1.46 | 1.46 |
| 0.50 | 0 | 0.23 | 0.13 | 0.18 | 1.05 | 1.56 | 1.76 | 1.78 | 1.78 |
| 0.80 | 0 | 0.36 | 0.37 | 0.42 | 1.13 | 1.84 | 1.94 | 1.95 | 1.95 |
| 1.00 | 0 | 0.41 | 0.42 | 0.52 | 1.23 | 2.78 | 2.85 | 2.86 | 2.86 |
| | Log reduction of antimicrobial performance w.r.t exhaust temperature (in °C) | | | | | | | | |
| Organosilane Dosage % o.w.f | 40 °C | 60 °C | 65°C | 70 °C | 75°C | 80 °C | 85°C | 90 °C | 95°C |
| 0.10 | 0 | 0 | 0 | 0 | 0.63 | 0.78 | 0.81 | 0.82 | 0.82 |
| 0.20 | 0 | 0.09 | 0.10 | 0.17 | 0.92 | 1.52 | 1.65 | 1.65 | 1.65 |

(continued)

| Organosilane Dosage % o.w.f | Log reduction of antimicrobial performance w.r.t exhaust temperature (in °C) | | | | | | | | |
|---|---|---|---|---|---|---|---|---|---|
| | 40 °C | 60 °C | 65°C | 70 °C | 75°C | 80 °C | 85°C | 90 °C | 95°C |
| 0.50 | 0 | 0.17 | 0.18 | 0.19 | 1.23 | 1.78 | 1.82 | 1.83 | 1.83 |
| 0.80 | 0 | 0.23 | 0.24 | 0.36 | 1.32 | 2.13 | 2.23 | 2.34 | 2.34 |
| 1.00 | 0 | 0.28 | 0.29 | 0.42 | 1.45 | 2.56 | 2.69 | 2.71 | 2.71 |

| Propiconazole Dosage % o.w.f | Log reduction of antimicrobial performance w.r.t exhaust temperature (in °C) | | | | | | | | |
|---|---|---|---|---|---|---|---|---|---|
| | 40 °C | 60 °C | 65°C | 70 °C | 75°C | 80 °C | 85°C | 90 °C | 95°C |
| 0.10 | 0 | 0 | 0 | 0 | 0.59 | 0.56 | 0.83 | 0.83 | 0.83 |
| 0.20 | 0 | 0.08 | 0.09 | 0.12 | 0.89 | 1.34 | 1.45 | 1.45 | 1.45 |
| 0.50 | 0 | 0.12 | 0.13 | 0.19 | 1.12 | 1.98 | 2.04 | 2.06 | 2.06 |
| 0.80 | 0 | 0.18 | 0.19 | 0.23 | 1.35 | 2.34 | 2.56 | 2.61 | 2.61 |
| 1.00 | 0 | 0.25 | 0.26 | 0.32 | 1.42 | 2.87 | 2.89 | 2.91 | 2.91 |

| chitosan Dosage % owl | Log reduction of antimicrobial performance w.r.t exhaust temperature (in °C) | | | | | | | | |
|---|---|---|---|---|---|---|---|---|---|
| | 40 °C | 60 °C | 65°C | 70 °C | 75°C | 80°C | 85°C | 90 °C | 95°C |
| 0.10 | 0 | 0 | 0 | 0 | 0.23 | 0.57 | 0.67 | 0.67 | 0.67 |
| 0.20 | 0 | 0 | 0 | 0 | 0.67 | 1.34 | 1.43 | 1.45 | 1.45 |
| 0.50 | 0 | 0.09 | 0.09 | 0.15 | 1.12 | 1.89 | 1.93 | 1.94 | 1.94 |
| 0.80 | 0 | 0.15 | 0.15 | 0.21 | 1.23 | 2.11 | 2.34 | 2.37 | 2.37 |
| 1.00 | 0 | 0.21 | 0.22 | 0.32 | 1.28 | 2.67 | 2.76 | 2.78 | 2.78 |

The samples for which a temperature of the liquor of 40 °C was applied during the exhaust process showed zero performance (see Fig. 15A). As the temperature of the liquor increased up to 80 °C, the antimicrobial performance of each sample also increased. The samples treated in the liquor at a temperature of 80 °C showed 2.4 to 2.8 log reduction at the solution concentrations of 1% o.w.f. for individual antimicrobial agents, which was a strong increase from that at 75 °C. However, the antimicrobial performance of samples for which the temperature of the liquor was 80 °C and higher reached a plateau.

The results of the leaching tests of the treated textile materials are presented below and also illustrated in the graphs in Fig. 15D to 15F.

| Leaching Test of Individual agents | |
|---|---|
| Parameters of the exhaustion process | |
| Temperature | Varied between 40 °C to 90 °C |
| Solution dosage | Varied between 0,1% to 1,0% o.w.f. |
| Process time | 60 min |

| PHMB Dosage % own | Leaching of active ingredient (in ppm) w.r.t Exhaust temperature (in °C) | | | | | | | | |
|---|---|---|---|---|---|---|---|---|---|
| | 40 °C | 60 °C | 65 °C | 70 °C | 75°C | 80 °C | 85 °C | 90 °C | 95 °C |
| 0.10 | 0 | 0 | 0 | 0 | 0 | 0 | 1 | 2 | 3 |
| 0.20 | 0 | 0 | 0 | 0 | 0 | 0 | 3 | 3 | 4 |
| 0.50 | 0 | 2 | 1 | 1 | 1 | 1 | 4 | 4 | 5 |
| 0.80 | 0 | 4 | 3 | 1 | 2 | 1 | 5 | 6 | 7 |
| 1.00 | 0 | 8 | 7 | 2 | 2 | 1 | 7 | 8 | 9 |

| Silver Dosage % o.w.f | Leaching of active ingredient (in ppm) w.r.t Exhaust temperature (in °C) | | | | | | | | |
|---|---|---|---|---|---|---|---|---|---|
| | 40 °C | 60 °C | 65°C | 70 °C | 75°C | 80 °C | 85°C | 90 °C | 95°C |
| 0.10 | 0 | 0 | 0 | 0 | 0 | 0 | 2 | 2 | 2 |
| 0.20 | | 0 | 0 | 0 | 0 | 0 | 4 | 4 | 4 |
| 0.50 | 0 | 3 | 2 | 1 | 1 | 1 | 5 | 7 | 8 |
| 0.80 | 0 | 4 | 3 | 2 | 3 | 1 | 7 | 7 | 8 |
| 1.00 | 0 | 7 | 7 | 3 | 4 | 1 | 8 | 9 | 10 |

(continued)

| | Leaching of active ingredient (in ppm) w.r.t Exhaust temperature (in °C) | | | | | | | | |
|---|---|---|---|---|---|---|---|---|---|
| Organosilane Dosage % o.w.f | 40 °C | 60 °C | 65°C | 70 °C | 75°C | 80 °C | 85°C | 90 °C | 95°C |
| 0.10 | 0 | 0 | 0 | 0 | 0 | 0 | 1 | 2 | 3 |
| 0.20 | 0 | 0 | 0 | 0 | 0 | 0 | 3 | 3 | 4 |
| 0.50 | 0 | 2 | 1 | 1 | 1 | 1 | 4 | 5 | 6 |
| 0.80 | 0 | 3 | 3 | 2 | 1 | 1 | 5 | 6 | 8 |
| 1.00 | 0 | 6 | 6 | 3 | 2 | 1 | 7 | 9 | 10 |

| | Leaching of active ingredient (in ppm) w.r.t Exhaust temperature (in °C) | | | | | | | | |
|---|---|---|---|---|---|---|---|---|---|
| Propiconazole Dosage % o.w.f | 40 °C | 60 °C | 65°C | 70 °C | 75°C | 80 °C | 85°C | 90 °C | 95°C |
| 0.10 | 0 | 0 | 0 | 0 | 0 | 0 | 1 | 2 | 3 |
| 0.20 | | 0 | 0 | 0 | | 0 | 2 | 4 | 4 |
| 0.50 | 0 | 1 | 1 | 1 | 1 | 1 | 3 | 5 | 6 |
| 0.80 | 0 | 2 | 1 | 2 | 2 | 1 | 4 | 6 | 7 |
| 1.00 | 0 | 8 | 7 | 4 | 3 | 1,5 | 8 | 9 | 9 |

| | Leaching of active ingredient (in ppm) w.r.t Exhaust temperature (in °C) | | | | | | | | |
|---|---|---|---|---|---|---|---|---|---|
| chitosan Dosage % o.w.f | 40 °C | 60 °C | 65°C | 70 °C | 75°C | 80 °C | 85°C | 90 °C | 95°C |
| 0.10 | | 0 | 0 | 0 | 0 | 0 | 1 | 2 | 2 |
| 0.20 | | 0 | 0 | 0 | 0 | 0 | 2 | 3 | 4 |
| 0.50 | | 1 | 1 | 1 | 1 | 1 | 4 | 5 | 7 |
| 0.80 | | 2 | 2 | 2 | 3 | 1 | 7 | 8 | 9 |
| 1.00 | | 6 | 6 | 4 | 3 | 1,5 | 9 | 11 | 12 |

From textile materials treated at a liquor temperature of 40 °C, there was no leaching. This is due to the fact that no antimicrobial were bound to the textiles at all, as evidenced by the performance data for these textiles. Leaching of individual antimicrobial agents from the textile materials treated at a temperature of the liquor of 60 °C was high, but decreased drastically to a negative peak for those treated at a liquor temperature of 80 °C (see Fig. 15E). In fact, antimicrobial agents from the textiles for which the exhaust process was conducted at 80 °C and at solution concentrations of 0.50, 0.80 and 1.00 % o.w.f. leached only 1 to 1.5 ppm (parts per million by weight). The textile materials for which a temperature of the liquor was higher than 80 °C showed increased leaching up to 12 ppm (see Fig. 15F).

Accordingly, as can be derived from the data presented in the above results and the graphs in Fig.15A to 15F, at least for an exhaust time of 60 min, the optimum temperature of the liquor is 80 °C and the optimum solution concentration of each antimicrobial agent is 1% o.w.f., for obtaining both good antimicrobial performance and non-leaching characteristics. Exhaustion means basically saturation of the textile. Different kinds of exhaust parameters are used for different applications of exhaustion. The application of 80 °C has been known to be suitable for certain dyeing applications. However, it was not known in the prior art that 80 °C and/or 60 minutes is ideal for the application of antimicrobials, even independent of the type of textile and of the type of agents tested by the inventors.

Given the actives concentrations in the solutions as mentioned above, 1.00% o.w.f. solution concentration corresponded to the following actives concentrations: PHMB: 0.20% o.w.f., silver: 0.01% o.w.f., organosilane: 0.72% o.w.f., propiconazole: 0.25% o.w.f., chitosan: 0.20% o.w.f.

1.2. Exhaust time for 80 °C liquor temperature

The treatment of the textile material was done as described by the process above. That is, the textile was treated by an exhaustion process and followed by a drying and curing process with the general parameters described in part 1.1(1) above. However, while the temperature of the liquor was maintained as a constant at 80 °C, and the active concentration of the solution was 1% o.w.f. for each of the solution containing ingredients, the exhaust time was varied between 10 min and 90 min. A textile obtained from the processes having the above exhaustion process was then subjected to performance test and leaching test.

The following results, also illustrated by the graph in Fig.16A were achieved when a performance test was performed on the textile material obtained by each of the above exhaustion processes.

| Performance Test (Exhaust time for 80° C liquor temperature) | | | | | |
|---|---|---|---|---|---|
| Parameters of the exhaustion process | | | | | |
| Temperature | 80 °C | | | | |
| Solution dosage | 1% o.w.f | | | | |
| Process time | Varied between 10 min and 90 min | | | | |
| | Log reduction of antimicrobial performance of each active ingredient | | | | |
| Process time (in min) | PHMB | Silver | Organosilane | Propiconazole | chitosan |
| 10 | 0.56 | 0.5 | 0.78 | 0.83 | 0.67 |
| 20 | 1.06 | 1 | 1.11 | 0.99 | 1.13 |
| 30 | 1.34 | 1.4 | 1.41 | 1.23 | 1.43 |
| 40 | 1.89 | 1.9 | 1.84 | 1.67 | 1.73 |
| 50 | 2.25 | 2.4 | 2.38 | 2.56 | 2.45 |
| 60 | 2.45 | 2.8 | 2.56 | 2.87 | 2.67 |
| 70 | 2.47 | 2.8 | 2.58 | 2.89 | 2.68 |
| 80 | 2.48 | 2.8 | 2.61 | 2.93 | 2.72 |
| 90 | 2.51 | 2.9 | 2.62 | 2.94 | 2.72 |

As it is observed from the above results and is clearly evident in the accompanying graph shown in Fig. 16A, the fabric exhibits inferior antimicrobial performance when the textile is treated with a process time of 10 minutes. The performance improves when the time is increased until 60 minutes. However, when the time of the exhaustion process is further increased above 60 minutes, although the performance shows a slight increase, the increase of performance achieved is significantly lesser than that which were achieved below 60 min. In other experiments conducted by the inventors, there was even a slight decrease in performance for exhaustion times beyond 60 minutes. Therefore, the performance test result shows that an optimal time for an exhaustion process performed at 80° C for all solution concentrations is 60 minutes.

| Leaching Test (Exhaust time for 80° C liquor temperature) | | | | | |
|---|---|---|---|---|---|
| Parameters of the exhaustion process | | | | | |
| Temperature | 80 °C | | | | |
| Solution dosage | 1% o.w.f | | | | |
| Process time | Varied between 10 min to 90min | | | | |
| | Leaching of active ingredients (in ppm) | | | | |
| Process time (in min) | PHMB | Silver | Organosilane | Propiconazole | chitosan |
| 10 | 30 | 50 | 40 | 38 | 37 |
| 20 | 25 | 37 | 29 | 26 | 25 |
| 30 | 20 | 28 | 25 | 22 | 21 |
| 40 | 15 | 22 | 18 | 15 | 16 |
| 50 | 13 | 19 | 15 | 14 | 12 |
| 55 | 7 | 8 | 6 | 7 | 5 |
| 60 | 2 | 4 | 2 | 3 | 3 |
| 70 | 2 | 4 | 3 | 3 | 2 |
| 80 | 4 | 3 | 4 | 4 | 5 |
| 90 | 5 | 8 | 7 | 7 | 8 |

As it is observed from the above results and is evident from the accompanying graph shown in Fig. 16B, the fabric exhibits inferior leaching characteristics when the textile is treated with a process time of 10 minutes, with leaching as high as 50 ppm for some ingredients. The leaching is reduced when the process time is increased until 55 minutes to reveal a steady decrease of the leached ppm. When the time is increased to 60 min, it is found that only a maximum of 4 ppm of active ingredient was being leached. However, when the time of the exhaustion process is further increased

above 60 minutes, the leaching property seems to increase.

Therefore, the performance tests as well as the leaching test results both reveal that an optimal time for an exhaustion process performed at 80 °C and with the active concentration of 1% o.w.f. is 60 minutes.

I.3. Exhaust time for 60 °C liquor temperature

The treatment of the textile material was done as described by the process above. That is, the textile was treated by an exhaustion process and followed by a drying and curing process with the general parameters described in part 1.1(1) above. The temperature of the liquor was maintained at a constant 60 °C, and the liquor with the solution concentration of 1% o.w.f. for each of the solutions having the active ingredients was used for the exhaustion process. The time was varied from 10 min to 90 min. The textile obtained from the processes was then subjected to a performance test and the results are as shown below and the graph is illustrated in Fig. 17A.

| Performance Test and Leaching Test with 60 °C | | | | | |
|---|---|---|---|---|---|
| Parameters of the exhaustion process | | | | | |
| Temperature | 60 °C | | | | |
| Solution dosage | 1% o.w.f | | | | |
| Process time | Varied between 60 min and 240 min | | | | |
| | Log reduction of antimicrobial performance of each active ingredient | | | | |
| Process time (in min) | PHMB | Silver | Organosilane | Propiconazole | chitosan |
| 60 | 1.5 | 1.1 | 1.5 | 1.7 | 1.4 |
| 90 | 1.8 | 1.3 | 1.7 | 1.8 | 1.5 |
| 120 | 2.1 | 1.5 | 1.8 | 2.2 | 1.6 |
| 180 | 2.2 | 1.8 | 1.8 | 2.3 | 1.7 |
| 240 | 2.1 | 1.75 | 1.73 | 2.11 | 1.65 |
| | Leaching of active ingredients (in ppm) | | | | |
| Process time (in min) | PHMB | Silver | Organosilane | Propiconazole | chitosan |
| 60 | 23 | 21 | 23 | 24 | 21 |
| 90 | 18 | 13 | 14 | 12 | 13 |
| 120 | 12 | 13 | 14 | 13 | 14 |
| 180 | 13 | 12 | 12 | 13 | 12 |
| 240 | 14 | 15 | 14 | 15 | 13 |

As seen from the above results, the textile obtained from the process time of 60 min shows a maximum of 1.7 log reduction in terms of antimicrobial properties, whereas with a process time of 180 min, the textile exhibits a maximum of 2.3 log reduction. However, when compared with the previous performance test results carried out with a process temperature of 80 °C, even a process time of 60 min achieved a textile exhibiting better antimicrobial properties with a 2.9 log reduction. In fact, when the time is increased to 240 min, the antimicrobial properties reduces slightly.

The leaching values of the textile from the above result, and seen in Fig. 17B, obtained from the above process at 60 °C is relatively high at 13 to 23 ppm in comparison to the leaching values of textile obtained at 80 °C. Therefore, the temperature of 60 °C, although it can be used, is not as good as 80 °C for the exhaust process.

I.4. Concentration of solutions containing antimicrobial agents (up to 5% o.w.f.)

The treatment of the textile material was done as described by the process above. That is, the textile was treated to an exhaustion process and followed by a curing process with the general parameters described in part I.1(1) above. However, while the temperature of the liquor was maintained as a constant at 80 °C, the concentration of the solutions containing antimicrobial agents were varied between 1% o.w.f. to 5% o.w.f. during the exhaustion process. Each of the textiles obtained from the processes having the above exhaustion process was then subjected to performance tests and leaching tests.

The following results, also illustrated by the graph in Fig.18A were achieved when a performance test was performed on the textile material obtained by each of the above exhaustion process.

| Performance Test (Concentration of antimicrobial agents upto 5% o.w.f) | | | | | |
|---|---|---|---|---|---|
| Parameters of the exhaustion process | | | | | |
| Temperature | 80 °C | | | | |
| Solution dosage | Varied from 1% to 5% o.w.f | | | | |
| Process time | 60 min | | | | |
| | Log reduction of antimicrobial performance of each active ingredient | | | | |
| Dosage (in % o.w.f) | PHMB | Silver | Organosilane | Propiconazole | chitosan |
| 1% | 2.25 | 2.35 | 2.38 | 2.56 | 2.45 |
| 2% | 2.27 | 2.36 | 2.38 | 2.57 | 2.46 |
| 3% | 2.28 | 2.37 | 2.41 | 2.58 | 2.47 |
| 4% | 2.3 | 2.38 | 2.42 | 2.61 | 2.47 |
| 5% | 2.31 | 2.41 | 2.43 | 2.63 | 2.47 |

As it is observed from the above results and is evident in the accompanying graph shown in Fig. 18A, the fabric exhibits almost the same level of antimicrobial performance even when the textile is treated with a solution having a concentration of 5% o.w.f., when compared with the textile treated with solution having a concentration of 1% o.w.f. Therefore, it does not seem to exhibit a greatly improved performance when the solution concentration is increased above 1% o.w.f.

Moreover, when the same textiles were tested for leaching, they showed the following results, also illustrated by the graph in Fig. 18B.

| Leaching Test (Concentration of antimicrobial agents up to 5% o.w.f) | | | | | |
|---|---|---|---|---|---|
| Parameters of the exhaustion process | | | | | |
| Temperature | 80 °C | | | | |
| Solution dosage | Varied from 1% to 5% o.w.f. | | | | |
| Process time | 60 min | | | | |
| | Leaching of active ingredients (in ppm) | | | | |
| Dosage (in % o.w.f)) | PHMB | Silver | Organosilane | Propiconazole | chitosan |
| 1% | 2 | 3.5 | 3 | 3 | 2 |
| 2% | 17 | 19 | 22 | 26 | 17 |
| 3% | 34 | 36 | 38 | 40 | 41 |
| 4% | 37 | 41 | 52 | 47 | 42 |
| 5% | 67 | 69 | 72 | 73 | 72 |

As it is observed from the above results and is evident in the accompanying graph shown in Fig. 18B, the fabric exhibits a drastic increase in the leaching properties when the concentration of the solutions containing the antimicrobial agents were increased above 1% o.w.f.

From the above two tests, it can be seen that when the solution dosage is increased from 1% o.w.f. to 5% o.w.f, it does not give an improved performance, but rather causes high leaching activity. Therefore, the results show that the optimal solution dosage is 1% o.w.f.

I.5. Different Textile materials and concentration of antimicrobial agents

The treatment of the textile material was done as described by the process above. That is, the textile was treated by an exhaustion process and followed by a drying and curing process with the general parameters described in part I.1(1) above. However, the process was performed on two different fabrics. The exhaustion parameters for pure (100%) cotton and pure polyester fabrics (count 20s warp and 20s weft, dyed fabric shade off white, width 150 cm, fabric weight 220 g/m$^2$) were tested at predetermined concentrations of the solutions containing the antimicrobial agents (0.10, 0.20, 0.50, 0.80, and 1.00% o.w.f.). Each of the textiles obtained from the processes having the above exhaustion process was then subjected to performance test and leaching test. The following results, also illustrated by the graph in Fig.19A were achieved.

| Performance Test (Pure cotton fabric) | | | | | |
|---|---|---|---|---|---|
| Parameters of the exhaustion process | | | | | |
| Temperature | | 80 °C | | | |
| Solution dosage | | Varied from 0.1% to 1% o.w.f | | | |
| Process time | | 60 min | | | |
| | | Log reduction of antimicrobial performance | | | |
| Dosage (in % o.w.f) | PHMB | Silver | Organosilane | Propiconazole | chitosan |
| 0.1 | 0.69 | 0.55 | 0.81 | 0.63 | 0.63 |
| 0.2 | 1.56 | 1.35 | 1.67 | 1.45 | 1.37 |
| 0.5 | 1.98 | 1.67 | 1.83 | 1.95 | 1.91 |
| 0.8 | 2.13 | 1.84 | 2.17 | 2.34 | 2.21 |
| 1.0 | 2.67 | 2.87 | 2.56 | 2.85 | 2.71 |

As it is observed from the above results and is evident from the accompanying graph shown in Fig. 19A, the pure cotton fabric exhibits a best antimicrobial performance when the solution dosage is 1% o.w.f.

This is also observed for other fabrics, for example polyester fabric when tested as shown below. The following result, also illustrated by the graph in Fig.19B were achieved when a performance test was performed on a pure polyester textile material achieved by each of the above exhaustion processes.

| Performance Test (Pure Polyester fabric) | | | |
|---|---|---|---|
| Parameters of the exhaustion process | | | |
| Temperature | 80 °C | | |
| Solution dosage | Varied from 0.1% to 1% o.w.f | | |
| Process time | 60 min | | |
| | Log reduction of antimicrobial performance | | |
| Dosage (in % o.w.f) | Silver | Organosilane | Propiconazole |
| 0.1 | 0.55 | 0.72 | 0.57 |
| 0.2 | 1.43 | 1.65 | 1.35 |
| 0.5 | 1.78 | 1.75 | 1.67 |
| 0.8 | 1.83 | 2.16 | 2.14 |
| 1.0 | 2.67 | 2.58 | 2.73 |

As observed from the above results and as also evident from the accompanying graph shown in Fig. 19B, the polyester fabric also exhibits the best antimicrobial performance properties when the dosage of solution is 1% o.w.f. It has to be noted that Polyhexamethylene biguanide (PHMB) and polyglucosamine (chitosan) do not bind with the polyester fabric, therefore have not been shown any antimicrobial activity.

Therefore, irrespective of the kind of fabric used, the antimicrobial performance properties are achieved when the exhaustion process is performed with the liquor having 1% o.w.f. dosage of the solutions containing the active ingredients and at a temperature of 80 °C for 60 min.

Experimental example II. Curing parameters for individual antimicrobial agents

II.1. Curing temperature after exhaustion

II.1.(1) Curing textile materials

Curing was performed at maximum temperatures of 100 °C, 120 °C, 140 °C, 160 °C, 165 °C, 170 °C, 175 °C, 180 °C, 185 °C, 190°C, and 195°C applied at least for 60 seconds (at least chambers 3 to 6 of the 8-chamber stenter mentioned above) during a 2-minutes pass through the stenter machine, with the textile material obtained according to Experimental example I.1.(1) with 80 °C liquor temperature, 60 minutes exhaust time, and 1.00% o.w.f. concentration of each of the solutions containing the antimicrobial agents.

I.1.(2) Tests on performance of cured textile materials

Tests were performed on the textile obtained by varying the curing parameters while maintaining the parameters of the exhaustion process which were observed as optimal from the earlier tests.

The following results, also illustrated by the graph in Fig. 20A were achieved when a performance test was performed on textiles which were cured by varying the curing temperature.

| Performance Test (Varying curing temperature) | | | | | |
|---|---|---|---|---|---|
| Parameters of the exhaustion process | | | | | |
| Temperature | | 80 °C | | | |
| Solution dosage | | 1% o.w.f | | | |
| Process time | | 60 min | | | |
| Parameters of the curing process | | | | | |
| Temperature | | Varied between 100 °C to 195°C | | | |
| | | Log reduction of antimicrobial performance | | | |
| Curing temperature (in °C) | PHMB | Silver | Organosilane | Propiconazole | chitosan |
| 100 | 0.23 | 0.21 | 0.17 | 0.21 | 0.16 |
| 120 | 0.54 | 0.32 | 0.56 | 0.45 | 0.23 |
| 140 | 1.02 | 0.99 | 0.97 | 0.98 | 0.88 |
| 160 | 1.23 | 1.04 | 1.11 | 1.23 | 1.34 |
| 165 | 1.33 | 1.12 | 1.16 | 1.28 | 1.38 |
| 170 | 1.65 | 1.59 | 1.26 | 1.45 | 1.48 |
| 175 | 2.34 | 2.05 | 2.16 | 2.32 | 2.41 |
| 180 | 2.45 | 2.78 | 2.56 | 2.87 | 2.67 |
| 185 | 2.47 | 2.79 | 2.59 | 2.88 | 2.68 |
| 190 | 2.48 | 2.8 | 2.61 | 2.91 | 2.69 |
| 195 | 2.51 | 2.82 | 2.63 | 2.93 | 2.71 |

The above result and the graphs shown in Fig. 20A show the antimicrobial performance, i.e. (as also in the previous examples) the logarithmic ("log") reduction of bacteria on the cured textile materials. As the temperature of the curing process increases, the antimicrobial performance of the samples increases as well. The samples cured at 180 °C showed a 2.4 to 2.8 log reduction; however, further increase of curing the temperature beyond 180 °C did not influence the antimicrobial performance of the samples, as evident from the results and the graph in Fig. 20A.

Next, the tensile strength of the cured textile materials, or loss in tensile strength, respectively, was tested, and the results are shown below and the graphs are provided in Fig.20B. The tensile strength of the cured textile materials at each temperature was measured in accordance with ASTM standard D 5035-11.

| Tensile strength Test (Varying curing temperature) | | |
|---|---|---|
| Parameters of the exhaustion process | | |
| Temperature | | 80 °C |
| Active ingredient dosage | | 1% o.w.f. |
| Process time | | 60 min |
| Parameters of the curing process | | |
| Temperature | Varied between 100 °C to 195°C | |
| Curing temperature (in °C) | Tensile strength (in N) | Tensile strength loss (in %) |
| 100 | 1295 | 0 % |
| 120 | 1294 | 0.08 % |
| 140 | 1290 | 0.40 % |
| 160 | 1284 | 0.85 % |
| 165 | 1265 | 2.30 % |

(continued)

| Curing temperature (in °C) | Tensile strength (in N) | Tensile strength loss (in %) |
|---|---|---|
| 170 | 1255 | 3.10 % |
| 175 | 1249 | 3.55 % |
| 180 | 1243 | 4.00 % |
| 185 | 1150 | 11.20 % |
| 190 | 1116 | 13.80 % |
| 195 | 1097 | 15.30 % |

The tensile strength of the textile cured at 185 °C showed a drastic decrease compared to that cured at 180 °C. As the other side of the coin, loss of tensile strength showed a jump at the sample cured at 185 °C (see, line in Fig.19B). Accordingly, the stable binding of antimicrobial agents to the textile appeared to be completed at a curing temperature of 180 °C.

II.2 (1). Curing dwell time

Tests were performed on the textile obtained by varying the curing parameters while maintaining the parameters of the exhaustion process which were observed as optimal from the earlier tests.

The following results, also illustrated by the graph in Fig. 21A were achieved when a performance test was performed on textiles which were cured with varying curing dwell times (corresponding to the time in the stenter), while maintaining the curing temperature at 180 °C.

| Performance Test (Varying curing dwell time) | | | | | |
|---|---|---|---|---|---|
| Parameters of the exhaustion process | | | | | |
| Temperature | | | 80 °C | | |
| Solution dosage | | | 1% o.w.f | | |
| Process time | | | 60 min | | |
| Parameters of the curing process | | | | | |
| Temperature | | | 180 °C | | |
| Curing dwell time | | | Varied between 0.5 to 3 min | | |
| | | Log reduction of antimicrobial performance | | | |
| Curing dwell time (in min) | PHMB | Silver | Organosilane | Propiconazole | chitosan |
| 0.5 | 1.5 | 1.1 | 1.5 | 1.7 | 1.4 |
| 1.0 | 1.8 | 1.3 | 1.7 | 1.8 | 1.5 |
| 1.5 | 2.1 | 1.5 | 1.8 | 2.2 | 1.6 |
| 2.0 | 3.4 | 3.8 | 3.9 | 3.8 | 3.5 |
| 2.5 | 3.4 | 3.7 | 3.8 | 3.5 | 3.5 |
| 3.0 | 3.3 | 3.5 | 3.7 | 3.4 | 3.4 |

The above result and the graphs shown in Fig. 21A show the antimicrobial performance, i.e. the logarithmic ("log") reduction of bacteria on the cured textile materials. As it is observed from the above results and evident from the accompanying graph shown in Fig. 21A, the antimicrobial performance characteristics of a textile increases only slightly when the curing dwell time increases from 0.5 min to 1.5 min. However, it was noticed that the antimicrobial performance significantly increases from a 2 log reduction to a higher than 3.5 log reduction when the curing dwell time is increased from 1.5 min to 2 min. However, when a textile with a curing dwell time of more than 2 min was tested, it was observed that the antimicrobial characteristics of the textile, in fact, slightly decreases.

The following results, also illustrated by the graph in Fig. 21B were achieved when a leaching test was performed on a textiles which were cured by varying the curing dwell time, while maintaining the maximum curing temperature at 180 °C.

| Leaching Test (Varying curing dwell time) | | | | | |
|---|---|---|---|---|---|
| Parameters of the exhaustion process | | | | | |
| Temperature | 80 °C | | | | |
| Solution dosage | 1% o.w.f | | | | |
| Process time | 60 min | | | | |
| Parameters of the curing process | | | | | |
| Temperature | 180 °C | | | | |
| Curing dwell time | Varied between 0.5 to 3 min | | | | |
| | Leaching of active ingredients (in ppm) | | | | |
| Curing dwell time (in min) | PHMB | Silver | Organosilane | Propiconazole | chitosan |
| 0.5 | 23 | 21 | 23 | 24 | 21 |
| 1.0 | 18 | 13 | 13 | 12 | 13 |
| 1.5 | 12 | 13 | 14 | 13 | 14 |
| 2.0 | 2 | 4 | 2 | 3 | 3 |
| 2.5 | 13 | 12 | 12 | 13 | 12 |
| 3.0 | 13 | 12 | 12 | 13 | 12 |

As it can be observed from the above results and the accompanying graph in Fig. 21B, the leaching values are as high as 28 ppm when the curing dwell time is 30 sec. However, when the curing dwell time is set at 2 min with a curing temperature of 180 °C, leaching is drastically reduced to values as low as 2 ppm. On the other hand, when the curing dwell time is increased more than 2 min, leaching also increases.

Therefore, it is evident that the curing dwell time of 2 min at 180 °C curing temperature result in the optimal results in the both performance and leaching characteristics of the cured fabric.

II.2. (1) Curing dwell time after exhaustion with curing temperature at 170 °C

Tests were performed on the textile obtained by varying the curing parameters while maintaining the parameters of the exhaustion process which were observed as optimal from the earlier tests. In particular, it was tested if the variation of curing temperature would result in a different optimal curing dwell time.

The following results, also illustrated by the graph in Fig. 22A were achieved when a performance test was performed on textiles which were cured with varying curing dwell time, while maintaining the curing temperature at 170 °C.

| Performance Test (Varying curing dwell time at 170 °C) | | | | | |
|---|---|---|---|---|---|
| Parameters of the exhaustion process | | | | | |
| Temperature | 80 °C | | | | |
| Solution dosage | 1% o.w.f | | | | |
| Process time | 60 min | | | | |
| Parameters of the curing process | | | | | |
| Temperature | 170 °C | | | | |
| Curing dwell time | Varied between 0.5 to 3 min | | | | |
| | Log reduction of antimicrobial performance | | | | |
| Curing dwell time (in min) | PHMB | Silver | Organosilane | Propiconazole | chitosan |
| 0.5 | 0.3 | 0.2 | 0.3 | 0.3 | 0.3 |
| 1.0 | 0.4 | 0.5 | 0.5 | 0.6 | 0.7 |
| 1.5 | 0.8 | 0.7 | 0.6 | 0.8 | 0.7 |
| 2.0 | 1.7 | 1.6 | 1.2 | 1.3 | 1.4 |
| 2.5 | 1.3 | 1.1 | 1.2 | 1.1 | 1.3 |
| 3.0 | 0.67 | 0.7 | 0.75 | 0.67 | 0.64 |

Although compared to the performance of the textile which was cured at a (maximum) curing temperature of 180 °C the performance of the textile cured at 170 °C does not exhibit better results, it is evident from the test results that the textile obtained when the curing dwell time is maintained at 2 min still provides the best antimicrobial performance, even when the maximum curing temperature is at 170 °C.

The following results, also illustrated by the graph in Fig. 22B were achieved when a leaching test was performed on a textile which were cured by varying the curing dwell time, while maintaining the curing temperature at 170 °C.

| Leaching Test (Varying Curing dwell time at 170 °C) | | | | | |
|---|---|---|---|---|---|
| Parameters of the exhaustion process | | | | | |
| Temperature | | | 80 °C | | |
| Soultion dosage | | | 1% o.w.f | | |
| Process time | | | 60 min | | |
| Parameters of the curing process | | | | | |
| Temperature | | | 170 °C | | |
| Curing dwell time | | | Varied between 0.5 to 3 min | | |
| | Leaching of active ingredients (in ppm) | | | | |
| Curing dwell time (in min) | PHMB | Silver | Organosilane | Propiconazole | chitosan |
| 0.5 | 30 | 28 | 29 | 28 | 28 |
| 1.0 | 25 | 24 | 25 | 24 | 26 |
| 1.5 | 22 | 21 | 22 | 21 | 20 |
| 2.0 | 12 | 13 | 13 | 15 | 13 |
| 2.5 | 18 | 19 | 17 | 17 | 18 |
| 3.0 | 18 | 19 | 17 | 17 | 18 |

Again, as noted in the performance test, the leaching property of the textile which was cured at a curing temperature of 180 °C provides lower leaching when compared to the textile cured at 170 °C. It was noted that the leaching value still remains the lowest when the curing dwell time is 2 min when compared to the lower or higher curing dwell time.

II.2 (2). Curing dwell time after exhaustion with curing temperature at 190 °C

Further tests were performed on the textile obtained by varying the curing parameters while maintaining the parameters of the exhaustion process which were observed as optimal from the earlier tests. In particular, it was tested if the variation in an increase of curing temperature would result in a different optimal curing dwell time.

The following results, also illustrated by the graph in Fig. 23A were achieved when a performance test was performed on textiles which were cured by varying the curing dwell time, while maintaining the curing temperature at 190 °C.

| Performance Test (Varying curing dwell time at 190 °C) | | | | | |
|---|---|---|---|---|---|
| Parameters of the exhaustion process | | | | | |
| Temperature | | | 80 °C | | |
| Solution dosage | | | 1% o.w.f | | |
| Process time | | | 60 min | | |
| Parameters of the curing process | | | | | |
| Temperature | | | 190 °C | | |
| Curing dwell time | | | Varied between 0.5 to 3 min | | |
| | Log reduction of antimicrobial performance | | | | |
| Curing dwell time (in min) | PHMB | Silver | Organosilane | Propiconazole | chitosan |
| 0.5 | 0.5 | 0.6 | 0.6 | 0.3 | 0.3 |
| 1.0 | 0.8 | 0.9 | 1.1 | 0.8 | 1.2 |
| 1.5 | 2.1 | 1.5 | 1.5 | 2.2 | 1.4 |

(continued)

| Curing dwell time (in min) | Log reduction of antimicrobial performance PHMB | Silver | Organosilane | Propiconazole | chitosan |
|---|---|---|---|---|---|
| 2.0 | 2.46 | 2.79 | 2.55 | 2.88 | 2.66 |
| 2.5 | 2.1 | 2.2 | 2.46 | 2.34 | 2.31 |
| 3.0 | 1.2 | 1.1 | 1.2 | 1.1 | 1.3 |

Here it was noticed that compared to the performance of a textile which was cured at a curing temperature of 180 °C, the performance of a textile cured at 190 °C exhibits better results. Furthermore, as evident from the test results, the textile obtained when the curing dwell time is maintained at 2 min shows the best antimicrobial properties.

The following results, also illustrated by the graph in Fig. 23B were achieved when a leaching test was performed on textiles which were cured by varying the curing dwell time, while maintaining the curing temperature at 190 °C.

| Leaching Test (Varying curing dewll time at 190 °C) | | | | | |
|---|---|---|---|---|---|
| Parameters of the exhaustion process | | | | | |
| Temperature | 80 °C | | | | |
| Solution dosage | 1% o.w.f | | | | |
| Process time | 60 min | | | | |
| Parameters of the curing process | | | | | |
| Temperature | 170 °C | | | | |
| Curing dwell time | Varied between 0.5 to 3 min | | | | |
| | Leaching of active ingredients (in ppm) | | | | |
| Curing dwell time (in min) | PHMB | Silver | Organosilane | Propiconazole | chitosan |
| 0.5 | 20 | 18 | 19 | 23 | 20 |
| 1.0 | 17 | 12 | 12 | 12 | 13 |
| 1.5 | 11 | 10 | 11 | 12 | 12 |
| 2.0 | 10 | 10 | 11 | 10 | 11 |
| 2.5 | 23 | 24 | 25 | 27 | 25 |
| 3.0 | 34 | 35 | 34 | 34 | 35 |

Although the antimicrobial performance was shown to be increased, here it was noticed that leaching is significantly higher in a textile which was cured at 190 °C compared to the leaching when the textile was cured at 180 °C. However, it was also noticed that leaching is the lowest when the textile is cured at a curing dwell time of 2 minutes.

The same tests were also performed for textiles which were cured at a curing temperature of 160 °C and 200 °C and again, it was observed that the properties were the best when the curing dwell time is 2 min, irrespective of the curing temperature.

Therefore, the tests have revealed that the curing dwell time of 2 min was the best time duration, irrespective of the curing temperature.

II.2 (3). Curing dwell time after exhaustion with different fabrics

The treatment of the textile material was done as described by the process above. That is, the textile was treated by an exhaustion process and followed by a drying and curing process with the general parameters which were observed as ideal. Furthermore, the curing process with different curing dwell times was performed on two different fabrics. The exhaustion parameters for pure (100%) cotton and pure polyester fabrics (count 20s warp and 20s weft, dyed fabric shade off white, width 150 cm, fabric weight 220 g/$m^2$) were tested with curing at different times. Each of the textiles obtained from the processes was then subjected to a performance test.

The following result, also illustrated by the graph in Fig. 24A were achieved when a performance test was performed on textiles which were cured by varying the curing dwell time, while maintaining the curing temperature at 180 °C.

| Performance Test (Curing dwell time for Pure cotton) | | | | | |
|---|---|---|---|---|---|
| Parameters of the exhaustion process | | | | | |
| Temperature | | 80 °C | | | |
| Solution dosage | | 1% o.w.f | | | |
| Process time | | 60 min | | | |
| Parameters of the curing process | | | | | |
| Temperature | | 180 °C | | | |
| Curing dwell time | | Varied between 0.5 to 3 min | | | |
| | | Log reduction of antimicrobial performance | | | |
| Curing dwell time (in min) | PHMB | Silver | Organosilane | Propiconazole | chitosan |
| 0.5 | 0.5 | 0.4 | 0.3 | 0.4 | 0.4 |
| 1.0 | 0.8 | 0.6 | 1.1 | 0.8 | 0.8 |
| 1.5 | 2.0 | 1.4 | 1.8 | 2.2 | 1.6 |
| 2.0 | 2.6 | 2.9 | 2.5 | 2.8 | 2.7 |
| 2.5 | 2.1 | 2.2 | 2.4 | 2.3 | 2.3 |
| 3.0 | 1.3 | 1.2 | 1.4 | 1.2 | 1.4 |

As it can be seen from the above results, and the accompanying graph in Fig. 24A, the best results are achieved when the curing dwell time is 2 minutes.

This can also be observed for a pure polyester textile as shown in the below test. The cured fabric was obtained by the same process as described above, and below results were achieved when a performance test was performed on the polyester textiles which were cured by varying the curing dwell time, while maintaining the curing temperature at 180 °C.

| Performance Test (Curing dwell time for Pure Polyester fabric) | | | |
|---|---|---|---|
| Parameters of the exhaustion process | | | |
| Temperature | 80 °C | | |
| Active ingredient dosage | Varied from 0.1% to 1% o.w.f | | |
| Process time | 60 min | | |
| Parameters of curing process | | | |
| Temprature | 180 °C | | |
| Curing dwell time | Varied between 0.5 to 3 min | | |
| | Log reduction of antimicrobial performance | | |
| Curing dwell time (in min) | Silver | Organosilane | Propiconazole |
| 0.5 | 0,5 | 0,4 | 0,4 |
| 1.0 | 0,9 | 1,2 | 0,8 |
| 1.5 | 1,4 | 1,7 | 2,2 |
| 2.0 | 2,68 | 2,75 | 2,74 |
| 2.5 | 2,21 | 2,45 | 2,35 |
| 3.0 | 1,2 | 1,3 | 1,2 |

As it can be seen from the above results, and the accompanying graph in Fig. 24B, even when using a polyester fabric, the best results are achieved when the curing dwell time for the fabric is 2 minutes.

II.3. Tests on performance of different kinds of textile materials

In the above test, it was observed that a post washed cured textile exhibits highly improved leaching characteristics. It will now be observed if the same characteristics are also prevalent for different fabrics weights.

For this test two different weights of cotton fabric was taken. First, a 100% cotton with a fabric weight of 100

g/m$^2$ (GSM) of width 150 cm was used. Next the same test was performed on a 300 GSM fabric weight. It is reminded that the previous tests were performed with fabrics having a 210 GSM fabric weight. The fabrics were subject to an exhaust process of 60 min in an 80 °C liquor with varied concentration of active ingredients. The following results were observed and illustrated in the graphs in Fig. 25A and 25B.

| Performance Test (Pure cotton with 100 and 300 GSM) | | | | | |
|---|---|---|---|---|---|
| Parameters of the exhaustion process | | | | | |
| Temperature | 80 °C | | | | |
| Solution dosage | Variable 0.1 % to 1% o.w.f. | | | | |
| Process time | 60 min | | | | |
| Parameters of the curing process | | | | | |
| Temperature | 180 °C | | | | |
| Curing dwell time | 2 min | | | | |
| | Log reduction of antimicrobial performance in 100 GSM cotton fabric | | | | |
| Dosage (in % o.w.f) | PHMB | Silver | Organosilane | Propiconazole | chitosan |
| 0.1 | 0,69 | 0,55 | 0,81 | 0,63 | 0,63 |
| 0.2 | 1,56 | 1,35 | 1,67 | 1,45 | 1,37 |
| 0.5 | 1,98 | 1,67 | 1,83 | 1,95 | 1,91 |
| 0.8 | 2,13 | 1,84 | 2,17 | 2,34 | 2,21 |
| 1.0 | 2,67 | 2,87 | 2,56 | 2,85 | 2,71 |
| | Log reduction of antimicrobial performance in 300 GSM cotton fabric | | | | |
| Dosage (in % o.w.f) | PHMB | Silver | Organosilane | Propiconazole | chitosan |
| 0.1 | 0.65 | 0.57 | 0.82 | 0.64 | 0.65 |
| 0.2 | 1.54 | 1.35 | 1.68 | 1.45 | 1.38 |
| 0.5 | 1.96 | 1.67 | 1.83 | 1.95 | 1.91 |
| 0.8 | 2.14 | 1.87 | 2.18 | 2.34 | 2.21 |
| 1.0 | 2.65 | 2.88 | 2.57 | 2.88 | 2.72 |

As observed from the above results, when the exhaust process time is maintained at 60 min and the liquor temperature at 80 °C, the performance characteristics of the textile with the liquor having a solution concentration of 1% o.w.f. is higher, irrespective of the weight of cotton fabric used.

This is also revealed when a different fabric with varied density is tested instead. Two polyester fabrics with two different blends of 100 GSM and 300 GSM which were obtained by the above process including exhaust and curing process. The below results are achieved when the fabric is subject to performance testing and also illustrated in the graph in Fig. 26A and 26B.

| Performance Test (Pure polyester with 100 and 300 GSM) | | | |
|---|---|---|---|
| Parameters of the exhaustion process | | | |
| Temperature | 80 °C | | |
| Solution dosage | Variable 0.1 % to 1% o.w.f. | | |
| Process time | 60 min | | |
| Parameters of the curing process | | | |
| Temperature | 180 °C | | |
| Curing dwell time | 2 min | | |
| | Log reduction of antimicrobial performance in 100 GSM Polyester fabric | | |
| Dosage (in % o.w.f) | Silver | Organosilane | Propiconazole |
| 0.1 | 0.56 | 0.73 | 0.59 |
| 0.2 | 1.45 | 1.67 | 1.35 |
| 0.5 | 1.77 | 1.79 | 1.71 |
| 0.8 | 1.85 | 2.19 | 2.14 |

(continued)

| Dosage (in % o.w.f) | Log reduction of antimicrobial performance in 100 GSM Polyester fabric Silver | Organosilane | Propiconazole |
|---|---|---|---|
| 1.0 | 2.68 | 2.58 | 2.75 |

| Dosage (in % o.w.f) | Log reduction of antimicrobial performance in 300 GSM Polyester fabric Silver | Organosilane | Propiconazole |
|---|---|---|---|
| 0.1 | 0.54 | 0.75 | 0.58 |
| 0.2 | 1.48 | 1.65 | 1.37 |
| 0.5 | 1.79 | 1.80 | 1.73 |
| 0.8 | 1.85 | 2.20 | 2.50 |
| 1.0 | 2.65 | 2.58 | 2.74 |

As observed from the above results, when the exhaust process parameters are maintained at 60 min and 80 °C, the performance characteristics of the textile with a solution concentration of 1% o.w.f. is higher, irrespective of the weight of polyester fabric used.

Therefore, the optimal value of 1% o.w.f. of solution having the active ingredients in the liquor, along with the above selected process parameters provide improved performance characteristics irrespective of the weight of fabric or type of fabric used.

II.3. Concentration of antimicrobial agents for padding process at different curing temperatures

II.3.(1) Treatment of the textile materials

A padding liquor was produced by adding sufficient amounts of solutions containing Polyhexamethylene biguanide, silver cations, dimethyloctadecyl[3-(trimethoxysilyl)propyl] ammonium chloride (organosilane), propiconazole, or polyglucosamine (chitosan) to water, for achieving a solution concentration of 1, 5, or 10 gpl. The concentrations of actives in the different solutions were the same as described above for the exhaust process in Experimental example II.1(1). The liquor further comprised blocked isocyanate, and citric acid as described above for Experimental example II.1(1). The pH of the liquor was adjusted with 0.03 gpl citric acid and maintained at between pH 5 and pH 6, preferably at pH 5.5.

The temperature of the liquor of the padding process was between 20 °C and 40 °C. The liquor was fed through a pump to a respective padding mangle. The padding mangle pressure was 2 bar. The pickup rate was 65%. The textile material was then dried for 2 minutes at 120 °C as described above for Experimental example 1.1.(2) and cured in the stenter with 2 minutes curing dwell time at (maximum) curing temperatures of 120 °C, 140 °C, 150 °C, 160 °C, and 180 °C as described above for Experimental example II.1(1).

11.1.(2) Tests on performance of the textile materials obtained from pad process

A performance and leaching test was conducted on a textile which was subject to the pad process with varied pad liquor composition and curing temperature. In particular, the test was conducted with two different concentrations of solution at 5 gm/ltr (gpl) and 10 gm/ltr, and the curing dwell time was varied between 120 °C to 180 °C. The following results were achieved on a performance test on the textile.

| Performance And Leaching Test (pad process) | |
|---|---|
| Parameters of the Padding process | |
| Concentration | Variable 5 and 10 gm /ltr |
| Parameters of the Curing process | |
| Temperature | Variable 120 to 180 °C |
| Curing dwell time | 2 min |

| Performance Test - Log reduction of antimicrobial performance when concentration is 5 gm/lit | | | | | |
|---|---|---|---|---|---|
| Curing temperature (°C) | PHMB | Silver | Organosilane | Propiconazole | chitosan |
| 120 | 0.09 | 0.02 | 0.05 | 0.04 | 0.03 |

(continued)

| Performance Test - Log reduction of antimicrobial performance when concentration is 5 gm/lit | | | | | |
|---|---|---|---|---|---|
| Curing temperature (°C) | PHMB | Silver | Organosilane | Propiconazole | chitosan |
| 140 | 0.11 | 0.24 | 0.17 | 0.14 | 0.15 |
| 150 | 0.23 | 0.31 | 0.27 | 0.22 | 0.32 |
| 160 | 0.55 | 0.53 | 0.57 | 0.49 | 0.5 |
| 180 | 1.12 | 1.11 | 0.93 | 0.98 | 0.85 |
| Performance Test -Log reduction of antimicrobial performance when concentration is 10 gm/lit | | | | | |
| Curing temperature (°C) | PHMB | Silver | Organosilane | Propiconazole | chitosan |
| 120 | 0.34 | 0.37 | 0.38 | 0.25 | 0.31 |
| 140 | 0.45 | 0.48 | 0.53 | 0.38 | 0.47 |
| 150 | 0.56 | 0.58 | 0.62 | 0.42 | 0.51 |
| 160 | 0.92 | 0.95 | 0.98 | 0.56 | 0.88 |
| 180 | 1.89 | 2.11 | 2.21 | 2.11 | 2.02 |
| | Leaching Test - Leaching of active ingredients (in ppm) at concentration of 5 gm/lit | | | | |
| Curing temperature (°C) | PHMB | Silver | Organosilane | Propiconazole | chitosan |
| 120 | 8 | 9 | 8 | 9 | 9 |
| 140 | 6 | 5 | 6 | 7 | 7 |
| 150 | 5 | 3 | 5 | 5 | 5 |
| 160 | 3 | 2 | 3 | 4 | 4 |
| 180 | 1 | 1 | 1 | 1 | 1 |
| | Leaching Test - Leaching of active ingredients (in ppm) at concentration of 10 gm/lit | | | | |
| Curing temperature (°C) | PHMB | Silver | Organosilane | Propiconazole | chitosan |
| 120 | 15 | 16 | 17 | 15 | 15 |
| 140 | 14 | 15 | 13 | 14 | 14 |
| 150 | 12 | 12 | 10 | 13 | 13 |
| 160 | 9 | 9 | 9 | 8 | 8 |
| 180 | 2 | 2 | 1 | 2 | 2 |

The above results and the graph at Fig.27A show the antimicrobial performance of the textile materials. The textile material padded at the concentration of 10 gpl and cured at 180 °C showed between 1.8 and 2.2 log reduction.

The results of the leaching test of the treated textile materials are presented in Fig. 27B. Leaching of individual antimicrobial agents from the textile materials was drastically reduced for textile materials which were cured at 180 °C. For example, the textile materials padded at the concentrations of 5 gpl and 10 gpl showed a maximum of 1 ppm and 2 ppm of leaching, respectively.

Accordingly, the present inventors concluded that the desired curing temperature after the padding process is also 180 °C.

Experimental example III. Exhaustion parameters for a *mixture* of the antimicrobial agents

III.1. Exhaustion parameters for mixture: Concentration of antimicrobial agents

From the previous tests, it was seen that the performance of individual antimicrobial agents was found to be at the optimal at 1% o.w.f. of the solution in the exhaust liquor for different kind of textiles and different active agents to provide the optimal balance between performance and leaching. It was also seen from the various tests above that the optimal exhaust temperature of the liquor was determined as 80 °C and the exhaust time as 60 min.

Although only 1% o.w.f. solution of each individual agent could be used, a mixture of different agents could be made. Such a mixture containing different % o.w.f. of each agent was then tested for performance and leaching. The results are as below and also shown in Fig. 28A and 28B.

| Performance and Leaching Test of Mixtures | | | | | |
|---|---|---|---|---|---|
| Parameters of the exhaustion process | | | | | |
| Temperature | 80 °C | | | | |
| Solution dosage | Varied between 0.2% to 1% o.w.f. | | | | |
| Process time | 60 min | | | | |
| Parameters of the curing process | | | | | |
| Temperature | 180 °C | | | | |
| Curing dwell time | 2 min | | | | |
| Dosage (in % o.w.f | Log reduction of antimicrobial performance of mixture | | | | |
| 0.2% each in mixture | 2,45 | | | | |
| 0.5% each in mixture | 3,56 | | | | |
| 1.0% each in mixture | 4,81 | | | | |
| 2% each in mixture | 4,85 | | | | |
| 3% each in mixture | 4,8 | | | | |
| 4% each in mixture | 4,5 | | | | |
| 5% each in mixture | 4,1 | | | | |
| | Leaching of active ingredients (in ppm) | | | | |
| Dosage (in % o.w.f) | PHMB | Silver | Organosilane | Propiconazole | chitosan |
| 0.2% each in mixture | 9 | 7 | 7 | 4 | 9 |
| 0.5% each in mixture | 18 | 11 | 9 | 6 | 12 |
| 1.0% each in mixture | 23 | 18 | 17 | 8 | 16 |

As it was noted in the earlier tests, the log reduction of 1% o.w.f. solution of any individual agent remained at a less than 3 log reduction (see Fig. 15C) and the maximum of 2.8 log was observed for higher o.w.f. of 5% (see Fig.18A). However, as it can be seen from the above results, a mixture containing 1% o.w.f. of each solution provided a remarkable performance of 4.8 log. This is at least 100 times better than the highest performance which was observed when individual agents were provided.

Also, as seen in results, the leaching is also half of that observed when an individual agent with high performance is provided (see Fig. 18B).

III.2. Further processing after exhaustion and curing, i.e. washing and drying

In order to remove any residual chemicals, the textile subjected to the different mixtures as discussed in the previous test is, after curing further subjected to a washing process. The textile is normally washed at 40 °C for 30 min in a jigger machine and dried at 120 °C for 2 min in a stenter machine. The performance and leaching of the textile is then tested to show the below results and shown in Fig. 29A and 29B.

| Performance and Leaching Test (Mixture Post Wash) | |
|---|---|
| Parameters of the exhaustion process | |
| Temperature | 80 °C |
| Solution dosage | Variable Mixture each 0.2, 05 and 1% o.w.f. |
| Process time | 60 min |
| Parameters of the curing process | |
| Temperature | 180 °C |
| Curing dwell time | 2 min |
| Concentration (% o.w.f) | Performance of antimicrobial properties in Log reduction |
| 0.2 % of each active ingredient | 2,4 |
| 0.5% of each active ingredient | 3,5 |
| 1.0% of each active ingredient | 4,3 |

(continued)

| Concentration (% o.w.f) | Leaching of active ingredients (in ppm) | | | | |
|---|---|---|---|---|---|
| | PHMB | Silver | Organosilane | Propiconazole | chitosan |
| 0.2% each | 0.2 | 0.3 | 0.2 | 0.3 | 0.4 |
| 0.5 % each | 0.8 | 0.5 | 0.3 | 0.3 | 0.2 |
| 1 % each | 1.0 | 0.9 | 0.7 | 0.9 | 1.0 |

When compared to the previous results, while the performance remains almost the same, leaching is vastly reduced when compared with the pre-washed textile, while the antimicrobial characteristics, although a bit lower, mainly remain the same. As it can be seen above, the leaching of each of the active ingredients for a post-washed textile is as low as 0.2 ppm to 0.4 ppm when the textile is treated by the exhaust process with the liquor mixture having 0.2% o.w.f. of all solutions containing the active ingredients. Even when a high o.w.f. of 1% solution containing the active ingredients each in the mixture is used, the textile still exhibits a relatively lower leaching of a maximum of 1 ppm when compared to the unwashed textile.

It is significant to note that leaching of each of the individual active ingredients in such low quantities of ppm is highly advantageous since such low level of different components keeps the level well below the limits.

III.3 Concentration of antimicrobial agents mixture for padding process

Tests were conducted to determine if the mixture of different active ingredients was also capable of being used with the padding process and provided superior textile properties.

Mixtures were prepared at predetermined concentrations (1, 5 and 10 gm/ltr, respectively) of each solution containing the active ingredient, and this concentration was used for the padding process. The pick-up rate around 65% for the padding process. The textile material was then dried and cured for 2 minutes at a maximum temperature of 180 °C as described above for Experimental example I.1.(1). The following results were achieved when a performance and leaching test were performed for each of the textiles obtained by the above padding process.

| Performance and Leaching Test (pad process) of mixture | | | | | |
|---|---|---|---|---|---|
| Parameters of the Padding process | | | | | |
| Concentration | Variable 1, 5 and 10 gm / lit | | | | |
| Parameters of the curing process | | | | | |
| Temperature | 180 °C | | | | |
| Curing dwell time | 2 min | | | | |
| Concentration(gm/lt) | Performance of antimicrobial properties in Log reduction | | | | |
| 1 gm / lit of each active ingredient | 2.65 | | | | |
| 5 gm / lit of each active ingredient | 3.01 | | | | |
| 10 gm / lit of each active ingredient | 3.3 | | | | |
| Concentration (gm/ lit) | Leaching of active ingredients (in ppm) | | | | |
| | PHMB | Silver | Organosilane | Propiconazole | chitosan |
| 1 gm/lit each | 16 | 12 | 11 | 9 | 8 |
| 5 gm/lit each | 32 | 28 | 22 | 13 | 10 |
| 10 gm/lit each | 45 | 38 | 32 | 24 | 28 |

Similar to the trend noted for the exhaust process, it is evident from the results and Fig. 30A and 30B that the mixture provides better results than individual agents.

III.4 Further processing after padding and curing, i.e. washing and drying

In order to remove any residual chemicals as obtained in the padding process, after curing, the textile is washed at 40 °C for 30 min in a jigger machine and dried at 120 °C for 2 min in a stenter machine. The following results were observed and also illustrated in Fig. 31A and 31B.

| Performance and Leaching Test (pad process) of mixture after Washing | | | | | |
|---|---|---|---|---|---|
| Parameters of the Padding process | | | | | |
| Concentration | Variable 1, 5 and 10 gm / lit | | | | |
| Parameters of the curing process | | | | | |
| Temperature | 180 °C | | | | |
| Curing dwell time | 2 min | | | | |
| Concentration(gm/lt) | Performance of antimicrobial properties in Log reduction | | | | |
| 1 gm / lit of each active ingredient | 2.40 | | | | |
| 5 gm / lit of each active ingredient | 2.85 | | | | |
| 10 gm / lit of each active ingredient | 3.20 | | | | |
| | Leaching of active ingredients (in ppm) | | | | |
| Concentration (gm/ lit) | PHMB | Silver | Organosilane | Propiconazole | chitosan |
| 1 gm/lit each | 0.3 | 0.4 | 0.2 | 0.4 | 0.4 |
| 5 gm/lit each | 0.5 | 0.6 | 0.5 | 0.7 | 0.9 |
| 10 gm/lit each | 1.0 | 1.0 | 0.7 | 0.9 | 1.0 |

It is observed that while the performance remains relatively the same, leaching is vastly reduced, as it was observed also for the textile washed after an exhaust process with a mixture.

Experimental example IV. Two cycle process (Exhaust and padding process) with mixture

So far, only a single process cycle of either exhaust or padding on the textile before curing was described. In the following, tests on textiles treated with two process cycles of exhaust and padding are discussed.

For the exhaust process, a mixture was prepared at predetermined concentrations (0.1, 0.2, 0.5 and 1% o.w.f) of each solution having the active ingredient. The solutions were the same as the ones which are described above for Experimental example I.1. The exhaust temperature was set at 80 °C and the time at 60 min. The textile material was then dried (but not cured) for 2 minutes at a temperature of 120 °C.

For the padding process, mixtures were prepared at predetermined concentrations (1, 5 and 10 gm/ltr respectively) of each of the solution having the active ingredient (the same solutions as for the exhaust process), and this concentration was used for the padding process. The pick-up rate was around 65% for the padding process. However, since after the first process cycle the textile is already to a certain extent saturated with chemical agents, it is believed that the effective pick-up rate for the antimicrobial agents is only about 40%, in the sense that the rest of the antimicrobial agents padded onto the fabric does not become permanently fixed to the fabric and is washed off during subsequent washing step 18. The textile material was then dried and cured for in total 2 minutes in a single pass through a stenter at a maximum temperature of 180 °C. The maximum curing temperature was applied for 60 seconds (in 4 of the 8 chambers of the stenter).

The textile was dried after each process depending on the requirements and need for drying. Normally, the textile is subjected to drying for 2 min and over a temperature of 120 °C in a stenter. As mentioned above, the textile was dried after subjecting it to the exhaust process and prior to the wash process to ensure that the active agents are retained in the textile and not completely washed out during the wash process. Similarly, a drying process after each wash process was performed, e.g. to ensure that the textile is dry prior to being subjected to the next cycle.

IV. 1. Exhaust followed by padding process

In this two cycle process, the exhaust process was followed by a padding process. The textile was subject to an exhaust process according to the above conditions and then followed by a padding process, also explained above. The textile was dried for 2 min in a stenter at 120° C between the exhaust and the padding process. The results obtained were as below and shown in Fig. 32A and 32B.

| Performance and leaching of two stage process (Exhaust + pad) | | | | | |
|---|---|---|---|---|---|
| Parameters of the exhaustion process | | | | | |
| Temperature | | | 80 °C | | |
| Solution dosage | | | Varied between 0.1% to 1% o.w.f. | | |
| Process time | | | 60 min | | |
| Parameters of the pad process | | | | | |
| Concentration | | | Varied 1, 5 and 10 gm/ltr | | |
| Parameters of the curing process | | | | | |
| Temperature | | | 180 °C | | |
| Curing dwell time | | | 2 min | | |
| | | | Performance Log reduction E.coli | | |
| Dosage (in % o.w.f) | | | 1gm/liter | 5gm/liter | 10gm/liter |
| 0.1% each in mixture | | | 5,5 | 6 | 6,1 |
| 0.25% each in mixture | | | 5,6 | 6,2 | 6,3 |
| 0.5 each in mixture | | | 5,7 | 6,3 | 6,4 |
| 1.0% each in mixture | | | 5,9 | 6,5 | 6,6 |
| | | | Leeching in ppm (1gm/liter pad) | | |
| Dosage (in % o.w.f) | PHMB | Silver | Organosilane | Propiconazole | chitosan |
| 0.1% each in mixture | 210 | 208 | 198 | 194 | 203 |
| 0.25% each in mixture | 312 | 320 | 315 | 317 | 321 |
| 0.5 each in mixture | 324 | 398 | 347 | 365 | 371 |
| 1.0% each in mixture | 567 | 595 | 584 | 596 | 540 |
| | | | Leeching in ppm (5 gm/liter pad) | | |
| Dosage (in % o.w.f) | PHMB | Silver | Organosilane | Propiconazole | chitosan |
| 0.1% each in mixture | 278 | 298 | 275 | 284 | 259 |
| 0.25% each in mixture | 367 | 321 | 353 | 346 | 321 |
| 0.5 each in mixture | 460 | 453 | 462 | 456 | 432 |
| 1.0% each in mixture | 790 | 749 | 782 | 810 | 889 |
| | | | Leeching in ppm (10gm/liter pad) | | |
| Dosage (in % o.w.f) | PHMB | Silver | Organosilane | Propiconazole | chitosan |
| 0.1% each in mixture | 378 | 362 | 374 | 345 | 324 |
| 0.25% each in mixture | 398 | 387 | 356 | 354 | 342 |
| 0.5 each in mixture | 834 | 801 | 823 | 867 | 845 |
| 1.0% each in mixture | 1322 | 1234 | 1243 | 1456 | 1345 |

As seen above, the two cycle process results in a textile having very high performance of more than 6.5 log (Fig. 32A), which is more than 1,000 times more than that achieved by previous results. However, the leaching is relatively high as seen in Fig. 32B.

IV. 2. Exhaust followed by padding process with a wash cycle

As seen from the previous tests, washing of the textile reduces the leaching of the agents. Therefore, a two cycle process with the step of washing is done.

For the first testing, the textile obtained from the process of exhaust is washed after drying at 120 °C and before the padding cycle. The following results are observed and also illustrated in Fig. 33A and 33B.

| Performance and Leaching of two stage process (Exhaust + Wash + pad) | | | | | |
|---|---|---|---|---|---|
| Parameters of the exhaustion process | | | | | |
| Temperature | 80 °C | | | | |
| Active ingredient dosage | Varied between 0.1% to 1% o.w.f. | | | | |
| Process time | 60 min | | | | |
| Parameters of the pad process | | | | | |
| Concentration | Varied 1, 5 and 10 gm/ltr | | | | |
| Parameters of the curing process | | | | | |
| Temperature | 180 °C | | | | |
| Curing dwell time | 2 min | | | | |
| | | Performance Log reduction E.coli | | | |
| Dosage of active ingredient (in % o.w.f) | | | 1gm/liter | 5gm/liter | 10gm/liter |
| 0.1% each in mixture | | | 5.9 | 6.2 | 6.3 |
| 0.25% each in mixture | | | 5.7 | 6.2 | 6.4 |
| 0.5 each in mixture | | | 5.8 | 6.4 | 6.5 |
| 1.0% each in mixture | | | 6.1 | 6.5 | 6.7 |
| | | | Leeching in ppm (1gm/liter pad) | | |
| Dosage (in % o.w.f) | PHMB | Silver | Organosilane | Propiconazole | chitosan |
| 0.1% each in mixture | 98 | 86 | 87 | 89 | 92 |
| 0.25% each in mixture | 197 | 196 | 186 | 184 | 183 |
| 0.5 each in mixture | 378 | 375 | 375 | 369 | 365 |
| 1.0% each in mixture | 478 | 475 | 495 | 469 | 479 |
| | | | Leeching in ppm (5 gm/liter pad) | | |
| Dosage (in % o.w.f) | PHMB | Silver | Organosilane | Propiconazole | chitosan |
| 0.1% each in mixture | 168 | 164 | 158 | 154 | 152 |
| 0.25% each in mixture | 210 | 212 | 214 | 215 | 213 |
| 0.5 each in mixture | 423 | 435 | 432 | 413 | 442 |
| 1.0% each in mixture | 589 | 546 | 534 | 574 | 548 |
| | | | Leeching in ppm (10gm/liter pad) | | |
| Dosage (in % o.w.f) | PHMB | Silver | Organosilane | Propiconazole | chitosan |
| 0.1% each in mixture | 222 | 254 | 231 | 232 | 223 |
| 0.25% each in mixture | 312 | 324 | 327 | 321 | 322 |
| 0.5 each in mixture | 598 | 578 | 564 | 578 | 563 |
| 1.0% each in mixture | 600 | 656 | 645 | 657 | 632 |

It is noticed that the leaching values have considerably decreased from the high levels.

For the next test, the textile obtained from the two cycle process of exhaustion followed by drying, padding and drying/curing is subjected to washing and then drying as described earlier. The following results are observed and also illustrated in Fig. 34A and 34B.

| Performance and Leaching of two stage process (Exhaust + pad + Wash) | |
|---|---|
| Parameters of the exhaustion process | |
| Temperature | 80 °C |
| Active ingredient dosage | Varied between 0.1% to 1% o.w.f. |
| Process time | 60 min |
| Parameters of the pad process | |
| Concentration | Varied 1, 5 and 10 gm/ltr |

(continued)

| Parameters of the curing process | | | | | |
|---|---|---|---|---|---|
| Temperature | | 180 °C | | | |
| Curing dwell time | | 2 min | | | |
| | | Performance Log reduction E.coli | | | |
| Dosage (in % o.w.f) | | | 1gm/liter | 5gm/liter | 10gm/liter |
| 0.1% each in mixture | | | 5,8 | 5,9 | 6,1 |
| 0.25% each in mixture | | | 5,6 | 5,8 | 6,2 |
| 0.5 each in mixture | | | 5,7 | 6,4 | 6,4 |
| 1.0% each in mixture | | | 6,1 | 6,5 | 6,6 |
| | | Leeching in ppm (1gm/liter pad) | | | |
| Dosage (in % o.w.f) | PHMB | Silver | Organosilane | Propiconazole | chitosan |
| 0.1% each in mixture | 152 | 145 | 143 | 149 | 156 |
| 0.25% each in mixture | 234 | 223 | 265 | 231 | 250 |
| 0.5 each in mixture | 430 | 456 | 432 | 475 | 461 |
| 1.0% each in mixture | 523 | 534 | 536 | 578 | 582 |
| | | Leeching in ppm (5 gm/liter pad) | | | |
| Dosage (in % o.w.f) | PHMB | Silver | Organosilane | Propiconazole | chitosan |
| 0.1% each in mixture | 231 | 235 | 238 | 241 | 239 |
| 0.25% each in mixture | 265 | 257 | 249 | 259 | 261 |
| 0.5 each in mixture | 556 | 573 | 587 | 538 | 565 |
| 1.0% each in mixture | 678 | 654 | 657 | 689 | 634 |
| | | Leeching in ppm (10gm/liter pad) | | | |
| Dosage (in % o.w.f) | PHMB | Silver | Organosilane | Propiconazole | chitosan |
| 0.1% each in mixture | 250 | 254 | 249 | 256 | 253 |
| 0.25% each in mixture | 520 | 534 | 523 | 546 | 513 |
| 0.5 each in mixture | 630 | 645 | 637 | 649 | 677 |
| 1.0% each in mixture | 840 | 849 | 856 | 853 | 845 |

Again, although the leaching values show a decrease, they are still not desirable.

IV. 3. Exhaust followed by padding process with a washing step in each cycle

Finally, a test with a washing step in each of the two cycles is introduced. That is, the textile is dried (for 2 min at 120 °C) and then washed after the exhaustion process. The washed textile is then subjected to drying (for 2 min at 120 °C), after which the washed and dried textile is subjected to a padding process. The textile obtained after the padding process is dried and cured in one pass through the stenter again subjected to a washing (followed by a drying for 2 min at 120 °C). Tests were performed on the textiles obtained from the two cycle process with washing and drying steps after the cycles, and the following results were obtained, which are also shown in the graph of Fig. 35A and 35B.

| Performance and Leaching of two cycle process (Exhaust + Wash + pad + Wash) | |
|---|---|
| Parameters of the exhaustion process | |
| Temperature | 80 °C |
| Active ingredient dosage | Varied between 0.1% to 1% o.w.f. |
| Process time | 60 min |
| Parameters of the pad process | |
| Concentration | Varied 1,5 and 10 gm/ltr |
| Parameters of the curing process | |
| Temperature | 180 °C |

(continued)

| Parameters of the curing process | | | | | |
| --- | --- | --- | --- | --- | --- |
| Curing dwell time | | | 2 min | | |
| | | | Performance Log reduction E.coli | | |
| Dosage (in % o.w.f) | | | 1gm/liter | 5gm/liter | 10gm/liter |
| 0.1% each in mixture | | | 5,7 | 6,2 | 6,4 |
| 0.25% each in mixture | | | 6,2 | 6,4 | 6,5 |
| 0.5 each in mixture | | | 6,4 | 6,5 | 6,6 |
| 1.0% each in mixture | | | 6,1 | 6,6 | 6,7 |
| | | | Leeching in ppm (1gm/liter pad) | | |
| Dosage (in % o.w.f) | PHMB | Silver | Organosilane | Propiconazole | chitosan |
| 0.1% each in mixture | 0,2 | 0,3 | 0,1 | 0,5 | 0,3 |
| 0.25% each in mixture | 4 | 3 | 1 | 7 | 2 |
| 0.5 each in mixture | 9 | 8 | 3 | 5 | 6 |
| 1.0% each in mixture | 11 | 14 | 9 | 10 | 11 |
| | | | Leeching in ppm (5 gm/liter pad) | | |
| Dosage (in % o.w.f) | PHMB | Silver | Organosilane | Propiconazole | chitosan |
| 0.1% each in mixture | 0,4 | 0,5 | 0,2 | 0,7 | 0,5 |
| 0.25% each in mixture | 8 | 7 | 2 | 7 | 5 |
| 0.5 each in mixture | 12 | 14 | 7 | 15 | 11 |
| 1.0% each in mixture | 21 | 23 | 10 | 19 | 15 |
| | | | Leeching in ppm (10gm/liter pad) | | |
| Dosage (in % o.w.f) | PHMB | Silver | Organosilane | Propiconazole | chitosan |
| 0.1% each in mixture | 0,5 | 0,6 | 0,4 | 0,6 | 0,7 |
| 0.25% each in mixture | 14 | 16 | 5 | 20 | 9 |
| 0.5 each in mixture | 26 | 22 | 9 | 26 | 19 |
| 1.0% each in mixture | 35 | 28 | 15 | 34 | 30 |

The above results show a remarkable reduction of leaching. In fact, for a two cycle process including washing in each cycle, even a mixture with a low dosage of 0.1% o.w.f. in the exhaust process and 1 gm/lt in the pad process will still provide very high performance of 5.7 log, while the leaching values stay as low as 0.2 ppm.

Liquor

The following description relates to the liquor as it may be used in the first process cycle and/or the second process cycle.

According to a preferred embodiment, the liquor contains a solvent. The solvent is in particular water. In preferred embodiments, at least 90%, preferably at least 95%, more preferably at least 98%, and most preferably 100% of the solvent contained in the liquor is water. However, the liquor can contain other solvents being compatible with the other components of the liquor, e.g. methyl alcohol. Furthermore, antibacterial chemicals may contain trace amounts of solvents to enhance and speed the process of dissolving in water.

An even distribution of the antimicrobial agents on the textile material is important for its antimicrobial performance. Therefore, the antimicrobial agents and preferably any agents used for cross linking the antimicrobial agents and the solvent should form a homogenous mixture. I.e., the one or more antimicrobial agents and any agents used for cross linking and the solvent should not form a slurry. It is preferred that the antimicrobial agents and any agents used for cross linking are dissolved in the liquor.

In one embodiment the liquor contains an emulsifying agent, in particular one selected from the group consisting of polyoxyethylene monostearate, polyoxyethylene sorbitan monolaurate, polyethylene glycol 400 monolaurate, ethylene oxide condensates, fatty alcohol ethoxylates, and sodium lauryl sulfates. The liquor can contain an emulsifying agent in an amount of 0.05 to 5% by weight, preferably of 0.1 to 2.5% by weight, based on weight of the textile material. Alternatively, the liquor can contain an emulsifying agent in an amount of 1 to 50 grams per liter of liquor, preferably of

1 to 25 grams per liter of liquor. Depending on the agents and chemicals used, an emulsifier can be used in the exhaust liquor or padding liquor, preferably it is used in the exhaust liquor. In other exemplary embodiments, the emulsifier is used in a concentration of between 5 mg to 100 mg per 100 grams of textile material weight, depending on the application.

In one embodiment of the invention, the liquor has a pH-value of at most 6.9, preferably at most 6.5, more preferably at most 6.3, in particular at most 6.0, most preferably at most 5.5. The liquor should have a pH-value of at least 3.0, preferably at least 3.5, more preferably at least 4.0, even more preferably at least 4.5, most preferably at least 5.0. Alkaline liquor solutions do not work well for the purpose of the invention because they are corrosives and have the effect that the antimicrobial agents do not attach well to the textile material, which will later lead to high leaching. It is believed that it is the mildly acidic liquor which makes the attraction between agents and the textile material. The pH-value can be set or adjusted using an organic acid. Particularly suitable are citric acid, acetic acid, or a combination thereof, wherein preferably citric acid is used. To achieve the desired pH value, the inorganic acid is used preferably in a concentration of 1 to 5, more preferably 2 to 4, in particular 2.5 to 3.5, and most preferably about 3 grams per liter of liquor.

The viscosity of the liquor is preferably not substantially higher than that of water. The lower the viscosity, the better penetrates the liquor the yarns and fibers of the textile material. Furthermore, deposits or scaling effects can occur for liquors with high viscosity, which means that on the rollers and other parts of the machine, the thicker liquor will start to build up and form a scale or deposit. Preferably, the dynamic viscosity of the liquor of the first and/or second process cycle at 20 °C and/or 80 °C, in centipoise (cP), is at most 20% higher than the dynamic viscosity of water at 20 °C and/or 80 °C, respectively, preferably at most 10%, more preferably at most 5%, particularly at most 2%, and most preferably at most about 0%.

Textile material

Generally, any textile material can be used as the starting textile material. According to one embodiment of the invention, the starting textile material comprises hydroxyl, peptide and/or carbonyl groups. These groups enable fixing, bonding, attaching or adhering of one or more antimicrobial agents to the textile material. In exemplary embodiments, the starting textile material comprises peptide and/or hydroxyl groups, in particular hydroxyl groups. According to the preferred embodiments of the invention, the textile material is a cellulosic textile material, a preferably non-inert synthetic textile material, or a blend comprising at least 25% thereof, in particular a blend of cellulosic and synthetic textile material. Both cellulosic and non-inert synthetic textile materials comprise functional groups having the ability to bond one or more antimicrobial agents to the textile material.

According to a specific embodiment of the invention, the cellulosic textile material comprises at least one material selected from the group consisting of cotton, cellulose, viscose, linen, rayon, hemp, ramie, jute, and combinations (blends) thereof. Preferred textile materials thereof are cotton and/or viscose, with cotton being especially preferred.

According to another specific embodiment of the invention, the synthetic textile material comprises at least one material selected from the group consisting of polyester, polyamide (nylon), acrylic polyester, spandex (elastane, Lycra), aramids, modal, sulfar, polylactide (PLA), lyocell, polybutyl tetrachloride (PBT), and combinations (blends) thereof. Preferred textile materials thereof are polyester and/or polyamide, in particular polyester.

According to a further specific embodiment of the invention, the textile material comprises cotton, polyester, or a blend of cotton and polyester. Preferably, the textile material comprises between 20% and 60% of cotton, more preferably between 25% and 50% of cotton, in particular between 30% and 40% of cotton. In particular, the textile material comprises between 40% and 80% of polyester, preferably between 50% and 75% of polyester, more preferably between 60 and 70% of polyester.

Pure protein-based textiles like pure silk or pure wool are not preferred. However, the invention can well be carried on blends of protein-based textiles with 25% or more of cellulosic and/or synthetic textiles. Kevlar-based fabrics could also be used and even be cured at higher temperatures than the temperatures mentioned as preferred in the present invention. However, for most applications, Kevlar is prohibitively expensive.

The term "textile material" as used herein means a textile material in any form and includes fibers, yarns, threads, ply yarns, fabrics produced from fibers and/or yarns, and the finished products produced from fibers, yarns, and/or fabrics. The textile material can be woven, knitted, crocheted, bonded and/or non-woven fabric. It can be spun, electrospun, drawn or extruded.

The preferred textile materials are multifilament fabrics, i.e. fabrics made of multifilament yarns. Fabrics are preferred because their treatment is significantly cheaper than the treatment of yarns or even fibers. Fabrics made of multifilament yarns are preferred over fabrics made of monofilament yarns because they are stronger, have a higher surface area, and can be blended.

The starting textile material should be naturally hydrophilic, clear of all auxiliaries and contaminants so that the liquor(s) can be applied to the textile without any hindrance or interference.

Antimicrobial and other agents

A great variety of antimicrobial agents can be fixed to a textile by using the process of the invention described above. However, nanoparticles or antimicrobials in the form of nanoparticles are not preferred.

Furthermore, the antimicrobial agents in the liquor of the first and/or second process cycle are preferably non-ionic or cationic, but not anionic. The inventors found that anionic compounds do not bind well to textiles and can easily be removed, e.g. by salts.

The antimicrobial agents are bound to the textile material preferably either directly, in particular if the agent is a quaternary ammonium organosilane compound, polyglucosamine, a silver cation, which can be trapped in an inorganic or organic matrix, or polyhexamethylene biguanide, or via cross linking, in particular if the agent is an azole-based compound. The use of cyclodextrin, and/or inclusion complexes, e.g. inclusion complexes of fiber-reactive cyclodextrin derivatives and antimicrobial agents is not preferred for binding the antimicrobial agents, in particular because cyclodextrin is prohibitively expensive for most applications.

According to one embodiment of the invention, an antimicrobial agent is selected from a quaternary ammonium organosilane compound, silver cations, polyglucosamine (chitosan), an azole-based compound, and polyhexamethylene biguanide. In one embodiment the liquor of the first and/or second process cycle comprises at least one of the antimicrobial agents selected from the group consisting of a quaternary ammonium organosilane compound, silver cations, polyglucosamine, an azole-based compound, and polyhexamethylene biguanide.

In some embodiments, the liquor comprises at least two, at least three or at least four of the antimicrobial agents selected from the group consisting of a quaternary ammonium organosilane compound, silver cations, polyglucosamine, an azole-based compound, and polyhexamethylene biguanide.

The use of several antimicrobial agents has the following advantages over the use of a single agent:

First of all, different agents have different antimicrobial effects. Some may work better against bacteria, others against virus, and again other against fungus. Adding a variety of agents increases the spectrum of microbes which can be killed by the antimicrobial textile.

Secondly, the use of a variety of agents can lead to significantly higher killing rates, even for the same organism. This was shown above in Experimental example III, and will be further shown below in the discussion of examples LG/BP 01 to 07. It is believed that the higher killing rates are due to synergistic effects between the different agents. When it comes to more difficult structures of microbes such as Klebsiella Pneumoniae, or Candida, a single agent may be not effective enough. However, the different agents may work synergistically together due to their different killing mechanisms. Furthermore, the use of different agents may allow to bind a higher total amount of agents to the textile. As was shown above by Experimental examples I.1 and I.4, for the agents which were tested, there is an inherent limit on the quantity of the agent that can be adhered to the textile in a non-leaching or substantially non-leaching manner. For example, the limit was determined to be about 0.7% o.w.f. for organosilane, about 0.25% o.w.f. for propiconazole, about 0.2% o.w.f. for chitosan and PHMB, and about 0.01% o.w.f. for silver cations trapped in an inorganic or organic matrix. However, even if a textile material has been saturated with and for one agent, there may still be "space" for another agent. For example, 0.25% o.w.f. of propiconazole, 0.2% o.w.f. of chitosan and 0.2% o.w.f. of PHMB could be adhered to one and the same textile. The inventors believe that the total amount of antimicrobial agents that can be adhered to the preferred textile materials of the invention is about 0.7 to 1.3% o.w.f.

Thirdly, the use of several agents allows to reduce the leaching rates per agent. If instead of 0.6% o.w.f. of organosilane, 0.2% o.w.f. each of organosilane, PHMB, and chitosan is adhered to the fabric, leaching of organosilane can be expected to be reduced by at least two thirds. Although leaching of PHMB and chitosan will be added, since all three agents are used only in small concentrations, the leaching values per agent are low. It is less the total amount of leached substances that will determine the threat to health and environment, but rather the amount per substance. Thus, although the total amount of leached substances in the above examples may be the same, the leaching values per agent are lower, which is highly beneficial.

Forth, inherent undesired effects of a substance can be reduced or even counterbalanced by the use of several agents. For example, organosilane is hydrophobic by nature, which is an undesired property for many applications of textiles. For such applications, the concentration of organosilane should be kept at a minimum.

Fifth, some of the preferred agents of the present invention are more expensive than other, e.g. silver cations and chitosan. Reducing the concentrations of these agents and complementing them by other agents allows to achieve the antimicrobial performance at substantially lower costs.

It is one merit of the invention to have recognized the advantages of using several antimicrobial agents in combination. It is another merit of the invention to have identified several highly effective antimicrobial agents which can be bound to a textile material together. It is a further merit of the invention to have identified a process by which many different agents can be applied to a textile material in one and the same liquor application process, be it in one or more application cycles, in a non-leaching or substantially non-leaching manner.

In some embodiments, the liquor of the first and/or second process cycle or the liquors of the first and second process cycle together comprise at least two, preferably at least three antimicrobial agents selected from the group consisting of a quaternary ammonium organosilane compound, polyglucosamine, an azole-based compound, and polyhexamethylene biguanide. Such a combination may render unnecessary the use of silver cations, which are expensive, and therefor provide an efficient antimicrobial textile at low costs.

In preferred embodiments, the liquor of the first and/or second process cycle or the liquors of the first and second process cycle together comprise a quaternary ammonium organosilane compound and at least one, preferably at least two, more preferably at least three antimicrobial agents selected from the group consisting of silver cations, polyglucosamine, an azole-based compound, and polyhexamethylene biguanide. Organosilane is preferred because it adheres very will to textiles and is effective against a broad spectrum of organisms.

In some preferred embodiments, the liquor of the first and/or second process cycle or the liquors of the first and second process cycle together comprise a quaternary ammonium organosilane compound and at least one, preferably at least two antimicrobial agents selected from the group consisting of polyglucosamine, an azole-based compound, and polyhexamethylene biguanide. Such a selection combines the advantages of the embodiments discussed in the two previous paragraphs above.

In further preferred embodiments, the one or more antimicrobial agents in the liquor of the first and/or second process cycle or in the liquors of the first and second process cycle together comprise a quaternary ammonium organosilane compound, silver cations, and an azole-based compound. The combination of these three agents has the advantage that they can be applied even to purely synthetic textiles like polyester or polyamide. This is not the case, e.g., for chitosan and PHMB, as these cannot be adhered to synthetic textiles.

In some embodiments, the one or more antimicrobial agents in the liquor of the first and/or second process cycle or in the liquors of the first and second process cycle together comprise a quaternary ammonium organosilane compound, silver cations, polyhexamethylene biguanide, and an azole-based compound. Such a combination may render unnecessary the use of chitosan, which is relatively expensive, and therefor provide an efficient antimicrobial textile at low costs.

In some embodiments, the one or more antimicrobial agents in the liquor of the first and/or second process cycle or the liquors of the first and second process cycle together comprise at least two, preferably at least three, more preferably all four antimicrobial agents selected from the group consisting of a silver cations, polyglucosamine, an azole-based compound, and polyhexamethylene biguanide. Such a combination may render unnecessary the use of organosilane. For some applications, organosilane is not preferred because it renders the textile mildly hydrophobic, and/or because it is not biodegradable.

In another embodiment, the liquor comprises quaternary ammonium organosilane compound, silver cations, polyglucosamine, an azole-based compound, and polyhexamethylene biguanide. Such a combination of antimicrobial agents is particularly suitable, for example, for cotton or cellulosic materials as textile material.

In the preferred embodiments, the antimicrobial agents in the liquors of all process cycles together are applied to the textile material in an amount of together at least 0.1% by weight, preferably at least 0.3% by weight, more preferably at least 0.5% by weight, particularly at least 0.6% by weight, and most preferably at least 0.7% by weight, based on weight of the textile material. Furthermore, they are preferably applied in an amount of together at most 2.5% by weight, preferably at most 2.0% by weight, more preferably at most 1.7% by weight, particularly at most 1.5% by weight, and most preferably at most 1.3% by weight, based on weight of the textile material. As mentioned above, the inventors believe that the maximum total amount of antimicrobial agents that can be adhered to the preferred textile materials of the invention in a non-leaching or substantially non-leaching manner is about 0.7 to 1.3% o.w.f. This is the values which was determined in comprehensive empirical studies, a part of which studies is presented above in the discussion of the Experimental examples.

An antimicrobial agent can comprise a quaternary ammonium organosilane compound. Suitable quaternary ammonium organosilane compounds have the formula

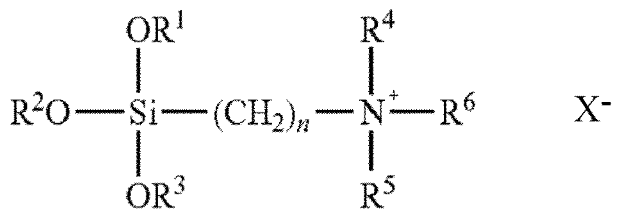

wherein the radicals have, independently of each other, the following meanings:

$R^1$, $R^2$, and $R^3$ are a $C_1$-$C_{12}$-alkyl group, in particular a $C_1$-$C_6$-alkyl group, preferably a methyl group;
$R^4$, and $R^5$ are a $C_1$-$C_{18}$-alkyl group, a $C_1$-$C_{18}$-hydroxyalkyl group, a $C_3$-$C_7$-cycloalkyl group, a phenyl group, or a $C_7$-$C_{10}$-aralkyl group, in particular a $C_1$-$C_{18}$-alkyl group, preferably a methyl group;
$R^6$ is a $C_1$-$C_{18}$-alkyl group, in particular a $C_8$-$C_{18}$-alkyl group;
X- is the counterion and an anion, for example, chloride, bromide, fluoride, iodide, acetate, or a sulfonate group, preferably X- is chloride or bromide; and
n is an integer of 1 to 6, in particular an integer of 1 to 4, preferably 3.

The term "alkyl group" as used herein means a branched or unbranched alkyl group.

Quaternary ammonium organosilane compounds are known in the art and commercially available. Such compounds possess specific functional groups which enable their bonding to functional groups of the textile material. Under the reaction conditions disclosed herein the quaternary ammonium organosilane compounds are bonded to the textile material via a covalent bond between the organosilane moiety and functional groups of the textile. Further, organosilane moieties polymerize with each other resulting in -O-Si-O- bonds. A possible reaction mechanism of the ammonium organosilane with a textile material having hydroxyl groups is shown hereinafter.

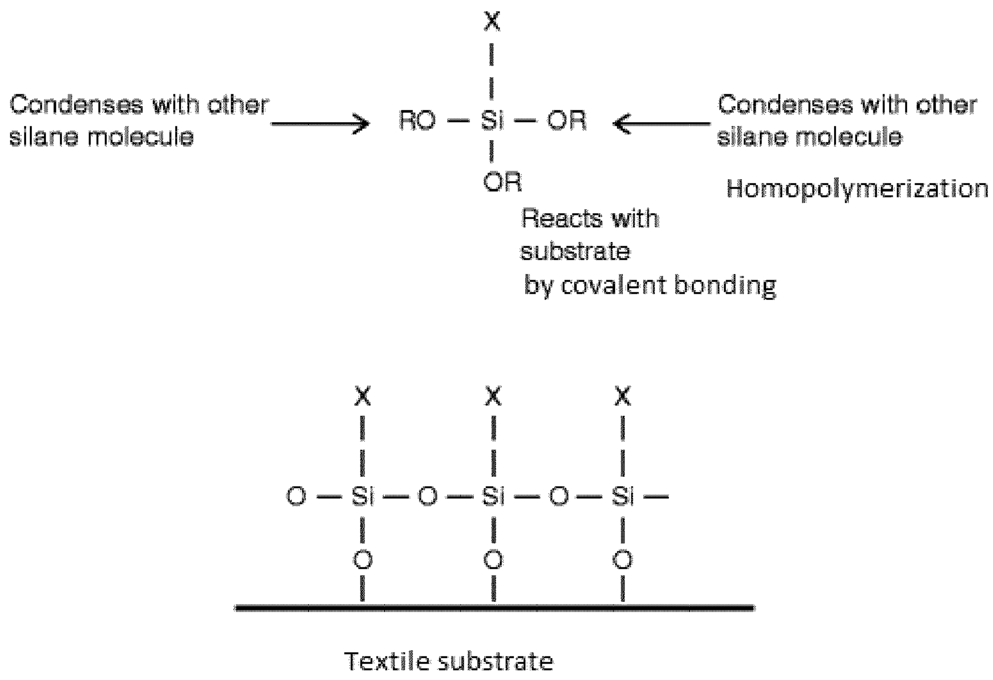


A possible reaction mechanism of the ammonium organosilane with silk having peptide groups (-CO-NH-) is shown hereinafter.

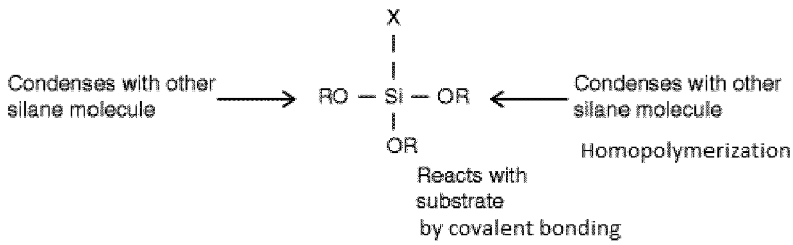


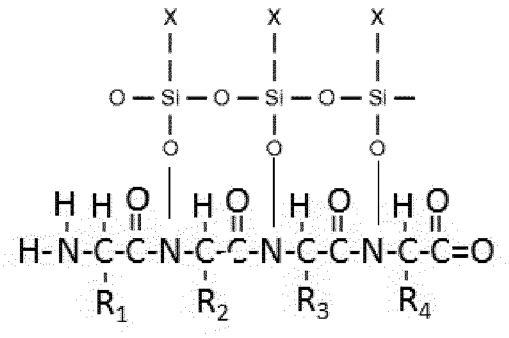

The quaternary ammonium organosilane compound can comprise dimethyloctadecyl[3-(trimethoxysilyl)propyl] ammonium chloride or dimethyltetradecyl[3-(trimethoxysilyl)propyl]ammonium chloride, most preferably dimethyloctadecyl[3-(trimethoxysilyl)propyl]ammonium chloride. The structure of dimethyloctadecyl[3-(trimethoxysilyl)propyl]ammonium is as follows (shown without counterion), wherein further the function of the silane moiety and the ammonium moiety are indicated:

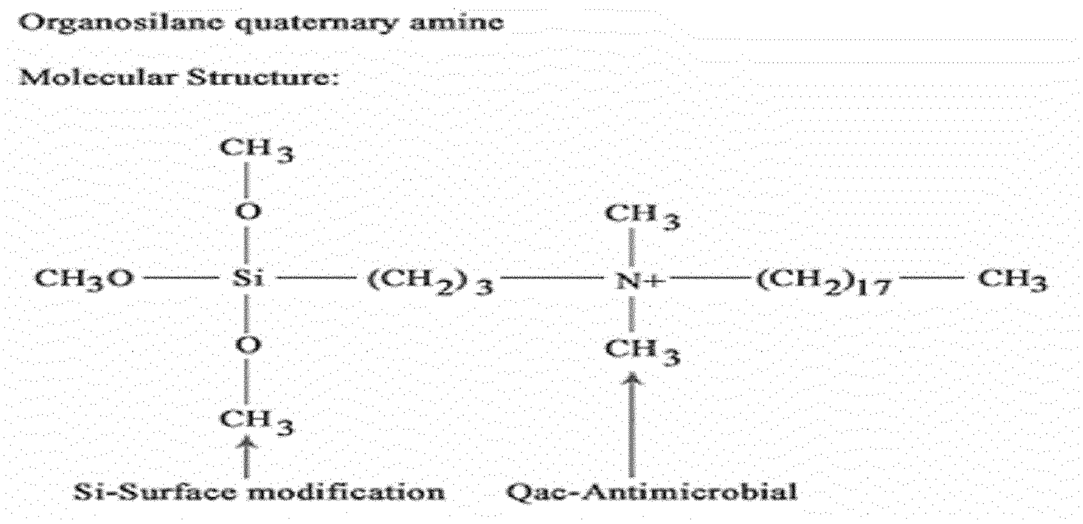


Dimethyloctadecyl[3-(trimethoxysilyl)propyl]ammonium chloride is available on the market, e.g. Aegis AEM 5772/5 (manufactured by Aegis). Dimethyltetradecyl[3-(trimethoxysilyl)propyl] ammonium chloride is available on the market, e.g. Sanitized T 99-19 (manufactured by Sanitized AG, Switzerland). Other suitable ammonium silane compounds are described, e.g., in patent applications US 2011/0271873 A1 and US 2006/0193816 A1, and in US patent 8,906,115. The quaternary ammonium organosilane compound is preferably used in an amount of 0.1 to 10% by weight, in particular in an amount of 0.1 to 5% or 0.1 to 3% by weight, based on the weight of the textile material. The quaternary ammonium organosilane compound is preferably applied to the textile material in the liquors of all process cycles together in an amount of 0.2 to 1.5% by weight, in particular in an amount of 0.25 to 1.2% or 0.3 to 1.0% by weight, based on the weight of the textile material.

An antimicrobial agent can comprise silver cations. In particular embodiments, the silver cations are trapped in an inorganic or organic matrix. Preferably, the inorganic matrix is an aluminosilicate. Preferably, the organic matrix is a polymeric matrix. Such silver-containing microbial agents are known in the art and available on the market.

A silver cation in form of its acrylate salt is shown hereinafter.

Silver acrylate salt

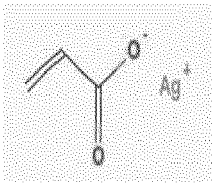

In an exemplary embodiment of the invention, the aluminosilicate is a sodium-poly(sialate-disiloxo) compound. Examples of an aluminosilicate and sialate structures as well as how bonding to a textile material can occur under the reaction conditions disclosed herein, are shown hereinafter.

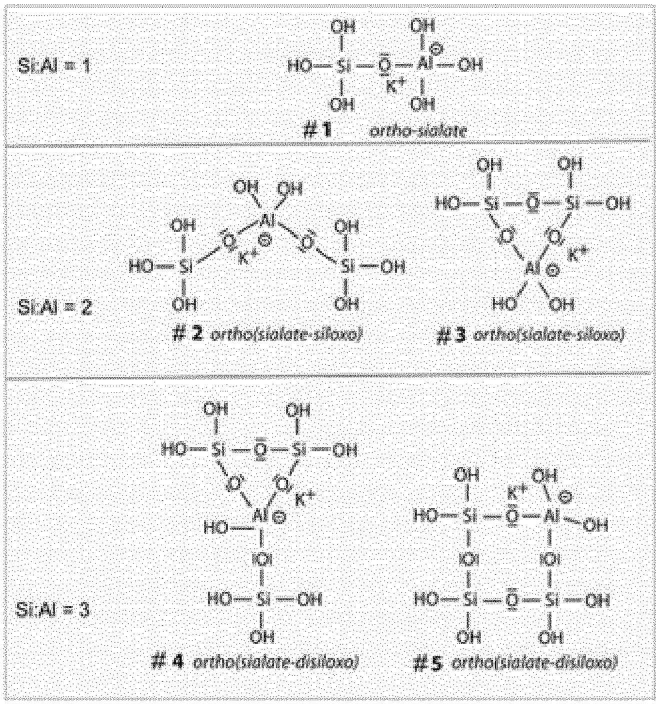

Si:Al = 1

#1 ortho-sialate

Si:Al = 2

# 2 ortho(sialate-siloxo)

# 3 ortho(sialate-siloxo)

Si:Al = 3

# 4 ortho(sialate-disiloxo)

#5 ortho(sialate-disiloxo)

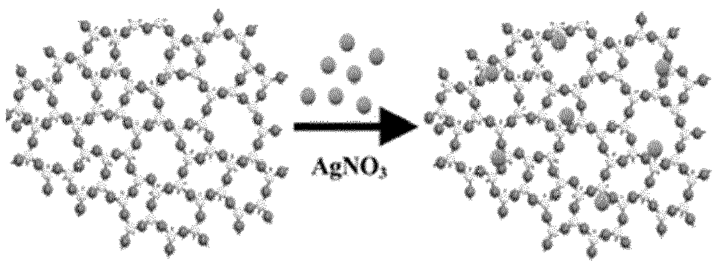

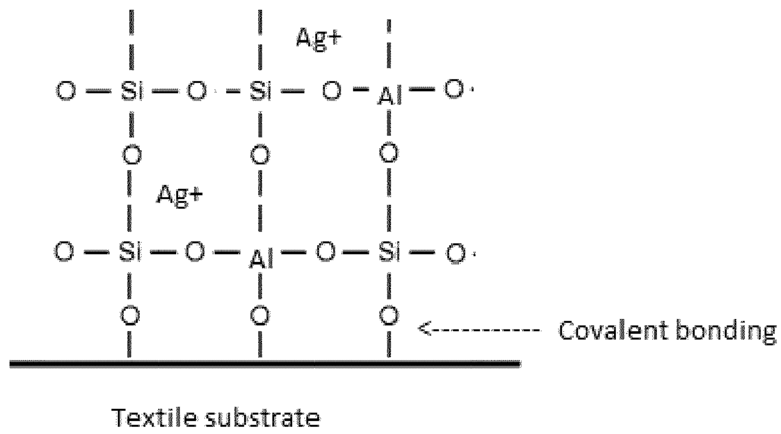


In an exemplary embodiment of the invention, the polymeric matrix into which silver cations are trapped is an acrylic polymer. Such silver-containing agents are known in the art and available on the market, e.g. SilvaDur AQ Antimicrobial (manufactured by Rohm and Haas) which contains acrylic polymer(s), silver nitrate, nitric acid and water. In another exemplary embodiment of the invention, the silver cations are trapped in a polymeric matrix. Such silver-containing agents are known in the art and available on the market, e.g. SILVADUR™ 930 Antimicrobial (of Dow Chemical Company) which contains polymer(s), silver cations, ammonia, ethanol and water. The silver cations trapped in an inorganic or organic matrix are preferably applied to the textile material in the liquors of all process cycles together in an amount of 0.001 to 0.1% by weight, preferably of 0.002 to 0.05% by weight, more preferably in an amount of 0.003 to 0.02% or about 0.01% by weight, based on the weight of the textile material.

In another embodiment of the invention, an antimicrobial agent comprises polyglucosamine (chitosan). chitosan has a structure as shown hereinafter, wherein n indicates the number of monomer units as known in the art:

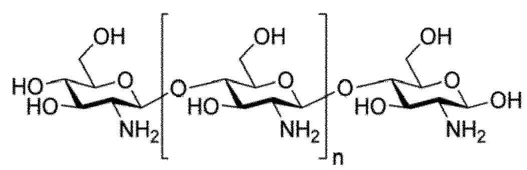

Under the reaction conditions disclosed herein, chitosan can react with -NH groups of silk resulting in covalent bonds as shown below.

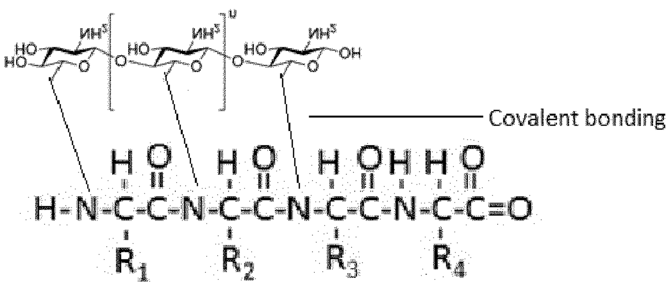


Under the reaction conditions disclosed herein, chitosan can react with functional groups of cellulosic materials resulting in covalent bonds as shown below.

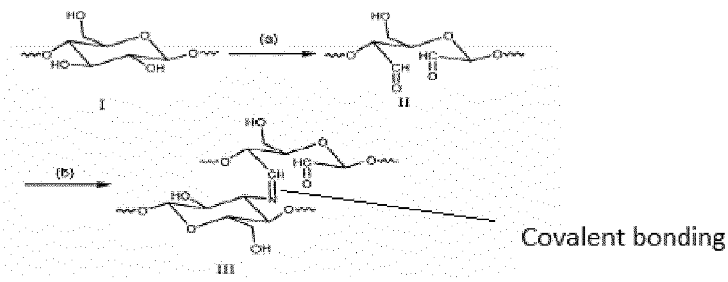


Chitosan treated cellulosic molecule

chitosan is known in the art and commercially available. It is preferably used in an amount of 0.1 to 5% by weight, in particular in an amount of 0.2 to 3% or 0.2 to 2% by weight, based on the weight of the textile material. It is preferably applied to the textile material in the liquors of all process cycles together in an amount of 0.02 to 0.5% by weight, more preferably 0.08 to 0.4%, even more preferably 0.12 to 0.3% by weight, based on the weight of the textile material.

In another embodiment of the invention, an antimicrobial agent comprises polyhexamethylene biguanide (PHMB). Polyhexamethylene biguanide has a structure as shown hereinafter, wherein n indicates the number of monomer units as known in the art.

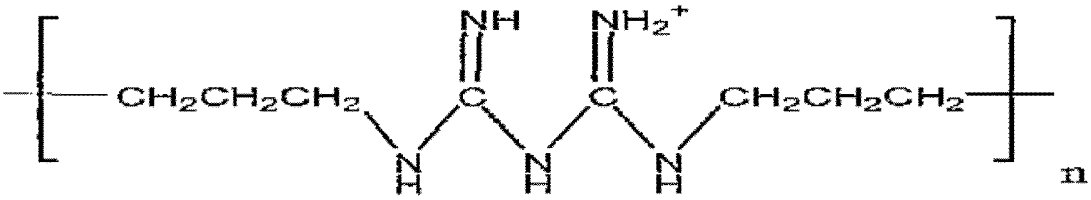

Under the reaction conditions disclosed herein, polyhexamethylene biguanide can react with hydroxyl groups of cellulose to form covalent bonds as shown hereinafter.

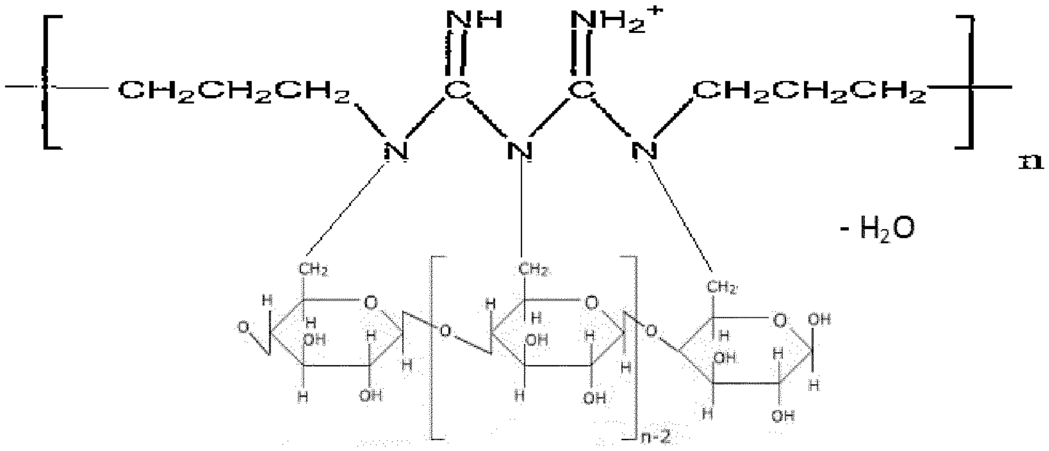


Under the reaction conditions disclosed herein, polyhexamethylene biguanide (PHMB) can react with carbonyl groups of silk fiber to form covalent bonds as shown hereinafter.

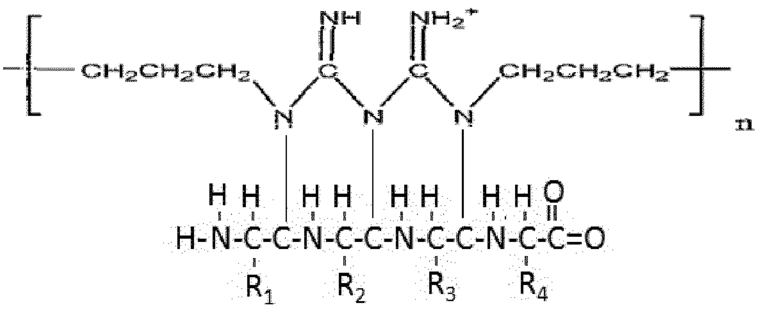

Polyhexamethylene biguanide is known in the art and commercially available. It can be used in an amount of 0.05 to 5% by weight, preferably in an amount of 0.1 to 3% or 0.2 to 2% by weight, based on the weight of the textile material. It is preferably applied to the textile material in the liquors of all process cycles together in an amount of 0.02 to 0.5% by weight, more preferably 0.08 to 0.4%, even more preferably 0.12 to 0.3% by weight, based on the weight of the textile material.

In another embodiment of the invention, an antimicrobial agent comprises an azole-based compound. Preferably, the azole-based compound is thiabendazole, carbendazim or a triazole-based compound. The triazole-based compound can be, e.g., propiconazole. Propiconazole has a structure as shown hereinafter.

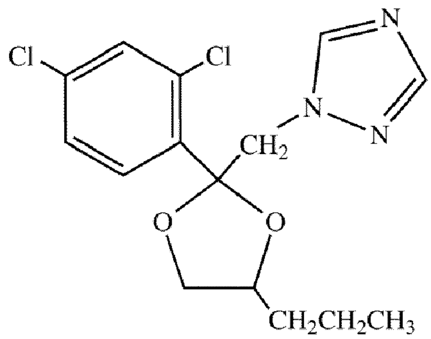

Propiconazole is known in the art and commercially available, e.g. Biogard PPZ 250 (manufactured by Beyond Surface Technologies, Switzerland). Propiconazole can be bound to the textile material using a crosslinking agent, in particular a preferably blocked isocyanate compound, which results in urethane bonds, or an acrylate based-product. When using propiconazole, it is preferred to use a crosslinking agent in the liquor, in particular the exhaust liquor. It is even more preferred that the formulation of propiconazole contains the cross linking agent or the cross-linking agent is part of the propiconazole formulation. Further, it is preferred to use propiconazole together with an emulsifier. Propiconazole is preferably used in an amount of 0.05 to 5% by weight, in particular in an amount of 0.05 to 3% or 0.1 to 2% by weight, based on the weight of the textile material. It is preferably applied to the textile material in the liquors of all process cycles together in an amount of 0.05 to 0.6% by weight, more preferably 0.10 to 0.5%, even more preferably 0.15 to 0.4% by weight, and most preferably 0.2 to 0.3% by weight, based on the weight of the textile material.

In an exemplary embodiment, the antimicrobial agents comprise a quaternary ammonium organosilane compound and silver cations, preferably without polyhexamethylene biguanide and/or polyglucosamine and/or an azole-based compound. Another exemplary embodiment comprises the combination of a quaternary ammonium organosilane compound, polyhexamethylene biguanide and silver cations, wherein in particular no polyglucosamine and/or an azole-based compound is/are comprised. Such a combination is suitable for many textile materials, such as synthetic materials, cotton and cellulosic materials. Another exemplary embodiment provides for the combination of a quaternary ammonium organosilane compound, silver cations, polyhexamethylene biguanide, polyglucosamine, and preferably no azole-based compound. Another exemplary embodiment provides for the combination of silver cations, polyhexamethylene biguanide and an azole-based compound, and no quaternary ammonium organosilane compound, preferably further no polyglucosamine.

In exemplary embodiments, the liquor contains the one or more antimicrobial agents in an amount of 0.1 to 20% by weight, in particular 0.2 to 15% by weight, preferably 0.5 to 10% by weight, more preferably 1 to 8% by weight, most preferably 1 to 5% by weight, or 0.03 to 4% by weight, based on weight of the textile material. Such amounts are particularly used in the exhaust liquor.

In further embodiments of the invention, the starting textile material can be treated with one or more further antimicrobial agents, in particular at least one selected from the group consisting of benzalkonium chloride; benzethonium

chloride; benzoxonium chloride; dequalinium; vinylbenzyltrimethylammonium chloride; cetrimonium bromide, optionally in combination with reactive amino silicone having alkoxy groups like hydroxyl or methoxy or ethoxy groups; 2-phynolphenol, Acibenzolar, Paclobutrazol, Azoxystrobin, Epoxiconazole, Binapacryl, Iprodion, Triadimefon, Fuberidazole, Flusilazole, 2,4,6-tribromophenol, Vinclozolin, Pyrazophos, Tebuconazole, Metalaxy, Dichlofluanid, Strobilurins, Myclobutanil, Fenpropimorph with blocked isocyanate, vinylbenzyltrimethylammonium chloride, didecyldimethylammonium chloride, Fenticlor, 9-aminoacridine, Dibromopropamidine, Chlorothalonil, Povodine-Iodine, Fenamidone, Pencycuron, cetylpyridinium chloride, Cetrimonium, cetyl Trimethylammonium, Bupirimate, Fluopicolide, Hexachlorophene, Triclocarban, Nitrofura, Clioquinol, methylparaben, Propamocarb, cinnamaldehyde, hexamidine, and Falcarindio. The further antimicrobial agent is preferably used in an amount of 0.1 to 10% by weight, in particular in an amount of 0.1 to 5%, 0.1 to 3% or 0.1 to 1% by weight, based on the weight of the textile material.

In other embodiments of the invention, the liquor further comprises at least one functional agent selected from the group consisting of water and oil repellents, fluorocarbon chemicals, abrasion resistant agents, antistatic agents, anti-pilling agents, easy care resins, wetting agents, wicking chemicals, softeners, mosquito or insect repellants, UV protectors, soil releasing agents, viscosity modifiers, flame retardants, hydrophilic polymers, polyurethanes, fragrances, and pH modifiers. The functional agent is preferably used in an amount of 0.1 to 10% by weight, in particular in an amount of 0.1 to 5%, 0.1 to 3% or 0.1 to 1% by weight, based on the weight of the textile material. The functional agent is preferably applied by a padding process, i.e. it is contained in the liquor of the second process cycle, but not in the liquor of the exhaust process cycle. The textile material can be made multifunctional by adding the desired functional agent(s) along with or after the initial treatment, during the processing phase. In order to impart multifunctional capabilities, the textiles may be treated on one or both sides of the textile, either separately or jointly.

According to one embodiment (i) of the invention, an antimicrobial agent is selected from a quaternary ammonium organosilane compound, silver cations, polyglucosamine, an azole-based compound, and polyhexamethylene biguanide. In exemplary embodiments of embodiment (i), the textile material is treated with benzalkonium chloride, or benzethonium chloride, or benzoxonium chloride, or dequalinium or vinylbenzyltrimethylammonium chloride or cetrimonium bromide in combination with reactive amino silicone having hydroxyl or alkoxy groups, such as methoxy or ethoxy, instead of a quaternary ammonium organosilane. In exemplary embodiments of embodiment (i), the textile is treated with vinylbenzyltrimethylammonium chloride, or didecyldimethylammonium chloride, or Fenticlor, or 9-Aminoacridine, or Dibromopropamidine, or Chlorothalonil, instead of polyhexamethylene biguanide. In exemplary embodiments of embodiment (i), the textile is treated with Povodine-iodine, or Fenamidone, or Pencycuron, instead of polyhexamethylene biguanide and/or an azole-based compound. In exemplary embodiments of embodiment (i), the textile is treated with cetylpyridinium chloride, or Cetrimonium, cetyl trimethylammonium, or Bupirimate, instead of polyhexamethylene biguanide and/or quaternary ammonium organosilane. In exemplary embodiments of embodiment (i), the textile is treated with Fluopicolide instead of quaternary ammonium organosilane and polyhexamethylene biguanide or an azole-based compound. In exemplary embodiments of embodiment (i), the textile is treated with Nitrofura instead of quaternary ammonium organosilane. In exemplary embodiments of embodiment (i), the textile is treated with hexachlorophene, or Triclocarban, or Nitrofura, or Clioquinol, or Methylparaben, or Propamocarb, or Cinnamaldehyde, or Hexamidine, instead of chitosan and polyhexamethylene biguanide. In exemplary embodiments of embodiment (i), the textile is treated with Falcarindio in combination with polyhexamethylene biguanide or chitosan. In exemplary embodiments of embodiment (i), the textile is treated with 2-phynolphenol, or Acibenzolar, or Paclobutrazol, or Azoxystrobin, or Epoxiconazole, or Binapacryl, or Iprodion, or Triadimefon, or Fuberidazole, or Flusilazole, or 2,4,6-Tribromophenol, or Vinclozolin, or Pyrazophos, or Tebuconazole, or Metalaxy, or Dichlofluanid, or Strobilurins, or Myclobutanil, or Fenpropimorph, instead of an azole-based compound.

In exemplary embodiments of the invention, the liquor comprises a crosslinking agent which is selected from the type of adducts of blocked isocyanate, preferably in a concentration range of between 10mg to 200 mg per 100 grams of textile material weight, depending on application.

Due to the hydrophobic nature of organosilane, a textile material treated with organosilane as an antimicrobial agent will be mildly hydrophobic across its cross section.

In further embodiments of the invention, the liquor comprises at least one agent selected from the group consisting of methyl alcohol, octadecylaminomethyl trihydroxysilylpropyl ammonium chloride and chloropropyl trihydroxysilane, polyglucosamine, silver chloride based compound and silver chloride in aluminosilicate carrier base and polyhexamethylene biguanide, in a concentration range of between 10mg to 500mg of the active ingredient of each chemical per 100 grams of fabric weight, depending on application, and the polysaccharide or oligosaccharide in a concentration range of between 1mg to 500 mg of active ingredient per 100 grams of fabric weight, depending on the application.

Examples LG/BP 01 to 07

In order to optimize the properties of the fabrics treated according to the invention, the effect of using more than one antimicrobial agent was studied. The results are summarized in the table of Fig. 37 and are presented graphically

in Fig. 38. They show that strong enhancements of antimicrobial properties are feasible.

In the examples LG/BP 01 to 07, a blended fabric with 35% cotton and 65% polyester was used (count 20s warp and 20s weft, construction 100 x 64, undyed fabric width 150 cm, fabric weight 210 g/$m^2$). All example fabrics were made antimicrobial with the process described above in the context of Experimental example IV. 3., comprising the steps of exhaustion at 80 °C for 60 minutes, drying at 120 °C for 2 minutes, washing, drying at 120 °C for 2 minutes, padding, drying/curing for 2 minutes, with a curing temperature of 180 °C applied for 1 minute, washing, and drying at 120 °C for 2 minutes. The exhaustion and padding liquors, the antimicrobial agents and the solutions containing the antimicrobial agents used for producing the examples were the same as described above in the context of the Experimental examples.

The concentration of antimicrobial agents (actives) in grams per liter (gpl) in the liquor of the exhaust process and in the liquor of the padding process is shown in the table of Fig. 36 for each of the examples. The exhaustion rate was 98%, and the inventors believe that the antimicrobial agents exhausted onto the fabric were bound to the fabric after drying to such an extent that virtually 100% of them remained on the fabric even after washing. The pick-up rate of the padding process was 65%, but the inventors believe that the effective pick-up rate for the antimicrobial agents was only about 40%, in the sense that the rest of the antimicrobial agents padded onto the fabric did not become permanently fixed to the fabric and was washed off during the washing step after padding and curing. Based on these assumptions, the effective weight increase of each of the actives by the exhaustion process and by the padding process was calculated and is shown in the table of Fig. 36 as % on weight fabric (o.w.f.). In the lower third of the table, the total effective weight increase (exhaustion process and padding process together) is shown for each of the actives, as well as the total weight increase of all actives together for each of the exhaustion and the padding processes, and the weight increase of all actives together in both processes together ("total"). It should be noted that a concentration of 0.02 gpl of silver cations in the padding liquor (see values for LG/BP 03 to 06) yields a silver weight percentage on the fabric of rounded zero because the presentation in the table uses only two decimals.

As can be seen in the table of Fig. 36, example LG/BP 01 was only treated with organosilane (in both exhaustion and padding), example LG/BP 02 was treated with PHMB in addition (but less organosilane), example LG/BP 03 was treated with silver cations in addition, example LG/BP 04 was treated with chitosan in addition (but less organosilane and less PHMB), which was only applied in the exhaustion process, example LG/BP 05 was treated with propiconazole in addition (but less organosilane), which was only applied in the padding process. In example LG/BP 06, propiconazole was also applied in the exhaustion process.

As will be discussed below, example LG/BP 06 already had a surprisingly high antimicrobial performance, but it was still not high enough for use of the textile in a self-disinfecting garment. Furthermore, it was not as cost effective as desired, due to the use of chitosan, which is an expensive ingredient. An optimization was therefore made in example LG/BP 07, which contained a higher total amount of actives, in particular organosilane, but no chitosan. This example became the basis for the antimicrobial textile of an operation theater gown ("OT gown"), whose recipe is almost the same as for LG/BP 07 and is shown in the rightmost column of Fig. 36. The OT gown uses the same or a similar starting fabric as the examples (except for the fact that it is usually dyed, for example in green or light blue), and is produced with the same process.

Leaching tests and tests of antimicrobial performance were conducted on the examples, and the results are shown in the table of Fig. 37. The blanks in the table indicate that the respective test was not conducted for the respective example or the respective organism.

The test procedure for leaching was as follows: 100 g (grams) of fabric as well as control fabrics were soaked in 10 liters of stagnant distilled water in a closed wide mouth jar. After 3 days (72 hours), the water samples were tested for leached substances as per standard analytical methods. A weight of 100 g fabric was chosen because in the preferred embodiment of the water filter as described further below, each filter comprises a strip of fabric with 210 g/$m^2$, 3 meters long and 0.16 meters wide, which corresponds to 100 g of fabric.

Leaching was only tested for examples LG/BP 06 and LG/BP 07, and the results are shown in the table of Fig. 37 to be below 1 ppm (parts per million in terms of weight) for each of the five (LG/BP 06) or four (LG/BP 07) antimicrobial agents with which the fabrics had been treated.

Three different tests for antimicrobial performance were conducted: AATCC 100-2012, EPA test method 90072PA4, and a custom-specified test.

The AATCC 100-2012 test procedure for antimicrobial performance is described in detail in AATCC Technical Manual 2013, p. 166-168. Samples of the fabric and control fabrics were inoculated with a defined amount of the microorganisms shown in the table of Fig. 37 so that the liquid was soaked up by the fabric. After 24 hours, the number of colony forming units was determined by standard methods in order to calculate the antimicrobial effect of the tested fabric.

The table of Fig. 37 shows a massive increase of antimicrobial properties of the fabrics with an increasing number of antimicrobial agents. This holds true although the total amount (weight increase) of antimicrobial agents does not change significantly or is even reduced; the uptake of agents is always around 1% of the weight of the fabric. This unexpected increase is exemplified quantitatively by the values of the antimicrobial performance in the table of Fig. 37.

The values are presented on a logarithmic scale, which means that a value of 1 stands for a reduction by 90%, of the microbes, a value of 2 stands for a reduction by 99%, a value of 3 stands for a reduction by 99.9%, and so forth. The reduction values for Staph. Aureus increase from 3.25 log in example LG/BP 01 to 6.45 log in example 06; most impressive are the values for A. Niger, which increase from 0.11 log in example LG/BP 01 to 5.43 log in example LG/BP 06.

Examples LG/BP 06 and LG/BP 07 were (also) tested with protocol "EPA 90072PA4", which is described in detail further below. This protocol has been developed by the United States Environmental Protection Agency (EPA) and explores the antimicrobial properties of fabrics after 25 times washing with a series of 12 abrasions and 11 inoculations; thereby a real life situation for garments which undergo frequent laundering is mimicked. The protocol, which at the filing date of this patent application has not yet been published, will become a standard testing routine in due time.

The exposure time in examples LG/BP 06 and LG/BP 07 following the EPA 90072PA4 protocol is only 10 minutes, as compared to 24 hours according to the AATCC 100 tests. The result is that after 25 times of washing, the fabrics of the invention still exhibit a strong and rapid antimicrobial effect. Therefore, the results for examples LG/BP 06 and LG/BP 07 show an excellent performance of the fabrics of the invention. Simultaneously, the leaching properties are very favorable, at least for the production of antimicrobial garments. As mentioned above, a value of less than 1 ppm is observed for all antimicrobial agents used, which is sufficiently low to avoid skin irritations. The inventors are not aware of any fabric in the prior art which could achieve such a high antimicrobial performance and at the same time have leaching values of less than 1 ppm when measured in accordance with the method described above.

Example LG/BP 07 shows that outstanding properties are available even if no chitosan is used. The EPA test shows that performance is in fact high enough for use of the textile in a garment which is said to be self-disinfecting. Therefore, fabrics can be produced very economically (chitosan as mentioned above being rather expensive), which for example are used for the fabrication of OT gowns and other antimicrobial garments.

Finally, examples LG/BP 04 to LG/BP 06 were also tested in accordance with a custom-specified test. This test used a water filter comprising a filter structure holding 20 layers of the example fabrics as a filter medium, as described in detail further below. In this gravity-based filtration test, first 1 liter of DI water was passed through the layers of fabric. Then, 10 liters of test water spiked with 24 hours old test organisms in proportion adjusted to a density of 107 passed the filter. The flow rate was 4 liters per hour. The filtered test water was collected in a sterile bottle, neutralized and used for enumeration of surviving test organisms. Standard spread plate techniques using selective media were used for the enumeration of test organisms. The spiked water before filtration comprised of the base line count. In this way, the concentration of living test organisms before and after filtering was determined.

The reduction values achieved by the filter are shown in the table of Fig. 37. With all three tested examples, a reduction of more than 6 log could be achieved for E.Coli and V.Cholerae. While with example LG/BP 04, a reduction of C.Difficile spores (which are hard kill) of only 1.2 log could be achieved, reduction rates of 3.15 log could be achieved with example LG/BP 05, and of 4.65 log with example LG/BP 06. It may be assumed that reduction in virus similar to the reduction in spores can be achieved. A control filter using an untreated fabric also showed a minimum reduction, of less than 0.2 log, which may be due to mechanical trapping of test organisms in the fabric layers of the filter.

The inventors are not aware that any such reduction values could ever be achieved before by a prior art water filter using a textile fabric as the filter medium.

Examples LG/BP 08 to 16

Another important feature of the fabrics of the invention is the combination of very good antimicrobial properties with extremely low leaching rates of the agents. A major application of fabrics with such properties is in the field of water purification. The results of relevant studies are summarized in the table of Fig. 39.

The starting fabrics consisted of 100% cotton (count 10s warp and 10s weft, construction 68 x 38, undyed fabric width 150 cm, fabric weight 265 g/m$^2$), except in examples LG/BP 14 and LG/BP 16, which used the same polyester/cotton blend starting fabric as examples LG/BP 01 to 07 discussed above. Example fabrics LG/BP 08 to 16 were produced using the same process as examples LG/BP 01 to 07.

The concentration of antimicrobial agents (actives) in grams per liter (gpl) in the liquor of the exhaust process and in the liquor of the padding process is shown in the table of Fig. 36 for each of the examples. The effective weight increase of each of the actives in the exhaustion process and in the padding process was calculated and is shown in the table of Fig. 36 as % on weight fabric (o.w.f.). In the lower third of the table, the total effective weight increase (exhaustion process and padding process together) is shown for each of the actives, as well as the total weight increase of all actives together for each of the exhaustion and the padding processes, and the weight increase of all actives together in both processes together ("total"). It should be noted that the very low concentrations of silver cations in the exhaustion process of examples LG/BP 09 to 14 and examples LG/BP 08 and 10 for padding yields a silver weight percentage of the fabric of rounded zero because the presentation uses only two decimals.

The test series started on the basis of the recipe of example LG/BP 06, which for water filter applications already showed a satisfying antimicrobial performance. In fact, the only difference of example LG/BP/08 over LG/BP 06 is the

starting textile material (pure cotton instead of a cotton/polyester blend). However, the leaching values of this example, although already below 1 ppm for all actives, were still too high for use in water purification.

It was defined that to pass the leaching criteria, the following values as determined under the leaching test procedure as described above in the context of examples LG/BP 01 to 07 have to be reached: <10 ppm for quaternary ammonium organosilanes, <0.1 ppm for silver cations, <75 ppm for polyglucosamine (chitosan), <0.5 ppm for propiconazole, <0.5 ppm for polyhexamethylene biguanide (PHMB). To pass the criteria on antimicrobial performance, determined under the custom-specified test method as described above in the context of examples LG/BP 01 to 07, the minimum reduction is log 6 for bacteria, log 4 for viruses and log 3 for cysts according to EPA, Guide Standard and Protocol for Testing Microbiological Water Purifiers, April 1987.

In the test series of the table in Fig. 39, the development of a fabric is shown which passes the very rigid standards for leaching and for antimicrobial performance at the same time. Extremely low leaching values are particularly important for a water purifier. The amount of antimicrobial agents in the purified water has to be so low in order to avoid any toxicity issues and to secure long term performance of the purifier. For each of the five agents used, the third section ("Total actives owf / leaching") indicates with "pass" or "fail" whether or not an example achieved the above-defined leaching standard for that active. As can be seen, examples LG/BP 08 to 10 failed the leaching criteria for silver cations, propiconazole, and PHMB. From example LG/BP 11 on, leaching of silver cations was under control, but leaching of propiconazole and PHMB continued to be a problem. The leaching criteria for propiconazole were passed for the first time by example LG/BP 15. Finally, example LG/BP 16 passed the leaching test for all actives.

The very last line of the table indicates whether or not the example fabric achieved the above-described antimicrobial performance criteria. While example LG/BP 08 still passed the performance test, examples LG/BP 09 to 12 had a not quite satisfactory performance. Example LG/BP 13 passed the performance test again, but leaching was still a problem. Examples LG/BP 14 and 15 improved on leaching, but failed the performance test.

Finally, example LG/BP 16 not only passed the leaching test but also met the above-defined performance criteria. This example became the basis for the antimicrobial textile of the preferred embodiments of the water filter described further below, whose recipe is almost the same as for LG/BP 16 and is shown in the rightmost column of Fig. 39. The water filter uses the same or a similar starting fabric as LG/BP 16, and is produced with the same process.

The following conclusions were drawn by the inventors from the test series:

(1) Leaching of silver is difficult to avoid, at least on pure cotton, when the silver cations are applied in the padding process. Therefore, silver should be applied in the exhaustion process.

(2) On the other hand, padding is better suited for propiconazole. Propiconazole is fixed to the textile by means of a cross linker, which does not work so well in exhaustion, but it does work well in padding, at least for water filter applications. This is true although the padding application is more superficial than the exhaustion application. The reason is that unlike garments, which are frequently laundered, textiles used as water filter media do not have to be able to withstand abrasion.

(3) A 35 % cotton/65% polyester fabric was found to be best suited for long immersion in water, and therefore for use in a water purifier according to the invention.

(4) As in examples LG/BP 01-07, the striking effect of using more than three or four antimicrobial agents on the performance is evident. It is believed that the high performance at such low leaching values is due to the combination of organosilane, which has good affinity to polyester, PHMB and chitosan, which have very good affinity to cotton, and propiconazole, which has good affinity to both polyester and cotton. Furthermore, propiconazole is a very good antifungal, which protects the cotton from getting rotten during long immersions in water.

The inventors are not aware that any such low leaching values could ever be achieved before by a prior art water filter using a textile fabric as the filter medium and having a very high reduction rate.

Further examples

The invention will be further described by the following examples which illustrate the preparation of textile materials, without limiting the invention.

Example 1: Disinfecting textile material for application in water filtration

Select a textile material comprising either 100% cotton or a blend of cotton and polyester, in which the cotton content is at least 35%. The yarn for the fabric may be made of either blended fibres or may be made from non-blended

fibres. In the present example, the fabric is either made of 100% cotton or blended fabric comprising of 35% cotton and 65% polyester.

The fabric is then cleaned of impurities by scouring so as to remove oil, fats and waxes from the textile material. Scouring also involves the processing of textile materials with nonionic surfactants in alkaline aqueous media at temperature of 95 °C for one hour followed by neutralization by using mild acid therefore made naturally absorbing and neutral in pH. In a jigger or continuous dyeing range or a jet dyeing range, the fabric is then washed for 1 hour at 80°C for removing excess of superficial surfactants. The bath is then drained.

For 100% cotton textile material: A new bath with water at a temperature of 80 °C is prepared and to this is added 0.15% of dimethyloctadecyl[3-(trimethoxysilyl)propyl] ammonium chloride (hereinafter also called octadecylaminomethyl trihydroxysilylpropyl ammonium chloride), 0.5% add-on of silver chloride based compound, 1% polyhexamethylene biguanide, 0.8% of polyglucosamine/chitosan, and 0.1% of propiconazole (on weight of fabric). Also added is citric acid or acetic acid, so that the bath has a pH of 5 to 6. For polyester cotton blend: 0.35% polyhexamethylene biguanide is used instead of 1% remaining all ingredient same in concentration. All amounts in the examples are based on weight of fabric.

The fabric is then processed in this bath at about 80 °C for about 60 minutes to achieve an exhausting pick up of >95%. The bath is drained.

The fabric is then taken to a stenter frame and is cured by heat treatment so that polymerization occurs at between 130 °C and 190 °C, as described in detail above, which imparts antimicrobial and non-leaching properties to the textile material along with mildly hydrophobic properties.

The fabric is then washed in a bath using warm to hot water in order to remove any residual chemicals for about one hour followed by drying on a stenter frame. Once the fabric is dried, it is padded with 8 gm/lit of octadecylaminomethyl trihydroxysilylpropyl ammonium chloride at room temperature and dried and cured between 130 °C to 190 °C on the stenter frame, as described in detail above.

The fabric is then once again washed in a bath using warm to hot water in order to remove any residual chemicals for about one hour.

Depending on the weight of the fabric and the design of the desired filtration mechanism, the process may be repeated using exhausting or padding and then cured and washed again depending on the type and characteristics of the material.

Example 2: Disinfecting textile for application in kitchen towels, kitchen apron, oven mits

First, select a textile material comprising of either 100% cotton or a blend of cotton and polyester in which the minimum amount of cotton is 35%.

Exhaust processing is used for application. This process leads to a disinfecting property of the material across its cross-section. Due to this process, the material will also have a mildly hydrophobic properties.

For the exhaust process, the following chemicals were used: 0.2% silver chloride in aluminosilicate carrier base, 2% polyhexamethylene biguanide, 2% propiconazole, and 0.03% citric acid for adjusting pH-value to between 5 and 6.

The textile material is loaded in a drum washer and water is added to maintain the material to liquor ratio (MLR) at 1:2 (that is to say that for 40 kg textile there will be 80 liters of water). The above-mentioned chemicals are added one by one and then the drum washer rotations are commenced. The temperature is raised up to 80 °C and the washer run is continued for next 30 minutes.

After 30 minutes, the process bath is drained, and the textile material is removed. Following this, hydro-extraction is done for 5 minutes to squeeze out excess liquor from the textile. Lastly, the textile is tumble dried in a hot air tumble dryer for 10 minutes at 180 °C.

Example 3: Disinfecting textile for application in undergarments and socks

First, select a textile material comprising of 100% cotton or 90% cotton with up to 5% elastane and up to 5% lycra for undergarments and either 100% cotton or 100% polyester with or a blend of 88% cotton or polyester with up to 5% lycra and 7% elastane for socks.

Exhaust processing is used for application. For the exhaust process, the following chemicals are used: 0.2% silver chloride in aluminosilicate carrier base, 2% polyhexamethylene biguanide, 2% propiconazole, and 0.03% citric acid for adjusting the pH-value to between 5 and 6.

The textile material is loaded in the drum washer and water is added to maintain the material to liquor ratio (MLR) at 1:2 (that is to say that for 40 kg textile there will be 80 liters of water). The above-mentioned chemicals are added one by one and then the drum washer rotations are commenced. The temperature is raised up to 80 °C and the washer run is continued for next 30 minutes.

After 30 minutes, the process bath is drained, and the textile material is removed. Following this, hydro-extraction is done for 5 minutes to squeeze out excess liquor from the textile. Lastly, the textile is tumble dried in a hot air tumble dryer for 10 minutes at 180 °C.

Example 4: Disinfecting textile for application in medical garments, scrubs, and medical masks

First, select a textile material comprising of 100% cotton or a blend of cotton and polyester in which the minimum amount of cotton is 35% or a blend comprising of 99% polyester and 1% carbon, with up to 10% elastane optionally for use in masks.

Exhaust processing followed by padding is used for application as follows. Chemicals for exhaust processing: 0.5% octadecylaminomethyl trihydroxysilylpropyl ammonium chloride, 0.2% silver chloride in aluminosilicate carrier base, 2% polyhexamethylene biguanide, 2% propiconazole, and 0.03% citric acid for adjusting pH-value between 5 and 6.

The textile materials are loaded in a jigger machine and water is added to maintain the material to liquor ratio (MLR) at 1:3 (that is to say that for 100 kg textile there will be 300 liters of water). The above-mentioned chemicals used for exhaust processing are added one by one and the jigger machine is started.

The temperature is raised up to 80 °C and the run is continued for the next 30 minutes. Following this, the process bath is drained the textile material is taken out and dried on stenter at 120 °C for 2 minutes.

Chemicals used for padding process: 2 gm/lit octadecylaminomethyl trihydroxysilylpropyl ammonium chloride, 5 gm/lit polyhexamethylene biguanide and 0.3 gm/lit citric acid.

The exhaust-treated fabric is padded with 65% pick up at room temperature and dried at 120 °C followed by curing at 180 °C for 2 minutes.

Example 5: Disinfecting textile for application in medical garments where both sides need to be made additionally repellant to water, blood and other fluids

The textile shown in Example 4 can be further treated to make both sides of the textile additionally repellent to water, blood and other fluids.

First, select a textile material comprising of 100% cotton or a blend of cotton and polyester in which the minimum amount of cotton is 35% or a blend comprising of 99% polyester and 1% carbon, with up to 10% elastane optionally for use in masks. Exhaust processing followed by padding is used for application.

Chemicals for exhaust processing: 0.5% octadecylaminomethyl trihydroxysilylpropyl ammonium chloride, 0.2% silver chloride in aluminosilicate carrier base, 2% polyhexamethylene biguanide, 2% propiconazole, and 0.03% citric acid for adjusting pH-value between 5 and 6.

The textile materials are loaded in a jigger machine and water is added to maintain the material to liquor ratio (MLR) at 1:3 (that is to say that for 100 kg textile there will be 300 liters of water). The above mentioned chemicals for exhaust processing are added one by one and the jigger machine is started.

The temperature is raised up to 80 °C and the run is continued for the next 30 minutes. Following this, the process bath is drained the textile material is taken out and dried on stenter at 120 °C for 2 minutes.

Chemicals for padding process: 2 gm/lit octadecylaminomethyl trihydroxysilylpropyl ammonium chloride, 5 gm/lit polyhexamethylene biguanide, 80 gm/lit fluorocarbon monomer, 20 gm/lit blocked isocyanate and 0.3 gm/lit citric acid.

The exhaust-treated fabric is padded with 65% pick up at room temperature and dried at 120 °C followed by curing at 180 °C for 2 minutes.

Example 6: Disinfecting textile for application in military battle garments where the textile must be compatible to add insect repellant treatment

First, select a textile material comprising 100% cotton or a blend of cotton and polyester in which the minimum amount of cotton is 35% or a blend of nylon and lycra for head gear or 100% Kevlar or a blend of Kevlar with polyester and nylon at appropriate regulated ratios.

Exhaust processing was used followed by two steps of padding.

Chemicals used for exhaust processing: 0.5% octadecylaminomethyl trihydroxysilylpropyl ammonium chloride, 0.2% silver chloride in aluminosilicate carrier base, 2% polyhexamethylene biguanide, 2% propiconazole, and 0.03% citric acid for adjusting pH-value between 5 and 6.

The textile materials are loaded in a jigger machine and water is added to maintain the material to liquor ratio (MLR) at 1:3 (that is to say that for 100 kg textile there will be 300 liters of water). The above mentioned chemicals used for exhaust processing are added one by one and the jigger machine is started.

The temperature is raised up to 80 °C and the run is continued for the next 30 minutes. Following this, the

process bath is drained the textile material is taken out and dried on stenter at 120 °C for 2 minutes.

Chemicals used for padding process (step 1): 2 gm/lit octadecylaminomethyl trihydroxysilylpropyl ammonium chloride, 5 gm/lit polyhexamethylene biguanide, and 0.3 gm/lit citric acid. The exhaust-treated fabric is padded at room temperature with the chemicals used for the first step of padding with a 65% pick up. It is then dried at 150 °C for 2 minutes.

Chemicals used for padding process (step 2): 100 gm/lit permethrin emulsion (10% active), 100 gm/lit acrylate monomer dispersion and 0.3 gm/lit citric acid. The fabric after the first padding is padded a second time with the chemicals used for the second step of padding at room temperature with a 65% pick up. It is then dried at 180 °C for 2 minutes.

Example 7: Disinfecting textile for application in military battle garments where the textile must be compatible to add UV reflecting and water repellant treatment

The textile described in Example 6 can be alternatively or further treated to make the textile repellent to water and UV-ray reflecting.

First, select a textile material comprising of 100% cotton or a blend of cotton and polyester in which the minimum amount of cotton is 35% or a blend of nylon and lycra for head gear or 100% Kevlar or a blend of Kevlar with polyester and nylon at appropriate regulated ratios.

Exhaust processing followed by padding is used for application.

Chemicals for exhaust processing: 0.5% octadecylaminomethyl trihydroxysilylpropyl ammonium chloride, 0.2% silver chloride in aluminosilicate carrier base, 2% polyhexamethylene biguanide, 2% propiconazole, and 0.03% citric acid for adjusting pH-value between 5 and 6. The textile materials are loaded in a jigger machine and water is added to maintain the material to liquor ratio (MLR) at 1:3 (that is to say that for 100 kg textile there will be 300 liters of water). The above mentioned chemicals used for exhaust processing are added one by one and the jigger machine is started.

The temperature is raised up to 80 °C and the run is continued for the next 30 minutes. Following this, the process bath is drained the textile material is taken out and dried on stenter at 120 °C for 2 minutes.

Chemicals used for padding process: 2 gm/lit octadecylaminomethyl trihydroxysilylpropyl ammonium chloride, 5 gm/lit polyhexamethylene biguanide, 80 gm/lit fluorocarbon monomer, 20 gm/lit blocked isocyanate, 40 gm/lit UV repellent chemicals and 0.3 gm/lit citric acid. The exhaust-treated fabric is padded at room temperature with 65% pick up and dried at 120 °C followed by curing at 180 °C for 2 minutes.

Example 8: Disinfecting textile for application in sweat absorbent T-shirts

First, select a textile material comprising of 100% cotton or a blend of cotton and polyester in which the minimum amount of cotton is 35% or 100% nylon or a blend comprising of nylon, lycra and elastane.

Exhaust processing followed by padding is used for application.

Chemicals for exhaust processing: 0.2% silver chloride in aluminosilicate carrier base, 2% polyhexamethylene biguanide, 2% propiconazole, and 0.03% citric acid for adjusting pH-value between 5 and 6. The textile materials are loaded in a jigger machine and water is added to maintain the material to liquor ratio (MLR) at 1:5 (that is to say that for 100 kg textile there will be 500 liters of water). The above mentioned chemicals used for exhaust processing are added one by one and the jigger machine is started.

The temperature is raised up to 80 °C and the run is continued for the next 30 minutes. Following this, the process bath is drained the textile material is taken out and dried on stenter at 120 °C for 2 minutes.

Chemicals used for padding process: 5 gm/lit polyhexamethylene biguanide, 100 gm/lit polyester glycol co-polymer, 20 gm/lit blocked isocyanate, and 0.3 gm/lit citric acid. The exhaust-treated fabric is padded at room temperature with 65% pick up and dried at 120 °C followed by curing at 180 °C for 2 minutes.

Example 9: Disinfecting textile for application in T-shirts with capability for water repellant, mosquito repellant and UV reflecting treatments

The textile described in Example 8 can be alternatively or further treated to make the textile repellent to water, repellent to mosquitoes and UV-ray reflecting.

First, select a textile material comprising of 100% cotton or a blend of cotton and polyester in which the minimum amount of cotton is 35% or 100% nylon or a blend comprising of nylon, lycra and elastane.

Exhaust processing followed by padding is used for application.

Chemicals for exhaust processing: 0.5% octadecylaminomethyl trihydroxysilylpropyl ammonium chloride, 0.2% silver chloride in aluminosilicate carrier base, 2% polyhexamethylene biguanide, 2% propiconazole, and 0.03% citric acid for adjusting pH-value between 5 and 6.

The textile materials are loaded in a jigger machine and water is added to maintain the material to liquor ratio (MLR) at 1:5 (that is to say that for 100 kg textile there will be 500 liters of water). The above mentioned chemicals used

for exhaust processing are added one by one and the jigger machine is started.

The temperature is raised up to 80 °C and the run is continued for the next 30 minutes. Following this, the process bath is drained the textile material is taken out and dried on stenter at 120 °C for 2 minutes.

Chemicals used for padding process: 2 gm/lit octadecylaminomethyl trihydroxysilylpropyl ammonium chloride, 5 gm/lit polyhexamethylene biguanide, 80 gm/lit fluorocarbon monomer, 20 gm/lit blocked isocyanate, 40 gm/lit UV repellent chemicals and 0.3 gm/lit citric acid.

The exhaust-treated fabric is padded at room temperature with 65% pick up and dried at 120 °C followed by curing at 180 °C for 2 minutes.

Example 10: Disinfecting textile for application in bedsheets, pillow covers, quilt covers, other bedding, and curtains for hotel industry with capability for addition of mosquito repellent treatment

First, select a textile material comprising of 100% cotton or 100% polyester or a blend of cotton and polyester or 100% silk or a blend of polyester and wool or 100% nylon or a blend of polyester and nylon.

Exhaust processing followed by two steps of padding.

Chemicals used for exhaust processing: 0.5% octadecylaminomethyl trihydroxysilylpropyl ammonium chloride, 0.2% Silver chloride in aluminosilicate carrier base, 2% polyhexamethylene biguanide, 2% propiconazole, and 0.03% citric acid for adjusting pH-value between 5 and 6.

The textile materials are loaded in a jigger machine and water is added to maintain the material to liquor ratio (MLR) at 1:3 (that is to say that for 100 kg textile there will be 300 liters of water). The above mentioned chemicals used for exhaust processing are added one by one and the jigger machine is started.

The temperature is raised up to 80 °C and the run is continued for the next 30 minutes. Following this, the process bath is drained the textile material is taken out and dried on stenter at 120 °C for 2 minutes.

Chemicals used for padding process (step 1): 2 gm/lit octadecylaminomethyl trihydroxysilylpropyl ammonium chloride, 5 gm/lit polyhexamethylene biguanide, and 0.3 gm/lit citric acid.

The exhaust-treated fabric is padded with the chemicals used for the first step of padding at room temperature with a 65% pick up. It is then dried at 150 °C for 2 minutes.

Chemicals used for padding process (step 2): 100 gm/lit permethrin emulsion (10% active), 100 gm/lit acrylate monomer dispersion and 0.3 gm/lit citric acid. The fabric after the first padding is padded a second time with the chemicals used for the second step of padding at room temperature with a 65% pick up. It is then dried at 180 °C for 2 minutes.

Example 11: Disinfecting textile for application in bedsheets, pillow covers, quilt covers, other bedding, and curtains for hotel industry with capability for addition of flame retardant treatment

This textiles described in Example 10 can be alternatively or further treated to make the textile flame retardant.

First, select a textile material comprising of 100% cotton or 100% polyester or a blend of cotton and polyester or 100% silk or a blend of polyester and wool or 100% nylon or a blend of polyester and nylon.

Exhaust processing followed by two steps of padding.

Chemicals used for exhaust processing: 0.5% octadecylaminomethyl trihydroxysilylpropyl ammonium chloride, 0.2% silver chloride in aluminosilicate carrier base, 2% polyhexamethylene biguanide, 2% propiconazole, and 0.03% citric acid for adjusting pH-value between 5 and 6.

The textile materials are loaded in a jigger machine and water is added to maintain the material to liquor ratio (MLR) at 1:3 (that is to say that for 100 kg textile there will be 300 liters of water). The above mentioned chemicals used for exhaust processing are added one by one and the jigger machine is started.

The temperature is raised up to 80 °C and the run is continued for the next 30 minutes. Following this, the process bath is drained the textile material is taken out and dried on stenter at 120 °C for 2 minutes.

Chemicals used for Padding process (step 1): 2 gm/lit octadecylaminomethyl trihydroxysilylpropyl ammonium chloride, 5 gm/lit polyhexamethylene biguanide, and 0.3 gm/lit citric acid.

The exhaust treated fabric is padded with the chemicals used for the first step of padding at room temperature with a 65% pick up. It is then dried at 150 °C for 2 minutes.

Chemicals used for Padding process (step 2): 200 gm/lit of organophosphate and 0.3 gm/lit citric acid.

The fabric after the first padding is padded a second time with the chemicals used for the second step of padding at room temperature with a 65% pick up. It is then dried at 180 °C for 2 minutes.

Example 12: Disinfecting textile for application as curtains with capability for addition of flame retardant treatment and water repellency

First, select a textile material comprising of 100% cotton or 100% polyester or a blend of cotton and polyester

or 100% silk or a blend of silk and viscose.

Exhaust processing followed by two steps of padding is used.

Chemicals used for exhaust processing: 0.5% octadecylaminomethyl trihydroxysilylpropyl ammonium chloride, 0.2% silver chloride in aluminosilicate carrier base, 2% polyhexamethylene biguanide, 2% propiconazole, and 0.03% citric acid for adjusting pH-value between 5 and 6.

The textile materials are loaded in a jigger machine and water is added to maintain the material to liquor ratio (MLR) at 1:3 (that is to say that for 100 kg textile there will be 300 liters of water). The above mentioned chemicals used for exhaust processing are added one by one and the jigger machine is started.

The temperature is raised up to 80 °C and the run is continued for the next 30 minutes. Following this, the process bath is drained the textile material is taken out and dried on stenter at 120 °C for 2 minutes.

Chemicals used for padding process (step 1): 2 gm/lit octadecylaminomethyl trihydroxysilylpropyl ammonium chloride, 5 gm/lit polyhexamethylene biguanide, and 0.3 gm/lit citric acid.

The exhaust treated fabric is padded with the chemicals used for the first step of padding at room temperature with a 65% pick up. It is then dried at 150 °C for 2 minutes.

Chemicals used for padding process (step 2): 200 gm/lit of organophosphate, 20 gm/lit fluorocarbon, 10 gm/lit blocked isocynate monomer and 0.3 gm/lit citric acid. The fabric after the first padding is padded a second time with the chemicals used for the second step of padding at room temperature with a 65% pick up. It is then dried at 180 °C for 2 minutes.

Example 13: Disinfecting textile for application in children's clothing

First, select a textile material comprising of 100% cotton or a blend of cotton and polyester with cotton comprising minimum 35%, or 100% polyester or 100% wool or 100% polyester or a blend of wool and polyester.

Exhaust processing followed by padding is used.

Chemicals used for exhaust processing: 0.5% octadecylaminomethyl trihydroxysilylpropyl ammonium chloride, 0.2% silver chloride in aluminosilicate carrier base, 2% polyhexamethylene biguanide, 2% propiconazole, and 0.03% citric acid for adjusting pH-value between 5 and 6.

The textile materials are loaded in a jigger machine and water is added to maintain the material to liquor ratio (MLR) at 1:3 (that is to say that for 100 kg textile there will be 300 liters of water). The above mentioned chemicals used for exhaust processing are added one by one and the jigger machine is started.

The temperature is raised up to 80 °C and the run is continued for the next 30 minutes. Following this, the process bath is drained, the textile material is taken out and dried on stenter at 120 °C for 2 minutes.

Chemicals used for padding process: 2 gm/lit octadecylaminomethyl trihydroxysilylpropyl ammonium chloride, 5 gm/lit polyhexamethylene biguanide and 0.3 gm/lit citric acid.

The exhaust treated fabric is padded with the chemicals for padding process at room temperature with a 65% pick up. It is then dried at 120 °C followed by curing at 180 °C for 2 minutes.

Example 14: Disinfecting textile for application in school uniforms and accessories

First, select a textile material comprising of 100% cotton or a blend of cotton and polyester, or 100% wool or 100% silk for sweaters and ties.

Exhaust process followed by padding is used.

Chemicals used for exhaust processing: 0.5% octadecylaminomethyl trihydroxysilylpropyl ammonium chloride, 0.2% silver chloride in aluminosilicate carrier base, 2% polyhexamethylene biguanide, 2% propiconazole, and 0.03% citric acid for adjusting pH-value between 5 and 6.

The textile materials are loaded in a jigger machine and water is added to maintain the material to liquor ratio (MLR) at 1:3 (that is to say that for 100 kg textile there will be 300 liters of water). The above mentioned chemicals used for exhaust processing are added one by one and the jigger machine is started.

The temperature is raised up to 80 °C and the run is continued for the next 30 minutes. Following this, the process bath is drained, the textile is taken out and dried on stenter at 120 °C for 2 minutes.

Chemicals used for padding process: 2 gm/lit octadecylaminomethyl trihydroxysilylpropyl ammonium chloride, and 0.3 gm/lit citric acid.

The exhaust-treated fabric is padded with the chemicals for padding process at room temperature with a 65% pick up. It is then dried at 120 °C followed by curing at 180 °C for 2 minutes.

Example 15: Disinfecting textile for application in hotel bathing towels

First, select a textile material comprising of 100% cotton or a blend of cotton and polyester, or 100% wool or

100% silk for sweaters and ties.

The process used is an exhaust process.

Chemicals used: 0.2% silver chloride in aluminosilicate carrier base, 2% polyhexamethylene biguanide, 2% propiconazole, and 0.03% citric acid for adjusting pH-value between 5 and 6.

The textile material is loaded in a drum washer and water is added to maintain the material to liquor ratio (MLR) at 1:2 (that is to say that for 40 kg textile there will be 80 liters of water). The above-mentioned chemicals are added one by one and then the drum washer rotations are commenced. The temperature is raised up to 800C and the washer run is continued for next 30 minutes.

After 30 minutes, the process bath is drained, and the textile material is removed. Following this, hydro-extraction is done for 5 minutes to squeeze out excess liquor from the textile.

Lastly, the textile is tumble dried in a hot air tumble dryer for 10 minutes at 180 °C.

Example 16: Disinfecting textile for application in upholstery with capability for addition of flame retardant treatment

First, select a textile material comprising of 100% cotton or a blend of cotton and polyester or 100% wool or 100% silk or 100% nylon or 100% viscose or 100% linen or 100% bamboo or 100% acrylic or blends of the above materials in different proportions.

The process used is an exhaust process.

Chemicals used: 0.5% octadecylaminomethyl trihydroxysilylpropyl ammonium chloride 0.2% silver chloride in aluminosilicate carrier base, 2% polyhexamethylene biguanide, 2% propiconazole, and 0.03% citric acid for adjusting pH-value between 5 and 6.

The textile material is loaded in a drum washer and water is added to maintain the material to liquor ratio (MLR) at 1:2 (that is to say that for 40 kg textile there will be 80 liters of water). The above-mentioned chemicals are added one by one and then the drum washer rotations are commenced.

The temperature is raised up to 80 °C and the washer run is continued for next 30 minutes. After 30 minutes, the process bath is drained, and the textile material is removed. Following this, hydro-extraction is done for 5 minutes to squeeze out excess liquor from the textile. Lastly, the textile is tumble dried in a hot air tumble dryer for 10 minutes at 180 °C.

Example 17: Disinfecting textile for application in canine beds with additional capacity for abrasion resistance treatment

First, select a textile material comprising of 100% cotton or 100% polyester or a blend of cotton and polyester or 100% nylon or a blend of nylon and polyester. Exhaust process followed by padding is used.

Chemicals used for exhaust processing: 0.5% octadecylaminomethyl trihydroxysilylpropyl ammonium chloride, 0.2% silver chloride in aluminosilicate carrier base, 2% polyhexamethylene biguanide, 2% propiconazole, and 0.03% citric acid for adjusting pH-value between 5 and 6.

The textile materials are loaded in a jigger machine and water is added to maintain the material to liquor ratio (MLR) at 1:3 (that is to say that for 100 kg textile there will be 300 liters of water). The above mentioned chemicals used for exhaust processing are added one by one and the jigger machine is started.

The temperature is raised up to 80 °C and the run is continued for the next 30 minutes. Following this, the process bath is drained the textile material is taken out and dried on stenter at 120 °C for 2 minutes.

Chemicals used for padding process: 2 gm/lit octadecylaminomethyl trihydroxysilylpropyl ammonium chloride, 5 gm/lit polyhexamethylene biguanide, 50 gm/lit polyurethane emulsion, 80 gm/lit fluorocarbon monomer, 20 gm/lit blocked isocyanate and 0.3 gm/lit citric acid.

The exhaust-treated fabric is padded with the chemicals for padding process at room temperature with a 65% pick up. It is then dried at 120 °C followed by curing at 180 °C for 2 minutes.

Example 18: Disinfecting textile for application in diapers for incontinence

First, select a textile material comprising of 100% cotton or 100% viscose or a blend of cotton and polyester or a blend of viscose and polyester.

Spray technique is used for application.

Chemicals used: 0.2 gm/lit silver chloride in aluminosilicate carrier base, 5 gm/lit polyhexamethylene biguanide, 10 gm/lit propiconazole, and 0.03% citric acid for adjusting pH-value between 5 and 6.

All the chemicals are dissolved in water and fed into the drum of a spray gun. The textile material is then sprayed at room temperature. Following this, the material is dried with a hot air gun at 180 °C for 2 minutes.

Example 19: Disinfecting textile for application in air filtration systems

First, select a textile material comprising of 100% polyester or 100% acrylic, or 100% polypropylene non-woven HEPA filters.

Spray technique is used for application.

Chemicals used: 2 gm/lit octadecylaminomethyl trihydroxysilylpropyl ammonium chloride, 0.2 gm/lit silver chloride in aluminosilicate carrier base, 10 gm/lit propiconazole, and 0.03% citric acid for adjusting pH-value between 5 and 6.

All the chemicals are dissolved in water and fed into the drum of a spray gun. The textile material is then sprayed at room temperature. Following this, the material is dried with a hot air gun at 180 °C for 2 minutes.

Example 20: Disinfecting textile for application in bandages

First, select a textile material comprising of 100% cotton or 100% polyester.

Exhaust process is applied.

Chemicals used for exhaust processing: 0.5% octadecylaminomethyl trihydroxysilylpropyl ammonium chloride, 0.2% silver chloride in aluminosilicate carrier base, 2% polyhexamethylene biguanide, 2% propiconazole, and 0.03% citric acid for adjusting pH-value between 5 and 6.

The textile materials are loaded in a jigger machine and water is added to maintain the material to liquor ratio (MLR) at 1:3 (that is to say that for 100 kg textile there will be 300 liters of water). The above-mentioned chemicals used for exhaust processing are added one by one and the jigger machine is started.

The temperature is raised up to 80 °C and the run is continued for the next 30 minutes. Following this, the process bath is drained, the textile material is taken out and dried on stenter at 120 °C for 2 minutes.

Example 21: Disinfecting textile for application in bathroom curtains, towels and foot rugs

First, select a textile material comprising of 100% cotton or a blend of cotton and polyester.

Exhaust process is applied.

Chemicals used: 0.2% silver chloride in aluminosilicate carrier base, 2% polyhexamethylene biguanide, 4% propiconazole, and 0.03% citric acid for adjusting pH-value between 5 and 6.

The textile material is loaded in a drum washer and water is added to maintain the material to liquor ratio (MLR) at 1:2 (that is to say that for 40 kg textile there will be 80 liters of water), The above-mentioned chemicals are added one by one and then the drum washer rotations are commenced. The temperature is raised up to 80 °C and the washer run is continued for next 30 minutes.

After 30 minutes, the process bath is drained, and the textile material is removed. Following this, hydro-extraction is done for 5 minutes to squeeze out excess liquor from the textile. Lastly, the textile is tumble dried in a hot air tumble dryer for 10 minutes at 180 °C.

Example 22: Disinfecting textile for application in office supplies such as tabletops

First, select a textile material comprising of 100% cotton or 100% polyester or a blend of cotton and polyester or 100% silk or 100% wool.

Spray technique is used for application.

Chemicals used: 2 gm/lit octadecylaminomethyl trihydroxysilylpropyl ammonium chloride 0.2 gm/lit silver chloride in aluminosilicate carrier base, 5 gm/lit polyhexamethylene biguanide, 5 gm/lit polyhexamethylene biguanide, and 0.03% citric acid for adjusting pH-value between 5 and 6.

All the chemicals are dissolved in water and fed into the drum of a spray gun. The textile material is then sprayed at room temperature. Following this, the material is dried with a hot air gun at 180 °C for 2 minutes.

Example 23: Disinfecting textile for application in car interiors

First, select a textile material comprising of 100% polyester or 100% nylon or blends acrylic and nylon or blends of acrylic and polyester.

Spray technique is used for application.

Chemicals used: 2 gm/lit octadecylaminomethyl trihydroxysilylpropyl ammonium chloride 0.2 gm/lit silver chloride in aluminosilicate carrier base, 10 gm/lit polyhexamethylene biguanide, and 0.03% citric acid for adjusting pH-value between 5 and 6.

All the chemicals are dissolved in water and fed into the drum of a spray gun. The textile material is then sprayed at room temperature. Following this, the material is dried with a hot air gun at 180 °C for 2 minutes.

Example 24: Disinfecting textile for application in architectural fabrics like tents and awnings

First, select a textile material comprising of 100% polyester or a blend of cotton and polyester or 100% nylon or a blend of nylon and polyester.
Spray technique is used for application.
Chemicals used: 2 gm/lit octadecylaminomethyl trihydroxysilylpropyl ammonium chloride 0.2 gm/lit silver chloride in aluminosilicate carrier base, 10 gm/lit polyhexamethylene biguanide, and 0.03% citric acid for adjusting pH-value between 5 and 6.
All the chemicals are dissolved in water and fed into the drum of a spray gun. The textile material is then sprayed at room temperature. Following this, the material is dried with a hot air gun at 180 °C for 2 minutes.

Example 25: Disinfecting textiles for application in fitness mats, boxing gloves and other fitness gear

First, select a textile material comprising of 100% nylon or 100% polyester or a blend of polyester and nylon.
Spray technique is used for application.
Chemicals used: 2 gm/lit octadecylaminomethyl trihydroxysilylpropyl ammonium chloride 0.2 gm/lit silver chloride in aluminosilicate carrier base, 10 gm/lit polyhexamethylene biguanide, and 0.03% citric acid for adjusting pH-value between 5 and 6.
All the chemicals are dissolved in water and fed into the drum of a spray gun. The textile material is then sprayed at room temperature. Following this, the material is dried with a hot air gun at 180 °C for 2 minutes.

Further experiments regarding antimicrobial properties of the textile material according to the invention

The following is a description of tests for antimicrobial properties of the textile material according to the invention which have been conducted by the inventors. It should be noted that some these tests were made at an earlier stage of refinement of the present invention, and by today, the manufacturing processes and selection of antimicrobial agents have been further optimized so that even better test results can be achieved using the preferred manufacturing processes and preferred starting textiles and antimicrobial agents as described above.
Antibacterial activity tested according to standard test methods "ASTM E 2149-10" and "AATCC test method 100-1999"
The antibacterial activity of the textile according to the invention was tested using the standard test method "ASTM E2149-10" and Staphylococcus aureus ATCC 43300 and Pseudomonas aeruginosa ATCC 15442 as bacteria, respectively. The textile material for testing was a fabric of 65% polyester / 35% cotton, with 210 g/m$^2$. The fabric was treated with the following active ingredients: polyhexamethylenebiguanide (PHMB) 0.5%, silver chloride 0.075%, octadecylaminomethyl trihydroxysilylpropyl ammonium chloride (organosilane) 0.4%, and propiconazole 0.5% during the exhaustion process and PHMB 7 grams per liter (gpl), silver chloride 0.75 gpl, octadecylaminomethyl trihydroxysilylpropyl ammonium chloride (organosilane) 4 gpl and propiconazole 5 gpl during the padding process, respectively. Prior to testing, the treated textile material was washed for 25 times according to the standard industrial washing protocol, i.e. the textile material was washed in a laundry washing machine at 85$\pm$15 °C using brand name non-antimicrobial, non-ionic and non-chlorine containing laundry detergent followed by a standard rinse cycle and dried at 62-96 °C for a period of 20-30 minutes.
The results of the test are reproduced below.

| Active Ingredient | Application Process | Organism | Percentage Bacterial reduction | | | % Bacteria kill |
|---|---|---|---|---|---|---|
| | | | Inoculum log after | | Log Reduction | |
| PHMB 15 gpl Silver 1.5 gpl Organosilane 8 gpl Propiconozole10 gpl | **Pad only,** Pad at room temperature and then cure at 180°C for 2 min. | Staphylococcu s aureus ATCC 43300 (Initial log inoculum 7.38) | 15 mins. | 6,08 | 1,30 | 95,00 |
| | | | 30 mins. | 5,02 | 2,36 | 99,56 |
| | | | 1hr. | 4,95 | 2,43 | 99,63 |
| | | | 6hr. | 4,90 | 2,48 | 99,67 |
| | | | | | | |
| PHMB1% Silver 0.15% Organosilane 0.8% Propiconozole1% | **Exhaust only.** Treat at 80°C for 1 hr. | Staphylococcu s aureus ATCC 43300 (Initial log inoculum 7.38) | 15 mins. | 5,20 | 2,18 | 99,34 |
| | | | 30 mins. | 5,15 | 2,23 | 99,42 |
| | | | 1hr. | 5,04 | 2,34 | 99,54 |
| | | | 6hr. | 4,54 | 2,84 | 99,85 |
| | | | | | | |
| PHMB 0.5% , Silver 0.075% Organosilane 0.4% Propiconozole 0.5% PHMB 7 gpl,Silver 0.75 gpl Organosilane 4 gpl Propiconozole 5 gpl | Exhaust Plus pad | Staphylococcus aureus ATCC 43300 (Initial log inoculum 7.38) | 15 mins. | 4,95 | 2,43 | 99,650 |
| | | | 30 mins. | 3,70 | 3,68 | 99,920 |
| | | | 1hr. | 3,63 | 3,75 | 99,940 |
| | | | 6hr. | 3,18 | 4,20 | 99,997 |
| | | | | | | |
| Untreated | Exhuast Plus pad | Staphylococcu s aureus ATCC 43300 (Initial log inoculum 7.38) | 15 mins. | 7,38 | 0 | 0 |
| | | | 30 mins. | 7,38 | 0 | 0 |
| | | | 1hr. | 7,38 | | 0 |
| | | | 6hr. | 7,38 | 0 | 0 |

(continued)

| Active Ingredient | Application Process | Organism | Percentage Bacterial reduction | | | % Bacteria kill |
|---|---|---|---|---|---|---|
| | | | Inoculum log after | | Log Reduction | |
| PHMB 15 gpl | **Pad only,** Pad at room temperature and then cure at 180°C for 2 min. | Pseudomonas aeruginosa ATCC15442 (Initial log inoculum 7.54) | 15 mins. | 5,27 | 2,27 | 9,947 |
| Silver 1.5 gpl | | | 30 mins. | 5,22 | 2,32 | 99,52 |
| Organosilane 8 gpl | | | 1hr. | 5,19 | 2,35 | 99,56 |
| Propiconozole 10 gpl | | | 6hr. | 4,95 | 2,59 | 99,74 |
| | | | | | | |
| PHMB 1% | **Exhaust only.** Treat at 80°C for 1 hr. | Pseudomonas aeruginosa ATCC 15442 (Initial log inoculum7.54) | 15 mins. | 5,20 | 2,34 | 99,54 |
| Silver 0.15% | | | 30 mins. | 5,16 | 2,38 | 99,57 |
| Organosilane 0.8% | | | 1hr. | 5,13 | 2,41 | 99,62 |
| Propiconozole 1% | | | 6hr. | 4,81 | 2,73 | 99,81 |
| | | | | | | |
| PHMB 0.5% , Silver 0.075% | Exhaust Plus pad | Pseudomonas aeruginosa ATCC 15442 (Initial log inoculum 7.54) | 15 mins. | 4,35 | 3,19 | 99,907 |
| Organosilane 0.4% | | | 30 mins. | 4,10 | 3,44 | 99,914 |
| Propiconozole 0.5% | | | 1hr. | 3,90 | 3,64 | 99,957 |
| PHMB7 gpl,Silver 0.75 gpl Organosilane 4gpl Propiconozole5 gpl | | | 6hr. | 3,50 | 4,04 | 99,991 |
| | | | | | | |
| Untreated | Exhuast Plus pad | Pseudomonas aeruginosa ATCC 15442 (Initial log inoculum 7.54) | 15 mins. | 7,54 | 0 | 0 |
| | | | 30 mins. | 7,54 | 0 | 0 |
| | | | 1hr. | 7,54 | 0 | 0 |
| | | | 6hr. | 7,54 | 0 | 0 |

As can be seen from the above data, the antibacterial effect under "ASTM E2149-10" test conditions ranged in a bacterial reduction from Log 1.3 to 2.48 for Staphylococcus aureus ATCC 43300 and 2.27 to 2.59 for Pseudomonas Aeruginosa ATCC 15442 for padded fabric, from Log 2.18 to 2.84 for Staphylococcus aureus ATCC 43300 and 2.34 to 2.73 for Pseudomonas Aeruginosa ATCC 15442 for exhausted fabric, and from Log 2.43 to 4.2 for Staphylococcus aureus ATCC 43300, and 3.19 to 4.04 for Pseudomonas Aeruginosa ATCC 15442 for a fabric which was exhausted

and padded. Untreated fabric, i.e. fabric which was exhausted and padded but not treated with active ingredients, did not show an antibacterial effect.

Tests of an improved antimicrobial textile material manufactured at a later stage of refinement of the manufacturing process according to the invention, wherein the fabric was treated with polyhexamethylenebiguanide (PHMB) 0.5%, silver chloride 0.075%, octadecylaminomethyl trihydroxysilylpropyl ammonium chloride (organosilane) 0.4%, and propiconazole 0.5% showed the following results tested using the standard test method "ASTM E2149-01" and Staphylococcus aureus ATCC 6538 and Klebsiella pneumoniae ATCC 4352 as bacteria, respectively.

Staphylococcus aureus ATCC 6538

| Contact time | PES control material [cfu/ml] | treated fabric [cfu/ml] | treated fabric Reduction value [%] | treated fabric Reduction value [$log_{10}$ (cfu/ml)] |
|---|---|---|---|---|
| 0 min | $2,46x10^5$ | $2,40x10^5$ | - | - |
| 5 min | $2,80x10^5$ | 0 | 100 | >5,45 |
| 15 min | $2,82x10^5$ | 0 | 100 | >5,45 |
| 1 h | $6,36x10^5$ | 0 | 100 | >5,80 |
| 6 h | $1,29x10^6$ | 0 | 100 | >6,11 |

Klebsiella pneumoniae ATCC 4352

| Contact time | PES control material [cfu/ml] | treated fabric [cfu/ml] | treated fabric Reduction value [%] | treated fabric Reduction value [$log_{10}$ (cfu/ml)] |
|---|---|---|---|---|
| 0 min | $3,23x10^5$ | $2,30x10^5$ | - | - |
| 5 min | $8,66x10^5$ | $1,76x10^4$ | 97,96 | 1,69 |
| 15 min | $2,41x10^5$ | 0 | 100 | >5,38 |
| 1 h | $1,12x10^5$ | 0 | 100 | >5,05 |
| 6 h | $8,62x10^6$ | 0 | 100 | >6,94 |

The experiments show that the treated fabric had superior antibacterial properties already after 5 minutes of incubating the bacterial suspension with the treated fabric. For Staphylococcus aureus ATCC 6538, the antibacterial activity was already Log 5.45 after 5 minutes, reaching almost Log 6 after 1 hour, and for Klebsiella pneumoniae ATCC 4352, the antibacterial activity was Log 5.38 after 15 minutes, reaches Log 5.05 after 1 hour, and even Log 6.94 after 6 hours.

Experiments testing the fabrics in accordance with "AATCC test method 100-1999" lead to similar results and Log reduction values.

Antibacterial activity tested according to water filtration use case scenario

The sample used was a sample manufactured according to Example 1 above. The test was conducted as follows. Test organism was inoculated in sterile distilled water, and this suspension was passed through the above mentioned water filter, at a flow rate of 17 ml. per minute. Sampling of pure water sample was done from outlet of water filter after passing two liters of water. Viable counts of organism in the suspension were determined both before, and after, passing it through the filter. This procedure was repeated for all bacterial species employed in the test.

Flow rate at which the filter was tested: 17 ml per minute

The following test results were obtained.

Test on reduction / retention of bacteria (viable count of bacteria in filtered water and as well as in feed water

was done by pour plate method:

| Test organism | Viable count of bacteria per ml. of water sample by * Pour plate method | |
|---|---|---|
| | Before passing water through the filter (feed water) | After passing water through the filter (treated water) |
| Escherichia coli (ATCC 10148) | 2.0 X $10^6$ | Nil |
| Salmonella typhi (NCTC 786) | 2.0 X $10^6$ | Nil |
| Shigella flexneri (Clinical isolate) | 2.0 X $10^6$ | Nil |
| Vibrio cholera (Clinical isolate) | 2.0 X $10^6$ | Nil |
| Enterococcus faecalis (ATCC 29213) | 2.0 X $10^6$ | Nil |

Antibacterial activity tested according to test method "EPA protocol 90072PA4" ("modified AATCC test method 100-1999")

Since the textile materials treated according to the present invention exhibit at the same time a very high antibacterial activity and very low leaching of the antimicrobial agents, a whole new class of applications for textiles with antimicrobial properties will be possible. These applications will require certification and labelling. For this purpose a new test protocol based on "AATCC test method 100-1999" was set-up together with the United States Environmental Protection Agency (EPA). This protocol, which with the code 90072PA4 is outlined in the following:

BRIEF DESCRIPTION OF THE PROTOCOL

Note: During the course of the protocol review, the version of the protocol with MRID 493059-01 have be replaced with the latest version with MRID 493581-01 (Version 11, dated April 09, 2014). The following is the review of MRID 493581-01.

Title:

Healthprotex, LLC Protocol for Evaluating the Antimicrobial Efficacy of Textiles - Test Method for Evaluating the Antimicrobial Efficacy Textiles

Purpose:

The purpose of this study is to document the efficacy of the test substance against the test system (microorganisms) under the test parameters specified in this protocol. Active Ingredient Concentration: Bioshield 7200 (Reg. 53053-5) 1.0%, Silverdur ET (Reg. 707-313) 0.2%, Propiconazole (Reg. 83529-31) 0.5%, Citric Acid (Unregistered Active) 0.2%.

Method Reference:

MTCC 100-2012 (Antibacterial Finishes: Assessment of)

Note: This protocol describes a modified version of the aforementioned test method

Test System (Microorganism):

Staphylococcus aureus ATCC 6538
Escherichia coli ATCC 11229
Pseudomonas aeruginosa ATCC 15442
Salmonella enterica ATCC 10708
Staphylococcus aureus (MRSA) ATCC 33592
Study Parameters, Incorporated by Reference

Non-Continuous Reduction Parameters:

| | |
|---|---|
| Efficacy "Contact" Time: | ≤ 2 Hours |
| Unlaundered Control Textile Replicates: | 3 per test microorganism |
| Laundered Control Textile Replicates: | 3 per test microorganism |
| Unlaundered Treated Textile Replicates: | 3 per test microorganism/Lot |
| Laundered Treated Textile Replicates: | 3 per test microorganism/Lot |

Non-Continuous Reduction Parameters (All Laundered):

| | |
|---|---|
| Efficacy "Contact" Time: | ≤ 2 Hours |
| Abraded Control Textile Replicates: | 3 per test microorganism |
| Non-Abraded Control Textile Replicates: | 2 per test microorganism |
| Abraded Treated Textile Replicates: | 3 per test microorganism/Lot |

Procedure:

Laundering, Environmental Stressing and Re-inoculation of Treated and Control Textiles

- A sufficient amount of each uncut treated and control textile is washed in a laundry washing machine at 85±15 °C using brand name non-antimicrobial, non-ionic and non-chlorine containing laundry detergent followed by a standard rinse cycle and dried at 62-96 °C for a period of 20-30 minutes.
- Laundered samples are placed in a 36 ± 2 °C incubator with a relative humidity of 85- 100% for 2 hours (± 10 minutes) followed by exposure to UV by placing in a Class II biological safety hood for 15 ± 2 minutes at 20-25 °C with UV light on (treated and control fabric are laid flat to fully expose the fabric).
- After UV exposure, each carrier (treated and control) is inoculated with 0.100ml of re-inoculation culture to yield ≥1x104 CFU/Carrier, and allowed to sit undisturbed for 15±5 minutes at room temperature, at which time the next laundering cycle is initiated.
- See Preparation of Re-inoculation Culture Inoculum for details of re-inoculation culture preparation.
- The 25th cycle will not contain laundry detergent for the purpose of removing residual detergent from previous cycles and in preparation for efficacy testing, but will receive the heat, UV and re-inoculation mentioned above. Abrasion and Re-inoculation
- Treated and Control Carriers undergo a wear and re-inoculation regimen. A series of 12 abrasions and 11 reinoculations are performed and according to the table below. All abrasions and reinoculations are to be completed prior to the final efficacy evaluation test performed at least 24 hours after initial inoculation but not to exceed 48 hours. This step is performed at room temperature. The table below summarizes the manipulations of all carriers in the study.
- Abrasions are conducted between 45-55% relative humidity (RH). Temperature and room humidity measurements are taken and recorded periodically throughout the abrasion process.
- The weight of the fully assembled abrasion boats are recorded prior to initiation of the wear and re-inoculation regimen and must equal 1084 ± 1.0g.
- The abrasion tester is set to a speed of 2.25 to 2.5 for a total surface contact time of approximately 4-5 seconds, for one complete abrasion cycle.
- Each abrasion cycle in this test equals a total of 4 passes (e.g. left to right, right to left, left to right, and right to left).
- All surfaces in contact with carriers on the Gardner apparatus are decontaminated with absolute ethanol and allowed to dry completely between each set of surface wears to prevent carry over contamination.
- The foam liner and cotton cloths on the abrasion tester are replaced between each set of surface wears.
- After each complete set of abrasions are conducted (all control and test carriers abraded), the carriers are allowed to sit at least 15 minutes prior to being re-inoculated.
- The carriers are re-inoculated with 0.100 ml of the re-inoculation culture via spot inoculation, taking care to stay within 3mm of the edge of the test carrier and allowed to dry at ambient temperature for 10-20 minutes or until completely dry prior to initiation of the next set of abrasions.
- Cotton cloths used as part of wet abrasions are prepared individually prior to each wet abrasion cycle by spraying

the cloth with sterile RO water using a sanitized Preval sprayer, from a distance of 75±1cm for no more than 1 second and used immediately.

| Hours | Minimum CFU/Carrier | Abrasion/Re-inoculation Procedure |
|---|---|---|
| 0 | ≥ $1x10^6$ | Inoculation of All Carriers with initial inoculation culture |
| | | Test/Control Substance application and drying |
| 1-48 | ≥ $1x10^4$ | Dry Abrasion (wear #1) |
| | | Re-inoculation (1)* |
| | | Wet Abrasion (wear #2) |
| | | Re-inoculation (2)* |
| | | Dry Abrasion (wear #3) |
| | | Re-inoculation (3)* |
| | | Wet Abrasion (wear #4) |
| | | Re-inoculation (4)* |
| | | Dry Abrasion (wear #5) |
| | | Re-inoculation (5)* |
| | | Wet Abrasion (wear #6) |
| | | Re-inoculation (6)* |
| | | Dry Abrasion (wear #7) |
| | | Re-inoculation (7)* |
| | | Wet Abrasion (wear #8) |
| | | Re-inoculation (8)* |
| | | Dry Abrasion (wear #9) |
| | | Re-inoculation (9)* |
| | | Wet Abrasion (wear #10) |
| | | Re-inoculation (10)* |
| | | Dry Abrasion (wear #11) |
| | | Re-inoculation (11)* |
| | | Wet Abrasions (wear #12) |
| ≤48 | ≥ $1x10^6$ | Efficacy Test |

Success Criteria:

- The experimental success (controls) criteria follow for Initial Reduction (Non-Continuous Claim):

    1. All media sterility controls must be negative for growth.
    2. Carrier contamination control must demonstrate negligible contamination.
    3. The media growth control must be positive for growth.
    4. All test microorganisms must demonstrate culture purity.
    5. Neutralization is validated as described previously.
    6. Soil sterility control is negative for growth.
    7. Re-inoculation Culture enumerations demonstrate ≥ 1 x $10^4$ CFU/carrier.

8. Initial Numbers Control enumeration demonstrates ≥ 1 x $10^6$ CFU/carrier.
9. Final (post contact time) Control Carrier count enumeration results demonstrate ≥ 1 x $10^6$ CFU/carrier.

- The experimental success (controls) criteria follow for Continuous Reduction:

1. All media sterility controls must be negative for growth.
2. Carrier contamination control must demonstrate negligible contamination.
3. The media growth control must be positive for growth.
4. All test microorganisms must demonstrate culture purity.
5. Neutralization is validated as described.
6. Soil sterility control is negative for growth.
7. Initial inoculation control carriers must demonstrate an average ≥ 1 x $10^6$ CFU/carrier for a valid test.
8. Re-inoculation control carriers must demonstrate an average ≥1 x $10^4$ CFU/carrier for a valid test.
9. Final efficacy control carriers must demonstrate an average ≥ 1 x $10^6$ CFU/carrier for a valid test.

- Test substance performance criteria

1. The results must show a bacterial reduction of at least 99.9% for treated carriers (laundered and unlaundered) and when compared to the parallel untreated control.

CONCLUSION AND COMMENTS

1. The submitted protocol (MRID 493581-01) is adequate for testing bacterial reduction property of the surface of Treated Fabric with LivingGuard Technology.
2. The testing methods for these claims are new and evolving. Any presently accepted protocol and/or label is subject to future changes.
3. It is a reminder that product must be tested at the lower certified limit proposed on the CSF (Or minimally acceptable percentage of woven material).
4. Tests must be conducted using the worst case scenario (i.e., testing at or near the lowest possible percentage of active ingredient(s) per total textile composition with the least and the most binding blend of textile). Percentage of active ingredient(s) per total textile composition must be determined. Textile types and/or blends must be specified and fabrics listed.
5. The potential variability in the method must be addressed prior to data generation. The Agency encourages the testing laboratory to assess the degree and sources of variability introduced by any significant method modification - this information should be supplied to the Agency prior to GLP testing. For example, preliminary runs of the study should be performed to determine the degree of variability associated with control and treated carriers; the number of carriers should be increased if the variability is too high.
6. Identify and use the most recent versions of all standard methods cited in the protocol. Specify the broth media for generating test cultures and the plating medium for recovery of each test microbe [Use the AOAC Use-dilution method for preparation of cultures of Pseudomonas aeruginosa (ATCC 15442), Salmonella enterica (ATCC 10708), or Staphylococcus aureus (ATCC 6538).]
7. The study controls must perform according to the criteria detailed in the protocol. If any of the control acceptance criteria are not met, the test may be repeated.
8. Provide a list of any deviation or modification to a standard method.

LABEL

1. All sanitization claims must be removed unless tested materials demonstrate a minimum of 3.0 Log10 reduction in less or equal 5 minutes contact time.
2. Claims are made for HBI's that are not defined. In addition, claims for "Preventing any cross contamination to patients or anyone that comes in contact to garment" are not acceptable.
3. Bacterial Reduction Claims are limited to regularly washable antimicrobial treated fabric textile. Registrant must clearly indicate on fabrics labels (including Sew-in Label) that microbial effectiveness is not guaranteed if not washed just after or before the demonstrated continuous reduction efficacy time.

4. Claims for fungi (mold and mildew) and algae must be removed from the label unless data are generated and submitted.
5. Bacteriostatic property of treated fabrics must be demonstrated in order to have that claim.
6. When claiming percentage residual bacterial reduction, always add time necessary to achieve that percentage.
7. Percentage of reduction, contact time, number of washes, multiple exposure time and reduction percentage, warning on any laundering detergent that may affect effectiveness of fabric (if applicable), must be clearly indicated on "Label" and "Sew-in Label". Fabric Sew-in Label must be submitted for review.
8. The following language is required on the registered products, the use of antimicrobial treated textile is a supplement to and not a substitute for standard infection control practices; user must continue to follow all current infection control practices, including regular washes and good hygiene practices. Textile materials were tested; not in fabric form. Antimicrobial treated textile has been shown to reduce microbial contamination, but does not necessarily prevent cross contamination.

END OF PROTOCOL

According to said new EPA 90072PA4 protocol, the antimicrobial textile material according to the invention was tested. A fabric of 65% polyester / 35% cotton, with 210 g/m$^2$ was treated with the following active ingredients:

polyhexamethylenebiguanide (PHMB) 0.5%, silver chloride 0.075%,

octadecylaminomethyl trihydroxysilylpropyl ammonium chloride (organosilane) 0.4%, and propiconazole 0.5%, followed by 25 standard industrial washes as defined above for the antibacterial activity tests.

The test organism used was Staphylococcus aureus ATCC 6538 (3.20 x 107 CFU/ml).

| | |
|---|---|
| 1 Sample size: | 1 inch x 4 Inches in triplicates |
| 2. Pre-treatment of test sample: | Exposure to UV light for 15 minutes |
| 3. Pre-treatment of control sample: | Free steaming |
| 4. Number of abrassions: | 12 |
| 5. Number of reinoculations: | 11 |
| 6. Inoculum center: | Phosphate buffered water containing Triton X-100 0.1% (v/v) and bovine serum albumin 5% (v/v) |
| 7. Neutralizer: | Leetheen Broth. |

Summary of test Procedure:

Control and test pieces of samples measuring 1 inch x 4 inches were wrapped on sterile glass slide and placed in petriplates with humidity control. The test organism with density $10^7$ was further diluted to $10^5$ CFU/ml in phosphate buffered saline containing 0.1% Triton X-100 and 5% bovine serum albumin. This was used as inoculums for the test. Method of inoculation was spot inoculation across the length of fabric taking care that it does not spill out. Accurately 0.1ml was inoculated per pieces for treated and control fabrics. Test and control fabrics were put up in triplicates for 6 dry and 6 wet abrasion each separated at an interval of 15 minutes of intermittent drying stage. A set of three control fabrics were terminated by adding neutralizer and subjected to pour plate technique to determine CFU/carrier. This value served as inoculums control. After inoculation, samples were subjected to mechanical abrasion by placing approximately 1 kg weight and moving it to and from four times. This was carried out on control and test fabric in parallel at room temperature with 50% humidity. After each abrasion, the incubation of test piece was terminated by adding 20ml neutralizer - Leetheen broth containing glass beads. It was subjected to vortexing and plated to determine the surviving test bacteria CFU/carrier. Adequate neutralizer validation was also carried out.

Inoculum density

| Sample Identification | Test Organism: Staphylococcus aureus |
|---|---|
| | CFU/carrier/set |
| Test Inoculum in neutralizer | $2.90 \times 10^6$ |
| | $3.00 \times 10^6$ |
| | $2.90 \times 10^6$ |
| Control sample 65% Polyester + 35% cotton, untreated | $2.50 \times 10^6$ |
| | $2.80 \times 10^6$ |
| | $2.70 \times 10^6$ |

Results: Fabric pieces in contact with bacteria suspension in inoculation, abrasion cycle shows

| Sample Identification | Test organism Staph. Aureus | Bacteria reduction percentage (A-B/A x 100) |
|---|---|---|
| | CFU/carrier | |
| Sample A: Initial Count | $1.97 \times 10^6$ | - |
| Control fabric - Initial | $2.5 \times 10^6$ | - |
| Sample A: Dry abrasion -1: 5 minutes | < 10 | >99.999 |
| Control fabric: Dry abrasion -1: 5 minutes | $2.09 \times 10^6$ | - |
| Sample A: Wet abrasion -2: 5 minutes | < 10 | >99.999 |
| Control fabric: Wet abrasion -2: 5 minutes | $2.34 \times 10^6$ | - |
| Sample A: Dry abrasion -3: 5 minutes | < 10 | >99.999 |
| Control fabric: Dry abrasion -3: 5 minutes | $1.93 \times 10^6$ | - |
| Sample A: Wet abrasion -4: 5 minutes | < 10 | >99.999 |
| Control fabric: Wet abrasion -4: 5 minutes | $1.46 \times 10^6$ | - |
| Sample A: Dry abrasion -5: 5 minutes | < 10 | >99.999 |
| Control fabric: Dry abrasion -5: 5 minutes | $2.04 \times 10^6$ | - |
| Sample A: Wet abrasion -6: 5 minutes | < 10 | >99.999 |
| Control fabric: Wet abrasion -6: 5 minutes | $1.72 \times 10^6$ | - |
| Sample A: Dry abrasion -7: 5 minutes | < 10 | >99.999 |
| Control fabric: Dry abrasion -7: 5 minutes | $1.23 \times 10^6$ | - |
| Sample A: Wet abrasion -8: 5 minutes | < 10 | >99.999 |
| Control fabric: Wet abrasion -8: 5 minutes | $1.64X 10^6$ | - |
| Sample A: Dry abrasion -9: 5 minutes | < 10 | >99.999 |
| Control fabric: Dry abrasion -9: 5 minutes | $2.04 \times 10^6$ | - |
| Sample A: Wet abrasion -10: 5 minutes | < 10 | >99.999 |
| Control fabric: Wet abrasion -10: 5 minutes | $1.58 \times 10^6$ | - |
| Sample A: Dry abrasion -11: 5 minutes | < 10 | >99.999 |
| Control fabric: Dry abrasion -11: 5 minutes | $2.38 \times 10^6$ | - |
| Sample A: Wet abrasion -12: 5 minutes | < 10 | >99.999 |
| Control fabric: Wet abrasion -12: 5 minutes | $2.45 \times 10^6$ | - |
| Sample A: Dry abrasion - 24 hours: 5 minutes | < 10 | >99.999 |

(continued)

| Sample Identification | Test organism Staph. Aureus | Bacteria reduction percentage (A-B/A x 100) |
|---|---|---|
| | CFU/carrier | |
| Control fabric: Dry abrasion - 24 hours: 5 minutes | $3.01 \times 10^{6}$ | - |

$$\text{Percentage reduction} = \text{A-B/A} \times 100$$

A; Geometric Mean of bacterial survived an inoculated control carrier

B; Geometric Mean of bacterial survived an inoculated test carrier

The test fabric according to the invention was made from 65% polyester / 35% cotton, with 210 g/$m^2$ and was treated with the following active ingredients: silver chloride 0.075%, octadecylaminomethyl trihydroxysilylpropyl ammonium chloride

(organosilane) 0.4%, and propiconazole 0.5%, followed by 25 standard industrial washes as per the EPA 90072PA4 protocol.

The treated test fabric shows >99.999% (= Log5) bacterial reduction in 5 minutes towards organism Staphylococcus aureus on continuous reinoculation followed by dry and wet alternate abrasion cycles when tested according to EPA 90072PA4 protocol.

This demonstrates how good the active ingredients are incorporated into the fabric and how persistent the antibacterial activity of the textile material according to the invention is.

Antiviral activity tested according to modified "AATCC test method 30-2013"

The antiviral activity of the textile material according to the invention was tested following modified standard test method "AATCC test method 30-2013". While this protocol is designed to test for the resistance, i.e. non-penetration, of a material used in protective clothing to bacteriophage Phi-X174, the protocol was adapted to measure the antiviral activity of a fabric while the bacteriophage Phi-X174 suspension passes the fabric.

Specifically, the protocol was followed exactly as prescribed, however, the tested material, a control or treated fabric was permeable for the suspension and the filtered, collected suspension having passed the fabric was tested for remaining bacteriophage.

In detail:

Test fabric: The test fabric was made of 65% polyester / 35% cotton, with 210 g/$m^2$ and was treated with the following active ingredients: polyhexamethylenebiguanide (PHMB) 0.5%, silver chloride 0.075%, octadecylaminomethyl trihydroxysilylpropyl ammonium chloride (organosilane) 0.4%, and propiconazole 0.5.
Control fabric: Untreated test fabric made of 65% polyester / 35% cotton, with 210 g/$m^2$.
Challenge reagent: Phi-X174 Bacteriophage $1.23 \times 10^{8}$ PFU/ml (plaque forming unit/milliliter)

Preparation of bacteriophage challenge suspension:

1) Bacteriophage nutrient broth prepared by using nutrient broth of 8 g, potassium chloride 5 g, calcium chloride 0.2 g and 0.01% surfactant in 1 lit of purified water. It is adjusted to pH of 7.2 and final sterilized in autoclave.
2) 70 mm x 70 mm square of test fabric cut and placed in the test cell with PTFE gasket at flange leaving the center 57 mm area open for testing. Similarly done for control fabric sample for test validation.
3) Bacteriophage challenge suspension prepared by using 25 ml of bacteriophage nutrient broth in 250 ml flask with with E. coli C and incubated for overnight at 37 °C with continuous shaking.
4) Prepared 1:100 dilution of overnight bacterial culture in 100 ml fresh bacteriophage nutrient broth in 1 liter of flask. Incubated the flask at 37 °C with continuous shaking till culture up to density of $1.3 \times 10^{8}$ achieved.
5) Inoculated the above bacterial culture with 10 ml of Phi-X174 bacteriophage stock of titer of $1 \times 10^{9}$ PFU/ml. The ratio of bacteriophage to bacterial cells adjusted to 1.2
6) Above culture centrifuged to remove large cell and decanted the supernatant into clean tube.
7) Filtered the above bacteriophage supernatant through 0.22 $\mu$m filter and the obtained phage was of $4 \times 10^{10}$ PFU/ml as stock for experiment.

8) Diluted the stock solution with bacteriophage nutrient broth in concentration of 1.23x $10^8$ PFU/ml.

Test procedure:

Filled the top port of the penetration cell chamber with 60 ml of Phi-X174 bacteriophage challenge suspension and applied 13.8 kPa (= 138 mbar) air pressure for 1 min and the filtered suspension from the bottom part of penetration cell collected by opening drain valve and neutralized and used for Enumeration of Escherichia coli by standard method and then tested for plagues presences. Adequate Neutralization validation was also carried out.

Test results:

| Sample | Phi-X174 bacteriophage, PFU/ml | | Log reduction of Phi-X174 bacteriophage, PFU/ml |
|---|---|---|---|
| | Before penetration | After penetration | |
| Treated fabric | 1.23 x $10^8$ | < 10 | >7.35 |
| Control/Untreated fabric | 1.23 x $10^8$ | 1.23 x $10^8$ | Nil |

Conclusion:

The treated fabric shows more than 7 log reduction towards bacteriophage Phi-X174. The experiment demonstrates the excellent antiviral activity of the textile material according to the invention.

Antifungal activity tested according to "AATCC test method 30-2013"

The antifungal activity of the textile material according to the invention was tested following standard test method "AATCC test method 30-2013" and Aspergillus Niger as test organism ("Test III" of the standard test method).

The textile material for testing was a fabric of 65% polyester / 35% cotton, with 210 g/m$^2$. The fabric was treated with the following active ingredients: polyhexamethylenebiguanide (PHMB) 0.5%, silver chloride 0.075%, octadecylaminomethyl trihydroxysilylpropyl ammonium chloride (organosilane) 0.4%, and propiconazole 0.5% during the exhaustion process and PHMB 7 grams per liter (gpl), silver chloride 0.75 gpl, octadecylaminomethyl trihydroxysilylpropyl ammonium chloride (organosilane) 4 gpl and propiconazole 5 gpl during the padding process, respectively. Prior to testing, the treated textile material was washed for 25 times as defined above for the antibacterial activity tests.

The results of the test on early stage of development textile materials are reproduced below.

| Active Ingredient | Application Process | Organism | Result |
|---|---|---|---|
| PHMB 15 gpl<br>Silver 1.5 gpl | Pad only, Pad at room | Aspergillus niger | Rating 2 |
| Organosilane 8 gpl<br>Propiconazole 10 gpl | temperature and then cure at 180°C for 2 min. | | |
| | | | |
| PHMB 1%<br>Silver 0.15%<br>Organosilane 0.8%<br>Propiconazole 1% | Exhaust only. Treat at 80°C for 1 hr. | Aspergillus niger | Rating 2 |
| | | | |
| PHMB 0.5%, Silver 0.075%<br>Organosilane 0.4%<br>Propiconazole 0.5%<br>PHMB 7 gpl,Silver 0.75 gpl<br>Organosilane 4 gpl<br>Propiconazole 5 gpl | Exhaust Plus pad | Asperglilus niger | Rating 0 |
| | | | |

(continued)

| Active Ingredient | Application Process | Organism | Result |
|---|---|---|---|
| Untreated | Exhuast Plus pad | Aspergillus niger | Rating 5 |

As can be seen from the above data, the antifungal effect under "AATCC test method 30-2013" test conditions ranges from a rating of 2 for the padded and exhausted fabric to a rating of 0 for a fabric, which was exhausted and padded. Untreated fabric, i.e. fabric which was exhausted and padded but not treated with active ingredients, does not show an antifungal effect (rating of 5).

Therefore, already the early stage of development textile materials showed good (exhausted fabric, padded fabric) to very good (exhausted and padded fabric) antifungal activity.

Experiments regarding the potential leaching of antimicrobial agents from the textile material according to the invention

To test for a potential leaching of the antimicrobial agents fixed to the textile material, the following test was performed. A test fabric of polyester 65% / cotton 35% with 210 g/$m^2$ was treated with polyhexamethylenebiguanide (PHMB) 0.5%, silver chloride 0.075%, octadecylaminomethyl trihydroxysilylpropyl ammonium chloride (organosilane) 0.4%, and propiconazole 0.5%

The treated textile material was put into distilled water at a ratio of 1:10. Specifically, a fabric of 10 grams was soaked in 100 milliliters of distilled water. The fabric was incubated in the water for 7 days at room temperature, i.e. between 21 and 25 °C.

Following said incubation time, the fabric was removed from the water and the exposed water was tested for the presence of the above five active ingredients using gas chromatography-mass spectrometry (GC-MS).

The obtained results are shown below.

| Extracted water | chitosan | PHMB | Silver chloride | Organosilane | Propiconazole |
|---|---|---|---|---|---|
| Conc, ppm | BDL | BDL | BDL | BDL | BDL |

BDL - below detection limit
Detection limit: 1 parts per million (ppm)

As can be seen directly from the above results of the experiment, no leaching of any of the active ingredients contained in the textile material according to the invention could be detected. The concentrations of all five active ingredients in the exposed water were below the detection limit of 1 ppm. This demonstrates the extreme wash durability of the antimicrobial activity of the textile material.

Device for purifying water

In the following, a device for purifying water is described by reference to figures 15 to 22.

Fig. 40 shows an exploded view of a preferred embodiment of a device for purifying water 100, having a particle filter and the antimicrobial filter. The device comprises an input container 140 having a first filter structure, i.e. an inside filter structure 130, and a second filter structure, i.e. outside filter structure 150. The first filter structure 130 protrudes inwardly of the input container 140 and is arranged on the bottom of the input container 140. The second filter structure 150 protrudes outwardly of the input container 140 and is also arranged at the bottom of the input container 140, opposite to the first filter structure 130. Preferably, the first and second filter structures 130, 150 provide threads to be threaded to the input container 140. The threads further preferably provide sealing means, to sealingly assemble the first and second filter structures 130, 150 with the input container. A coarse filter structure 120 is arranged on top of the input container 140 and can be covered with a cap 110.

Preferably, the cap 110 has a threaded region, to be threaded to the input container 140 to cover and/or to seal the inlet opening of the input container 140. Preferably, the input container 130 can be placed above a storage container 170. A supporting and/or sealing ring 160 can be arranged between the input container 140 and the storage container 170 and is preferably shaped to guide water flowing down on the outside of the surface of the input container 140 away from the upper edge of the opening of the storage container 170. The storage container 170 is adapted to store purified water that can be poured out of the storage container by means of a tap 180.

Fig. 41 shows a schematic cut view of the device for purifying water 100 according to Fig. 15, in an assembled state during use. The device 100 comprises an input container 140 having an inside filter structure 130 and an outside filter structure 150. The inside filter structure 130 protrudes inwardly of the input container 140 and is arranged on the

bottom of the input container 140. The inside filter structure 130 reaches from the bottom surface of the input container 140 to the proximity of the top of the input container. However, other embodiments are possible, in which the inside filter structure 130 reaches from the bottom surface of the input container 140 to the top of the input container 140.

The outside filter structure 150 protrudes outwardly of the input container 140 and is also arranged at the bottom of the input container 140, opposite to the first filter structure 130. The outside filter structure 150 reaches from the bottom surface of the input container 140 to the proximity of the bottom of a storage container 170. However, other embodiments are possible, in which the outside filter structure 150 reaches from the bottom surface of the input container 140 to the bottom of the storage container 170. The inside filter structure 130 and the outside filter structure 150 each form a cavity 134, 154. The one or more filters of each filter structure are arranged around the respective cavity 134, 154. The cavities 134, 154 of the filter structures 130, 150 are connected via the passage 145.

Further, a coarse filter structure 120 is arranged on top of the input container 140 and can be covered with a cap (not shown). Preferably, the input container 140 can be placed above a storage container 170. Even more preferably, the input container 140 and the storage container 170 are connected detachably. Since the inner diameter of the storage container 170 is larger than the outer diameter of the input container 140, as can be seen in Fig. 41, the input container 140 can be placed into the storage container 171 through a suitably dimensioned opening of the storage container 170, in a disassembled state of the containers (not shown). Said device 100 preferably provides a flow rate of purified water in the range of 1 to 10 liters per hour.

A supporting and/or sealing ring 160 is arranged, as shown, between the input container 140 and the storage container 170 and is preferably shaped to guide water flowing down on the outside of the surface of the input container 140 away from the upper edge of the opening of the storage container 170. The storage container 170 is adapted to store purified water that can be removed from the storage container by means of a tap 180.

In the following, an exemplary flow path of water to be purified through a device 100 is described. The arrows 10 to 17 illustrate the exemplary direction of the water flowing down the flow path. In order to purify contaminated water, the water to be purified 10 is poured into the coarse filter structure 120 arranged on the top of the input container 140. The coarse filter structure 120 comprises a cup-shaped structure 121 that receives the water to be purified 10. Subsequently, the received water 11 is filtered by a coarse filter 125 received by the coarse filter structure 120. The coarsely filtered water 12 is collected in the input container 140. The collected water 13 enters the cavity 134 of the inside filter structure 130 through the one or more filters of the inside filter structure, to be filtered. The filtered water 14 leaves the inside filter structure 130 through an opening of the inside filter structure 130 and is guided by the passage 145 through an opening of the outside filter structure 150 into the cavity 154 of the outside filter structure. The water 15 which has entered the cavity 154 leaves the outside filter structure 150 through the one or more filters of the outside filter structure 150. The water 16, which is now purified, is collected and stored in the storage container 170. The purified water 16 can be removed from the storage container 170 through the tap 180. Since the exemplarily described flow path of the water to be purified through the device 100 is driven by gravity, no electrical power is necessary.

As can be seen, the outside filter structure 150 is in contact with the stored purified water 16. If an antimicrobial fabric is provided as the outermost filter of the outside filter structure 150, a new contamination of the stored purified water 16 can be prevented, as described above. An exemplary design of the coarse filter structure 120, the inside filter structure 130 and the outside filter structure 150 is described with reference to figures 17 to 19.

Fig. 42A shows a schematic side cut view of a coarse filter structure 120, and Fig. 42B shows a top view of the coarse filter structure 120 shown in Fig. 42A. Said coarse filter structure 120 is preferably placed on the top of the input container 140, as shown in Fig. 412. The coarse filter structure 120 comprises a plane filter 125 that is held by a cup-shaped structure 121. As can best be seen in Fig. 42B, the cup-shaped structure 121 and the plane filter 125 have a circular cross section. Further, the cup-shaped structure 121 has a substantially plane bottom surface that comprises at least one through hole 122. The through hole 122 can have any suitable cross-section, such as a circular or rectangular cross-section or the like. The plane filter structure 125 is received removably by the cup-shaped structure 121, and preferably the plane filter structure 125 is washable. Even more preferably, the plane filter structure 125 is a particle filter based on non-woven fabric, having an average pore size in the range of 9 to 16 micrometers, for filtering coarse particles. Preferably, the cup-shaped structure 121 comprises a collar 123. The collar prevents the cup-shaped structure 121 from falling into the input container 140, and is able to guide water away from an upper edge of an opening of the input container 140.

Fig. 43 shows a schematic cut side view of a first filter structure that is preferably an inside filter structure 130. Said inside filter structure 130 is preferably arranged on the bottom of the input container 140 so that it protrudes inwardly of the input container 140 as shown in Fig. 2. The inside filter structure 130 comprises two or more particle filters 135, 136 having different pore sizes, wherein the particle filter with a larger pore size 135 is arranged upstream of the particle filter having a smaller pore size 136. Preferably, the filter with a larger pore size 135 is based on a non-woven fabric having preferably a pore size in the range of 7 to 13 micrometers, more preferably about 10 micrometers for initial turbidity removal. The filter having a smaller pore size 136 is preferably based on a non-woven fabric, having preferably a pore size in the range of 3 to 7 micrometers, more preferably about 5 micrometers, for removal of finer dirt particles. Further,

the inside filter structure 130 comprises an activated carbon filter 137, which is preferably formed as a solid block preferably comprising pressed granulate, for removing odor and the like. The filters 135, 136, 137 are arranged around a cavity 134 to form the filter structure 130.

The arrows 13 and 14 illustrate the exemplary direction of the flow path as illustrated in Fig. 41.During use, the water 13 passes through the filters 135, 136, 137 to enter the cavity 134. The filtered water 14 leaves the cavity 134 through the opening 133 of the filter structure 130. Preferably, the filter structure 130 has a circular cross section and forms a cylinder, thus the filters 135, 136, 137 are arranged on the curved side of the cylinder. The filter structure 130 further comprises a closed base 131 to seal one base side of the filter structure 130 and a base 132 having an opening 133.

The outermost filter 135 of the filter structure 130 is preferably a non-woven fabric filter that is preferably formed as a sleeve. As can be seen, the sleeve extends over the base structures 131, 132 of the filter structure 132 to prevent water from flowing around the sleeve 135. Preferably, the sleeve 135 is removable and washable.

Fig. 44 shows a schematic side cut view of a second filter structure that is preferably an outside filter structure 150. Said outside filter structure 150 is preferably arranged on the bottom of the input container 140 so that it protrudes outwardly of the input container 140 as shown in Fig. 41. The outside filter structure 150 comprises at least one particle filter 155 and an antimicrobial filter 156, wherein the particle filter 155 is arranged upstream of the antimicrobial filter 156. Preferably, the particle filter 155 is based on a non-woven fabric, and even more preferably on a melt-blown non-woven fabric, having preferably a pore size in the range of 0.5 to 2 micrometers, for removal of cysts or other single-celled organisms as well as very fine dirt particles. The filters 155, 156 are arranged around a cavity 154 to form the filter structure 150, wherein the antimicrobial filter 156 is preferably the outermost filter of the second filter structure 150.

The arrows 15 and 16 illustrate the exemplary direction of the flow path as illustrated in Fig. 41. During use, the water 15 enters the cavity 154 of the second filter structure 150 through the opening 153 and leaves the filter structure 150 by passing through the filters 155, 156. Preferably, the particle filter 155 redirects the water 15 that passes through the particle filter 155, in particular when the water 15 leaves the particle filter 155, and therefore, the water 15 passes the antimicrobial filter 156 in a non-laminate way, as illustrated by the zigzag formed arrows, i.e. the water preferably travels a greater distance through the antimicrobial filter 156, than the radial thickness of the antimicrobial filter 156. Therefore the water will contact the antimicrobial filter repeatedly and the decontaminating effect of the antimicrobial filter is improved.

Preferably, the antimicrobial filter 156 is a fabric which has been treated with antimicrobial agents as described above such that they adhere to the fabric in a non-leaching manner. It is advantageous to arrange the textile material in several layers around the axis of the filter structure. By doing so, even if a microbe passes one layer, it can be killed by the next layer. For example, in the preferred embodiment, the fabric is a strip of 300 x 16 cm long, which is wrapped like a spiral about 20 times around the axis of the filter structure.

The fabric is very dense, made of multifilament yarn, In a preferred embodiment, the fabric is a count 20s warp and 20s weft, construction 108 x 84, polyester cotton blended fabric (65% polyester and 35% cotton) with a weight of 210 $g/m^2$. This forces microbes in the water to come into contact with the fibres about 12-16 times. The fibres themselves expand slightly when they are wet, leading to a capillary action and therefore killing through contact. The pores of the fabric are big enough for the killed (exploded) bacteria cells to pass through. Therefore, they do not clog or contaminate the cloth unlike membranes, which often have problems with bio fouling.

Preferably, the filter structure 150 has a circular cross section and forms a cylinder, thus the filters 155, 156 are arranged on the curved side of the cylinder. The filter structure 150 comprises further a closed base structure 151 to seal one base side of the filter structure 150 and a base 152 having an opening 153. Thus the opening 153 of the filter structure 150 is arranged at a base of the cylinder.

Fig. 45 shows a schematic cut side view of a supporting and/or sealing ring 160. The supporting and/or sealing ring 160 is preferably arranged between the input container 140 and the storage container 170, as shown in Fig. 41. The supporting and/sealing ring 160 has an opening 163 to receive the input container 140. Preferably, the input container 140 is sealed against the support and/sealing ring at the inner surface 165 of the sealing ring 160. Further, the supporting and/or sealing ring 160 has an outer surface 164 to be received in an opening of the storage container 170. Preferably, the storage container 170 is sealed against the support and/sealing ring at the outer surface 164 of the sealing ring 160. The supporting and/sealing ring 160 preferably further comprises a collar 161 that is shaped to guide water flowing down on the outside surface of the input container 140 away from an upper edge of the opening of the storage container 170.

Fig. 46 shows a schematic system diagram of a system 200 for purifying water 10. The system 200 for purifying water 10 comprises a raw water storage tank 210 that is preferably arranged above the other components of the system 200, to achieve an input pressure of at least 1.5 bars. The bold arrows shown in Fig. 46 illustrate an example flow path of the water to be purified through the system 200. Thus the raw water is first filled into the raw water storage tank 210. The raw water storage tank 210 supplies the system with water to be purified. The water to be purified enters, preferably in the given order, a module for removing turbidity 230, a module for removing fluorides 231, a module for removing odor 232, a module for removing arsenic 233, a module for softening water 234, a module for removing cysts and/or fine dirt particles 240, 241 and a module for removing microbes 250. Preferably, the modules are arranged so that the

input pressure needed for water purification can be achieved solely by gravity. Alternatively, a pump 220 can be provided to achieve the required input pressure. Said system 200 preferably provides a flow rate of purified water in the range of 20 to 2500 liters per hour. The modules 230 to 234 and 240, 241 are preferably designed so that the water enters the module on the top, is guided through the modules and leaves the module again on the top. This can be achieved for example by double-walled containers. Preferably, all modules are accommodated in separate housings, preferably made of fiberglass reinforced plastics, so that the modules can be combined easily via pipelines and/or tubes.

The module for removing turbidity 230 is a pressure sand filter, preferably comprising multigrade sand. The module for removing fluorides 231 preferably comprises resins, such as activated aluminum, whereas the module for removing odor 232 comprises an activated carbon filter, preferably comprising granulated activated carbon. Preferably, to work properly, the modules for removing arsenic 233 and for softening water 234 are supplied with salt, stored in the salt storage 235, since these modules preferably operate based on ion exchange. The supply of salt is illustrated by the curved arrows, as shown in Fig. 46.

For maintenance reasons, the system 200 is provided with backwashing systems as illustrated by the thin arrows shown in Fig. 46. To backwash the system 200, the direction of flow of the water is reversed by using the pump 220. Thus, contaminants filtered or removed by the modules can be flushed out of the modules. Further, drains 221, 222 are provided for removing the contaminants out of the system during the backwashing.

The module for removing finer dirt particles 240 comprises at least one particle filter having a pore size in the range of 3 to 16 micrometers. The module for removing cysts 241 preferably comprises a particle filter having a pore size in the range of 0.5 to 2 micrometers, more preferably having an average pore size of 1 micrometer. The module for removing microbes 250 preferably comprises a particle filter being arranged upstream of the fabric having an antimicrobial effect, as illustrated in detail with regard to Fig. 47.

Preferably, the filter for removing finer dirt particles 240 comprises a first non-woven fabric filter, preferably as defined in the context of the 123$^{rd}$ embodiment, and a second non-woven fabric filter, preferably as defined in the context of the 124$^{th}$ embodiment. Practice tests made by the inventors showed in particular that providing a first non-woven fabric filter as defined in the context of the 123$^{rd}$ embodiment, i.e. having an average pore size in the range of 3 to 7 micrometers, upstream a second non-woven fabric filter as defined in the context of the 124$^{th}$ embodiment, i.e. having a pore size in the range of 0.5 to 2 micrometers, provides significantly prolonged operating time, compared to a pre-filtration system having a 10 micrometer filter upstream an 1 micrometer filter, as known in the prior art. In the known system, particles smaller than 10 micrometers could pass the 10 micrometer filter upstream the 1 micrometer filter, so that the 1 micrometer filter had to filter particles in the range of 1 to 10 micrometers. As shown in the tests, the 1 micrometer filter was clogged rapidly and the pressure loss of the 1 micrometer filter increased significantly, leading to reduced flow rates of the system. Thus, by providing a non-woven fabric filter as defined in the context of the 123$^{rd}$ embodiment, the clogging of the 1 micrometer filter can be prevented effectively.

Fig. 47 shows a schematic cut view of a module for removing microbes 250, comprising a filter structure 252 and a containing pipe 251. Said filter structure 252 is arranged within the containing pipe 251, so that purified water 16 can flow around the filter structure 252, as indicated by the dashed arrow. The filter structure 252 comprises preferably at least one particle filter 255 and a fabric having an antimicrobial effect 256, wherein the particle filter 255 is arranged upstream of the fabric having an antimicrobial effect 256. Preferably, the particle filter 255 is based on a non-woven fabric, and even more preferably on a melt-blown non-woven fabric, having preferably a pore size in the range of 0.5 to 2 micrometers, more preferably an average pore size of about 1 micrometer, for removal of cysts or other single-celled organisms as well as very fine dirt particles.

The arrows 15 to 17 illustrate the exemplary direction of the flow path through the module for removing microbes. During use, the water 15 enters the filter structure 252 through the opening 253 and leaves the filter structure 252 by passing through the filters 255, 256, wherein the particle filter 255 is arranged upstream of the fabric having an antimicrobial effect 256. The filtered water 16 is collected by the containing pipe 251 and leaves the containing pipe 251 through an outlet 257 of the containing pipe 251. The water 17 is now purified and can be supplied as drinking water.

List of reference signs:

| | |
|---|---|
| 10 | : raw water |
| 11 | : water to be filtered with first particle filter 125 |
| 12 | : water filtered with first particle filter 125 |
| 13 | : water to be filtered with filter structure 130, stored in the input container 140 |
| 14 | : water filtered with filter structure 130 |
| 15 | : water to be filtered with filter structure 150; 252 |
| 16 | : purified water, collected in the storage container 170 |

17 : purified water
100 : device for purifying water
110 : Cap
120 : coarse filter structure
121 : cup-shaped structure
122 : Outlet
123 : Collar
125 : coarse, plane filter
130 : first filter structure (inside filter structure)
131 : closed base structure
132 : base with opening 133
133 : Opening
134 : Cavity
135 : sleeve particle filter (non-woven fabric filter)
136 : particle filter
137 : activated carbon filter
140 : input container
145 : Passage
150 : second filter structure (outside filter structure)
151 : closed base structure
152 : base with opening 153
153 : Opening
154 : cavity
155 : melt-blown type fabric filter
156 : antimicrobial filter
160 : supporting and/or sealing ring
161 : Collar
162 : cylindrical portion
163 : Opening
164 : outer shell
165 : inner shell
170 : storage container
180 : tap
200 : system for purifying water
210 : raw water storage tank
220 : pump
221 : drain
222 : drain
230 : module for removing turbidity (pressure sand filter)
231 : module for removing fluorides (resin filter)
232 : module for removing odor (activated carbon filter)
233 : module for removing arsenic
234 : module for softening water
235 : salt storage
240 : module for removing finer dirt particles (particle filter)
241 : module for removing cysts and/or fine dirt particles (particle filter)
250 : module for removing microbes
251 : containing pipe
252 : filter structure
253 : opening
255 : particle filter
256 : antimicrobial filter
257 : outlet

Also described herein are the following aspects:

1. A 1$^{st}$ aspect is a process of making a textile material antimicrobial, comprising the steps of:

- treating the textile material using an exhaust process, wherein the liquor comprises a solvent and one or more antimicrobial agents which form a homogenous mixture with the solvent, and wherein the liquor has a temperature of at least 60 °C, preferably at least 70 °C, more preferably at least 75 ° C, and a temperature of at most 90 °C, preferably at most 85 °C;
- drying and curing the textile material, wherein curing is conducted at a curing temperature of at least 160 °C, preferably at least 170 °C, more preferably at least 175 °C, and most preferably at least about 180 °C;
- preferably washing the cured textile material; and
- preferably drying the washed textile material.

2. A 2nd aspect is a process of making a textile material antimicrobial, comprising a first process cycle comprising the steps of:

- treating the textile material using an exhaust process, wherein the liquor comprises one or more antimicrobial agents;
- subjecting the treated textile material to a heat treatment conducted at least partially at a temperature of at least 100 °C, preferably at least 105 °C, more preferably at least 110 °C, most preferably at least about 120 °C;
- preferably washing the heat treated textile material; and
- preferably drying the washed textile material;

and comprising a second process cycle being performed after the first process cycle and comprising the steps of:

- treating the textile material using a liquor application process, such as an exhaust or preferably a padding process, wherein the liquor comprises one or more antimicrobial agents;
- drying and curing the treated textile material, wherein curing is conducted at least partially at a curing temperature of at least 160 °C, preferably at least 170 °C, more preferably at least 175 °C, and most preferably at least about 180 °C;
- preferably washing the cured textile material; and
- preferably drying the washed textile material.

3. According to a 3rd aspect, in the process of the 2nd aspect, the second process cycle increases the antimicrobial effect of the textile material.

4. According to a 4th aspect, in the process of any one of the 2nd or the 3rd aspect, during the exhaust process, the liquor has a temperature of at least 45 °C, in particular at least 50 °C, preferably at least 60 °C, more preferably at least 70 °C, more preferably at least 75 °C, most preferably at least about 80 °C.

5. According to a 5th aspect, in the process of any one of the 2nd to 4th aspect, during the exhaust process, the liquor has a temperature below boiling temperature, preferably at most 95 °C, more preferably at most 90 °C, particularly at most 85 °C, and most preferably at most about 80 °C.

6. According to a 6th aspect, in the process of any one of the 1st to 5th aspect, the exhaust time of the exhaust process is at least 30 minutes, preferably at least 45 minutes, more preferably at least 50 minutes, particularly at least 55 minutes, and most preferably at least about 60 minutes, and wherein the exhaust time is at most 120 minutes, in particular 90 minutes, preferably at most 80 minutes, more preferably at most 75 minutes, even more preferably at most 70 minutes, even more preferably at most 65 minutes, most preferably at most about 60 minutes.

7. According to a 7th aspect, in the process of any one of the 1st to 6th aspect, the liquor of the exhaust process and/or the second process cycle has a pH-value of at most 6.9, preferably at most 6.5, more preferably at most 6.3, in particular at most 6.0, and most preferably at most about 5.5, and a pH-value of at least 3.0, preferably at least 3.5, more preferably at least 4.0, even more preferably at least 4.5, in particular at least 5.0, and most preferably at least about 5.5.

8. According to a 8th aspect, in the process of any one of the 1st to 7th aspect, the value of dynamic viscosity of the liquor of the exhaust process and/or the second process cycle at 20 °C and/or 80 °C, in centipoise (cP), is at most 20% higher than the dynamic viscosity of water at 20 °C and/or 80 °C, respectively, preferably at most 10%, more preferably at most 5%, particularly at most 2%, and most preferably at most about 0%.

9. According to a 9th aspect, in the process of any one of the 1st to 8th aspect, one or any of the steps of drying of

the textile material is conducted at least partially at an ambient temperature of at least 100 °C, preferably at least 110 °C, more preferably at least 115 °C, and most preferably at least about 120 °C.

10. According to a $10^{th}$ aspect, in the process of any one of the $1^{st}$ to $9^{th}$ aspect, curing is conducted at an ambient temperature of at most 205 °C, preferably at most 195 °C, more preferably at most 190 °C, particularly at most 185 °C, and most preferably at most about 180 °C.

11. According to a $11^{th}$ aspect, in the process of any one of the $1^{st}$ to $10^{th}$ aspect, curing takes place at the curing temperature as defined in the $1^{st}$ and $2^{nd}$ aspect over a period of at least 30 seconds, preferably at least 40 seconds, more preferably at least 50 seconds, most preferably at least about 60 seconds, and preferably over a period of at most 120 seconds, preferably at most 90 seconds, more preferably at most 80 seconds, particularly at most 70 seconds, most preferably at most about 60 seconds.

12. According to a $12^{th}$ aspect, in the process of any one of the $1^{st}$ to $10^{th}$ aspect, the textile material is a fabric of at least 350 grams per $m^2$ and curing takes place at the curing temperature as defined in the $1^{st}$ and $2^{nd}$ aspect over a period of at least 45 seconds, preferably at least 60 seconds, more preferably at least 75 seconds, most preferably at least about 90 seconds, and preferably over a period of at most 180 seconds, preferably at most 160 seconds, more preferably at most 140 seconds, particularly at most 120 seconds, most preferably at most about 90 seconds.

13. According to a $13^{th}$ aspect, in the process of any one of the $1^{st}$ to $10^{th}$ aspect, the textile material is a fabric of at least 500 grams per $m^2$ and curing takes place at the curing temperature as defined in the $1^{st}$ and $2^{nd}$ aspect over a period of at least 60 seconds, preferably at least 75 seconds, more preferably at least 90 seconds, most preferably at least about 120 seconds, and preferably over a period of at most 240 seconds, preferably at most 210 seconds, more preferably at most 180 seconds, particularly at most 150 seconds, most preferably at most about 120 seconds.

14. According to a $14^{th}$ aspect, in the process of any one of the $1^{st}$ to $13^{th}$ aspect, curing immediately follows drying of the textile material without the textile material substantially cooling down between drying of the textile material and curing.

15. According to a $15^{th}$ aspect, in the process of the $14^{th}$ aspect, the textile material is a fabric and drying of the textile material and curing are performed over a period of together at least 45 seconds, preferably at least 50 seconds, more preferably at least 55 seconds, most preferably at least about 60 seconds, per 100 grams of fabric weight per square meter.

16. According to a $16^{th}$ aspect, in the process of the $14^{th}$ or $15^{th}$ aspect, the textile material is a fabric and drying of the textile material and curing are performed over a period of together at most 75 seconds, preferably at most 70 seconds, more preferably at most 65 seconds, most preferably at most about 60 seconds, per 100 grams of fabric weight per square meter.

17. According to a $17^{th}$ aspect, in the process of any one of the $1^{st}$ to $16^{th}$ aspect, in a step of washing, the textile material is washed in a bath having a temperature between 30 °C and 50 °C, preferably between 35 °C and 45 °C, preferably in a bath for at least 20 minutes, preferably at least 30 minutes, particularly at least 35 minutes, preferably at least about 40 minutes.

18. According to a $18^{th}$ aspect, in the process of any one of the $1^{st}$ to $17^{th}$ aspect, the starting textile material is a cellulosic textile material, a preferably non-inert synthetic textile material, or a blend comprising preferably at least 25% of a cellulosic and/or a preferably non-inert synthetic textile material.

19. According to a $19^{th}$ aspect, in the process of any one of the $1^{st}$ to $18^{th}$ aspect, the textile material is a multifilament yarn or preferably a multifilament fabric.

20. According to a $20^{th}$ aspect, in the process of any one of the $1^{st}$ to $19^{th}$ aspect, the one or more antimicrobial agents in the liquor of the first and/or second process cycle are selected from the group consisting of a quaternary ammonium organosilane compound, silver cations, polyglucosamine, an azole-based compound, and polyhexamethylene biguanide.

21. According to a 21st aspect, in the process of any one of the 1st to 20th aspect, the liquor of the first and/or second process cycle or the liquors of the first and second process cycle together comprise at least two, preferably at least three, more preferably at least four, most preferably all five antimicrobial agents selected from the group consisting of a quaternary ammonium organosilane compound, silver cations, polyglucosamine, an azole-based compound, and polyhexamethylene biguanide.

22. According to a 22nd aspect, in the process of any one of the 1st to 21st aspect, the antimicrobial agents in the liquors of all process cycles together are applied to the textile material in an amount of together at least 0.1% by weight, preferably at least 0.3% by weight, more preferably at least 0.5% by weight, particularly at least 0.6% by weight, and most preferably at least 0.7% by weight, based on weight of the textile material.

23. According to a 23rd aspect, in the process of any one of the 1st to 22nd aspect, the antimicrobial agents in the liquors of all process cycles together are applied to the textile material in an amount of together at most 2.5% by weight, preferably at most 2.0% by weight, more preferably at most 1.7% by weight, particularly at most 1.5% by weight, and most preferably at most 1.3% by weight, based on weight of the textile material.

24. According to a 24th aspect, in the process of any one of the 20th to 23rd aspect, the quaternary ammonium organosilane compound in the liquors of all process cycles together is applied to the textile material in an amount of at least 0.1% by weight, preferably at least 0.2% by weight, more preferably at least 0.25% by weight, and most preferably at least 0.3% by weight, based on the weight of the textile material.

25. According to a 25th aspect, in the process of any one of the 20th to 24th aspect, the quaternary ammonium organosilane compound in the liquors of all process cycles together is applied to the textile material in an amount of at most 5% by weight, preferably at most 1.5% by weight, more preferably at most 1.2% by weight, in particular at most 1.0% by weight, and most preferably at most 0.8% by weight, based on the weight of the textile material.

26. According to a 26th aspect, in the process of any one of the 20th to 25th aspect, the silver cations trapped in an inorganic or organic matrix in the liquors of all process cycles together is applied to the textile material in an amount of at most 0.1% by weight, preferably at most 0.05% by weight, more preferably at most 0.02% by weight, and most preferably at most about 0.01% by weight, based on the weight of the textile material.

27. According to a 27th aspect, in the process of any one of the 20th to 26th aspect, the silver cations trapped in an inorganic or organic matrix in the liquors of all process cycles together is applied to the textile material in an amount of at least 0.001% by weight, preferably at least 0.002% by weight, more preferably at least 0.003% by weight, and most preferably at least about 0.005% by weight, based on the weight of the textile material.

28. According to a 28th aspect, in the process of any one of the 20th to 27th aspect, the polyglucosamine in the liquors of all process cycles together is applied to the textile material in an amount of at most 0.5% by weight, preferably at most 0.4% by weight, more preferably at most 0.3% by weight, and most preferably at most 0.2% by weight, based on the weight of the textile material.

29. According to a 29th aspect, in the process of any one of the 20th to 28th aspect, the polyglucosamine in the liquors of all process cycles together is applied to the textile material in an amount of at least 0.05% by weight, preferably at least 0.08% by weight, more preferably at least 0.12% by weight, and most preferably at least 0.15% by weight, based on the weight of the textile material.

30. According to a 30th aspect, in the process of any one of the 20th to 29th aspect, the polyhexamethylene biguanide in the liquors of all process cycles together is applied to the textile material in an amount of at most 0.5% by weight, preferably at most 0.4% by weight, more preferably at most 0.3% by weight, and most preferably at most 0.2% by weight, based on the weight of the textile material.

31. According to a 31st aspect, in the process of any one of the 20th to 30th aspect, the polyhexamethylene biguanide in the liquors of all process cycles together is applied to the textile material in an amount of at least 0.03% by weight, preferably at least 0.05% by weight, or at least 0.10% by weight, preferably at least 0.15% by weight, based on the weight of the textile material.

32. According to a 32nd aspect, in the process of any one of the 20th to 31st aspect, the azole-based compound in the liquors of all process cycles together is applied to the textile material in an amount of at most 0.6% by weight,

preferably at most 0.5% by weight, more preferably at most 0.4% by weight, and most preferably at most 0.3% by weight, based on the weight of the textile material.

33. According to a $33^{rd}$ aspect, in the process of any one of the $20^{th}$ to $32^{nd}$ aspect, the azole-based compound in the liquors of all process cycles together is applied to the textile material in an amount of at least 0.05% by weight, preferably at least 0.10% by weight, more preferably at least 0.15% by weight, and most preferably at least 0.20% by weight, based on the weight of the textile material.

34. According to a $34^{th}$ aspect, in the process of any one of the $1^{st}$ to $33^{rd}$ aspect, the one or more antimicrobial agents in the liquor of the first and/or second process cycle are nonionic or cationic.

35. According to a $35^{th}$ aspect, in the process of any one of the $20^{th}$ to $34^{th}$ aspect, the azole-based compound is thiabendazole or a triazole-based compound.

36. According to a $36^{th}$ aspect, in the process of the $35^{th}$ aspect, the triazole-based compound is propiconazole.

37. A $37^{th}$ aspect is a textile material obtainable by a process according to any one of the $1^{st}$ to $36^{th}$ aspect.

38. A $38^{th}$ aspect is a textile material, wherein

- at least three, more preferably at least four, most preferably all five antimicrobial agents selected from the group consisting of a quaternary ammonium organosilane compound, silver cations, polyglucosamine, an azole-based compound, and polyhexamethylene biguanideare; or
- at least two, preferably at least three, more preferably all four antimicrobial agents selected from the group consisting of a quaternary ammonium organosilane compound, polyglucosamine, an azole-based compound, and polyhexamethylene biguanideare; or
- a quaternary ammonium organosilane compound and at least one, preferably at least two, more preferably at least three, most preferably all four antimicrobial agents selected from the group consisting of silver cations, polyglucosamine, an azole-based compound, and polyhexamethylene biguanide are adhered to the textile material in a non-leaching manner.

39. According to a $39^{th}$ aspect, in the textile material of the $38^{th}$ aspect, the antimicrobial agents adhered to the textile material have a total weight as defined in the $22^{nd}$ and/or $23^{rd}$ aspect, and/or an individual weight as defined for the respective antimicrobial agents in any one of the $24^{th}$ to $33^{rd}$ aspect.

40. According to a $39^{th}$ aspect, in the textile material of the $38^{th}$ or $39^{th}$ aspect, non-leaching means that for any amount of 0.1% by weight of an antimicrobial agent adhered to the textile material, based on the weight of the textile material, leaching of the antimicrobial agent in exposure to water within a test period of 24 hours, preferably within a test period of 48 hours, more preferably within a test period of 72 hours, and most preferably within a test period of 7 days, is at most 5.0 ppm, preferably at most 2.0 ppm, more preferably at most 1.0 ppm, when tested according to the following method:

- soaking the textile material in preferably distilled exposure water in a ratio of 1000 ml water per 10 grams of textile material,
- keeping the textile material entirely soaked in the exposure water during the test period, preferably at a temperature between 21 °C and 25 °C; and
- after the test period, extracting exposure water and testing it for the presence of each of the antimicrobial agents, preferably using a GC-MS method.

41. A $41^{st}$ aspect is a textile material exhibiting after 25 laundry washes a reduction value of Staphylococcus aureus ATCC 6538 and/or ATCC 43300 and/or Escherichia coli ATCC 11229 and/or Pseudomonas aeruginosa ATCC 15442 and/or Salmonella enterica ATCC 10708 and/or Staphylococcus aureus (MRSA) ATCC 33592 and/or ATCC 43300 and/or Klebsiella pneumonia ATCC 13883 and/or Vibrio cholera ATCC 14035 of at least 99%, preferably at least 99.9%, and/or a reduction value of Clostridium difficile ATCC 43598 spores of at least 90%, within 10 minutes on continuous reinoculations followed by dry and wet alternate abrasion cycles, prefereably when tested in accordance with EPA protocol 90072PA4.

42. According to a $42^{nd}$ aspect, in the textile material of the $41^{st}$ aspect, a laundry wash is in a laundry washing

machine at 85±15 °C for 40-50 minutes, preferably using brand name non-antimicrobial, non-ionic and non-chlorine containing laundry detergent, preferably followed by a standard rinse cycle and preferably dried at 62-96 °C for 20-30 minutes.

43. A 43rd aspect is garment, in particular medical garment, more particular an operation theater gown, consisting of or comprising the textile material according to any one of the 37th to 42nd aspect.

44. According to a 44th aspect, in the garment of the 43rd aspect,

- a quaternary ammonium organosilane compound in an amount of at least 0.3% by weight, preferably at least 0.5% by weight, more preferably at least 0.6% by weight, and in an amount of at most 0.9% by weight, preferably at most 0.8% by weight, more preferably at most 0.7% by weight; and/or
- silver cations trapped in an inorganic or organic matrix in an amount of at least 0.004% by weight, preferably at least 0.006% by weight, and more preferably at least 0.008% by weight, and in an amount of at most 0.03% by weight, preferably at most 0.02% by weight, more preferably at most 0.15% by weight; and/or
- an azole-based compound in an amount of at least 0.1% by weight, preferably at least 0.15% by weight, more preferably at least 0.2% by weight, and in an amount of at most 0.5% by weight, preferably at most 0.4% by weight, more preferably at most 0.3% by weight; and/or
- polyhexamethylene biguanide in an amount of at least 0.5% by weight, preferably at least 0.08% by weight, more preferably at least 0.10% by weight, and in an amount of at most 0.3% by weight, preferably at most 0.25% by weight, more preferably at most 0.2% by weight,

based on the weight of the textile material, is/are adhered to the textile material.

45. A 45th aspect is a water filter comprising the textile material of any one of the 37th to 42nd aspect as a filter medium.

46. According to a 46th aspect, in the water filter of the 45th aspect,

- a quaternary ammonium organosilane compound in an amount of at least 0.1% by weight, preferably at least 0.2% by weight, more preferably at least 0.3% by weight, and in an amount of at most 0.7% by weight, preferably at most 0.6% by weight, more preferably at most 0.5% by weight; and/or
- silver cations trapped in an inorganic or organic matrix in an amount of at least 0.004% by weight, preferably at least 0.006% by weight, more preferably at least 0.008% by weight, and in an amount of at most 0.03% by weight, preferably at most 0.02% by weight, more preferably at most 0.15% by weight; and/or
- polyglucosamine in an amount of at least 0.5% by weight, preferably at least 0.08% by weight, more preferably at least 0.10% by weight, and in an amount of at most 0.3% by weight, preferably at most 0.25% by weight, more preferably at most 0.2% by weight; and/or
- an azole-based compound in an amount of at least 0.1% by weight, preferably at least 0.15% by weight, more preferably at least 0.2% by weight, and in an amount of at most 0.5% by weight, preferably at most 0.4% by weight, more preferably at most 0.3% by weight; and/or
- polyhexamethylene biguanide in an amount of at least 0.2% by weight, preferably at least 0.03% by weight, more preferably at least 0.4% by weight, and in an amount of at most 0.2% by weight, preferably at most 0.15% by weight, more preferably at most 0.1% by weight,

based on the weight of the textile material, is/are adhered to the textile material.

47. A 47th aspect is a water filter comprising a woven fabric as filter medium, wherein the fabric is preferably a textile material is in any one of the 37th to 42nd aspect, or comprising any other textile material as in any one of the 37th to 42nd aspect as a filter medium, the water filter being capable of reducing

- the number of Escherichia coli ATCC 25922 and/or Vibrio Cholerae ATCC14035 bacteria contained in water which passes through the filter in normal operation by at least 99%, preferably at least 99.9%, more preferably at least 99.99%, particularly at least 99.999%, and most preferably at least 99.9999%;
- the number of Clostridium Difficile ATCC 43598 spores contained in the water which passes through the filter in normal operation by at least 90%, preferably at least 99%, more preferably at least 99.9%, and most preferably at least 99.99%; and/or
- the number of cysts contained in the water which passes through the filter in normal operation by at least 90%, preferably at least 99%, more preferably at least 99.9%.

## Claims

1. A medical mask comprising a textile material, wherein the textile material is obtained by a process comprising a first process cycle comprising the steps of:

   - treating a starting textile material using a liquor application process, wherein the liquor comprises at least one antimicrobial agent,
   - subjecting the treated textile to a heat treatment;

   and comprising a second process cycle being performed after the first process cycle and comprising the steps of:

   - treating the textile material using a liquor application process, preferably a padding process, wherein the liquor comprises at least one antimicrobial agent;
   - subjecting the treated textile to a heat treatment;
   - preferably washing the textile material; and
   - preferably drying the washed textile material.

2. The medical mask of the preceding claim, wherein the textile material is selected from the group consisting of woven, knitted, crocheted, and warp knitted fabrics.

3. The medical mask of any one of the preceding claims, wherein the first liquor application process is an exhaust process.

4. The medical mask of the preceding claim, wherein during the exhaust process, the liquor has a temperature of at least 45 °C, and/or a temperature below boiling temperature.

5. The medical mask of any one of claims 3 or 4, wherein the exhaust time is at least 30 minutes, preferably at least 45 minutes, more preferably at least 50 minutes, particularly at least 55 minutes, and most preferably at least about 60 minutes.

6. The medical mask of any one of the preceding claims, wherein the heat treatment comprises a curing step, wherein curing is conducted at an ambient temperature of at least 150 °C and of at most 205 °C.

7. The medical mask of the preceding claim, wherein curing takes place at the curing temperature as defined in the preceding claim over a period of at least 30 seconds.

8. The medical mask of any one of the preceding claims, wherein the liquor of the first and/or second process cycle has a pH-value of at least 3.0, preferably at least 4.0, more preferably at least 4.5, in particular at least 5.0, and wherein the liquor has a pH-value of at most 6.9, preferably at most 6.5, more preferably at most 6.3, in particular at most 6.0.

9. The medical mask of any one of the preceding claims, wherein the pH-value of the liquor of the first and/or second process cycle is set using an organic acid, in particular citric acid, acetic acid, or a combination thereof, preferably citric acid.

10. The medical mask of any one of the preceding claims, wherein the liquor of the first and/or second process cycle comprises at least one antimicrobial agent selected from the group consisting of a quaternary ammonium organosilane compound, silver cations, polyglucosamine, an azole-based compound, and polyhexamethylene biguanide.

11. The medical mask of any one of the preceding claims, wherein the liquor of the second process cycle comprises a quaternary ammonium organosilane compound.

12. The medical mask of any one of the preceding claims, wherein the one or more antimicrobial agents in the liquors of all process cycles together are applied to the textile material in an amount of together at least 0.1% by weight, preferably at least 0.3% by weight, more preferably at least 0.5% by weight, particularly at least 0.6% by weight, and most preferably at least 0.7% by weight, based on weight of the textile material.

13. The medical mask of any one of the preceding claims, wherein the textile material is a cellulosic textile material, a

synthetic textile material, or a blend comprising a cellulosic and/or a synthetic textile material, and wherein the textile material is preferably a woven, knitted, crocheted or bonded fabric.

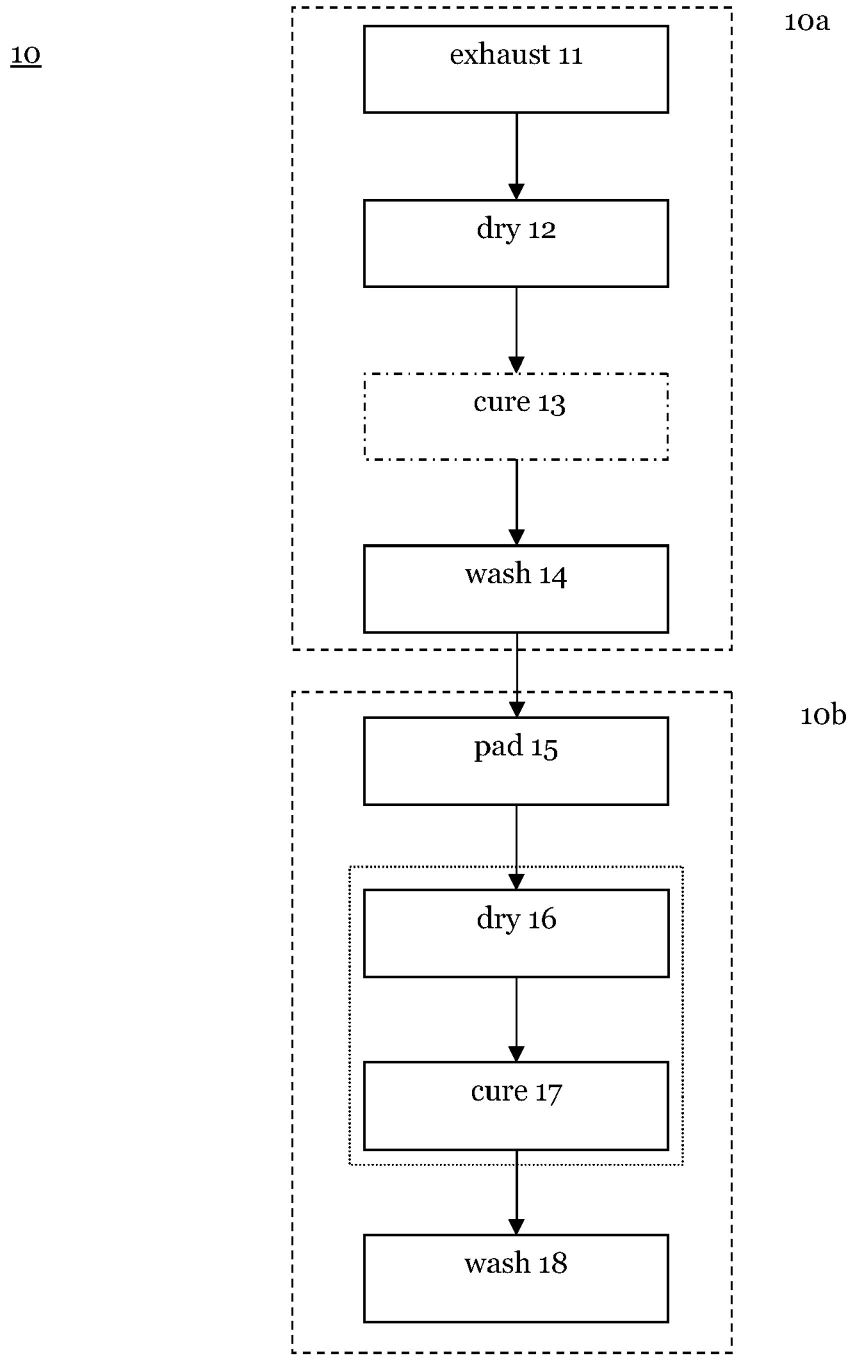
10
10a
exhaust 11
dry 12
cure 13
wash 14
10b
pad 15
dry 16
cure 17
wash 18

Fig. 1

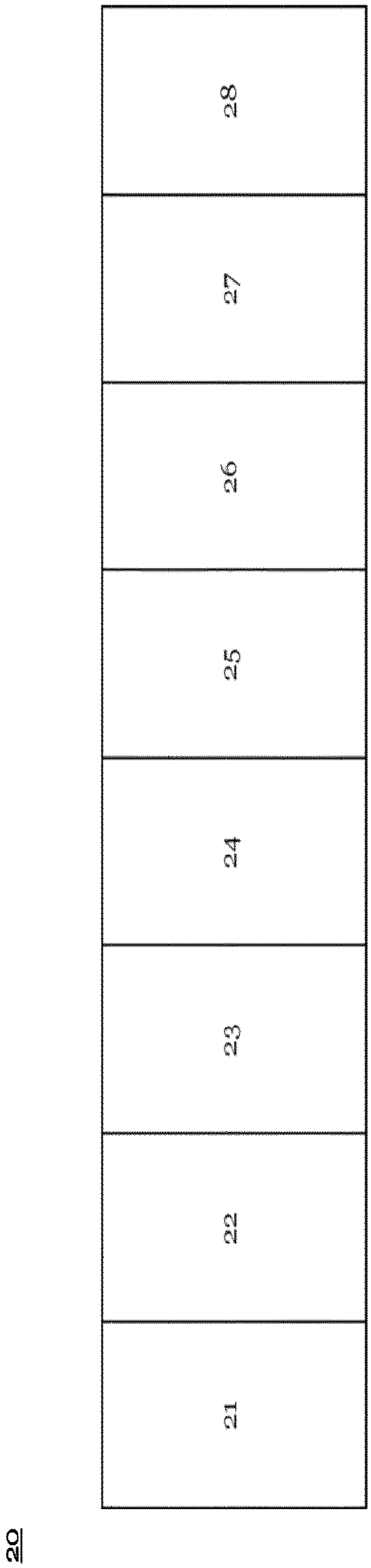


Fig. 2

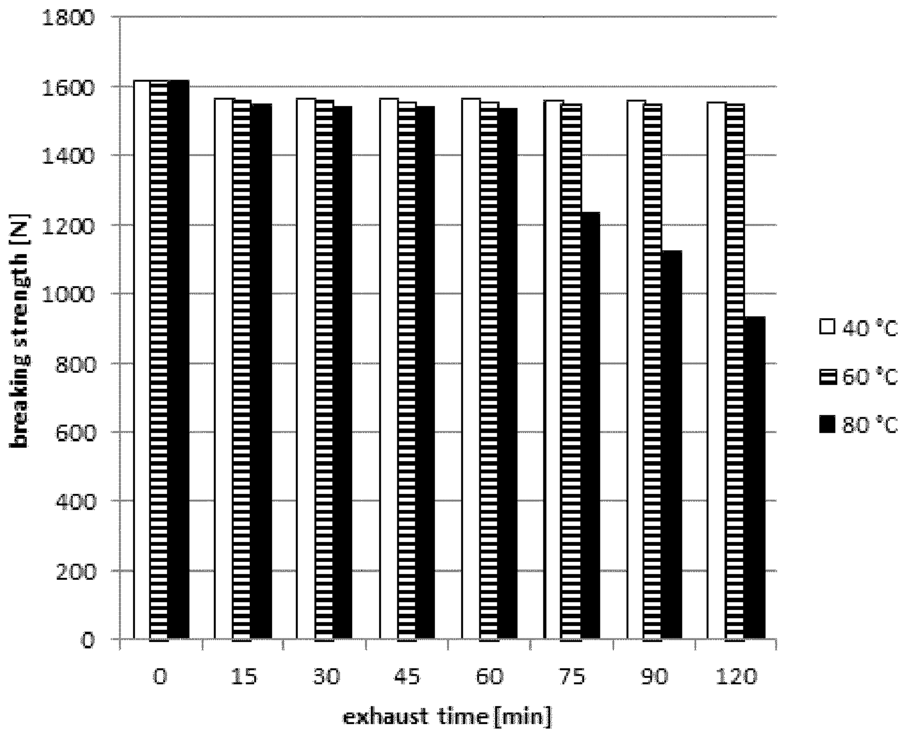
1800
1600
1400
1200
1000
800
600
400
200
0
breaking strength [N]
0
15
30
45
60
75
90
120
exhaust time [min]
40 °C
60 °C
80 °C

Fig. 3

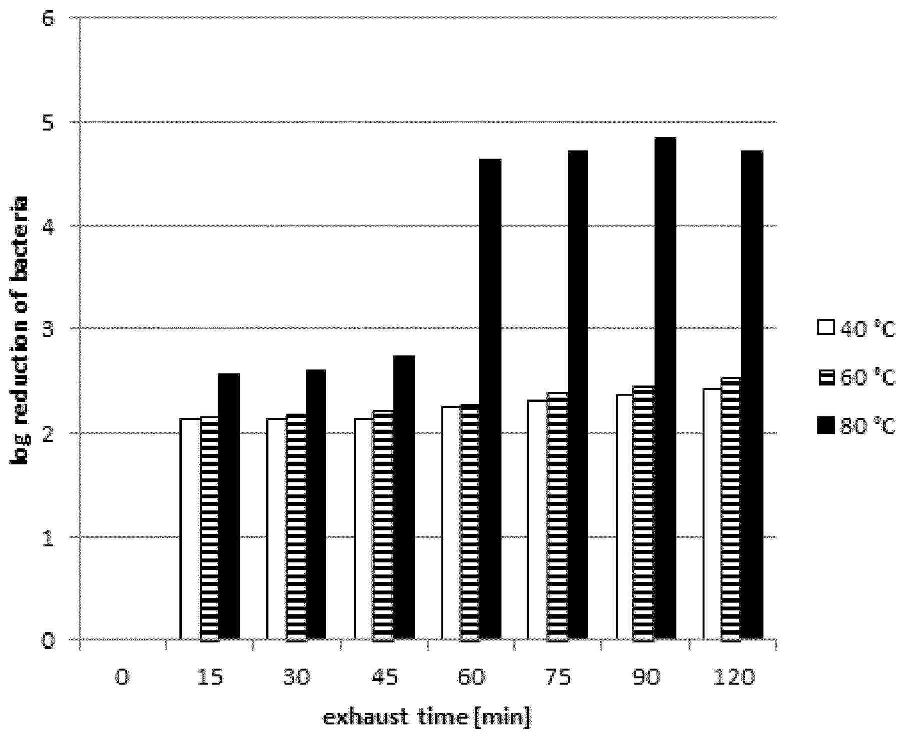
6
5
4
3
2
1
0
log reduction of bacteria
0
15
30
45
60
75
90
120
exhaust time [min]
40 °C
60 °C
80 °C

Fig. 4

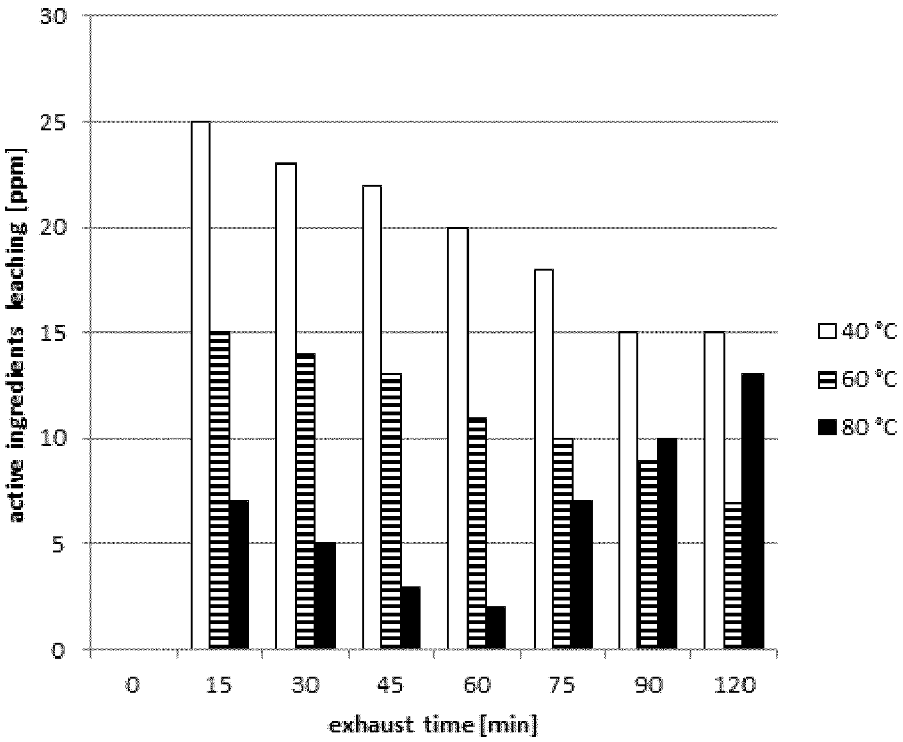
30
25
20
15
10
5
0
active ingredients leaching [ppm]
0
15
30
45
60
75
90
120
exhaust time [min]
40 °C
60 °C
80 °C

Fig. 5

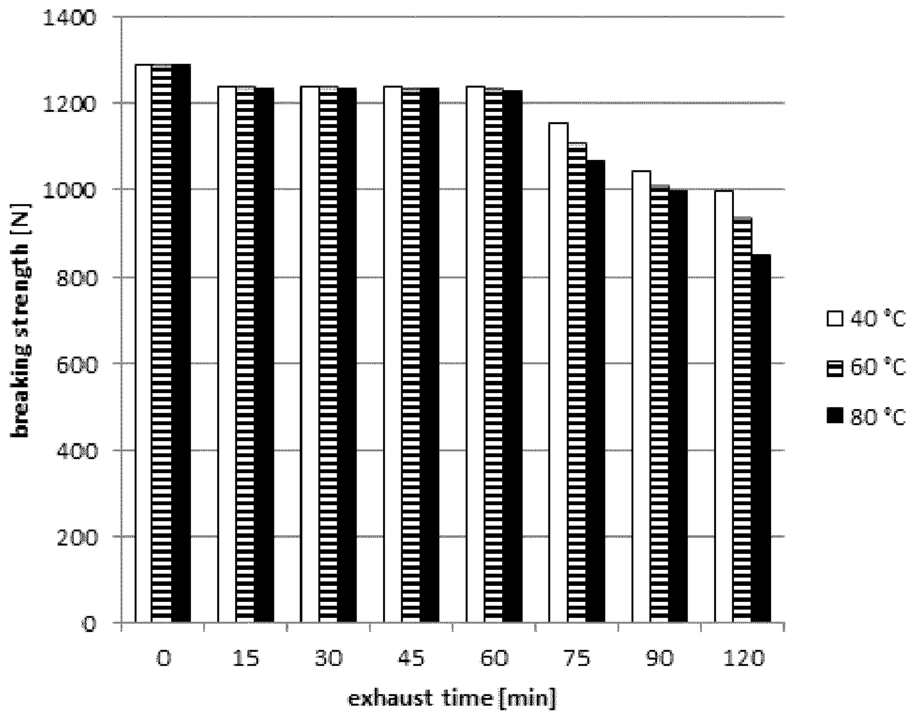
1400
1200
1000
800
600
400
200
0
breaking strength [N]
0
15
30
45
60
75
90
120
exhaust time [min]
40 °C
60 °C
80 °C

Fig. 6

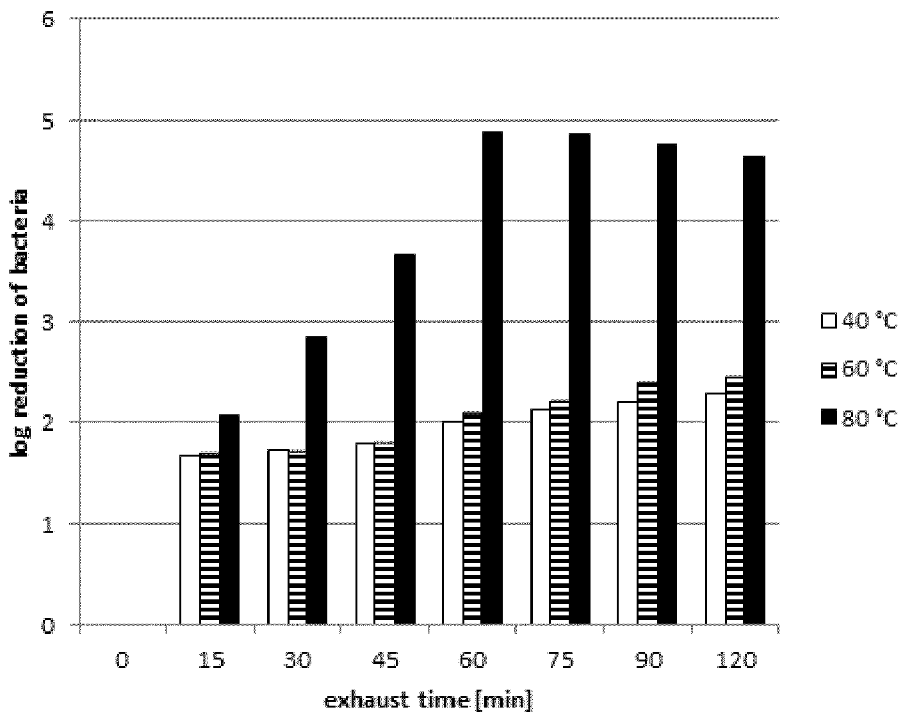
6
5
4
3
2
1
0
log reduction of bacteria
0
15
30
45
60
75
90
120
exhaust time [min]
40 °C
60 °C
80 °C

Fig. 7

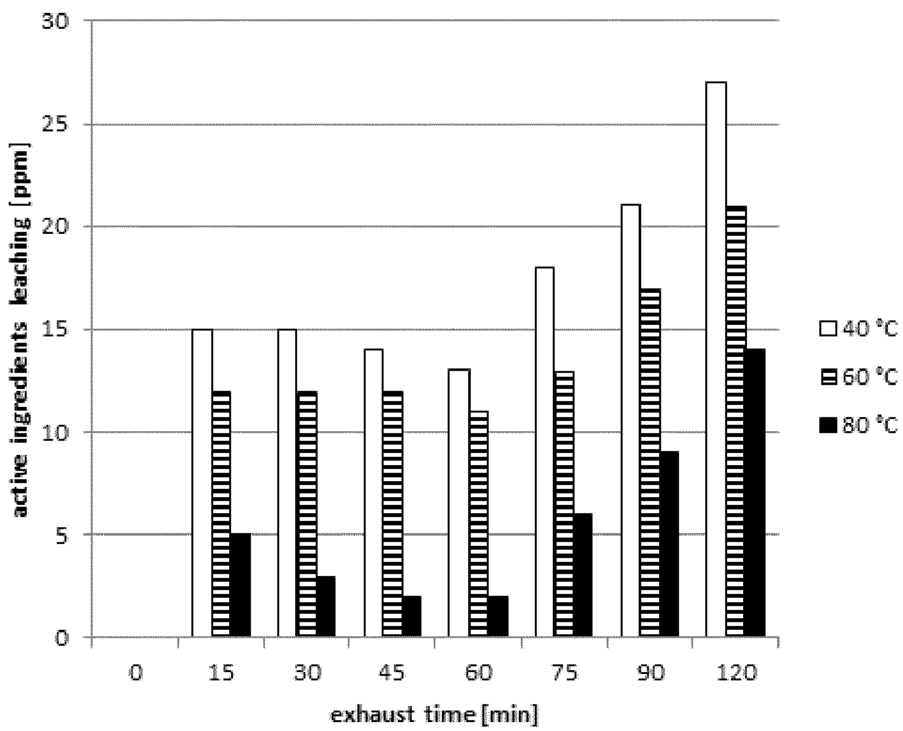
30
25
20
15
10
5
0
active ingredients leaching [ppm]
0
15
30
45
60
75
90
120
exhaust time [min]
40 °C
60 °C
80 °C

Fig. 8

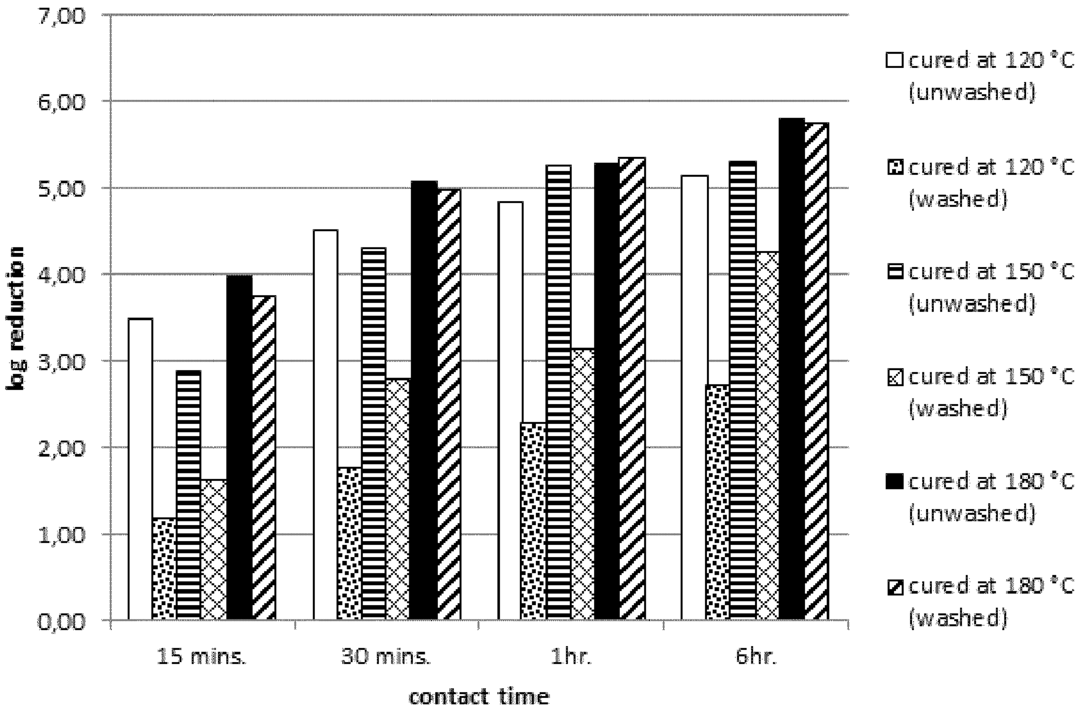
7,00
6,00
5,00
4,00
3,00
2,00
1,00
0,00
log reduction
15 mins.
30 mins.
1hr.
6hr.
contact time
cured at 120 °C (unwashed)
cured at 120 °C (washed)
cured at 150 °C (unwashed)
cured at 150 °C (washed)
cured at 180 °C (unwashed)
cured at 180 °C (washed)

Fig. 9

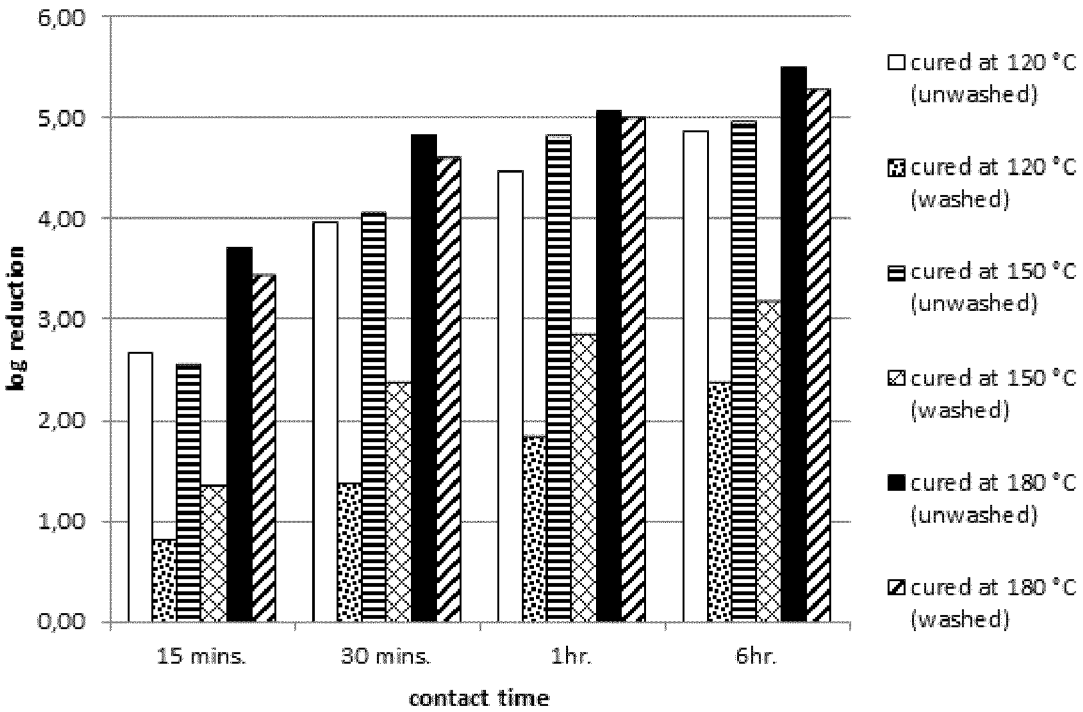
6,00
5,00
4,00
3,00
2,00
1,00
0,00
log reduction
15 mins.
30 mins.
1hr.
6hr.
contact time
cured at 120 °C (unwashed)
cured at 120 °C (washed)
cured at 150 °C (unwashed)
cured at 150 °C (washed)
cured at 180 °C (unwashed)
cured at 180 °C (washed)

Fig. 10

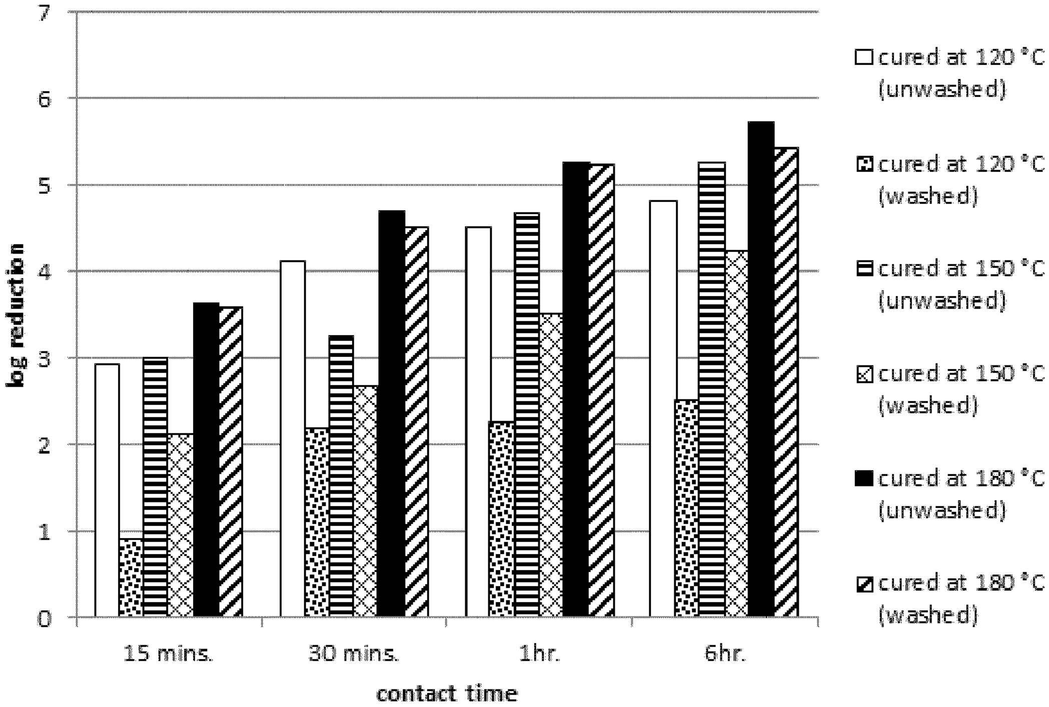
7
6
5
4
3
2
1
0
log reduction
15 mins.
30 mins.
1hr.
6hr.
contact time
cured at 120 °C (unwashed)
cured at 120 °C (washed)
cured at 150 °C (unwashed)
cured at 150 °C (washed)
cured at 180 °C (unwashed)
cured at 180 °C (washed)

Fig. 11

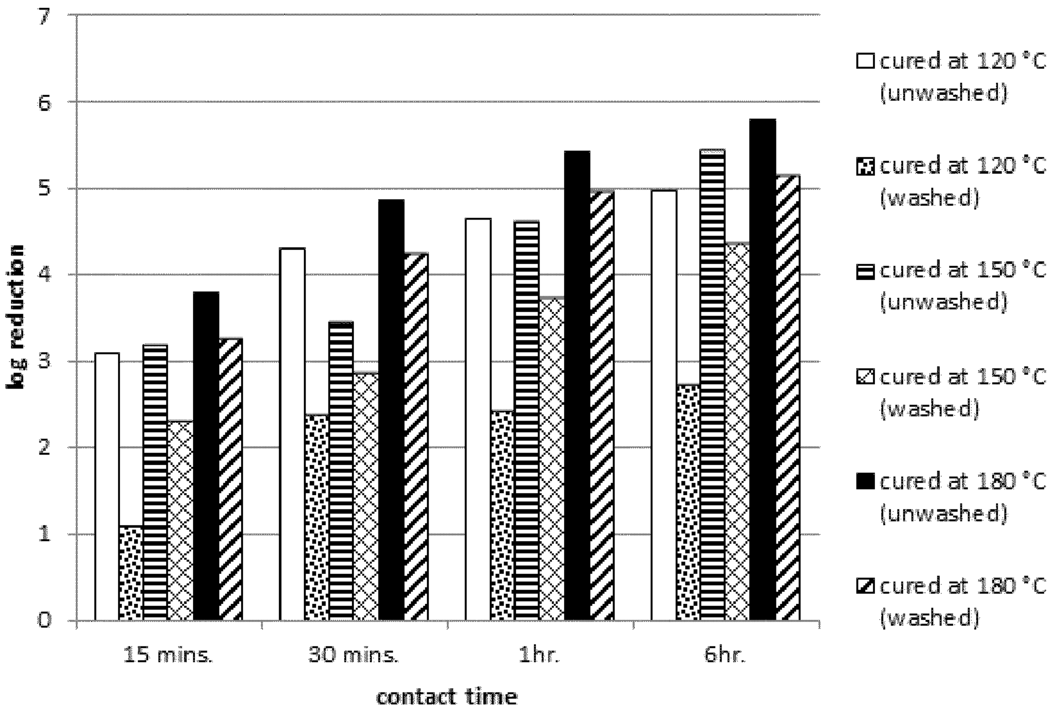
7
6
5
4
3
2
1
0
log reduction
15 mins.
30 mins.
1hr.
6hr.
contact time
cured at 120 °C (unwashed)
cured at 120 °C (washed)
cured at 150 °C (unwashed)
cured at 150 °C (washed)
cured at 180 °C (unwashed)
cured at 180 °C (washed)

Fig. 12

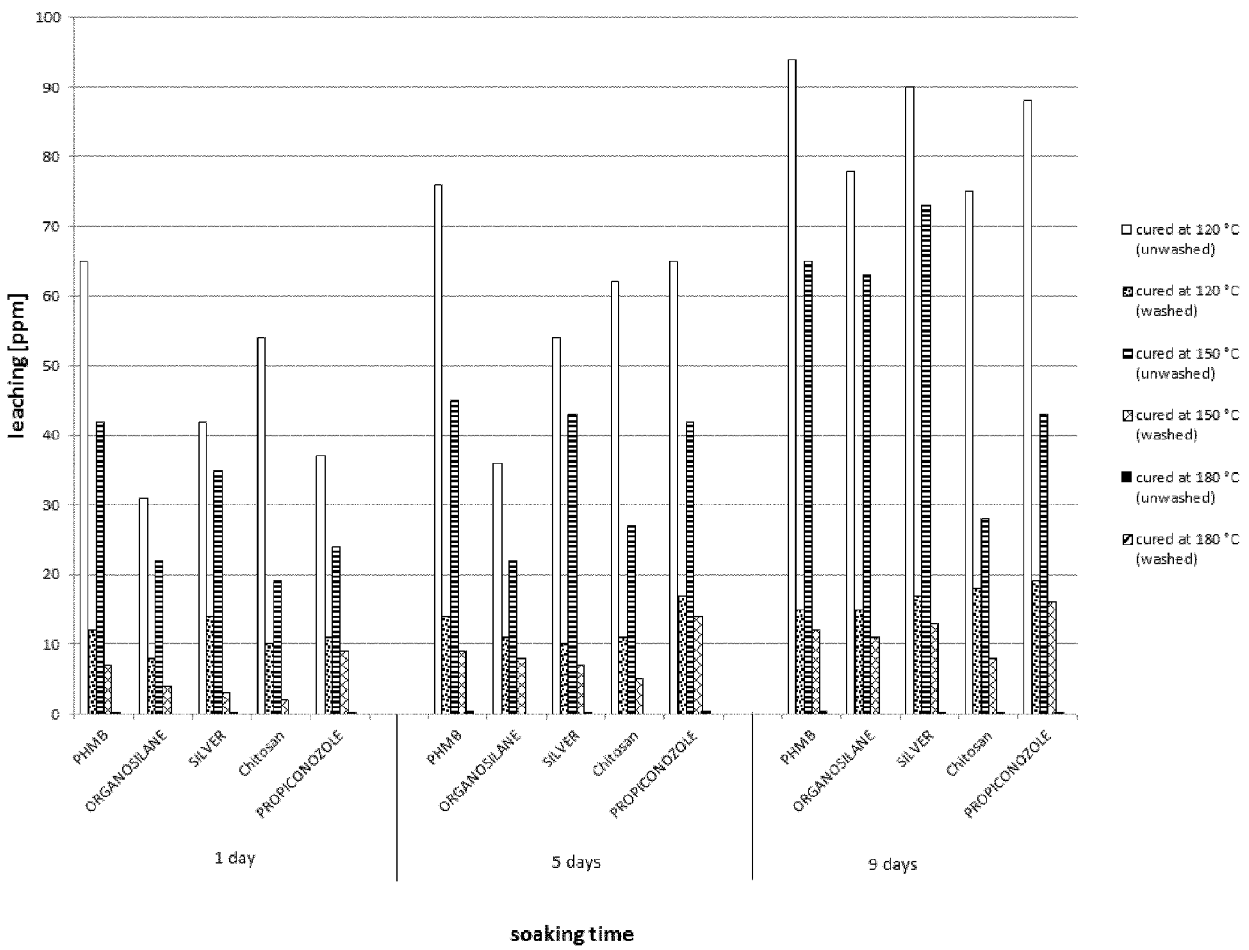
100
90
80
70
60
50
40
30
20
10
0
leaching [ppm]
PHMB
ORGANOSILANE
SILVER
Chitosan
PROPICONOZOLE
1 day
5 days
9 days
soaking time
cured at 120 °C (unwashed)
cured at 120 °C (washed)
cured at 150 °C (unwashed)
cured at 150 °C (washed)
cured at 180 °C (unwashed)
cured at 180 °C (washed)

Fig. 13

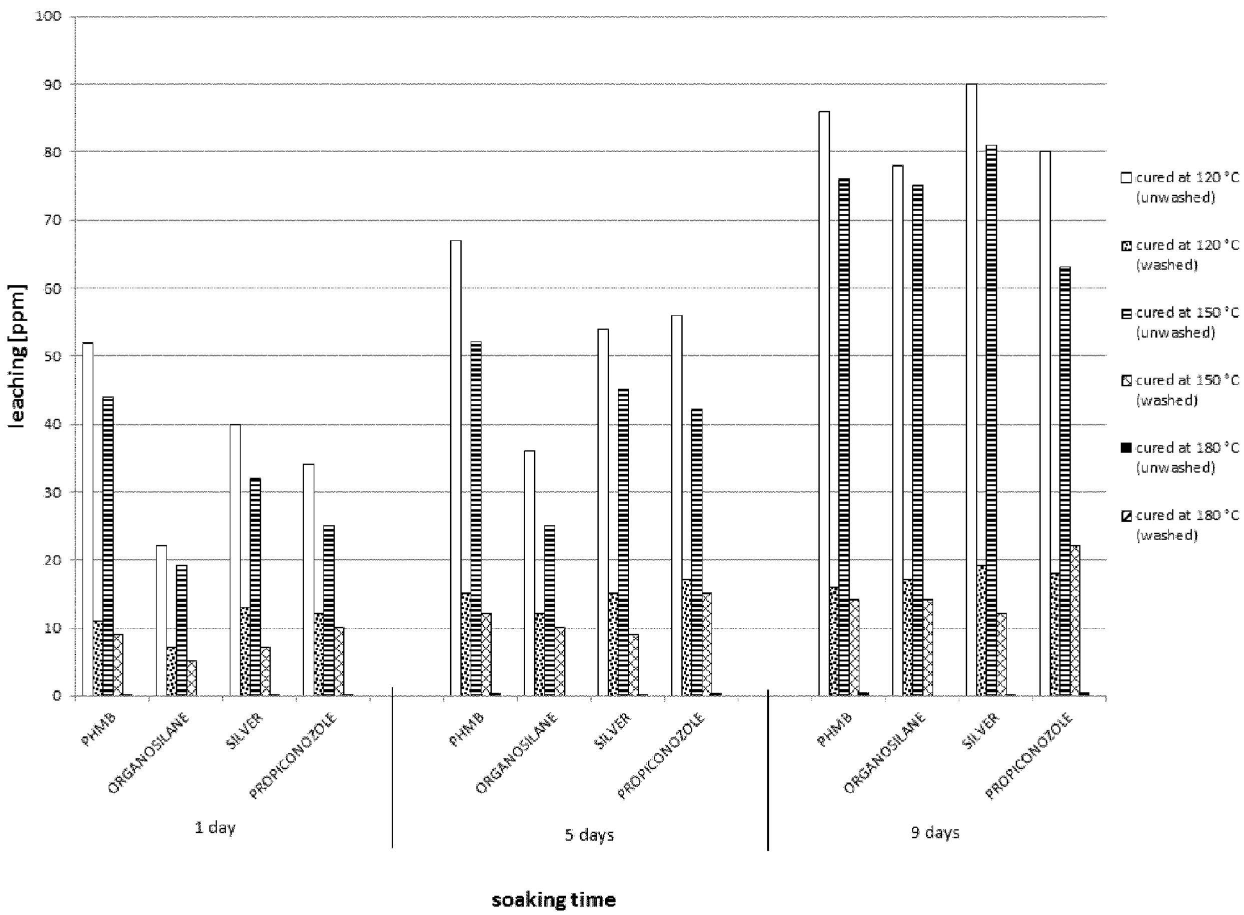
100
90
80
70
60
50
40
30
20
10
0
leaching [ppm]
cured at 120 °C (unwashed)
cured at 120 °C (washed)
cured at 150 °C (unwashed)
cured at 150 °C (washed)
cured at 180 °C (unwashed)
cured at 180 °C (washed)
PHMB
ORGANOSILANE
SILVER
PROPICONOZOLE
1 day
5 days
9 days
soaking time

Fig. 14

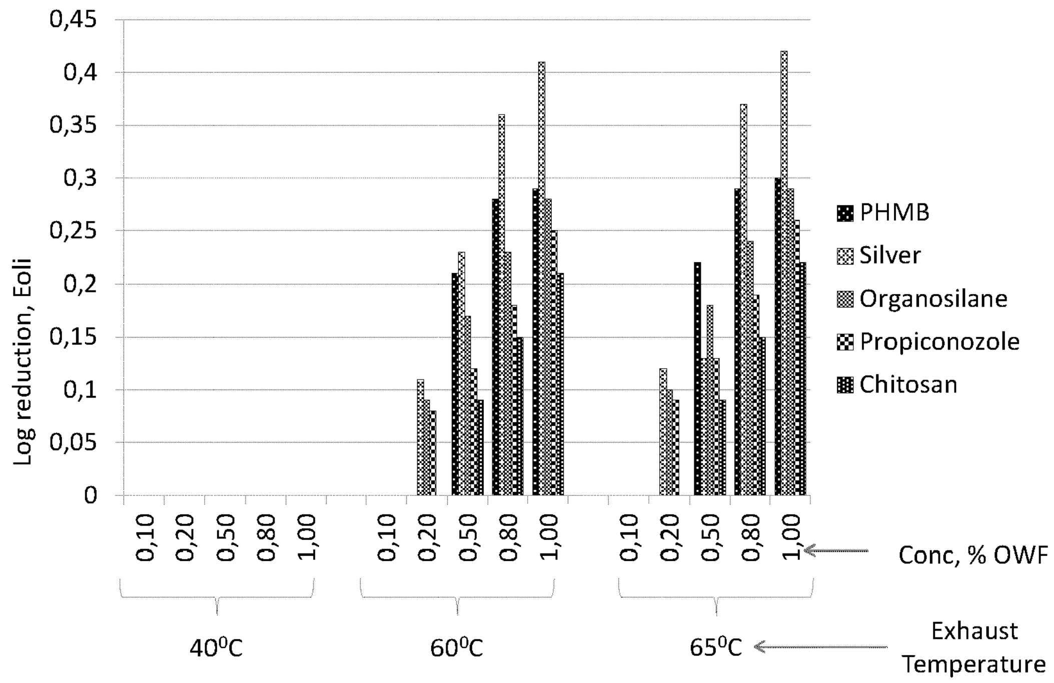


**Fig. 15A: Performance Test - Active Ingredients in Exhaust process**

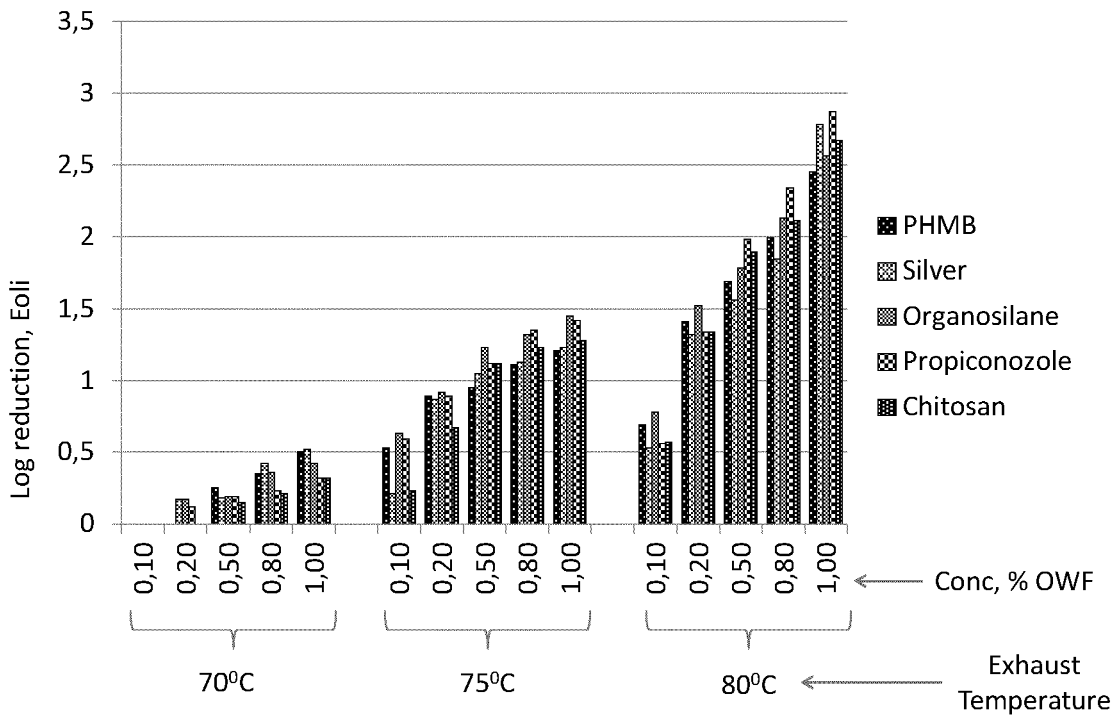


**Fig. 15B: Performance Test - Active Ingredients in Exhaust process**

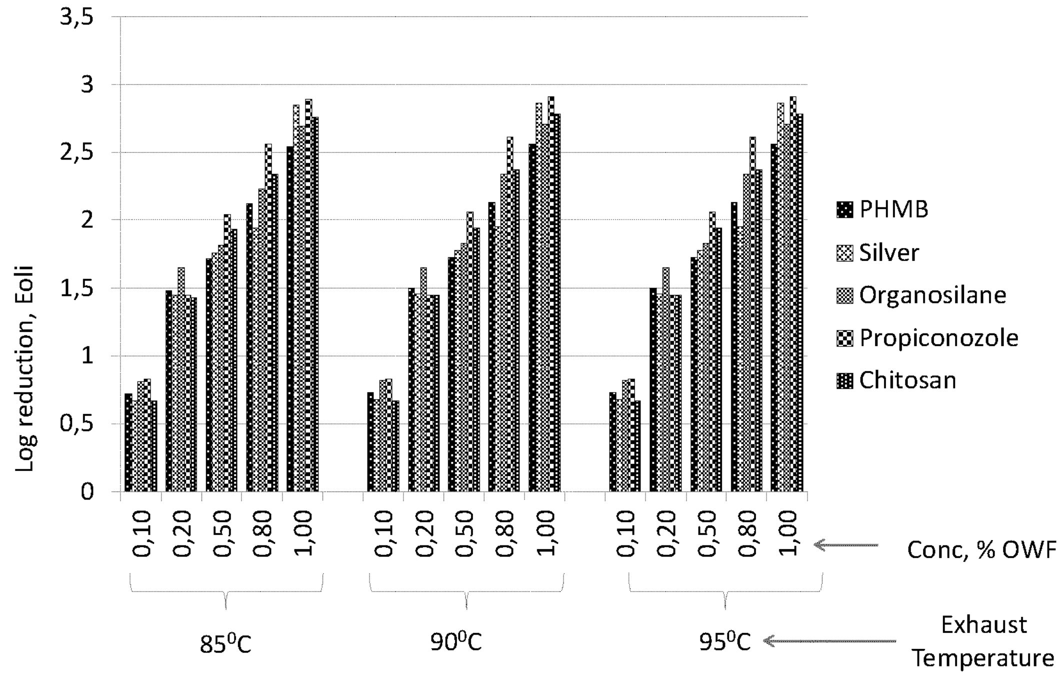


**Fig. 15C : Performance Test - Active Ingredients in Exhaust process**

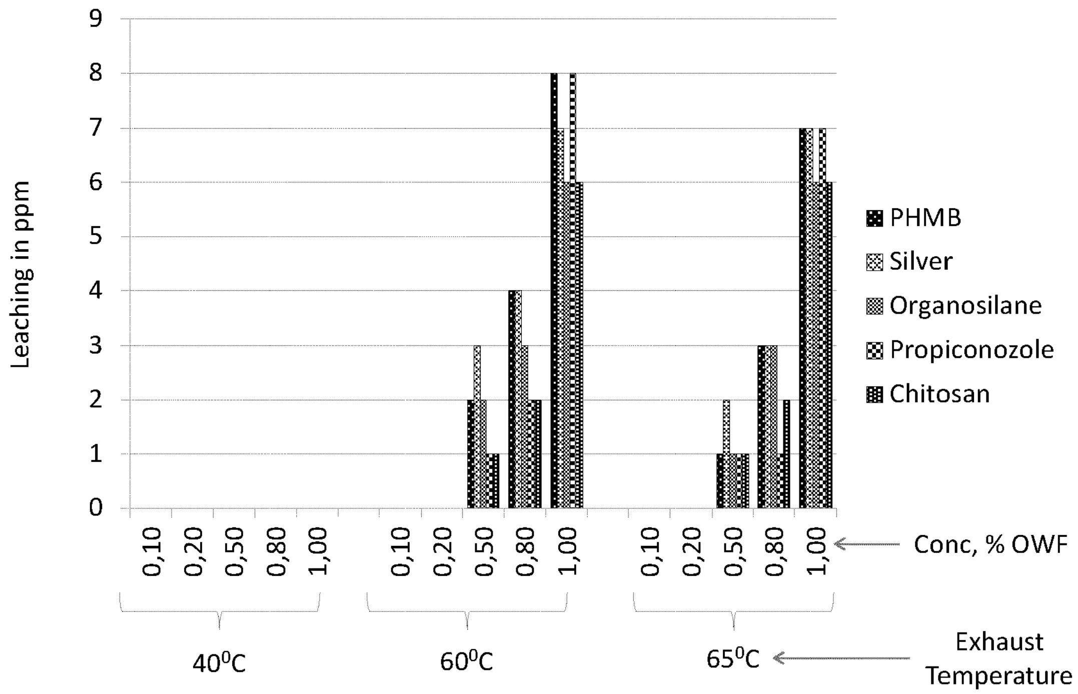


**Fig. 15D : Leaching Test - Active Ingredients in Exhaust process**

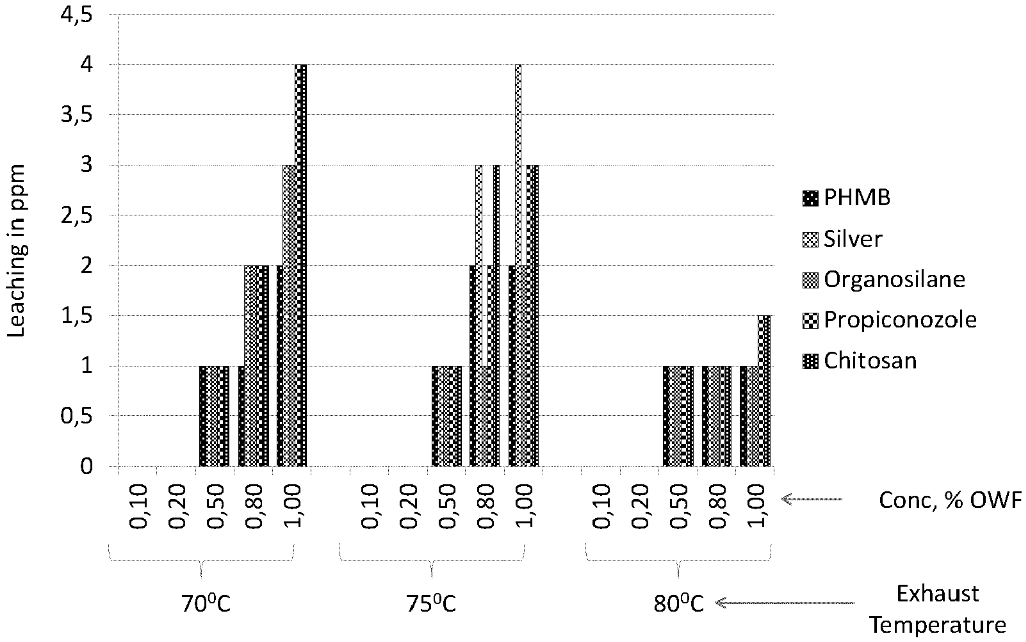


**Fig. 15E : Leaching Test - Active Ingredients in Exhaust process**

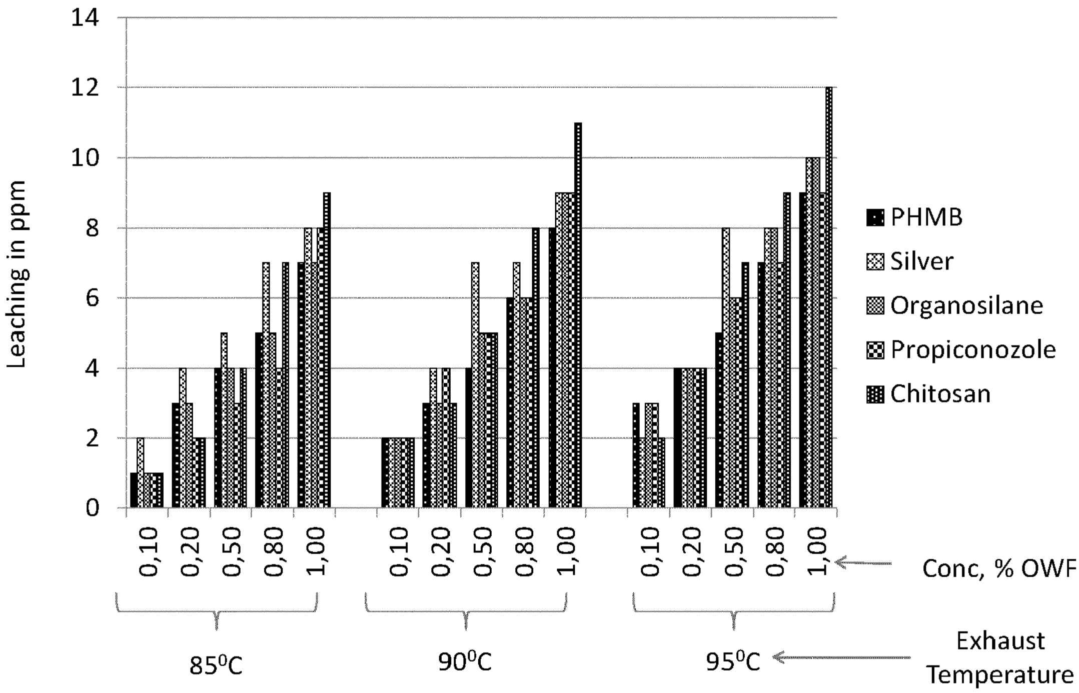


**Fig. 15F : Leaching Test - Active Ingredients in Exhaust process**

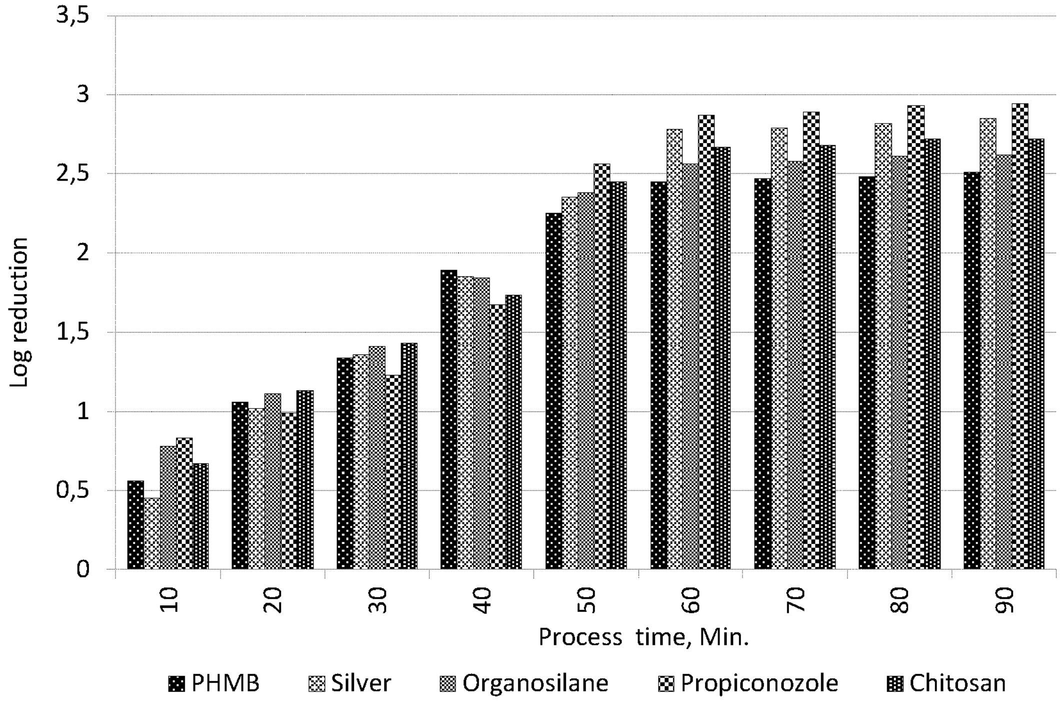


**Fig. 16A : Performance Test - Active Ingredients in Exhaust Process (at 80°C)**

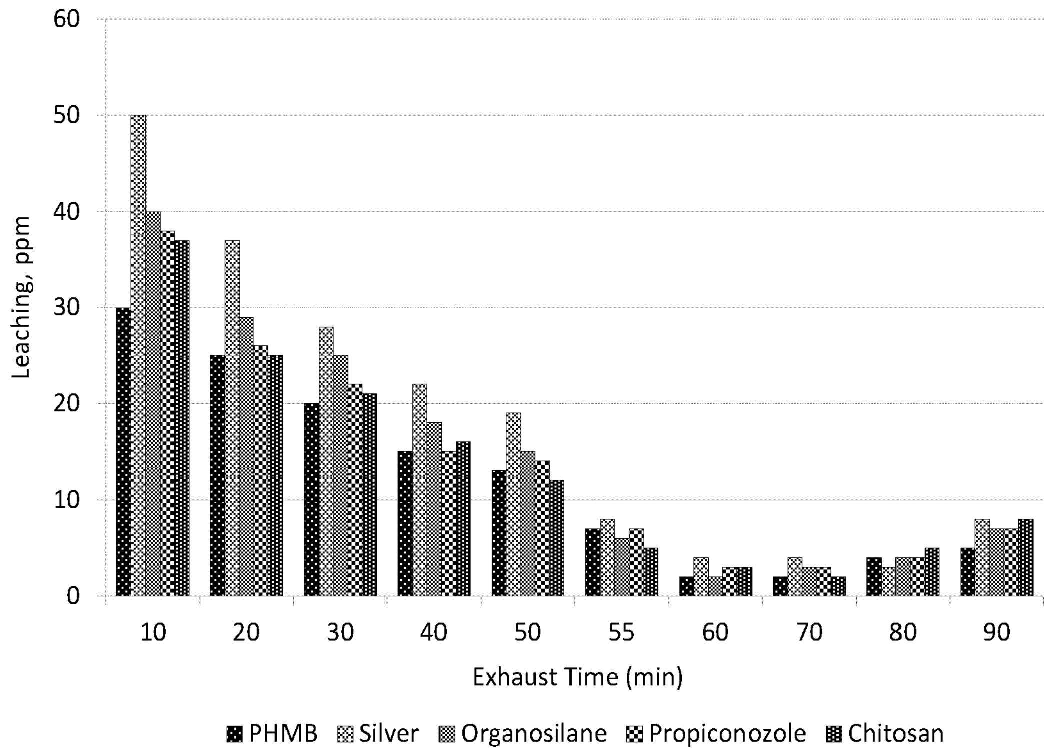


**Fig. 16B : Leaching Test - Active Ingredients in Exhaust Process (at 80°C)**

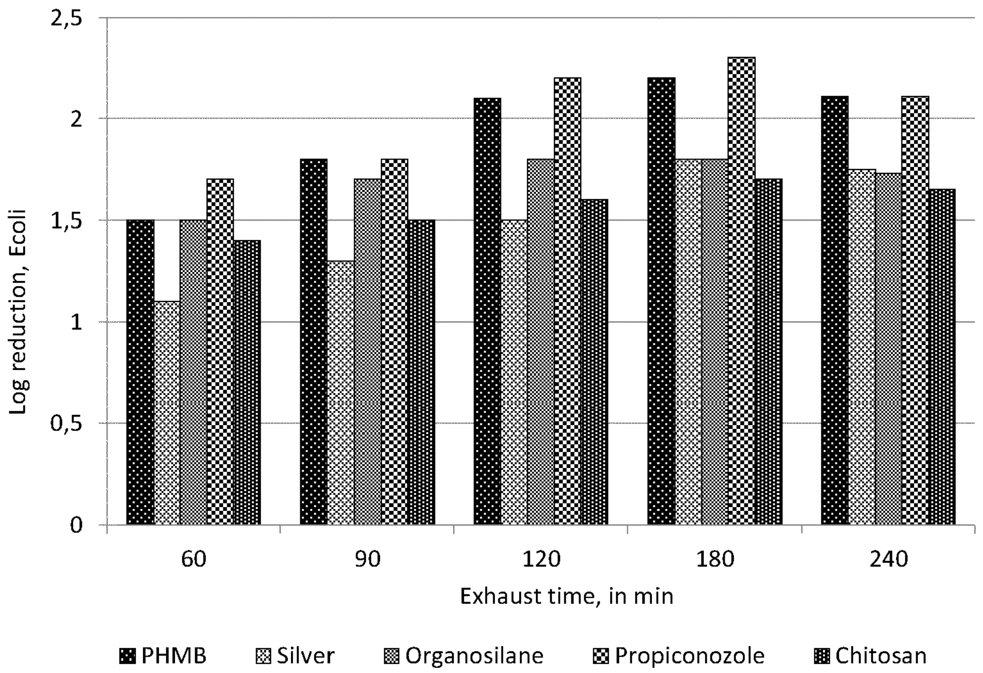


**Fig. 17A : Performance Test - Active Ingredients in Exhaust Process (at 60°C)**

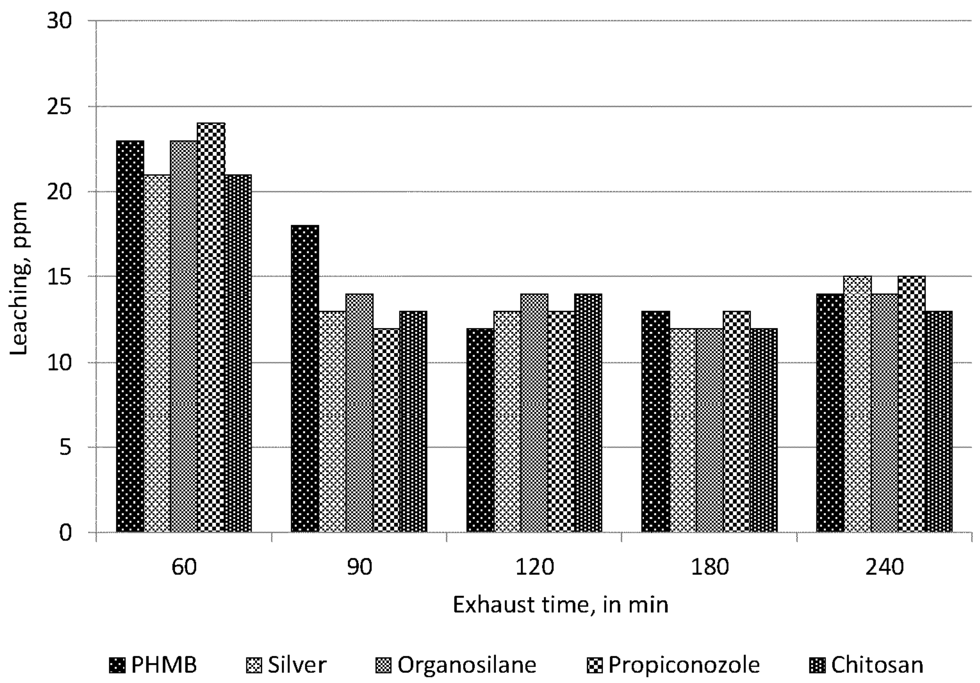


**Fig. 17B : Leaching Test - Active Ingredients in Exhaust Process (at 60°C)**

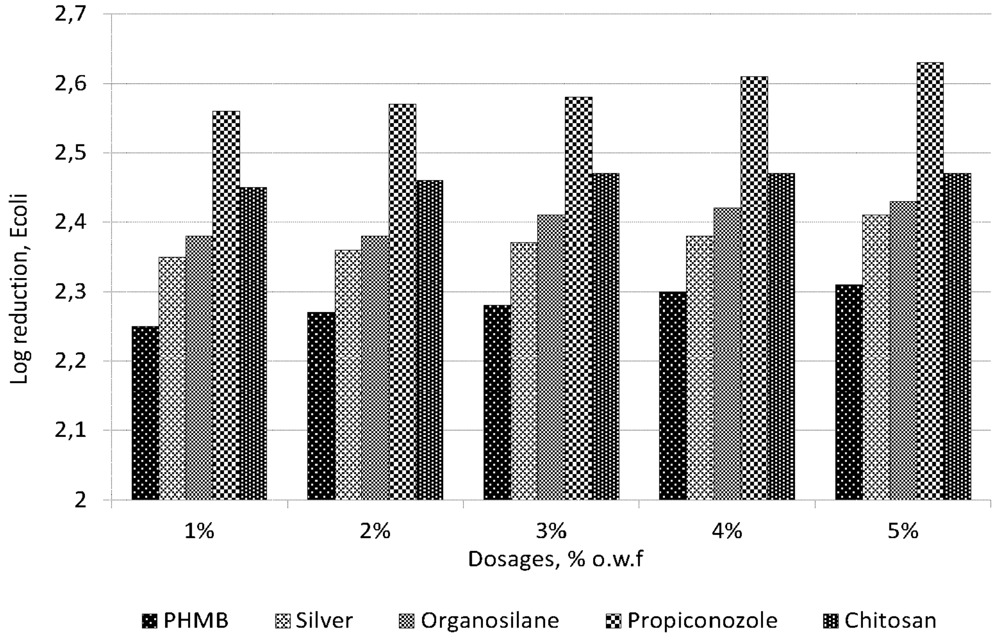


**Fig. 18A : Performance Test - Active Ingredients in Exhaust Process**

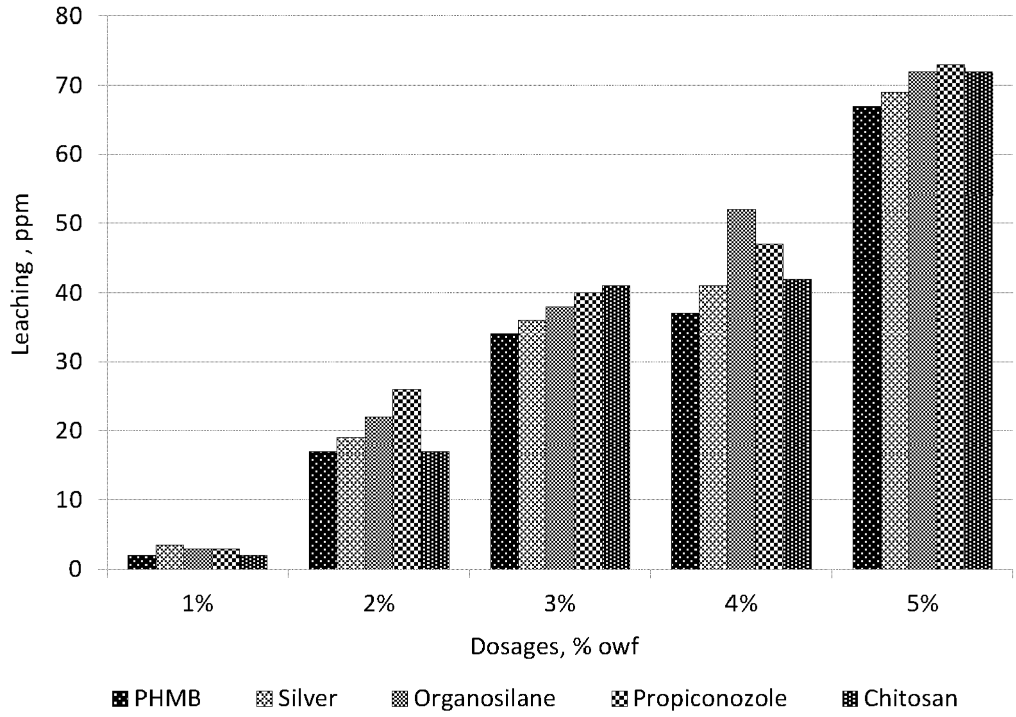


**Fig. 18B : Leaching Test - Active Ingredients in Exhaust Process**

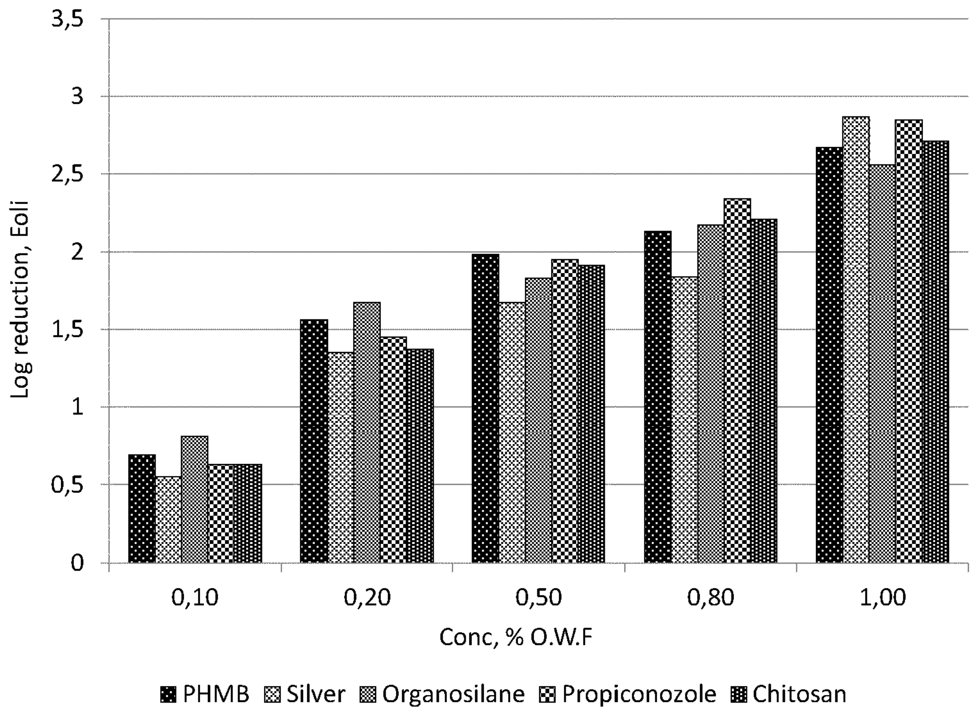


**Fig. 19A : Performance Test – Active Ingredients in Exhaust Process (Cotton)**

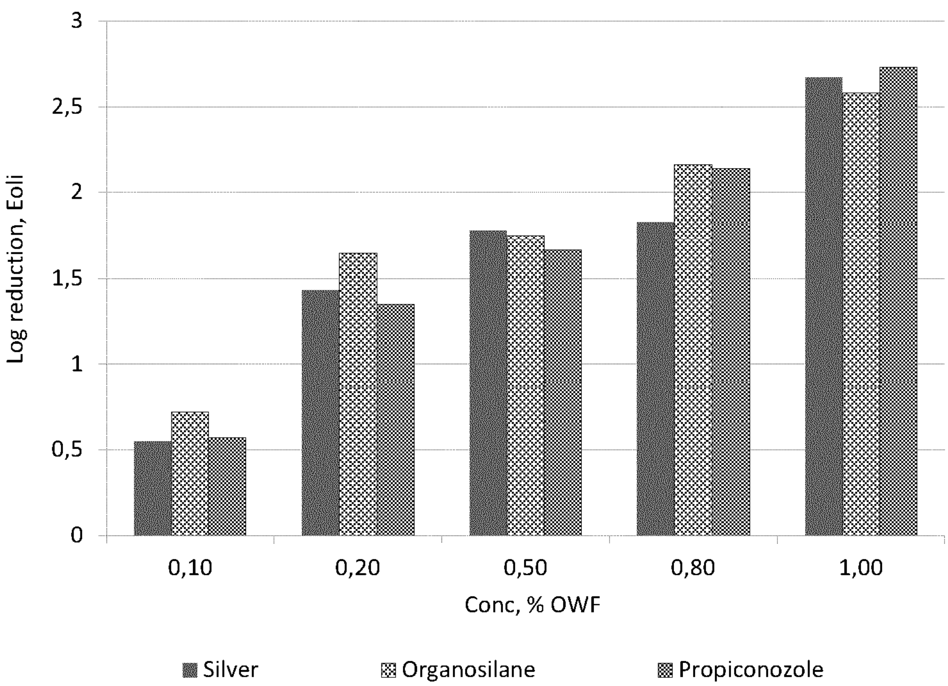


**Fig. 19B : Performance Test of Active Ingredients in Exhaust Process (Polyester)**

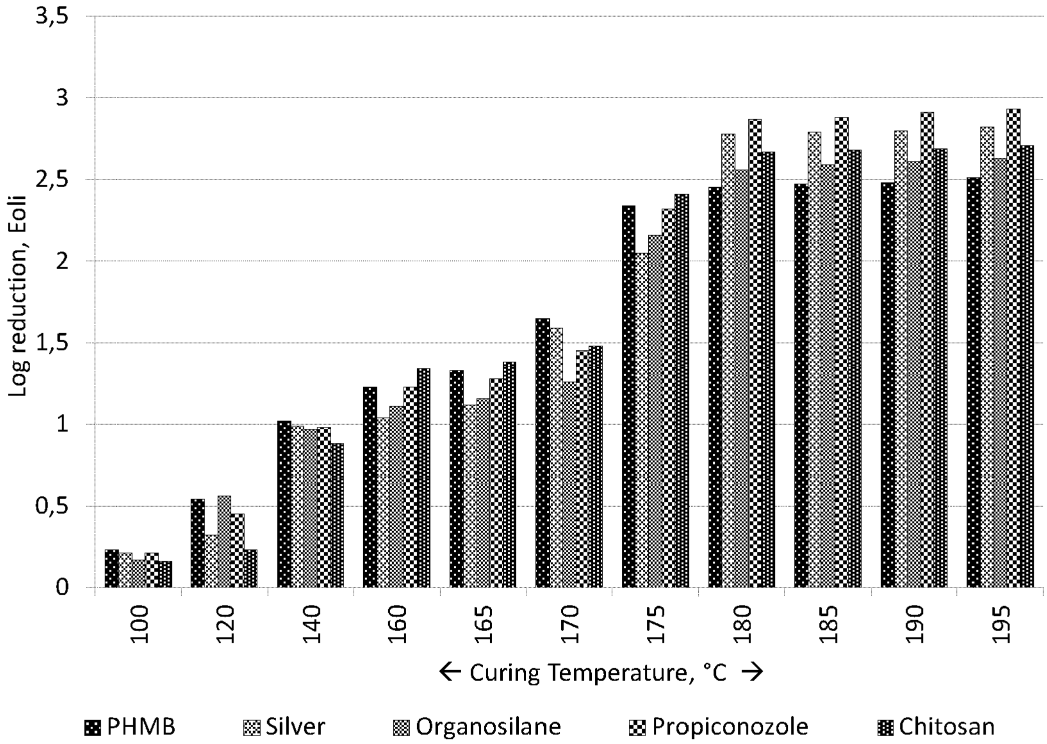


**Fig. 20A : Performance Test – Curing Temperature**

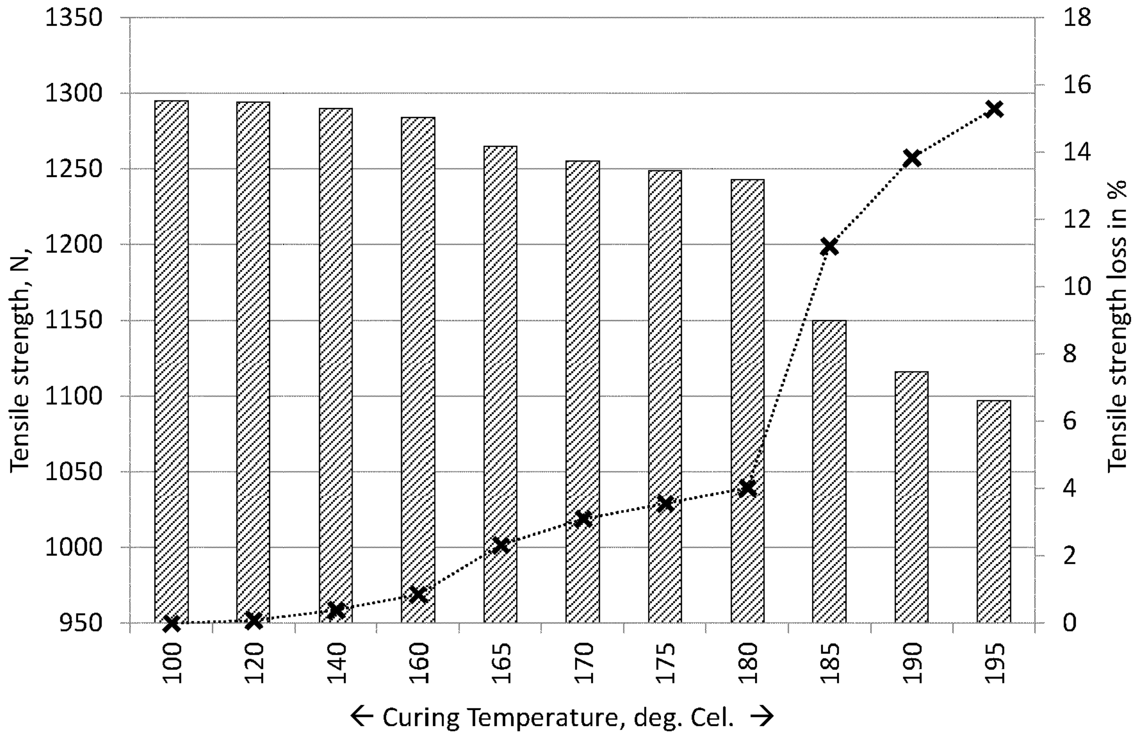


**Fig. 20B: Tensile Strength Test – Curing Temperature**

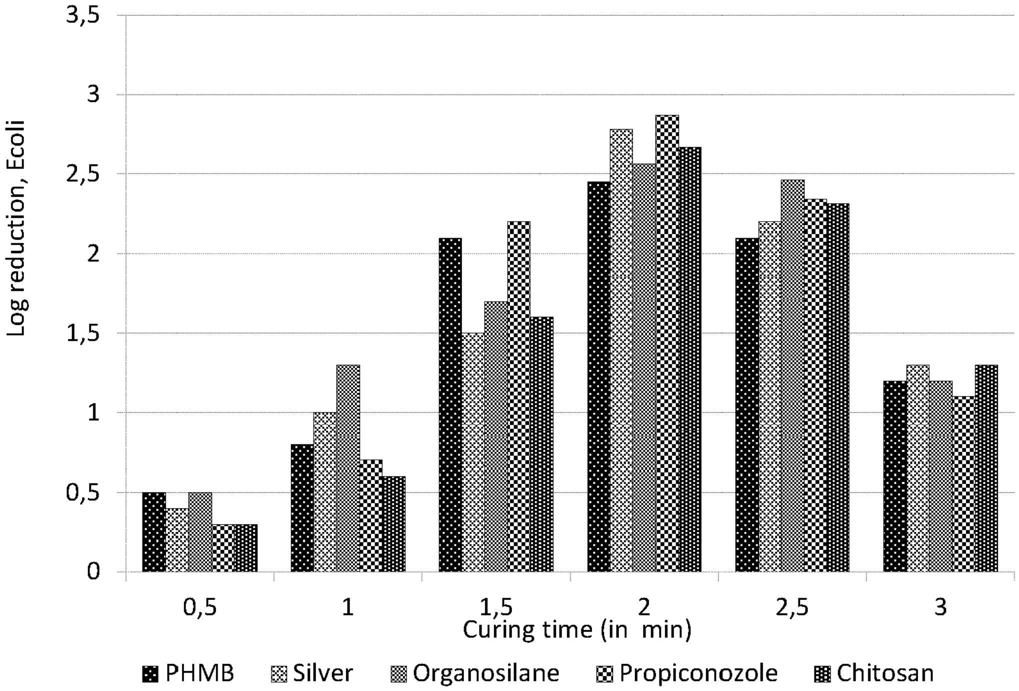


**Fig. 21A  Performance Test – Curing Time**

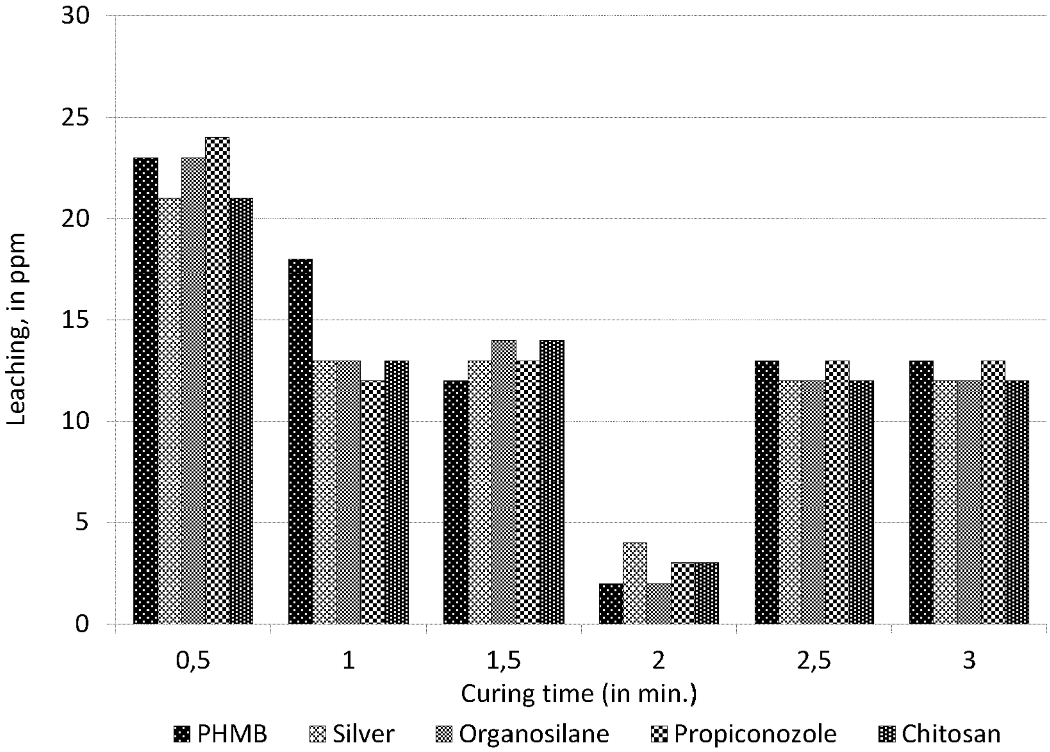


**Fig. 21B : Leaching Test – Curing Temperature**

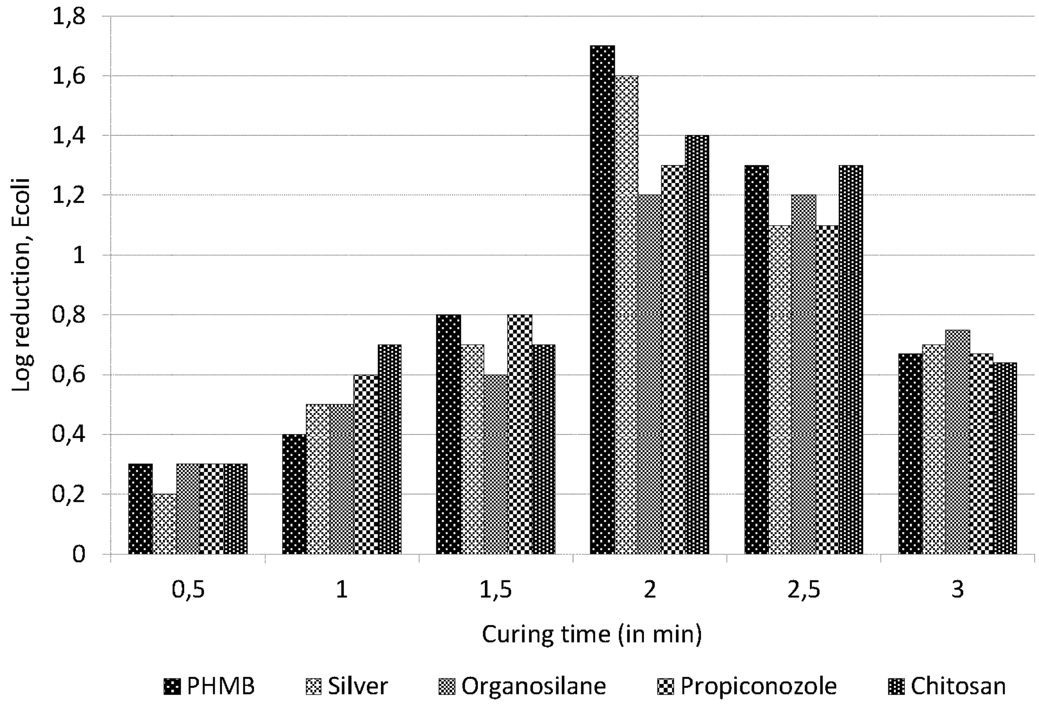


**Fig. 22A : Performance Test – Curing Temperature at 170°C**

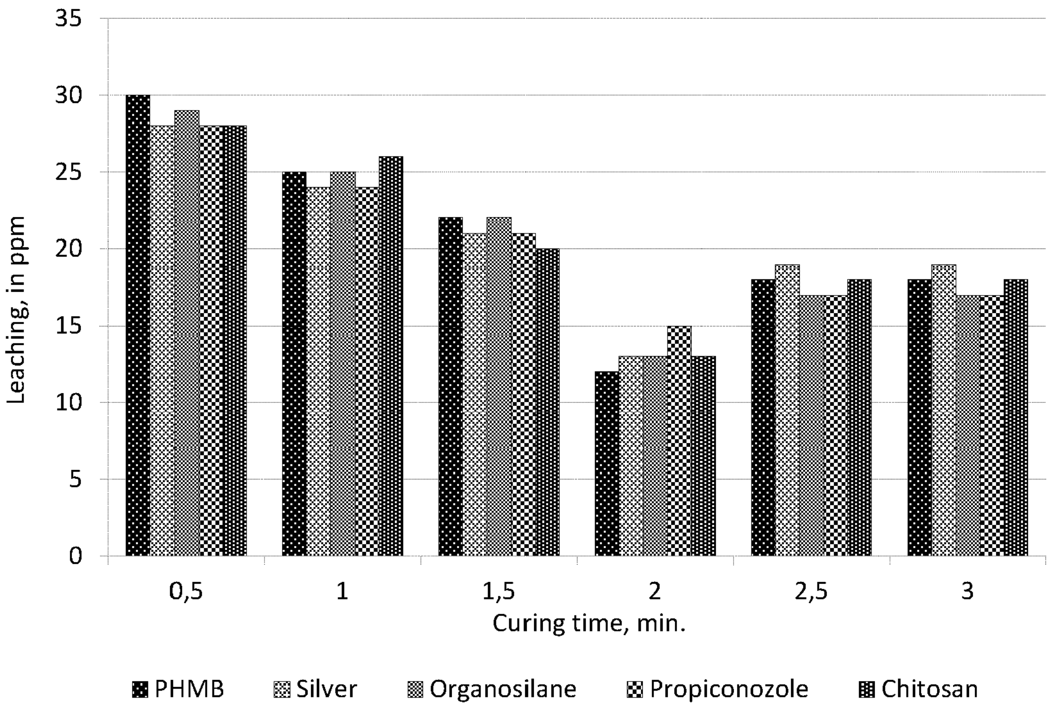


**Fig. 22B : Leaching Test – Curing Temperature at 170°C**

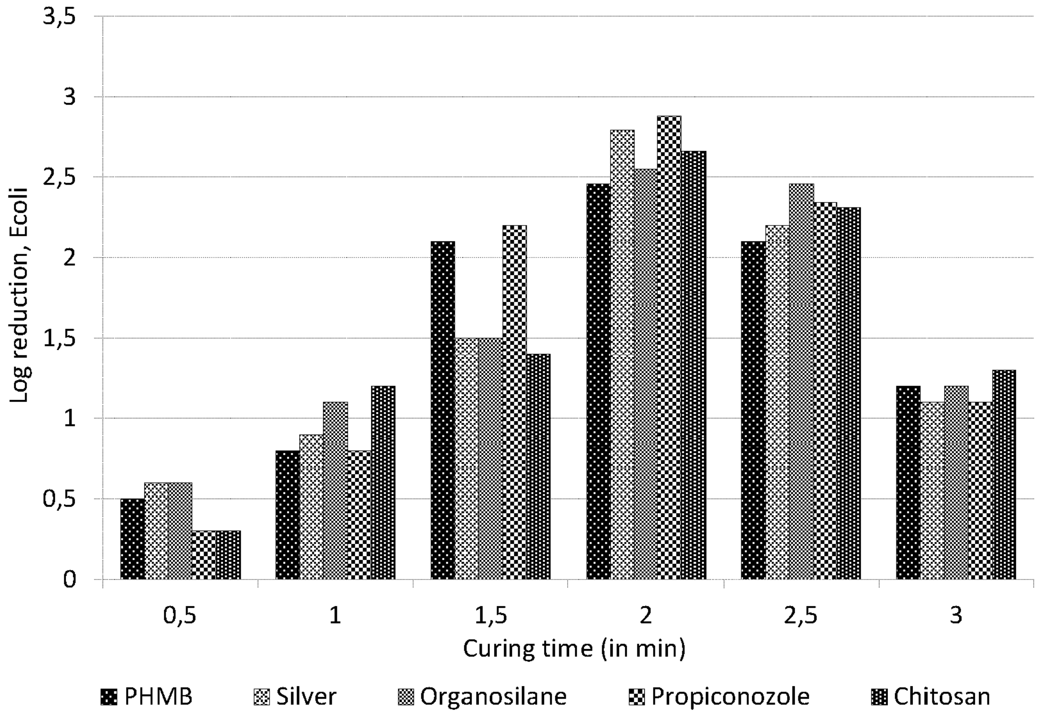


**Fig. 23A : Performance Test – Curing Temperature of 190°C**

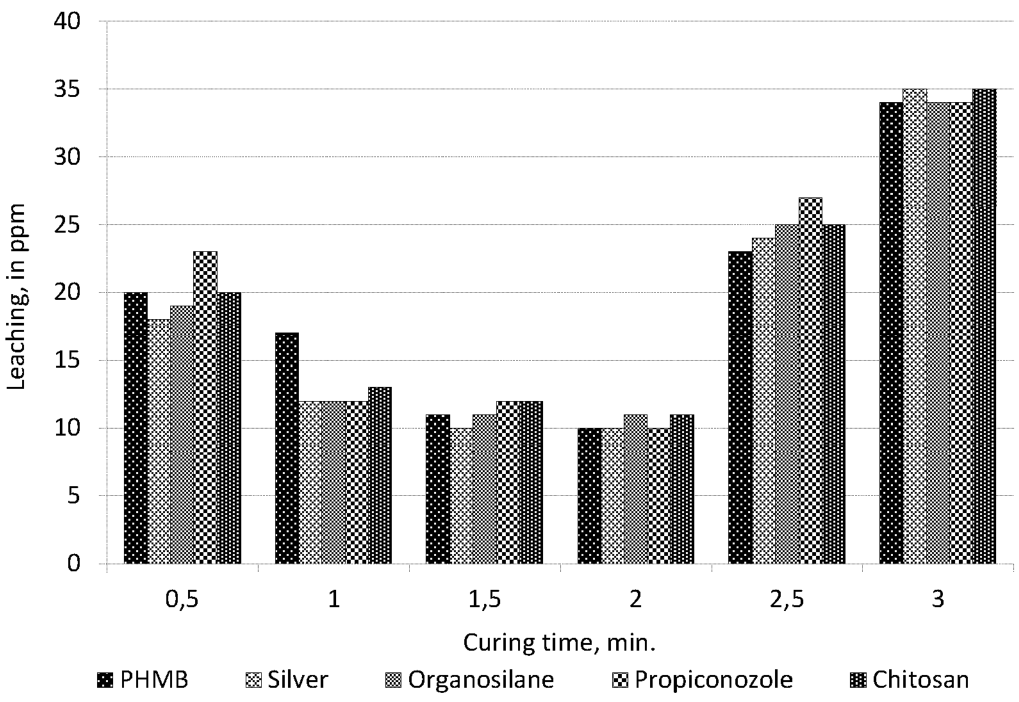


**Fig. 23B : Leaching Test - Curing Temperature at 190°C**

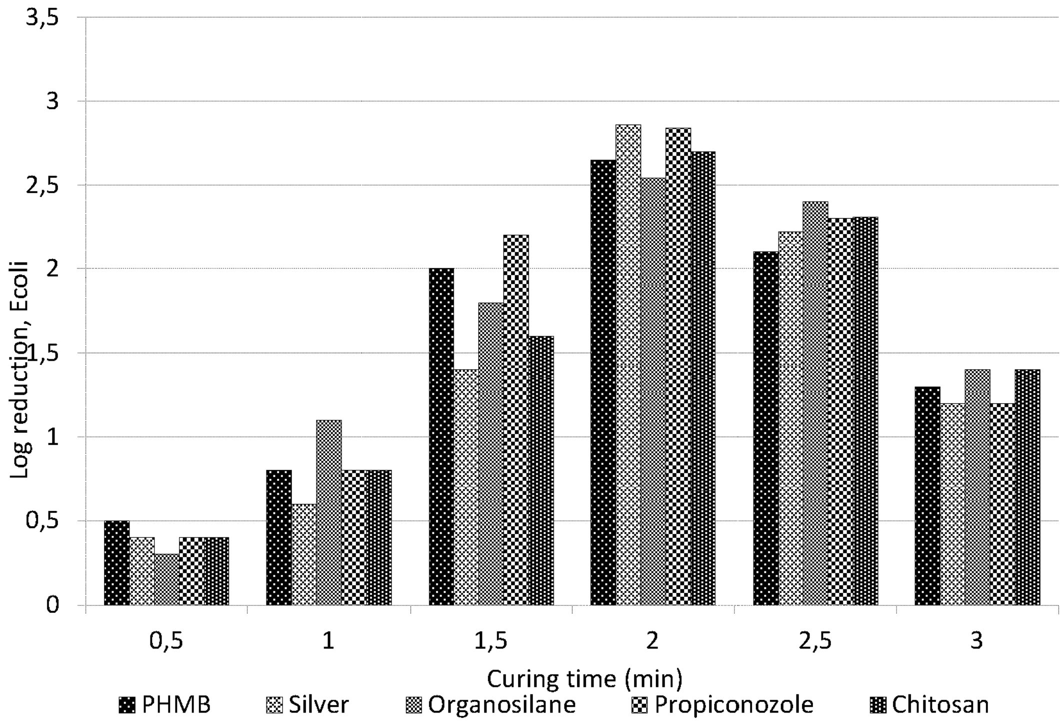


**Fig. 24A : Performance Test – Curing Temperature of 180°C (Cotton)**

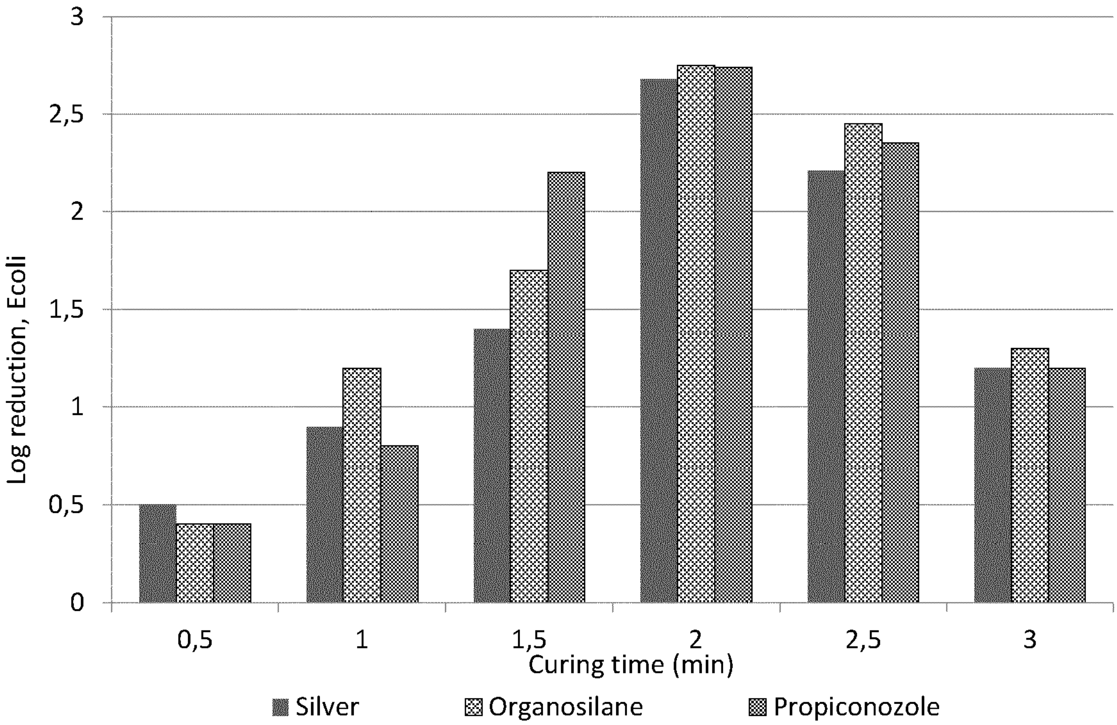


**Fig. 24B: Performance Test – Curing temperature of 180°C (Polyester)**

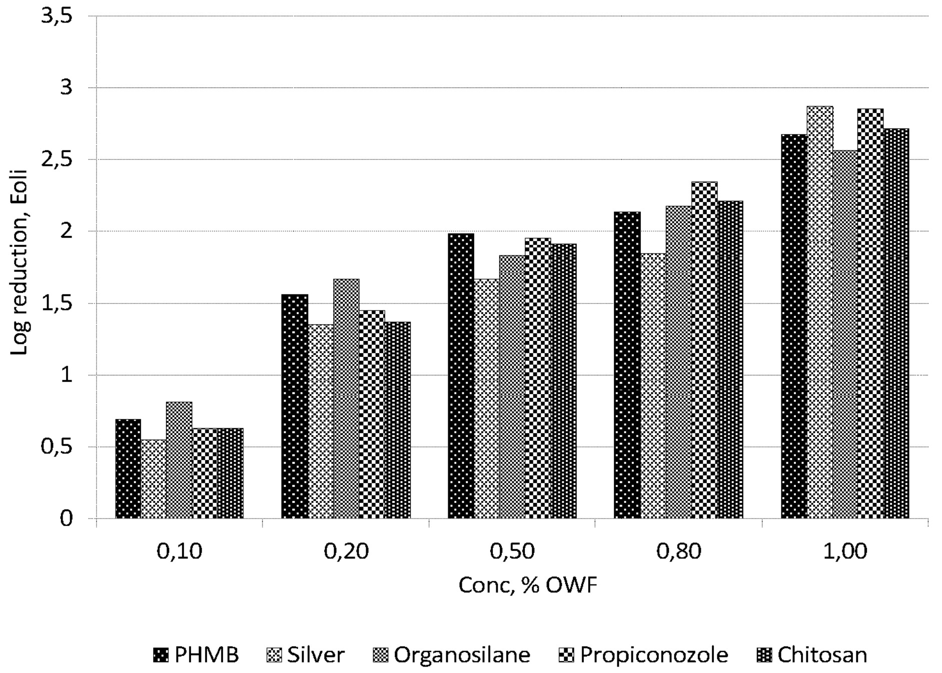


**Fig. 25 A : Performance Test - Active Ingredients in Exhaust process (100GSM Cotton)**

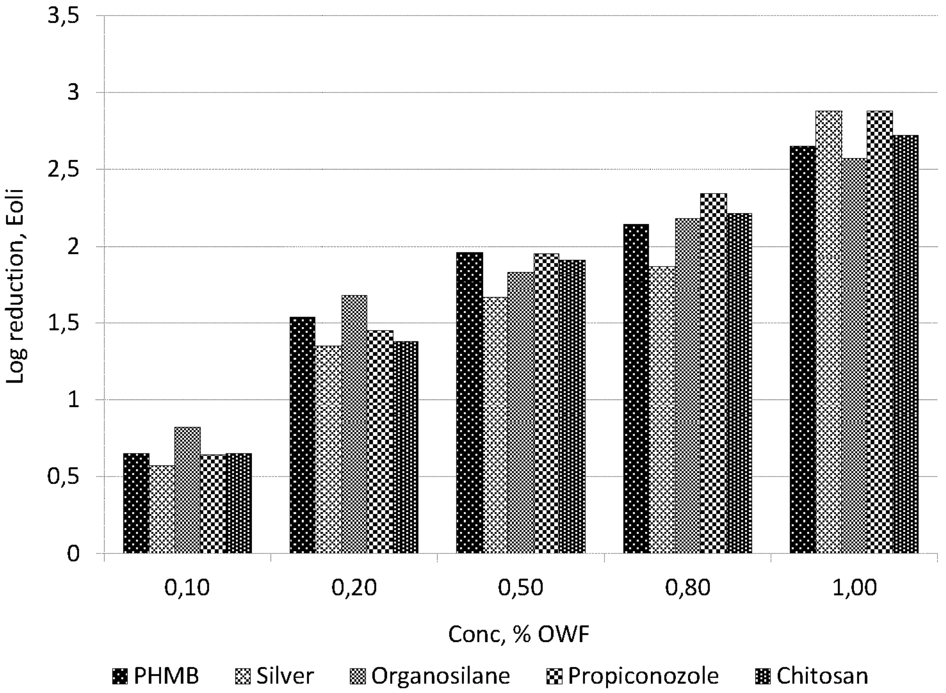


**Fig. 25B : Performance Test - Active Ingredients in Exhaust process (300 GSM Cotton)**

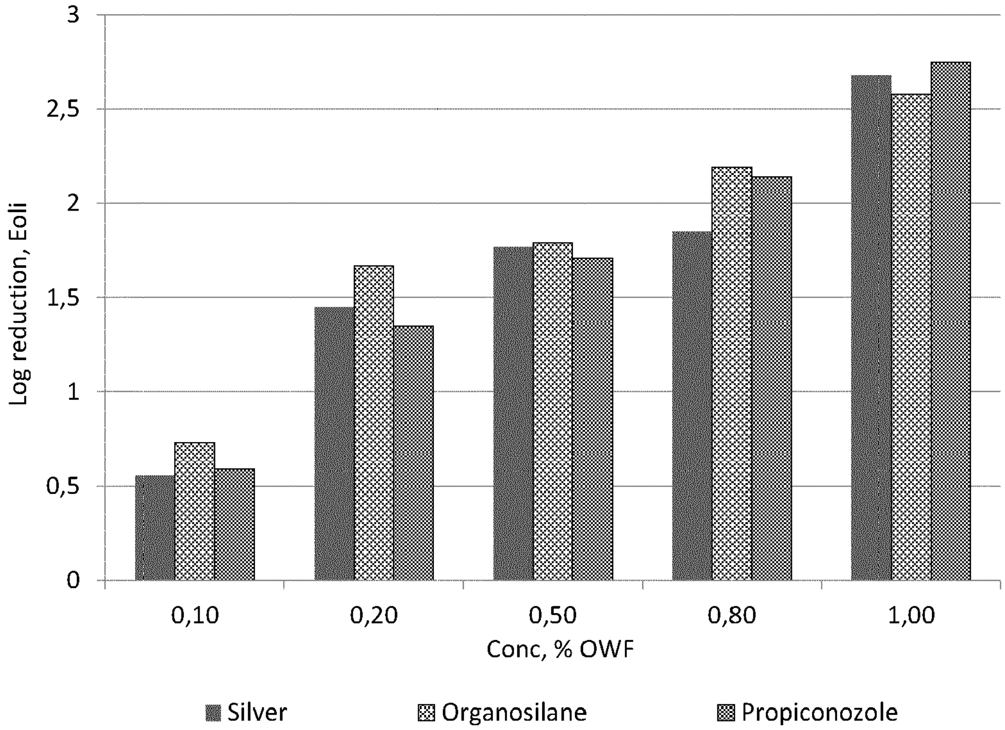


**Fig. 26A : Performance Test - Active Ingredients in Exhaust process (100 GSM Polyester)**

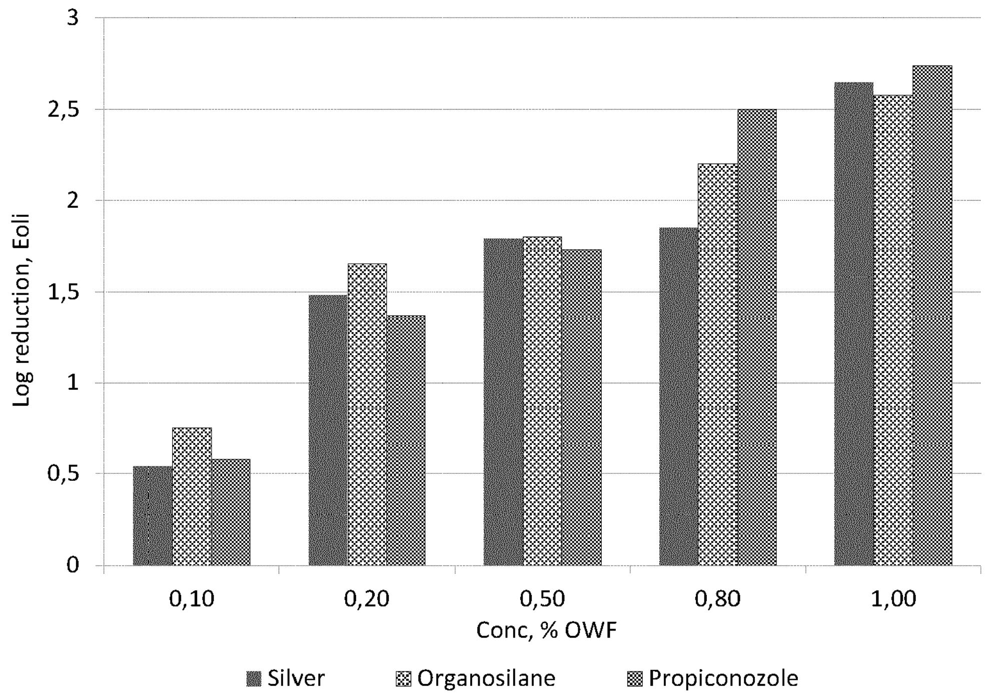


**Fig. 26B : Performance Test - Active Ingredients in Exhaust Process (300 GSM Polyester)**

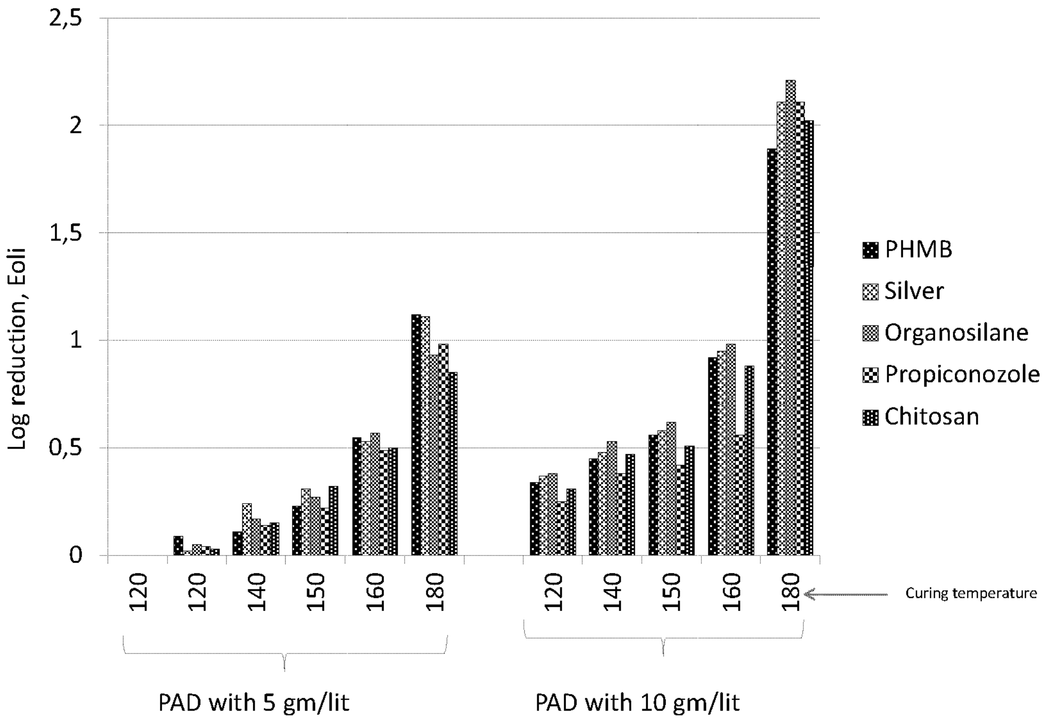


**Fig. 27A: Performance Test - PAD process**

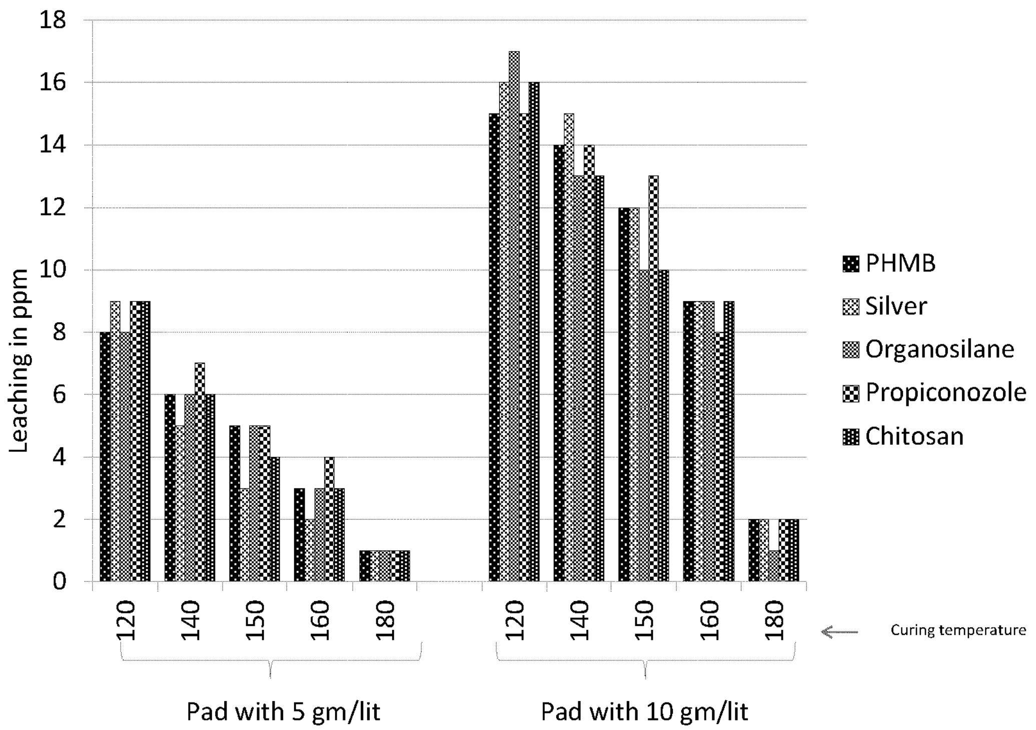


**Fig. 27B : Leaching Test - PAD process**

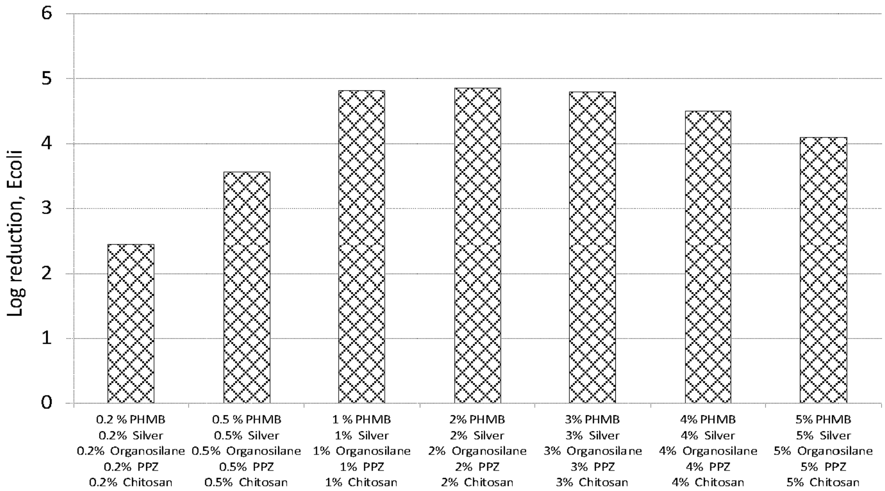


**Fig. 28A : Performance Test - Mixture**

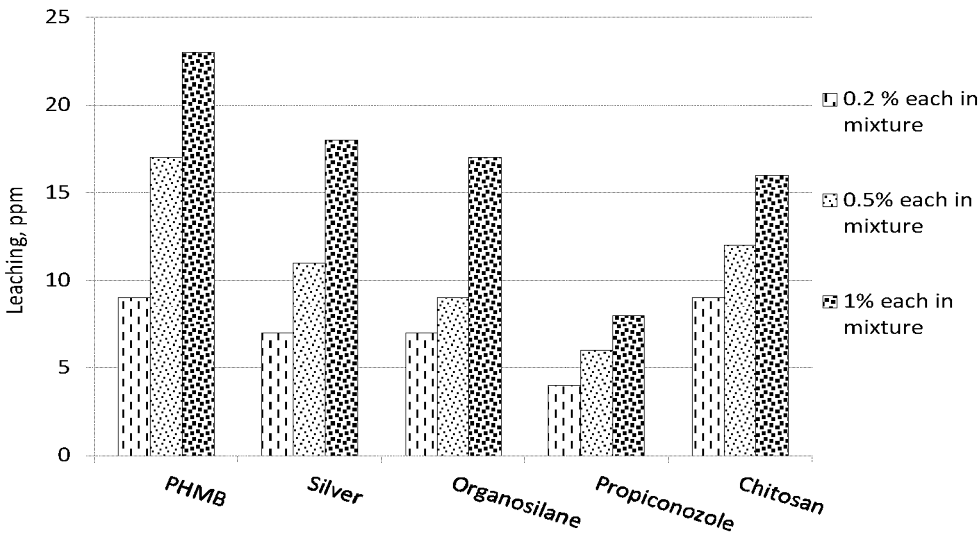


**Fig. 28B : Leaching Test – Mixture**

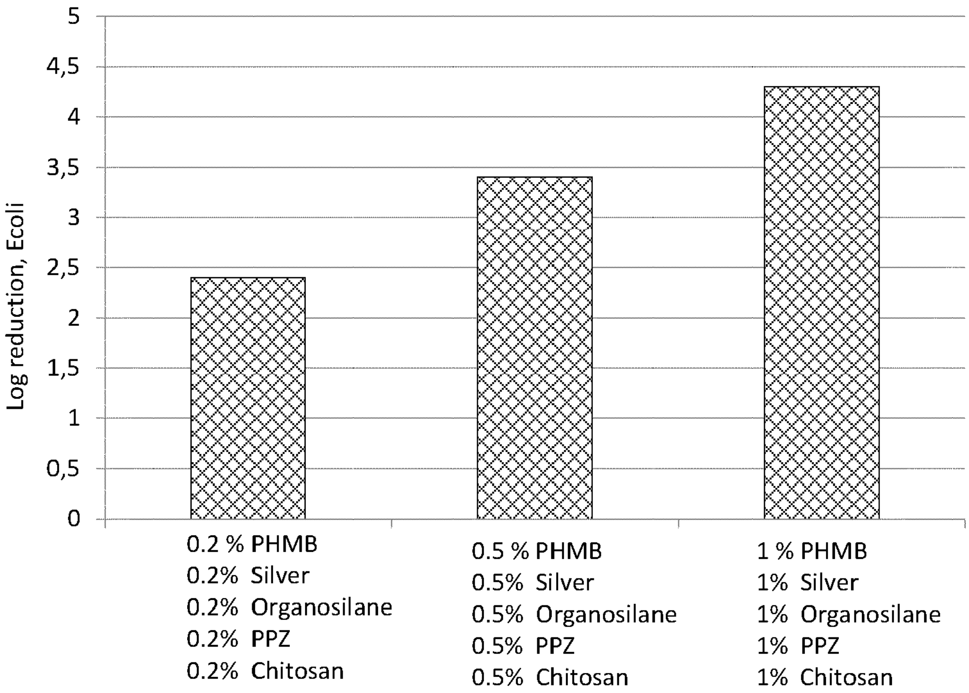


**Fig. 29 : Performance Test - Mixture and Post Wash**

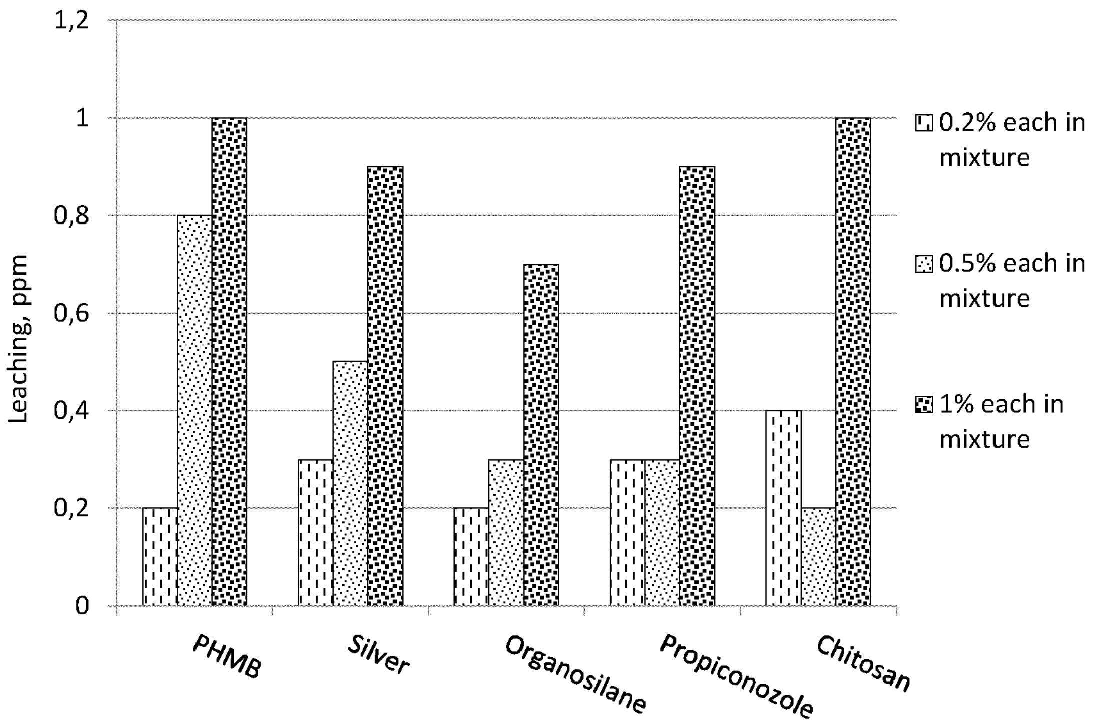


**Fig. 29B : Leaching Test – Mixture and Post Wash**

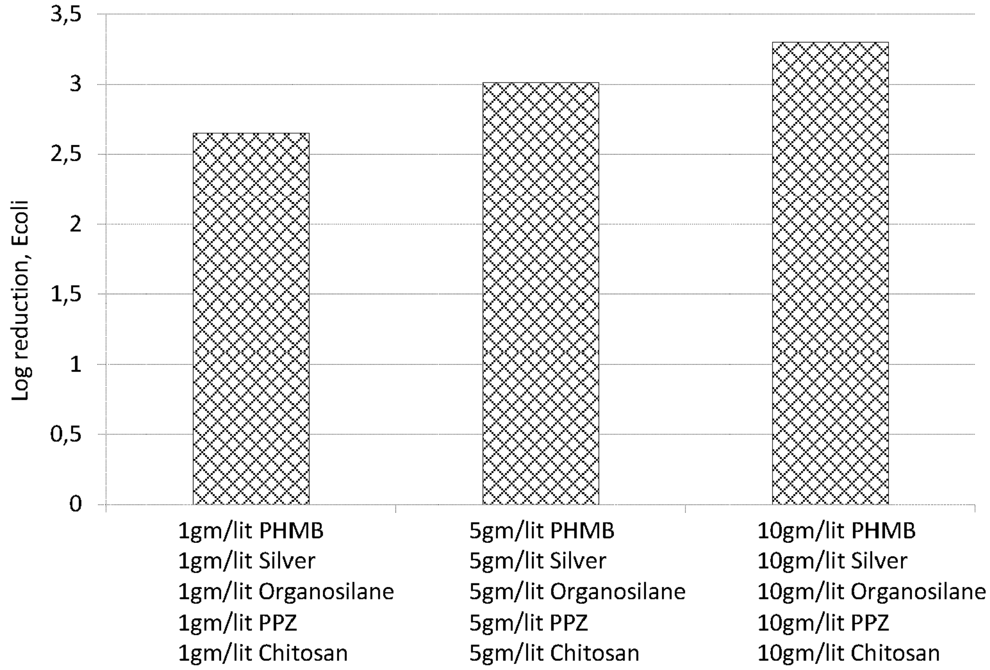


**Fig. 30A : Performance Test – Mixture in PAD process**

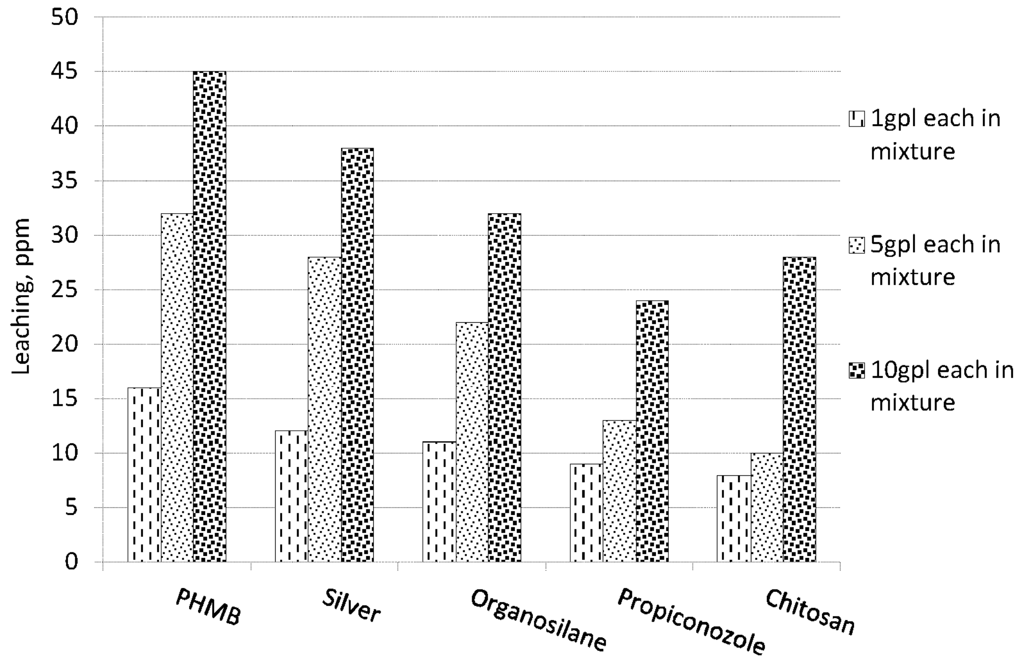


**Fig. 30B: Leaching Test – Mixture in PAD process**

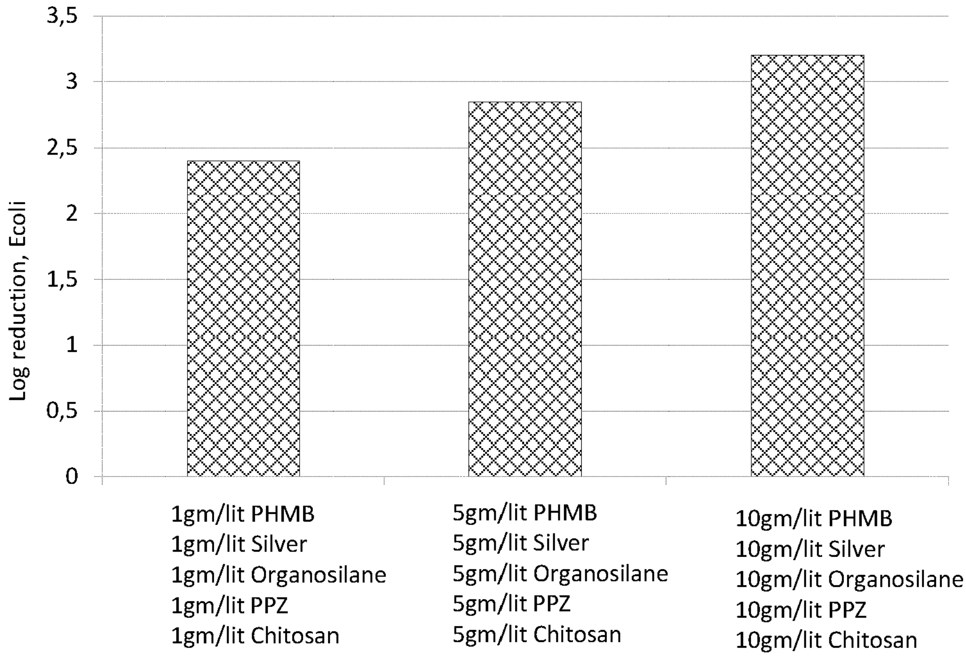


**Fig. 31A: Performance Test – Mixture in PAD process and Post Wash**

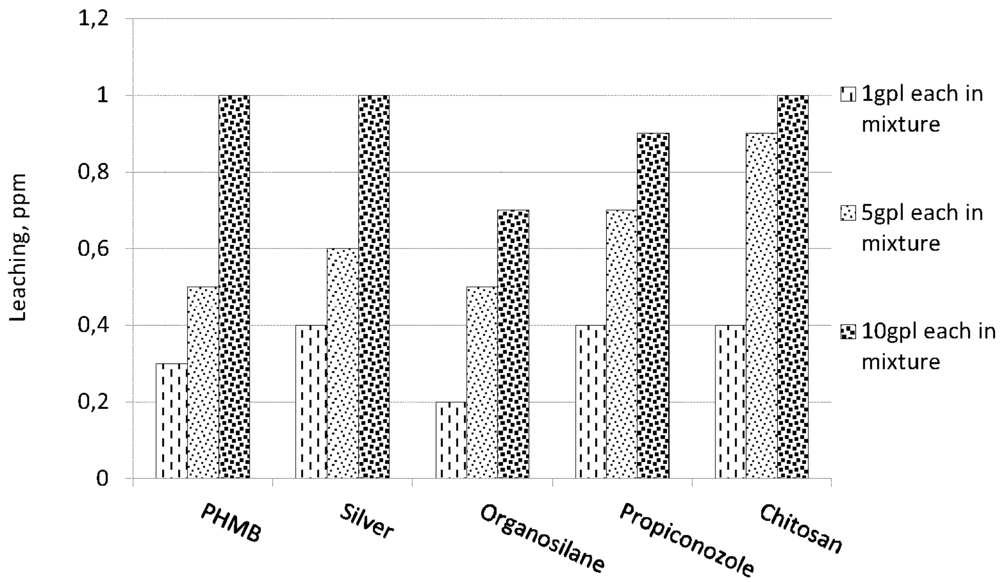


**Fig. 31B: Leaching Test – Mixture in PAD process and Post Wash**

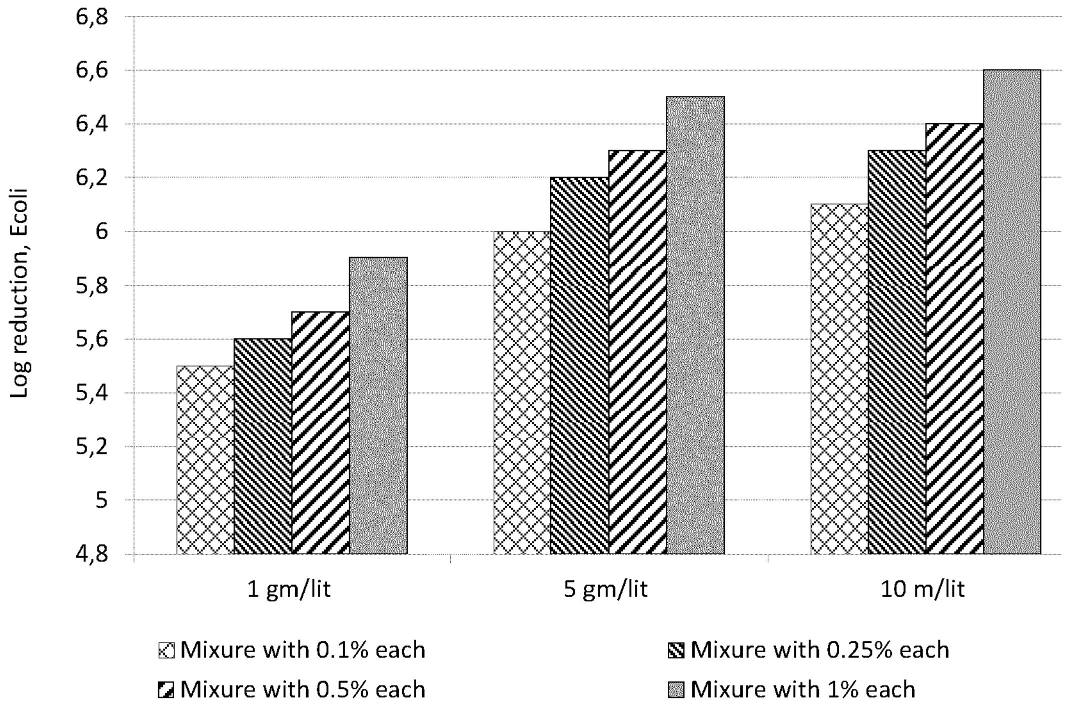


**Fig. 32A : Performance Test – Two Cycle (Exhaust + PAD)**

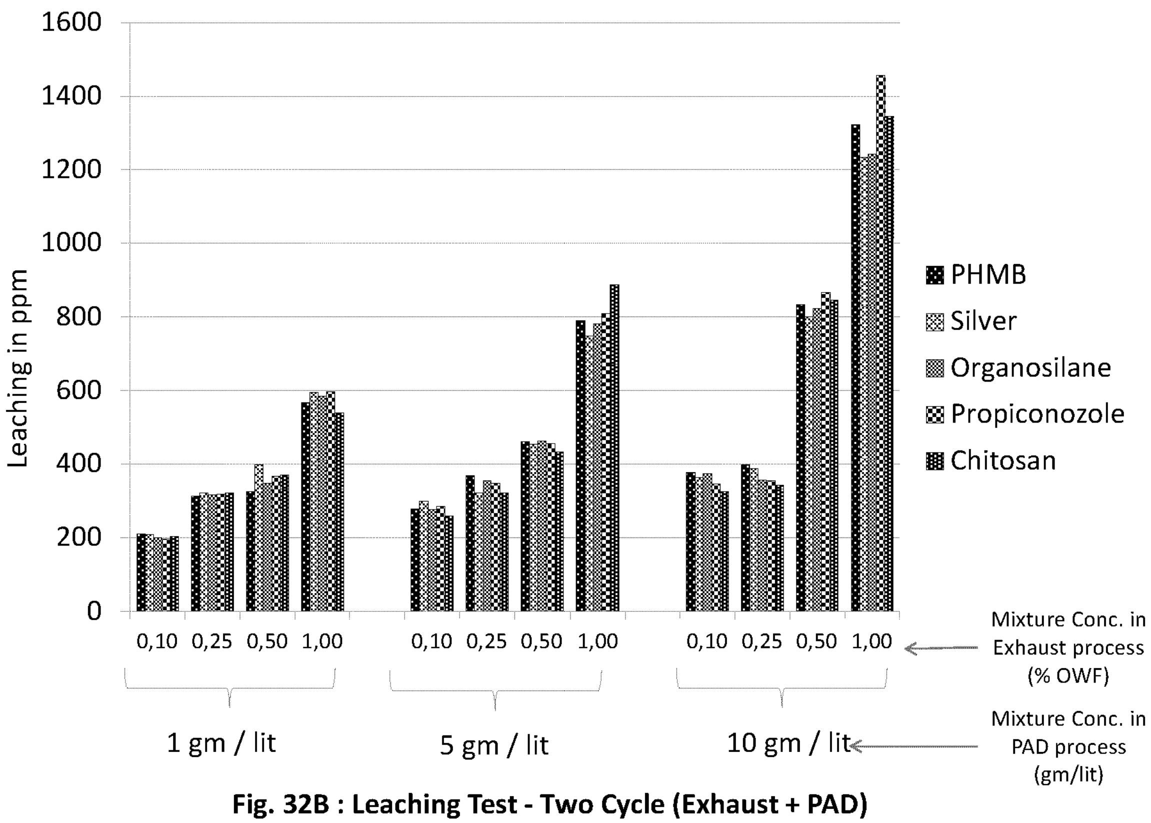


**Fig. 32B : Leaching Test - Two Cycle (Exhaust + PAD)**

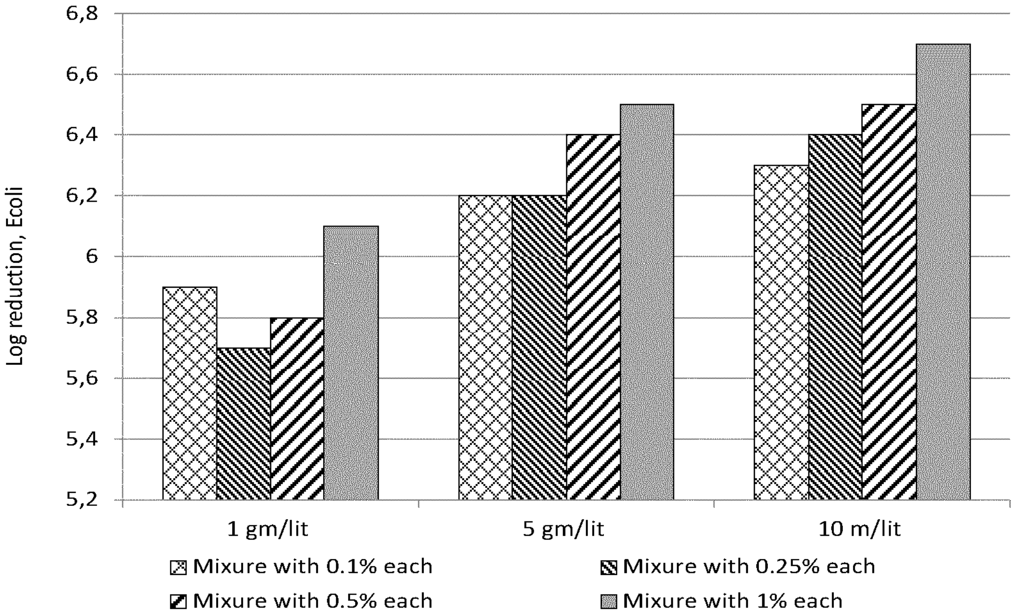


**Fig 33A: Performance Test – Two Cycle (Exhaust + Wash +PAD)**

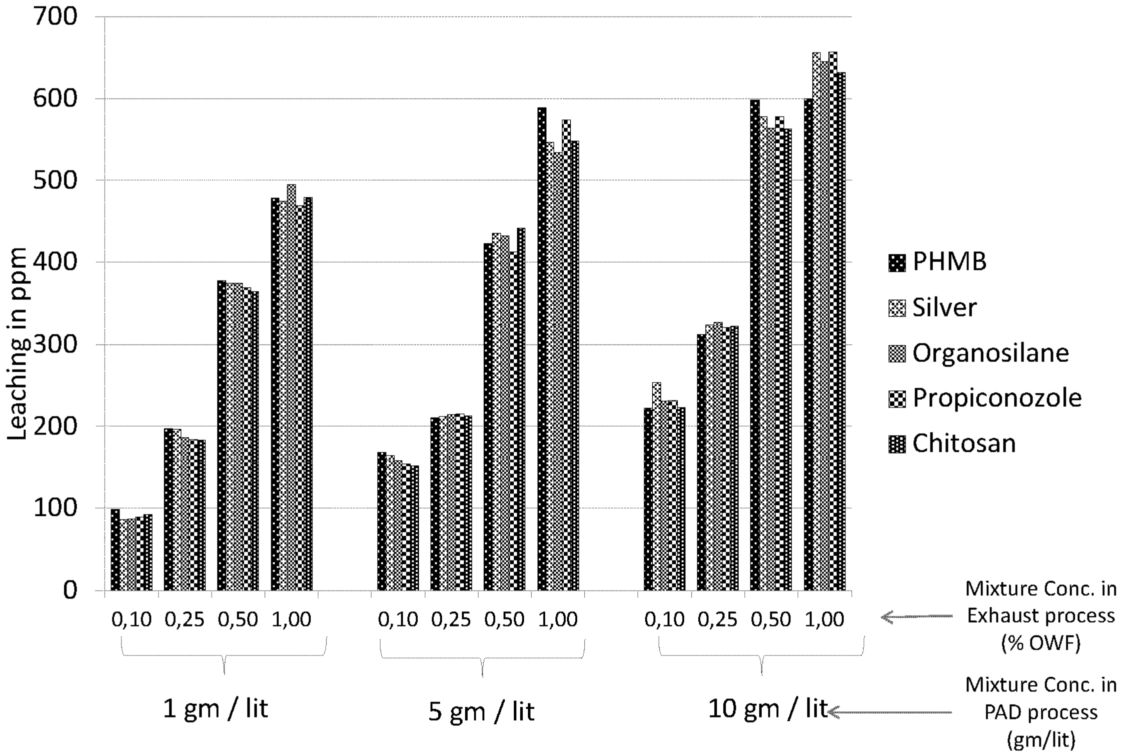


**Fig. 33B : Leaching Test - Two cycle (Exhaust + Wash + PAD)**

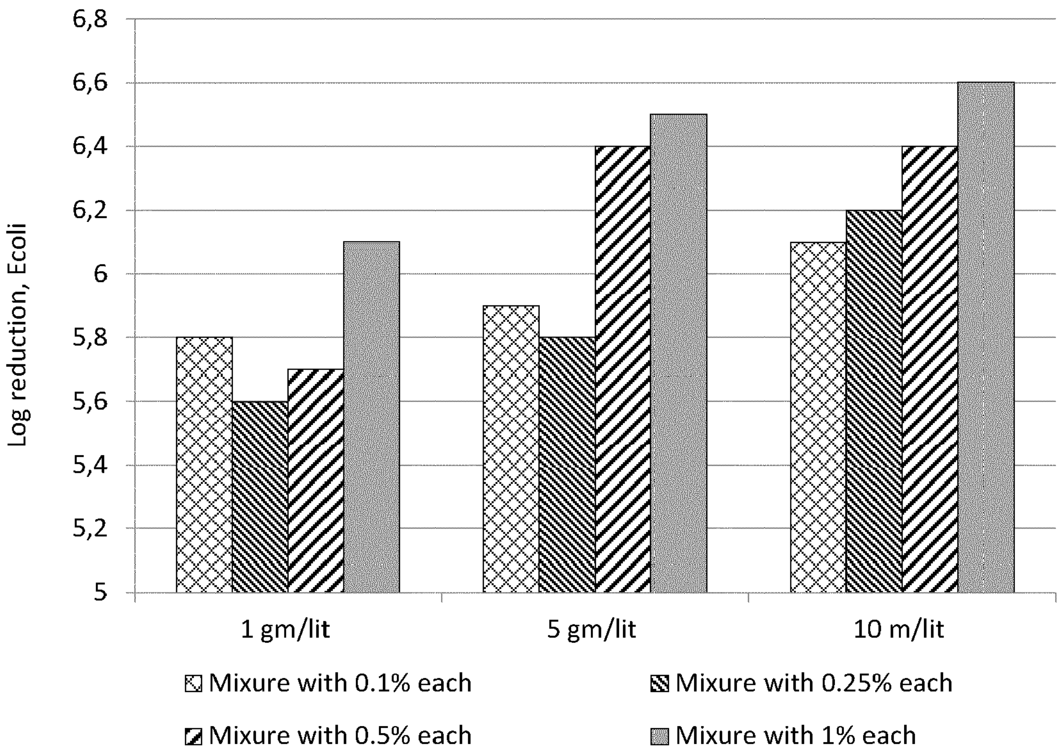


**Fig. 34A: Performance Test – Two Cycle (Exhaust + PAD + Wash)**

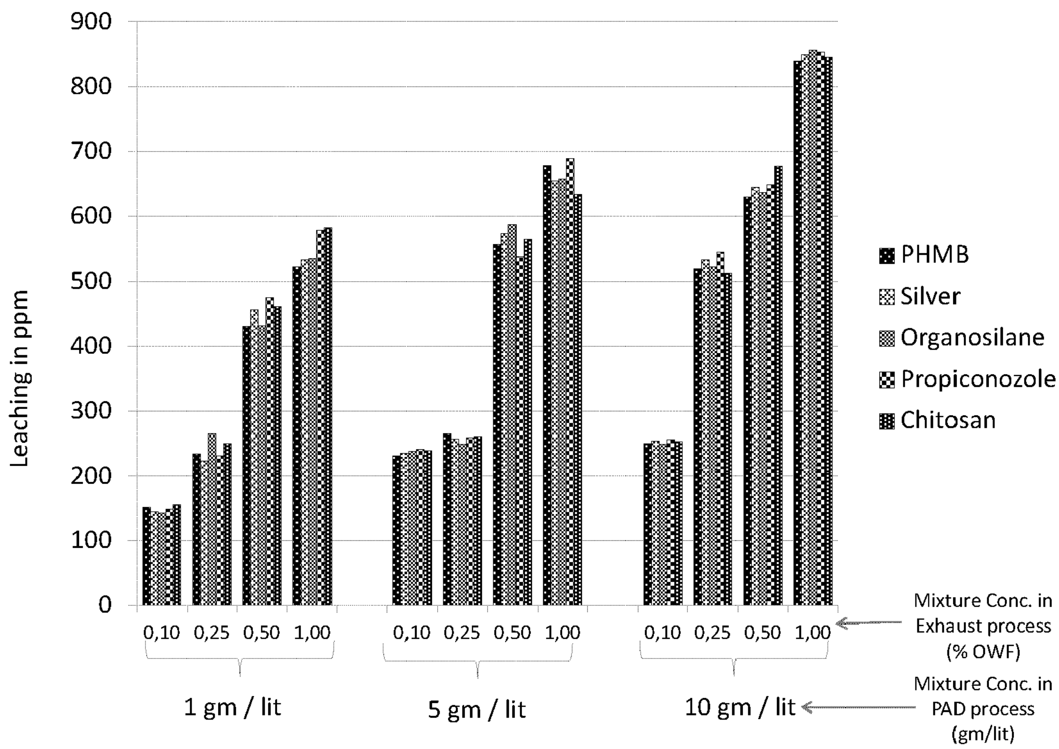


**Fig. 34B : Leaching Test - Two Cycle (Exhaust + PAD + Wash)**

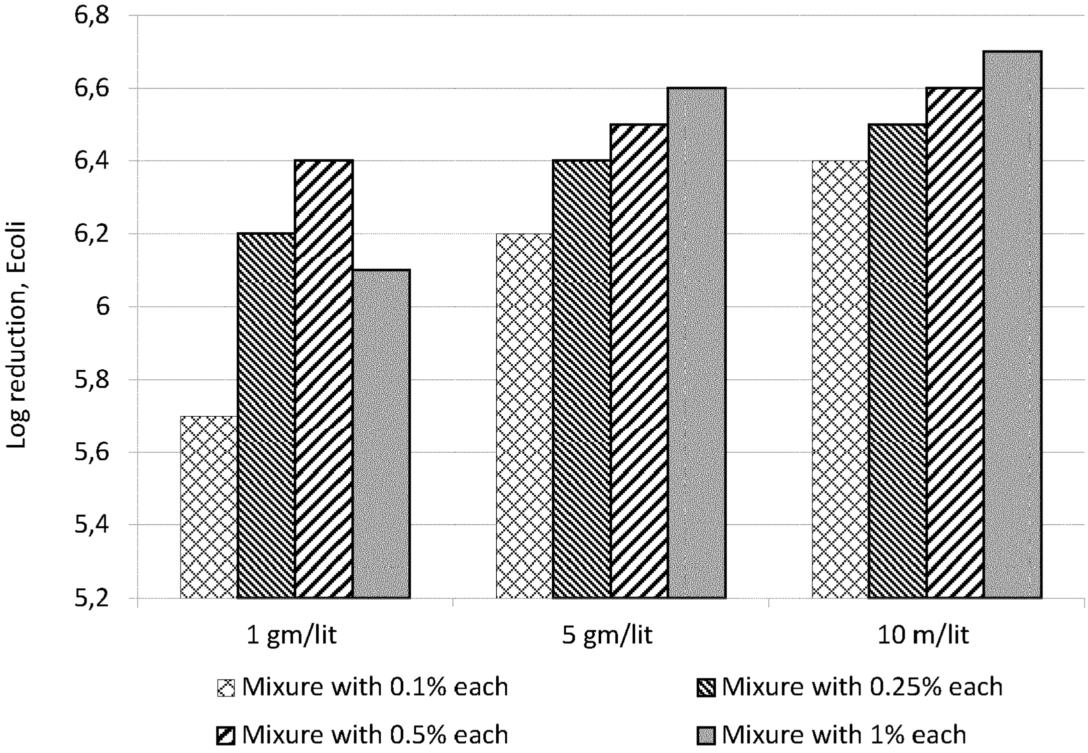


**Fig. 35A : Performance Test – Two Cycle (Exhaust + Wash + PAD + Wash)**

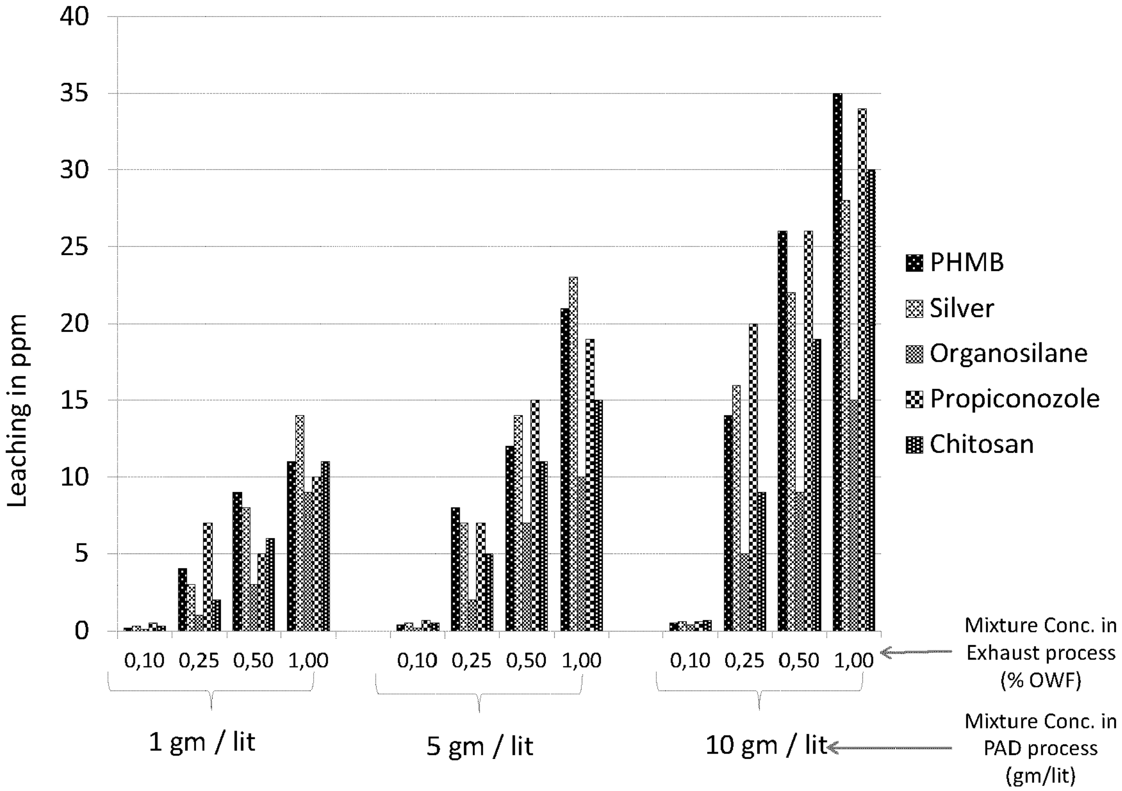


**Fig. 35B : Leaching Test – Two Cycle (Exhaust + Wash + PAD + Wash)**

| **Exhaustion process % owf / gpl** | **LG/BP 01** | **LG/BP 02** | **LG/BP 03** | **LG/BP 04** | **LG/BP 05** | **LG/BP 06** | **LG/BP 07** | **OT gown** |
|---|---|---|---|---|---|---|---|---|
| Organosilane | 0.72% | 0.47% | 0.47% | 0.36% | 0.25% | 0.25% | 0.36% | 0.36% |
| | 3.6 gpl | 2.35 gpl | 2.35 gpl | 1.80 gpl | 1.25 gpl | 1.25 gpl | 1.80 gpl | 1.80 gpl |
| Silver cations | 0.00% | 0.00% | 0.01% | 0.01% | 0.01% | 0.01% | 0.01% | 0.01% |
| | | | 0.05 gpl | 0.05 gpl | 0.05 gpl | 0.05 gpl | 0.05 gpl | 0.05 gpl |
| Chitosan | 0.00% | 0.00% | 0.00% | 0.16% | 0.16% | 0.16% | 0.00% | 0.00% |
| | | | | 0.80 gpl | 0.80 gpl | 0.80 gpl | | |
| Propiconazole | 0.00% | 0.00% | 0.00% | 0.00% | 0.00% | 0.13% | 0.13% | 0.13% |
| | | | | | | 0.63 gpl | 0.63 gpl | 0.63 gpl |
| PHMB | 0.00% | 0.10% | 0.10% | 0.07% | 0.07% | 0.07% | 0.10% | 0.16% |
| | | 0.50 gpl | 0.50 gpl | 0.35 pgl | 0.35 pgl | 0.35 pgl | 0.50 gpl | 0.8 gpl |
| **Padding process % owf / gpl** | **LG/BP 01** | **LG/BP 02** | **LG/BP 03** | **LG/BP 04** | **LG/BP 05** | **LG/BP 06** | **LG/BP 07** | **OT gown** |
| Organosilane | 0.23% | 0.23% | 0.23% | 0.23% | 0.17% | 0.17% | 0.28% | 0.28% |
| | 5.7 gpl | 5.7 gpl | 5.7 gpl | 5.7 gpl | 4.3 gpl | 4.3 gpl | 7.2 gpl | 7.2 gpl |
| Silver cations | 0.00% | 0.00% | 0.00% | 0.00% | 0.00% | 0.00% | 0.00% | 0.00% |
| | | | 0.02gpl | 0.02 gpl | 0.02 gpl | 0.02 gpl | | |
| Chitosan | 0.00% | 0.00% | 0.00% | 0.00% | 0.00% | 0.00% | 0.00% | 0.00% |
| Propiconazole | 0.00% | 0.00% | 0.00% | 0.00% | 0.10% | 0.05% | 0.10% | 0.10% |
| | | | | | 2.5 gpl | 1.3 gpl | 2.5 gpl | 2.5 gpl |
| PHMB | 0.00% | 0.04% | 0.04% | 0.04% | 0.04% | 0.04% | 0.00% | 0.00% |
| | | 1.0 gpl | 1.0 gpl | 1.0 gpl | 1.0 gpl | 1.0 gpl | | |
| **Total actives weight increase % owf** | **LG/BP 01** | **LG/BP 02** | **LG/BP 03** | **LG/BP 04** | **LG/BP 05** | **LG/BP 06** | **LG/BP 07** | **OT gown** |
| Organosilane | 0.95% | 0.70% | 0.70% | 0.59% | 0.42% | 0.42% | 0.64% | 0.64% |
| Silver cations | 0.00% | 0.00% | 0.01% | 0.01% | 0.01% | 0.01% | 0.01% | 0.01% |
| Chitosan | 0.00% | 0.00% | 0.00% | 0.16% | 0.16% | 0.16% | 0.00% | 0.00% |
| Propiconazole | 0.00% | 0.00% | 0.00% | 0.00% | 0.10% | 0.18% | 0.23% | 0.23% |
| PHMB | 0.00% | 0.14% | 0.14% | 0.11% | 0.11% | 0.11% | 0.10% | 0.16% |
| Exhaustion | 0.72% | 0.57% | 0.58% | 0.60% | 0.49% | 0.62% | 0.60% | 0.66% |
| Padding | 0.23% | 0.27% | 0.27% | 0.27% | 0.31% | 0.26% | 0.38% | 0.38% |
| total | 0.95% | 0.84% | 0.85% | 0.87% | 0.80% | 0.88% | 0.98% | 1.04% |

Fig. 36

| | LG/BP 01 | LG/BP 02 | LG/BP 03 | LG/BP 04 | LG/BP 05 | LG/BP 06 | LG/BP 07 |
|---|---|---|---|---|---|---|---|
| **Leaching (each of the agents)** | | | | | | <1 ppm | <1 ppm |
| **Antimicrobial performance, test method AATCC 100 (24 hours)** | | | | | | | |
| Staph. Aureus ATCC 43300) | 3,25 log | 3,65 log | 4,14 log | 4,23 log | 6,06 log | 6,45 log | |
| E.Coli ATCC 25922) | 2,89 log | 3,15 log | 3,45 log | 3,65 log | 5,76 log | 6,16 log | |
| V.Cholerae ATCC 14035) | 2,15 log | 2,56 log | 2,86 log | 3,87 log | 5,25 log | 4,14 log | |
| K.Pneumonea ATCC 13883) | 2,26 log | 2,71 log | 3,1 log | 4,25 log | 6,83 log | 6,62 log | |
| A.Niger ATCC 16404) | 0,11 log | 0,21 log | 2,55 log | 3,87 log | 5,27 log | 5,43 log | |
| C.Difficile spores ATCC 43598) | 0,09 log | 0,13 log | 0,45 log | 0,89 log | 1,86 log | 2,45 log | |
| **Antimicrobial performance, test method EPA 90072PA4 (10 min)** | | | | | | | |
| Staph. Aureus ATCC 43300) | | | | | | 2,66 log | 3,26 log |
| E.Coli ATCC 25922) | | | | | | 2,32 log | 3,18 log |
| V.Cholerae ATCC 14035) | | | | | | | |
| K.Pneumonea ATCC 13883) | | | | | | 2,65 log | 3,25 log |
| A.Niger ATCC 16404) | | | | | | 2,47 log | 3,65 log |
| C.Difficile spores ATCC 43598) | | | | | | 0,67 log | 1,28 log |
| **Antimicrobial performance, customized test method** | | | | | | | |
| Staph. Aureus ATCC 43300) | | | | | | | |
| E.Coli ATCC 25922) | | | | 6,15 log | 6,33 log | 6,67 log | |
| V.Cholerae ATCC 14035) | | | | 6,80 log | 6,86 log | 6,92 log | |
| K.Pneumonea ATCC 13883) | | | | | | | |
| A.Niger ATCC 16404) | | | | | | | |
| C.Difficile spores ATCC 43598) | | | | 1,20 log | 3,15 log | 4,65 log | |

Fig. 37

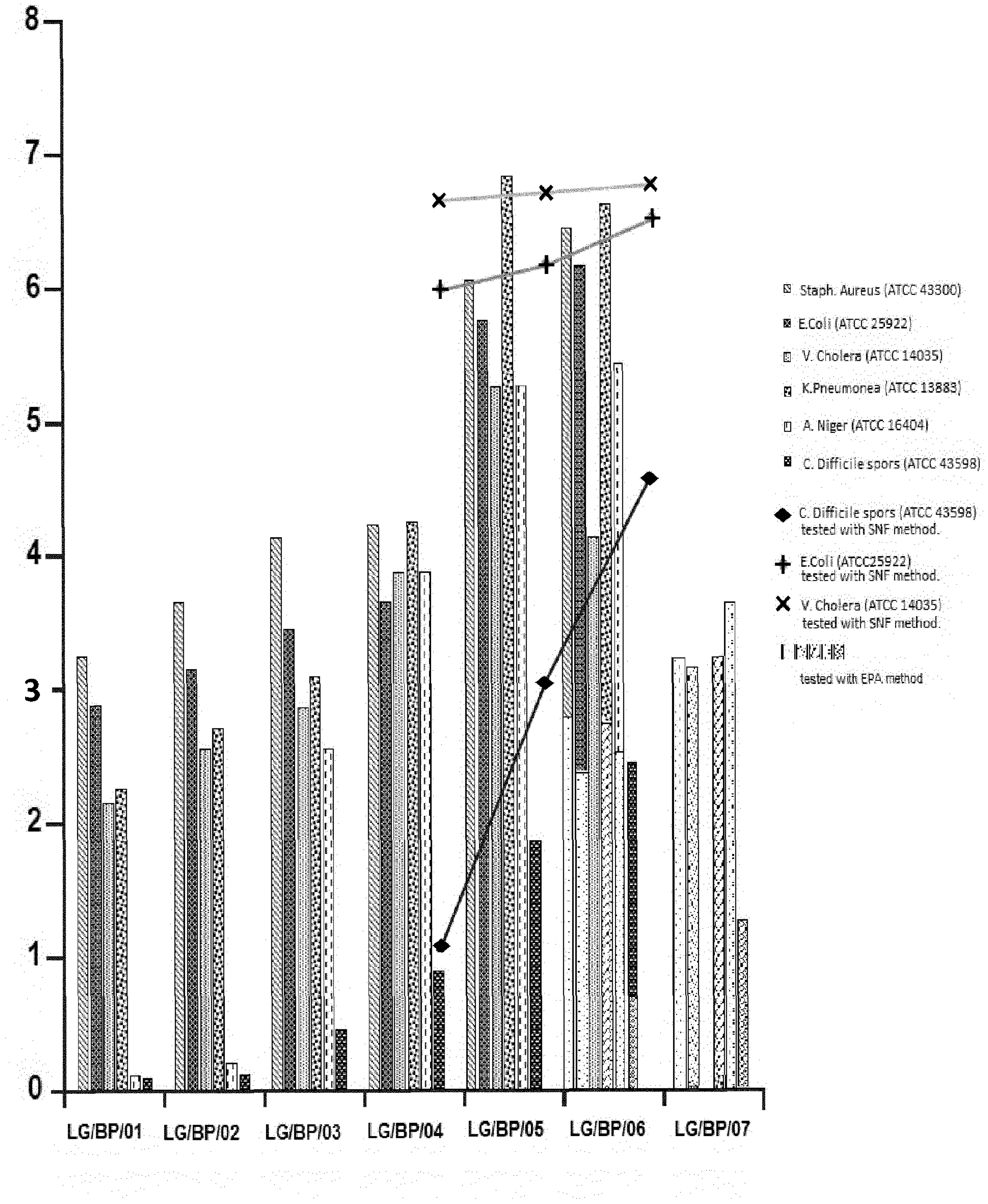
8
7
6
5
4
3
2
1
0
LG/BP/01
LG/BP/02
LG/BP/03
LG/BP/04
LG/BP/05
LG/BP/06
LG/BP/07
Staph. Aureus (ATCC 43300)
E.Coli (ATCC 25922)
V. Cholera (ATCC 14035)
K.Pneumonea (ATCC 13883)
A. Niger (ATCC 16404)
C. Difficile spors (ATCC 43598)
C. Difficile spors (ATCC 43598) tested with SNF method.
E.Coli (ATCC25922) tested with SNF method.
V. Cholera (ATCC 14035) tested with SNF method.
tested with EPA method

Fig . 38

| **Exhaustion % owf / gpl** | **LG/BP 08** | **LG/BP 09** | **LG/BP 10** | **LG/BP 11** | **LG/BP 12** | **LG/BP 13** | **LG/BP 14** | **LG/BP 15** | **LG/BP 16** | **Water Filter** |
|---|---|---|---|---|---|---|---|---|---|---|
| Substrate | cotton | cotton | cotton | cotton | cotton | cotton | blend (c/p) | cotton | blend (c/p) | blend (c/p) |
| Organosilane | 0.25% | 0.29% | 0.29% | 0.29% | 0.00% | 0.11% | 0.11% | 0.11% | 0.11% | 0.11% |
| | 1.25 gpl | 1.44 gpl | 1.44 gpl | 1.44 gpl | | 0.53 gpl | 0.53 gpl | 0.53 gpl | 0.53 gpl | 0.53 gpl |
| Silver cations | 0.01% | 0.00% | 0.00% | 0.00% | 0.00% | 0.00% | 0.00% | 0.01% | 0.01% | 0.01% |
| | 0.05 gpl | 0.005 gpl | 0.005 gpl | 0.008 gpl | 0.008 gpl | 0.008 gpl | 0.008 gpl | 0.05 gpl | 0.05 gpl | 0.05 gpl |
| Chitosan | 0.16% | 0.16% | 0.16% | 0.20% | 0.16% | 0.16% | 0.16% | 0.16% | 0.16% | 0.16% |
| | 0.80 gpl | 0.80 gpl | 0.80 gpl | 1.00 gpl | 0.80 gpl | 0.80 gpl | 0.80 gpl | 0.80 gpl | 0.80 gpl | 0.80 gpl |
| propiconazole | 0.13% | 0.13% | 0.13% | 0.13% | 0.13% | 0.13% | 0.13% | 0.03% | 0.03% | 0.00% |
| | 0.63 gpl | 0.63 gpl | 0.63 gpl | 0.63 gpl | 0.63 gpl | 0.63 gpl | 0.63 gpl | 0.13 gpl | 0.13 gpl | |
| PHMB | 0.07% | 0.10% | 0.10% | 0.10% | 0.30% | 0.30% | 0.30% | 0.20% | 0.07% | 0.07% |
| | 0.35 gpl | 0.50 gpl | 0.50 gpl | 0.50 pgl | 1.50 pgl | 1.50 pgl | 1.50 gpl | 1.00 gpl | 0.35 pgl | 0.35 pgl |
| **Padding % owf / gpl** | **LG/BP 08** | **LG/BP 09** | **LG/BP 10** | **LG/BP 11** | **LG/BP 12** | **LG/BP 13** | **LG/BP 14** | **LG/BP 15** | **LG/BP 16** | **Water Filter** |
| Organosilane | 0.17% | 0.17% | 0.17% | 0.17% | 0.23% | 0.23% | 0.23% | 0.23% | 0.23% | 0.23% |
| | 4.3 gpl | 4.3 gpl | 4.3 gpl | 4.3 gpl | 5.8 gpl | 5.8 gpl | 5.8 gpl | 5.8 gpl | 5.8 gpl | 5.8 gpl |
| Silver cations | 0.00% | 0.00% | 0.00% | 0.00% | 0.00% | 0.00% | 0.00% | 0.00% | 0.00% | 0.00% |
| | 0.02 gpl | | 0.004gpl | | | | | | | |
| Chitosan | 0.00% | 0.00% | 0.00% | 0.00% | 0.00% | 0.00% | 0.00% | 0.00% | 0.00% | 0.00% |
| Propiconazole | 0.05% | 0.00% | 0.00% | 0.00% | 0.00% | 0.00% | 0.00% | 0.00% | 0.25% | 0.25% |
| | 1.3 gpl | | | | | | | | 6.3 gpl | 6.3 gpl |
| PHMB | 0.04% | 0.04% | 0.04% | 0.00% | 0.00% | 0.00% | 0.00% | 0.00% | 0.00% | 0.00% |
| | 1.0 gpl | 1.0 gpl | 1.0 gpl | | | | | | | |
| **Total actives owf / leaching** | **LG/BP 08** | **LG/BP 09** | **LG/BP 10** | **LG/BP 11** | **LG/BP 12** | **LG/BP 13** | **LG/BP 14** | **LG/BP 15** | **LG/BP 16** | **Water Filter** |
| Organosilane | 0.95% | 0.70% | 0.70% | 0.59% | 0.42% | 0.42% | 0.64% | 0.64% | 0.42% | 0.42% |
| | pass | pass | pass | pass | pass | pass | pass | pass | pass | pass |
| Silver cations | 0.00% | 0.00% | 0.01% | 0.01% | 0.01% | 0.01% | 0.01% | 0.01% | 0.01% | 0.01% |
| | fail | fail | fail | pass | pass | pass | pass | pass | pass | pass |
| Chitosan | 0.00% | 0.00% | 0.00% | 0.16% | 0.16% | 0.16% | 0.00% | 0.00% | 0.16% | 0.16% |
| | pass | pass | pass | pass | pass | pass | pass | pass | pass | pass |
| Propiconazole | 0.00% | 0.00% | 0.00% | 0.00% | 0.10% | 0.18% | 0.23% | 0.23% | 0.18% | 0.18% |
| | fail | fail | fail | fail | fail | fail | pass | pass | pass | pass |
| PHMB | 0.00% | 0.14% | 0.14% | 0.11% | 0.11% | 0.11% | 0.10% | 0.16% | 0.11% | 0.11% |
| | fail | fail | fail | fail | fail | fail | fail | fail | pass | pass |
| Exhaustion | 0.62% | 0.68% | 0.68% | 0.72% | 0.59% | 0.70% | 0.70% | 0.51% | 0.38% | 0.35% |
| Padding | 0.26% | 0.21% | 0.21% | 0.17% | 0.23% | 0.23% | 0.23% | 0.23% | 0.48% | 0.48% |
| total | 0.88% | 0.89% | 0.89% | 0.89% | 0.82% | 0.93% | 0.93% | 0.74% | 0.86% | 0.83% |
| | **LG/BP 08** | **LG/BP 09** | **LG/BP 10** | **LG/BP 11** | **LG/BP 12** | **LG/BP 13** | **LG/BP 14** | **LG/BP 15** | **LG/BP 16** | **Water Filter** |
| **Performance** | pass | fail | fail | fail | fail | pass | fail | fail | pass | pass |

Fig. 39

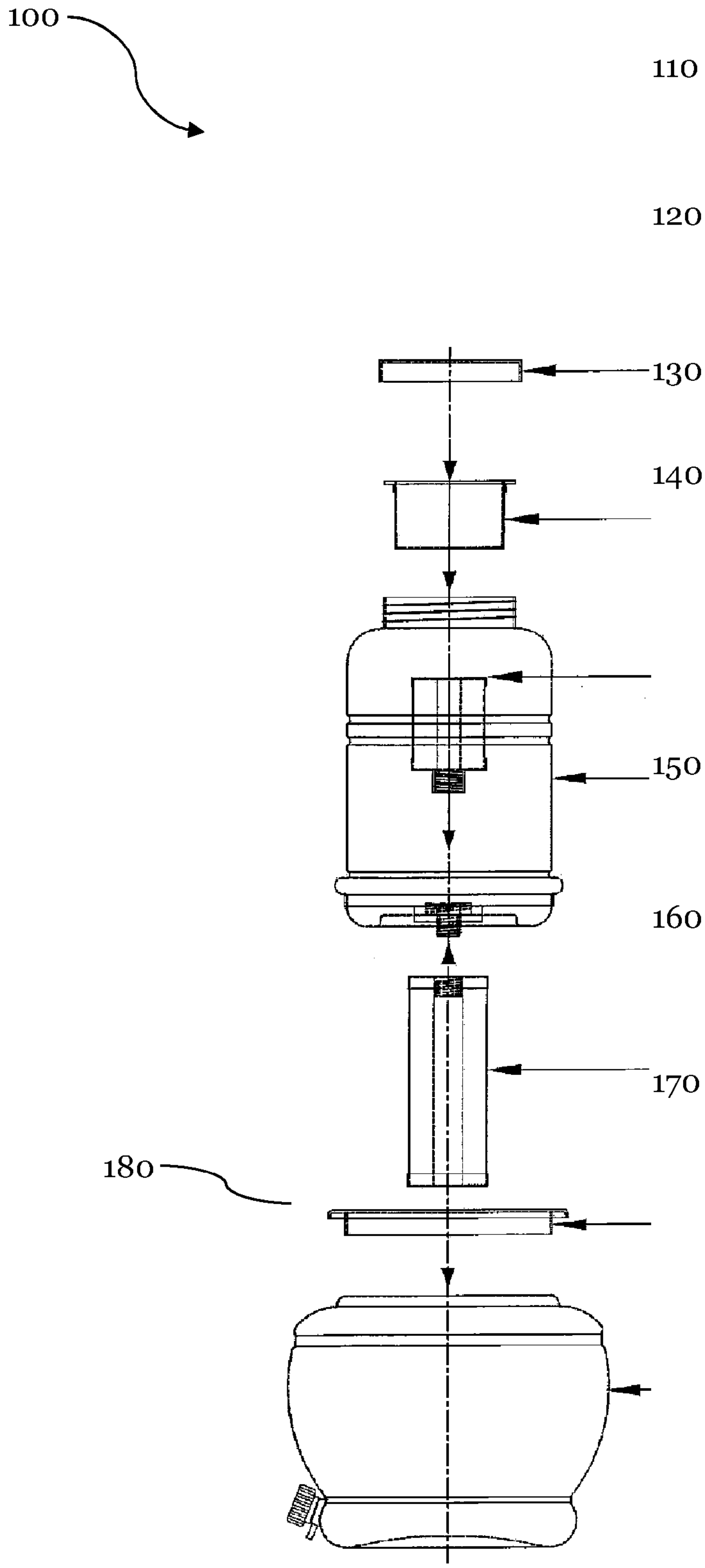


Fig. 40

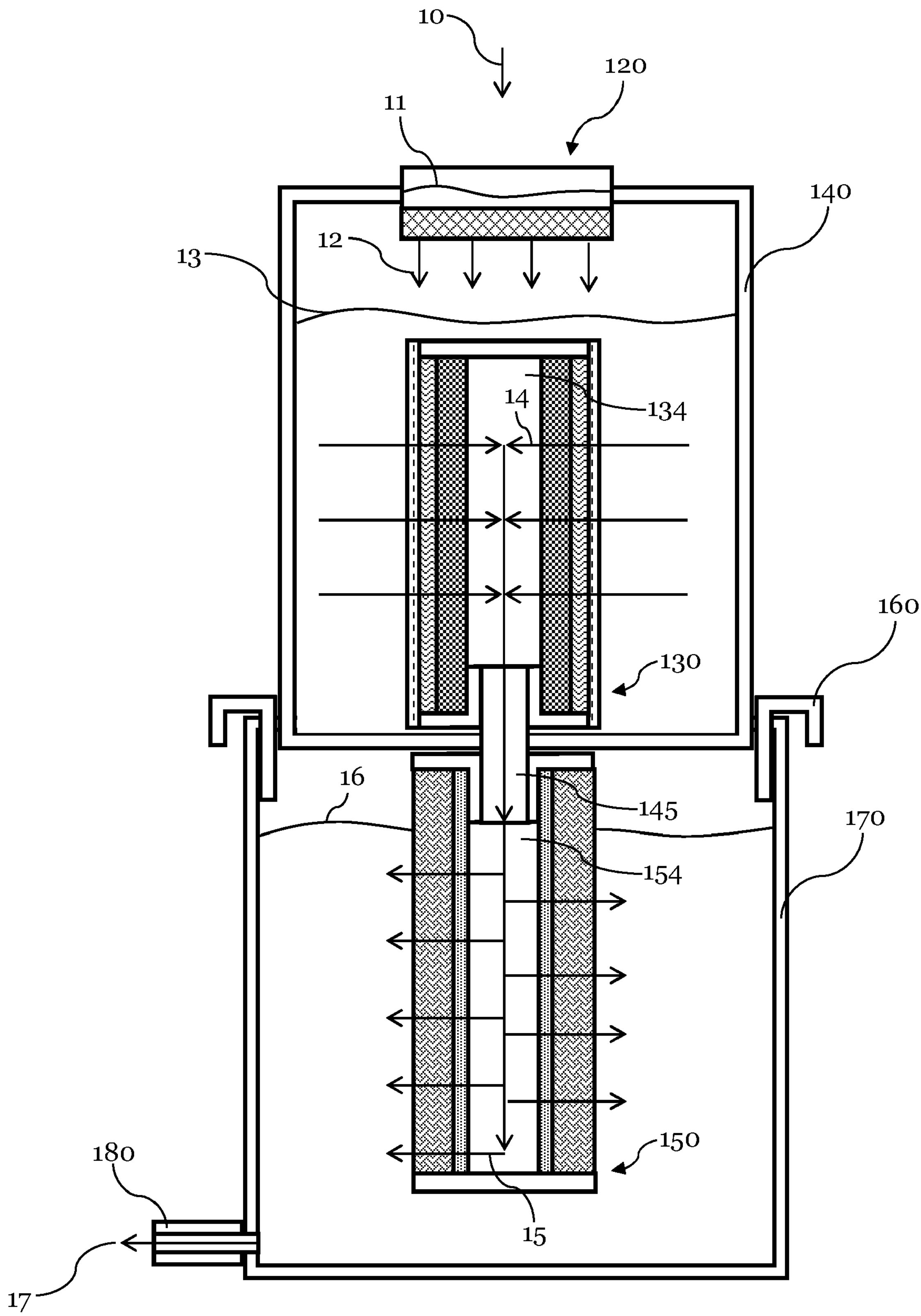


Fig. 41

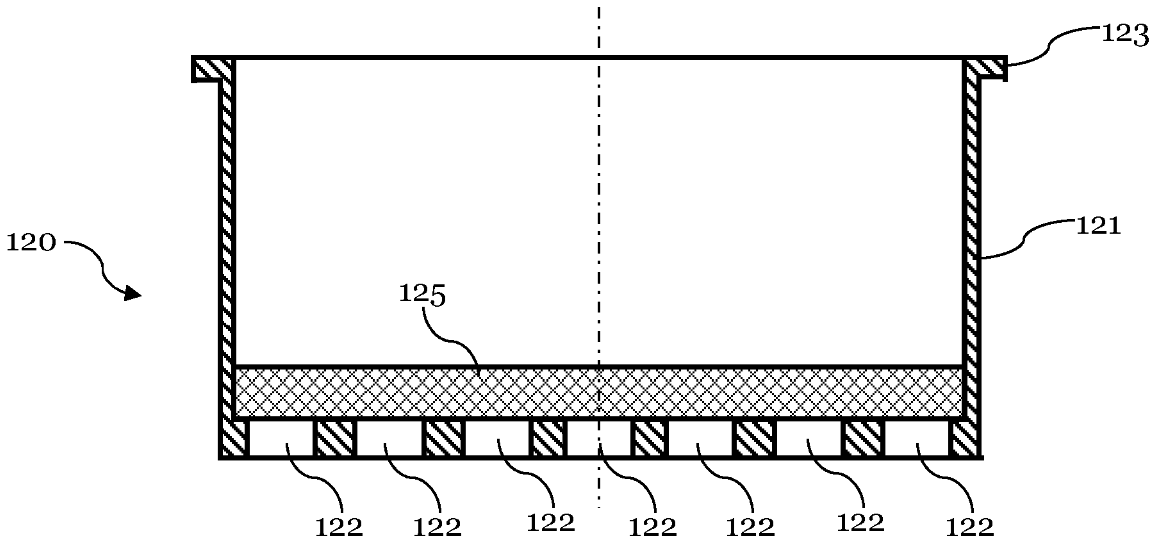


Fig. 42A

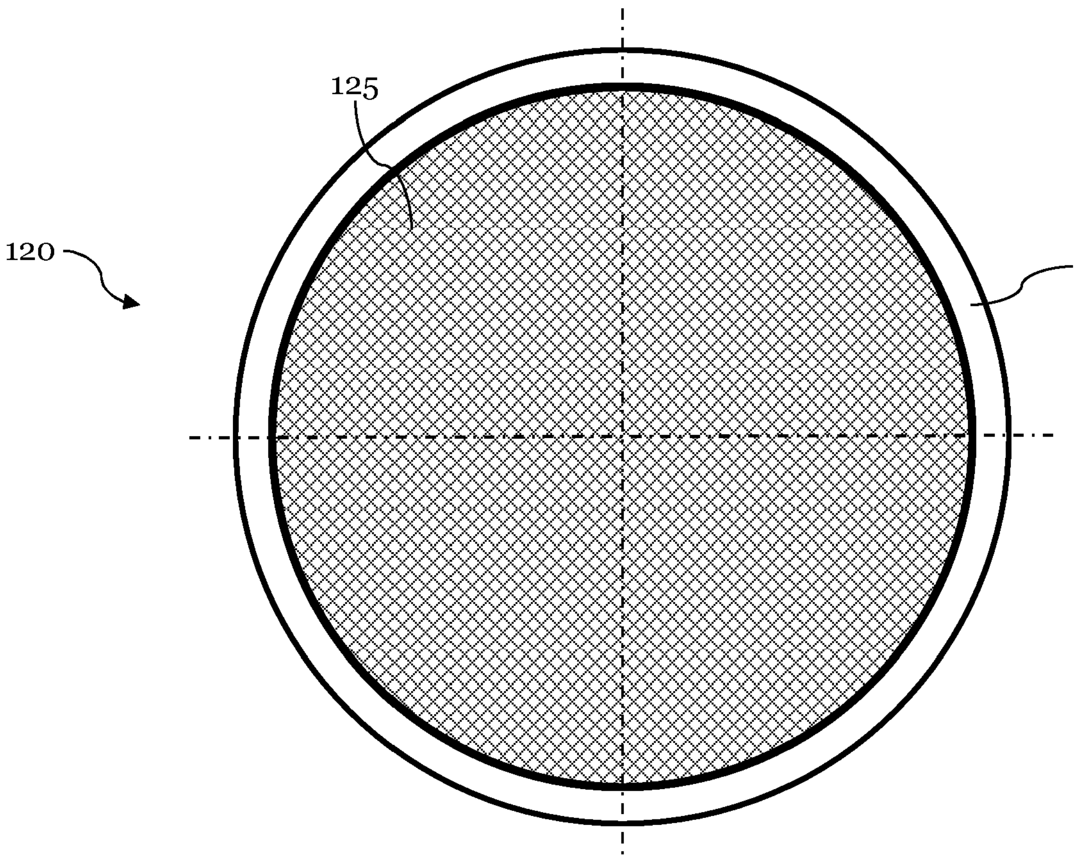


Fig. 42B

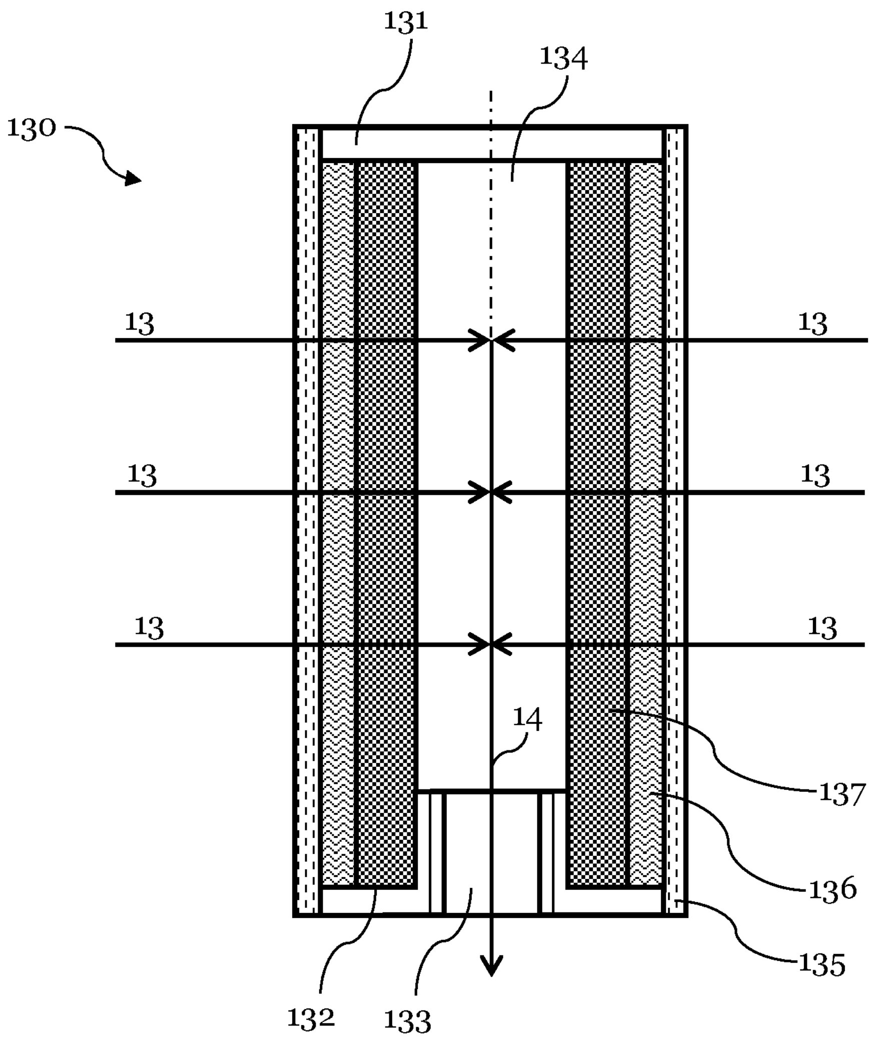


Fig. 43

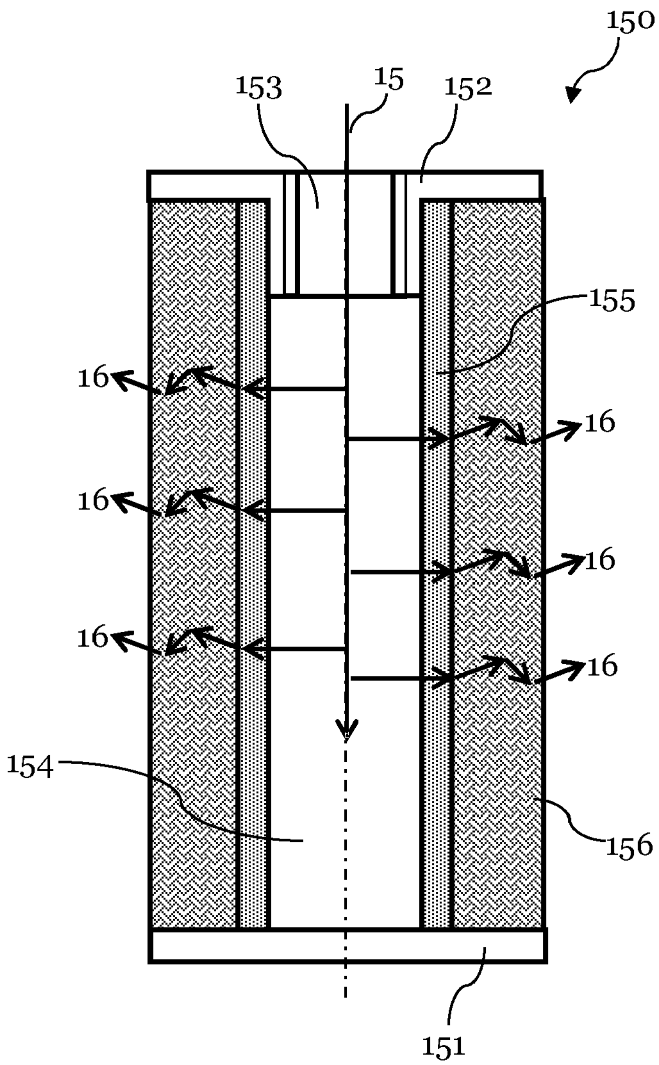


Fig. 44

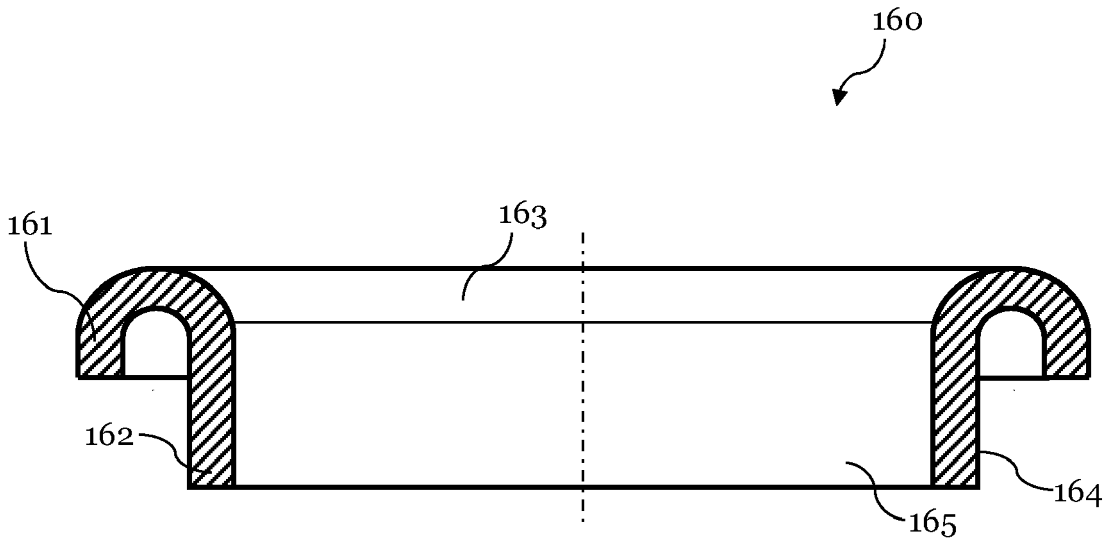


Fig. 45

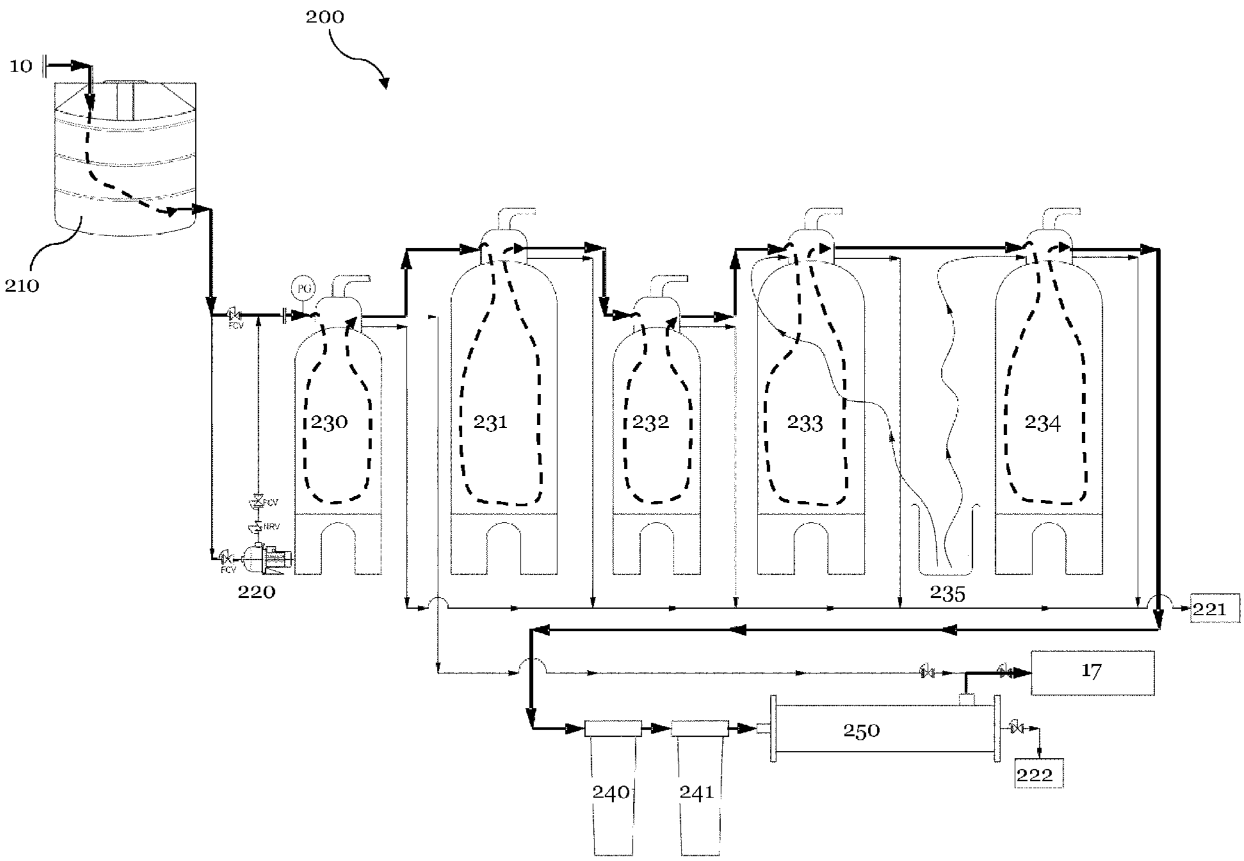
200
10
210
PG
FCV
FCV
NRV
FCV
220
230
231
232
233
234
235
221
17
250
222
240
241

Fig. 46

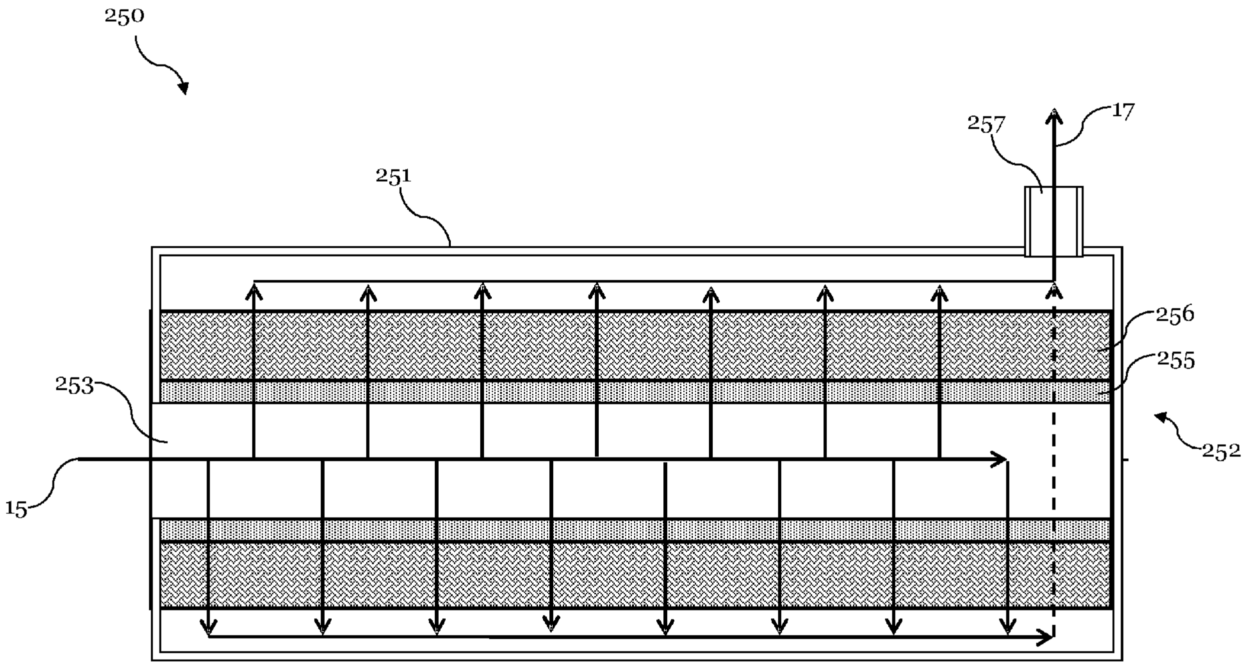


Fig. 47

Europäisches Patentamt
European Patent Office
Office européen des brevets

# EUROPEAN SEARCH REPORT

Application Number
EP 20 19 7153

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2015/044267 A1 (GRAY DAVID A [US] ET AL) 12 February 2015 (2015-02-12) * paragraphs [0006] - [0007], [0031] - [0033], [0038] - [0040], [0048], [0062], [0063], [0066], [0074] * | 1-13 | INV. D06M11/13 D06M11/65 D06M13/148 D06M13/188 D06M13/352 D06M13/368 D06M13/463 D06M13/513 D06M15/00 D06M15/03 D06M15/61 A41D13/11 D06M13/256 D06M16/00 |
| X | WO 2004/087226 A1 (APPEARTEX AB [SE]; SCHOENEMYR LARS [SE] ET AL.) 14 October 2004 (2004-10-14) * page 9, lines 20,32; claims 1-7 * | 1-13 | |
| X,D | US 8 906 115 B2 (BENDER WALTER [CH]) 9 December 2014 (2014-12-09) * column 10, lines 36-50 * * column 2, line 22 - column 4, line 16; examples * | 1-13 | |
| X | US 2009/252647 A1 (OROFINO RICHARD ALLEN [US]) 8 October 2009 (2009-10-08) * paragraphs [0044], [0049], [0053], [0071], [0075], [0082], [0086] - [0090], [0117], [19218], [0121], [0141]; figure 1.8; table A * | 1-13 | TECHNICAL FIELDS SEARCHED (IPC) |
| X | US 2005/079379 A1 (WADSWORTH LARRY C [US] ET AL) 14 April 2005 (2005-04-14) * paragraphs [0072], [0205] - [0214] * | 1-13 | D06M A44C A41D A41B A01N |
| X | WO 2012/136757 A1 (BASF SE [DE]; KOLTZENBURG SEBASTIAN [DE] ET AL.) 11 October 2012 (2012-10-11) * paragraphs [0011], [0089], [0095], [0096]; claims 1, 6, 7 * | 1-13 | |

-/--

The present search report has been drawn up for all claims

1

| Place of search | Date of completion of the search | Examiner |
|---|---|---|
| The Hague | 4 March 2021 | Barathe, Rainier |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches Patentamt
European Patent Office
Office européen des brevets

# EUROPEAN SEARCH REPORT

Application Number
EP 20 19 7153

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2007/027871 A2 (KIMBERLY CLARK CO [US]; SCHORR PHILLIP A [US] ET AL.) 8 March 2007 (2007-03-08) * page 2, lines 8-23 * * page 10, line 31 - page 14, line 7; tables 1,2 * * page 21, line 23 - page 22, line 2 * * page 38, line 9 - page 39, line 3; tables 10-21 * * claims 7-24 * ----- | 1-13 | |
| X | WO 2007/027413 A1 (KIMBERLY CLARK CO [US]; MATHIS MICHAEL P [US] ET AL.) 8 March 2007 (2007-03-08) * page 1, lines 1-25 * * page 8, line 32 - page 9, line 7 * * page 9, line 31 - page 10, line 33 * * page 14, lines 8-10; claims 1-15 * * examples * * tables 1-7 * ----- | 1-13 | |
| | | | TECHNICAL FIELDS SEARCHED (IPC) |
| X | CN 103 876 356 A (TIANJIN CACHET TECHNOLOGY CO LTD) 25 June 2014 (2014-06-25) * examples 1-6 * ----- | 1-13 | |
| X | CN 101 716 359 A (BEIJING OKEANOS TECH CO LTD) 2 June 2010 (2010-06-02) * abstract * * paragraph [0010]; claims 1-6; examples 1-6 * ----- | 1-13 | |
| X | CN 101 912 167 A (SHANGHAI LUWAN TEENAGERS ACTIVITY CT) 15 December 2010 (2010-12-15) * paragraphs [0006] - [0014], [0018] - [0025]; claims 1-5; figures 1-3 * ----- -/-- | 1-13 | |

The present search report has been drawn up for all claims

1

| Place of search | Date of completion of the search | Examiner |
|---|---|---|
| The Hague | 4 March 2021 | Barathe, Rainier |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

Europäisches Patentamt
European Patent Office
Office européen des brevets

# EUROPEAN SEARCH REPORT

Application Number
EP 20 19 7153

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | CN 2 654 159 Y (SHANG GUILIAN [CN]) 10 November 2004 (2004-11-10) * abstract; claim * * page 4, last paragraph; figure * ----- | 1-12 | |
| A | JP 2006 187508 A (HISHIDA IWAO) 20 July 2006 (2006-07-20) * abstract * * paragraphs [0047], [0055] * ----- | 1-12 | |
| A | JP 2005 154965 A (TOYO BOSEKI) 16 June 2005 (2005-06-16) * paragraph [0018]; claims 1-7 * ----- | 1-13 | |
| A | JP 2011 094283 A (OSAKA KASEI KK) 12 May 2011 (2011-05-12) * paragraphs [0026] - [0033] * * paragraphs [0034] - [0042] * * paragraphs [0043] - [0047] * * paragraphs [0060] - [0061] * * examples 1-12 * * claims 5-9 * ----- | 1-12 | TECHNICAL FIELDS SEARCHED (IPC) |
| A | GB 2 408 516 A (AVECIA LTD [GB]; ARCH UK BIOCIDES LTD [GB]) 1 June 2005 (2005-06-01) * page 12, line 1 - page 14, line 18; claim 17; example 1 * ----- | 1-12 | |
| A | DE 20 2004 003089 U1 (CHOU SU JEN [TW]) 29 April 2004 (2004-04-29) * paragraph [0009]; figures * ----- | 1-12 | |

The present search report has been drawn up for all claims

1

| Place of search | Date of completion of the search | Examiner |
|---|---|---|
| The Hague | 4 March 2021 | Barathe, Rainier |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT ON EUROPEAN PATENT APPLICATION NO.

EP 20 19 7153

This annex lists the patent family members relating to the patent documents cited in the above-mentioned European search report.
The members are as contained in the European Patent Office EDP file on
The European Patent Office is in no way liable for these particulars which are merely given for the purpose of information.

04-03-2021

| Patent document cited in search report | Publication date | Patent family member(s) | Publication date |
|---|---|---|---|
| US 2015044267 A1 | 12-02-2015 | NONE | |
| WO 2004087226 A1 | 14-10-2004 | EP 1610828 A1 | 04-01-2006 |
| | | US 2007042198 A1 | 22-02-2007 |
| | | WO 2004087226 A1 | 14-10-2004 |
| US 8906115 B2 | 09-12-2014 | BR PI0720274 A2 | 28-01-2014 |
| | | CN 101589189 A | 25-11-2009 |
| | | DE 102006058790 A1 | 19-06-2008 |
| | | EA 200970566 A1 | 26-02-2010 |
| | | EP 2102408 A1 | 23-09-2009 |
| | | HK 1137044 A1 | 16-07-2010 |
| | | US 2010115706 A1 | 13-05-2010 |
| | | WO 2008071680 A1 | 19-06-2008 |
| US 2009252647 A1 | 08-10-2009 | NONE | |
| US 2005079379 A1 | 14-04-2005 | US 2005079379 A1 | 14-04-2005 |
| | | WO 2005034659 A2 | 21-04-2005 |
| WO 2012136757 A1 | 11-10-2012 | CN 103608512 A | 26-02-2014 |
| | | EP 2694721 A1 | 12-02-2014 |
| | | JP 2014512462 A | 22-05-2014 |
| | | KR 20140010433 A | 24-01-2014 |
| | | US 2012258157 A1 | 11-10-2012 |
| | | US 2014220842 A1 | 07-08-2014 |
| | | WO 2012136757 A1 | 11-10-2012 |
| WO 2007027871 A2 | 08-03-2007 | AU 2006284767 A1 | 08-03-2007 |
| | | BR PI0614770 A2 | 12-04-2011 |
| | | CA 2619090 A1 | 08-03-2007 |
| | | CN 101351121 A | 21-01-2009 |
| | | EP 1919282 A2 | 14-05-2008 |
| | | JP 2009505804 A | 12-02-2009 |
| | | KR 20080042107 A | 14-05-2008 |
| | | US 2007048358 A1 | 01-03-2007 |
| | | WO 2007027871 A2 | 08-03-2007 |
| WO 2007027413 A1 | 08-03-2007 | CA 2619754 A1 | 08-03-2007 |
| | | EP 1919310 A1 | 14-05-2008 |
| | | JP 4823314 B2 | 24-11-2011 |
| | | JP 2009505788 A | 12-02-2009 |
| | | US 2007044801 A1 | 01-03-2007 |
| | | WO 2007027413 A1 | 08-03-2007 |
| CN 103876356 A | 25-06-2014 | NONE | |

EPO FORM P0459

For more details about this annex : see Official Journal of the European Patent Office, No. 12/82

## ANNEX TO THE EUROPEAN SEARCH REPORT ON EUROPEAN PATENT APPLICATION NO. EP 20 19 7153

This annex lists the patent family members relating to the patent documents cited in the above-mentioned European search report. The members are as contained in the European Patent Office EDP file on
The European Patent Office is in no way liable for these particulars which are merely given for the purpose of information.

04-03-2021

| Patent document cited in search report | Publication date | Patent family member(s) | Publication date |
|---|---|---|---|
| CN 101716359 A | 02-06-2010 | NONE | |
| CN 101912167 A | 15-12-2010 | NONE | |
| CN 2654159 Y | 10-11-2004 | NONE | |
| JP 2006187508 A | 20-07-2006 | JP 4013956 B2 | 28-11-2007 |
| | | JP 2006187508 A | 20-07-2006 |
| JP 2005154965 A | 16-06-2005 | NONE | |
| JP 2011094283 A | 12-05-2011 | JP 5735764 B2 | 17-06-2015 |
| | | JP 2011094283 A | 12-05-2011 |
| GB 2408516 A | 01-06-2005 | BR PI0416710 A | 16-01-2007 |
| | | CN 1886547 A | 27-12-2006 |
| | | EP 1697577 A1 | 06-09-2006 |
| | | GB 2408516 A | 01-06-2005 |
| | | JP 2007513262 A | 24-05-2007 |
| | | KR 20060125822 A | 06-12-2006 |
| | | US 2007271707 A1 | 29-11-2007 |
| | | WO 2005054566 A1 | 16-06-2005 |
| DE 202004003089 U1 | 29-04-2004 | NONE | |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 2791518 A
- US 4721511 A
- US 5190788 A
- US 6962608 B
- US 8906115 B
- US 20110271873 A1
- US 20060193816 A1

### Non-patent literature cited in the description

- *AATCC Technical Manual,* 2013, 166-168
- *EPA, Guide Standard and Protocol for Testing Microbiological Water Purifiers,* April 1987